# EUROPEAN PATENT APPLICATION

(11) **EP 4 184 460 A1**
(43) Date of publication of application: **24.05.2023**
(21) Application number: 21854508.5
(22) Date of filing: 30.07.2021
(51) Int. Cl.: G07C 9/00, H04B 5/02

(54) **AUTOMATIC CONTROL METHOD, AND ELECTRONIC DEVICE AND COMPUTER-READABLE STORAGE MEDIUM**

(30) Priority: 05.08.2020 CN 202010779855; 18.08.2020 CN 202010832309; 29.09.2020 CN 202011052009; 13.11.2020 CN 202011273151; 22.12.2020 CN 202011531298
(71) Applicant: Huawei Technologies Co., Ltd., Shenzhen, Guangdong 518129 (CN)
(72) Inventor: SHI, Rui, Shenzhen, Guangdong 518129 (CN); XUE, Qingfeng, Shenzhen, Guangdong 518129 (CN); YANG, Jiachen, Shenzhen, Guangdong 518129 (CN); WANG, Jirui, Shenzhen, Guangdong 518129 (CN); LIU, De, Shenzhen, Guangdong 518129 (CN); TU, Jinhui, Shenzhen, Guangdong 518129 (CN)
(74) Representative: Epping - Hermann - Fischer
(86) International application number: PCT/CN2021/109799
(87) International publication number: WO 2022/028333

(57) **Abstract**

This application relates to an electronic device and an automatic control method. The electronic device includes: a processor; a memory; a first antenna, where a transmitting distance of the first antenna is a first distance, and the first distance is greater than a preset safety distance; a second antenna, where a transmitting distance of the second antenna is a second distance, and the second distance is less than or equal to the preset safety distance; and a computer program stored in the memory. When the computer program is executed by the processor, the electronic device is enabled to perform the following steps: sending a first message based on a first periodicity by using the first antenna; receiving a first response message of a mobile device; sending, in response to the first response message, a second message based on a second periodicity by using the second antenna; receiving a second response message of the mobile device; and executing all or a part of a specific function in response to the second response message. In this application, all or the part of the specific function can be automatically performed after initial setting or even without setting, to simplify operations, shorten overall time consumption, and improve user experience.

## Description

This application claims priority to Chinese Patent Application No. 202010832309.2, filed with the China National Intellectual Property Administration on August 18, 2020 and entitled "DOOR CONTROL METHOD, ELECTRONIC DEVICE, AND COMPUTER-READABLE STORAGE MEDIUM", Chinese Patent Application No. 202011052009.9, filed with the China National Intellectual Property Administration on September 29, 2020 and entitled "AUTOMATIC PROJECTION METHOD, ELECTRONIC DEVICE, AND COMPUTER-READABLE STORAGE MEDIUM", Chinese Patent Application No. 202011273151.6, filed with the China National Intellectual Property Administration on November 13, 2020 and entitled "AUTOMATIC PRINT METHOD, PRINT DEVICE, AND COMPUTER-READABLE STORAGE MEDIUM", Chinese Patent Application No. 202010779855.4, filed with the China National Intellectual Property Administration on August 5, 2020 and entitled "WIRELESS ROUTING DEVICE ACCESS METHOD AND WIRELESS ROUTING DEVICE", and Chinese Patent Application No. 202011531298.0, filed with the China National Intellectual Property Administration on December 22, 2020 and entitled "AUTOMATIC CONTROL METHOD, ELECTRONIC DEVICE, AND COMPUTER-READABLE STORAGE MEDIUM", which are incorporated herein by reference in their entireties.

### TECHNICAL FIELD

This application relates to the control field, and in particular, to an automatic control method, an electronic device, and a computer-readable storage medium.

### BACKGROUND

When an electronic device is controlled by using a mobile device, a user usually needs to browse relatively much content and perform a plurality of operations (for example, perform a plurality of operations on a plurality of interfaces), so as to control the electronic device to perform a corresponding function. As a result, user operations are complex, time-consuming, and inconvenient, and user experience is reduced. Especially for people with a weak operation capability or people who are inconvenient for operation, such as the elderly, children, the disabled, and patients, this is not conducive to their operation. Shortening overall time consumption, simplifying the operations to facilitate the user, and improving user experience are needed.

### SUMMARY

To resolve the foregoing technical problem, this application provides an automatic control method, an electronic device, and a computer-readable storage medium, so that after initial setting, or even without initial setting, the electronic device can automatically execute a specific function, to shorten overall time consumption, simplify operations, and improve user experience.

According to a first aspect, an electronic device is provided. The electronic device wirelessly communicates with a mobile device, and the electronic device includes: a processor; a memory; a first antenna; a second antenna; and a computer program. A transmitting distance of the first antenna is a first distance, and the first distance is greater than a preset safety distance. A transmitting distance of the second antenna is a second distance, and the second distance is less than or equal to the preset safety distance. The computer program is stored in the memory, and when the computer program is executed by the processor, the electronic device is enabled to perform the following steps: sending a first message based on a first periodicity by using the first antenna; receiving a first response message of the mobile device; sending, in response to the first response message, a second message based on a second periodicity by using the second antenna; receiving a second response message of the mobile device; and executing all or a part of a specific function in response to the second response message. The preset safety distance is a distance at which a holder of the mobile device can quickly control the electronic device. Alternatively, the preset safety distance is a distance at which a user of the mobile device exchanges secret information with the electronic device by using the mobile device. For example, the preset safety distance is 30 cm, 20 cm, or 10 cm. In this way, the user can conveniently and quickly enable the electronic device to execute all or the part of the specific function at the preset safety distance from the electronic device, to avoid an insecure behavior and ensure security. In addition, when there are a plurality of electronic devices, the user may identify, based on a specific electronic device that the held mobile device approaches, the electronic device that executes all or the part of the specific function. In this way, in a process in which the user holds the mobile device close to the electronic device from far to near, the electronic device can conveniently and quickly execute all or the part of the specific function without an operation performed by the user in the entire process, and overall time consumption is relatively low, to improve user experience and ensure information security.

According to the first aspect, the electronic device further performs the following step: after executing the part of the specific function, sending a third message based on a third periodicity by using the first antenna or the second antenna. The third message includes information indicating that the part of the specific function is executed.

According to the first aspect or any one of the foregoing implementation of the first aspect, the electronic device further performs the following steps: receiving a transmission message of the mobile device after the part of the specific function is executed; and executing a remaining part of the specific function in response to the transmission message.

According to the first aspect or any one of the foregoing implementation of the first aspect, the electronic device further performs the following steps: receiving a transmission message of the mobile device after sending the third message based on the third periodicity by using the first antenna or the second antenna; and executing a remaining part of the specific function in response to the transmission message.

According to the first aspect or any one of the foregoing implementation of the first aspect, the information indicating that the part of the specific function is executed includes information indicating that the electronic device is ready to execute the specific function.

According to the first aspect or any one of the foregoing implementation of the first aspect, the transmission message includes data related to performing of the remaining part of the specific function by the electronic device.

According to the first aspect or any one of the foregoing implementation of the first aspect, the electronic device further performs the following step: after executing all the specific function, sending a third message based on a third periodicity by using the first antenna or the second antenna. The third message includes information indicating that all the specific function is executed.

According to the first aspect or any one of the foregoing implementation of the first aspect, the electronic device further performs the following steps: receiving a first setting message before sending the first message based on the first periodicity by using the first antenna, where the first setting message includes at least one of identity information and password information of the mobile device; and in response to the first setting message, storing the identity information and/or the password information in the electronic device, or storing the identity information and/or the password information in a third-party device associated with the electronic device.

According to the first aspect or any one of the foregoing implementation of the first aspect, the first response message includes identity information or password information of the mobile device; and the electronic device further performs the following step: After receiving the first response message of the mobile device, and before sending, in response to the first response message, the second message based on the second periodicity by using the second antenna, the electronic device verifies that the identity information or the password information included in the first response message matches the identity information or the password information stored in the electronic device or the third-party device.

According to the first aspect or any one of the foregoing implementation of the first aspect, the second response message includes identity information or password information of the mobile device; and after receiving the second response message of the mobile device, and before executing all or the part of the specific function in response to the second response message, the electronic device further performs the following step: The electronic device verifies that the identity information or the password information included in the second response message matches the identity information or the password information stored in the electronic device or the third-party device.

According to the first aspect or any one of the foregoing implementation of the first aspect, after receiving the second response message of the mobile device, and before executing all or the part of the specific function in response to the second response message, the electronic device further performs the following step: The electronic device receives the second response message within preset duration.

According to the first aspect or any one of the foregoing implementation of the first aspect, the specific function includes at least one of a printing function, a projection function, a door opening function, an unlocking function, and a wireless routing device access function; at least two of the first periodicity, the second periodicity, and the third periodicity are the same or different; the first antenna and the second antenna are different antennas; and the preset safety distance may be set by a user as required.

According to a second aspect, an electronic device is provided. The electronic device wirelessly communicates with a mobile device. The electronic device includes: a processor; a memory; an antenna; and a computer program. A transmitting distance of the antenna at a first transmit power is a first distance, and the first distance is greater than a preset safety distance. A transmitting distance of the antenna at a second transmit power is a second distance, and the second distance is less than or equal to the preset safety distance. The first transmit power is greater than the second transmit power. The computer program is stored in the memory, and when the computer program is executed by the processor, the electronic device is enabled to perform the following steps: sending a first message based on a first periodicity by using the antenna at the first transmit power; receiving a first response message of the mobile device; sending, in response to the first response message, a second message based on a second periodicity by using the antenna at the second transmit power; receiving a second response message of the mobile device; and executing all or a part of a specific function in response to the second response message. A technical effect of the second aspect is similar to a technical effect of the first aspect. Details are not described herein again.

According to the second aspect, the electronic device further performs the following step: after executing the part of the specific function, sending a third message based on a third periodicity by using the antenna at the first transmit power or the antenna at the second transmit power. The third message includes information indicating that the part of the specific function is executed.

According to the second aspect or any one of the foregoing implementation of the second aspect, the electronic device further performs the following steps: receiving a transmission message of the mobile device after sending the third message based on the third periodicity by using the antenna at the first transmit power or the antenna at the second transmit power; and executing a remaining part of the specific function in response to the transmission message. According to the second aspect or any one of the foregoing implementation of the second aspect, the electronic device further performs the following step: after executing all the specific function, sending a third message based on a third periodicity by using the antenna at the first transmit power or the antenna at the second transmit power. The third message includes information indicating that all the specific function is executed.

According to the second aspect or any one of the foregoing implementation of the second aspect, the electronic device further performs the following steps: receiving a first setting message before sending the first message based on the first periodicity by using the antenna at the first transmit power, where the first setting message includes at least one of identity information and password information of the mobile device; and in response to the first setting message, storing the identity information and/or the password information in the electronic device, or storing the identity information and/or the password information in a third-party device associated with the electronic device. According to the second aspect or any one of the foregoing implementation of the second aspect, the first response message includes identity information or password information of the mobile device; and the electronic device further performs the following step: After receiving the first response message of the mobile device, and before sending, in response to the first response message, the second message based on the second periodicity by using the antenna at the second transmit power, the electronic device verifies that the identity information or the password information included in the first response message matches the identity information or the password information stored in the electronic device or the third-party device.

According to the second aspect or any one of the foregoing implementation of the second aspect, the executing the part of the specific function includes: displaying a specific interface.

According to a third aspect, a mobile device is provided. The mobile device wirelessly communicates with the electronic device in the first aspect or any one of the foregoing implementation of the first aspect, or the second aspect or any one of the foregoing implementation of the second aspect. The mobile device includes: a processor; a memory; and a computer program. The computer program is stored in the memory, and when the computer program is executed by the processor, the mobile device is enabled to perform the following steps: receiving a first message of the electronic device within a first distance of the electronic device; sending a first response message in response to the first message; receiving a second message of the electronic device within a second distance of the electronic device; and sending a second response message in response to the second message. The first distance is greater than a preset safety distance, and the second distance is less than or equal to the preset safety distance.

According to the third aspect, after sending the second response message, the mobile device further performs: receiving a third message of the electronic device within the first distance of the electronic device; and in response to the third message, displaying or playing information associated with the third message.

According to the third aspect or any one of the foregoing implementation of the third aspect, after receiving the third message of the electronic device, the mobile device further performs: sending a transmission message. The first response message includes at least one of identity information and password information of the mobile device. According to the third aspect or any one of the foregoing implementation of the third aspect, the second response message includes at least one of the identity information and the password information of the mobile device. According to the third aspect or any one of the foregoing implementation of the third aspect, the preset safety distance is a distance at which a holder of the mobile device can quickly control the electronic device; or the preset safety distance is a distance at which a user of the mobile device exchanges secret information with the electronic device by using the mobile device.

According to a fourth aspect, an automatic control method is provided. The method is applied to an electronic device. The electronic device wirelessly communicates with a mobile device. The electronic device includes: a processor, a memory, a first antenna, and a second antenna. A transmitting distance of the first antenna is a first distance, and the first distance is greater than a preset safety distance. A transmitting distance of the second antenna is a second distance, and the second distance is less than or equal to the preset safety distance. The method includes: The electronic device sends a first message based on a first periodicity by using the first antenna; the electronic device receives a first response message of the mobile device; the electronic device sends, in response to the first response message, a second message based on a second periodicity by using the second antenna; the electronic device receives a second response message of the mobile device; and the electronic device executes all or a part of a specific function in response to the second response message.

According to a fourth aspect, the method further includes: After the electronic device executes the part of the specific function, the electronic device sends a third message based on a third periodicity by using the first antenna or the second antenna, and the third message includes information indicating that the part of the specific function is executed. According to the fourth aspect or any one of the foregoing implementation of the fourth aspect, the method further includes: The electronic device receives a transmission message of the mobile device after the electronic device executes the part of the specific function; and the electronic device performs a remaining part of the specific function in response to the transmission message.

According to the fourth aspect or any one of the foregoing implementation of the fourth aspect, the method further includes: The electronic device receives a transmission message of the mobile device after the electronic device sends the third message based on the third periodicity by using the first antenna or the second antenna; and the electronic device performs a remaining part of the specific function in response to the transmission message.

According to the fourth aspect or any one of the foregoing implementation of the fourth aspect, the information indicating that the part of the specific function is executed includes information indicating that the electronic device is ready to execute the specific function.

According to the fourth aspect or any one of the foregoing implementation of the fourth aspect, the method further includes: after the electronic device executes all the specific function, the electronic device sends the third message based on the third periodicity by using the first antenna or the second antenna, and the third message includes information indicating that all the specific function is executed.

According to the fourth aspect or any one of the foregoing implementation of the fourth aspect, the method further includes: Before the electronic device sends the first message based on the first periodicity by using the first antenna, the electronic device receives a first setting message, and the first setting message includes at least one of identity information and password information of the mobile device; and in response to the first setting message, the electronic device stores the identity information and/or the password information in the electronic device, or stores the identity information and/or the password information in a third-party device associated with the electronic device. According to the fourth aspect or any one of the foregoing implementation of the fourth aspect, the first response message includes identity information or password information of the mobile device; and the method further includes: After the electronic device receives the first response message of the mobile device, and before sending, in response to the first response message, the second message based on the second periodicity by using the second antenna, the electronic device verifies that the identity information or the password information included in the first response message matches the identity information or the password information stored in the electronic device or the third-party device.

According to the fourth aspect or any one of the foregoing implementation of the fourth aspect, the second response message includes identity information or password information of the mobile device; and after receiving the second response message of the mobile device, and before the electronic device executes all or the part of the specific function in response to the second response message, the method further includes: The electronic device verifies that the identity information or the password information included in the second response message matches the identity information or the password information stored in the electronic device or the third-party device.

According to the fourth aspect or any one of the foregoing implementation of the fourth aspect, after receiving the second response message of the mobile device, and before the electronic device executes all or the part of the specific function in response to the second response message, the method further includes: The electronic device receives the second response message within preset duration.

According to a fifth aspect, an automatic control method is provided. The method is applied to an electronic device. The electronic device wirelessly communicates with a mobile device. The electronic device includes: a processor, a memory, and an antenna. A transmitting distance of the antenna at a first transmit power is a first distance, and the first distance is greater than a preset safety distance; a transmitting distance of the antenna at a second transmit power is a second distance, and the second distance is less than or equal to the preset safety distance; and the first transmit power is greater than the second transmit power. The method includes: The electronic device sends a first message based on a first periodicity by using the antenna at the first transmit power; the electronic device receives a first response message of the mobile device; the electronic device sends, in response to the first response message, a second message based on a second periodicity by using the antenna at the second transmit power; the electronic device receives a second response message of the mobile device; and the electronic device executes all or a part of a specific function in response to the second response message.

According to the fifth aspect, the method further includes: After the electronic device executes the part of the specific function, the electronic device sends a third message based on a third periodicity by using the antenna at the first transmit power or the antenna at the second transmit power. The third message includes information indicating that the part of the specific function is executed.

According to the fifth aspect or any one of the foregoing implementation of the fifth aspect, the method further includes: The electronic device receives a transmission message of the mobile device after the electronic device sends the third message based on the third periodicity by using the antenna at the first transmit power or the antenna at the second transmit power; and the electronic device performs a remaining part of the specific function in response to the transmission message.

According to the fifth aspect or any one of the foregoing implementation of the fifth aspect, the method further includes: After executing all the specific function, the electronic device sends a third message based on a third periodicity by using the antenna at the first transmit power or the antenna at the second transmit power. The third message includes information indicating that all the specific function is executed.

According to the fifth aspect or any one of the foregoing implementation of the fifth aspect, the method further includes: receiving a first setting message before sending the first message based on the first periodicity by using the antenna at the first transmit power, where the first setting message includes at least one of identity information and password information of the mobile device; and in response to the first setting message, storing the identity information and/or the password information in the electronic device, or storing the identity information and/or the password information in a third-party device associated with the electronic device.

According to the fifth aspect or any one of the foregoing implementation of the fifth aspect, the first response message includes identity information or password information of the mobile device; and the method further includes: After receiving the first response message of the mobile device, and before sending, in response to the first response message, the second message based on the second periodicity by using the antenna at the second transmit power, the electronic device verifies that the identity information or the password information included in the first response message matches the identity information or the password information stored in the electronic device or the third-party device. According to a sixth aspect, an automatic control method is provided. The method is applied to a mobile device. The mobile device wirelessly communicates with an electronic device. The mobile device includes a processor and a memory. The method includes: The mobile device receives a first message of the electronic device within a first distance of the electronic device; the mobile device sends a first response message in response to the first message; the mobile device receives a second message of the electronic device within a second distance of the electronic device; and the mobile device sends a second response message in response to the second message.

According to the sixth aspect, after sending the second response message, the method further includes: The mobile device receives a third message of the electronic device within the first distance of the electronic device; and the mobile device displays or plays, in response to the third message, information associated with the third message.

According to the sixth aspect or any one of the foregoing implementation of the sixth aspect, after receiving the third message of the electronic device, the method further includes: The mobile device sends a transmission message, and the first response message includes at least one of identity information and password information of the mobile device. According to the sixth aspect or any one of the foregoing implementation of the sixth aspect, the second response message includes at least one of the identity information and the password information of the mobile device. According to a seventh aspect, a computer-readable storage medium is provided. The computer-readable storage medium includes a computer program, and when the computer program is run on an electronic device, the electronic device is enabled to perform the method in the fourth aspect or any one of the implementations of the fourth aspect, or the fifth aspect or any one of the implementations of the fifth aspect.

According to an eighth aspect, a computer-readable storage medium is provided. The computer-readable storage medium includes a computer program, and when the computer program is run on a mobile device, the mobile device is enabled to perform the method in the sixth aspect or any one of the implementations of the sixth aspect. According to a ninth aspect, a computer program product is provided. When the computer program product is run on an electronic device, the electronic device is enabled to perform the method in the fourth aspect or any one of the implementations of the fourth aspect, or the fifth aspect or any one of the implementations of the fifth aspect. According to a tenth aspect, a computer program product is provided. When the computer program product is run on a mobile device, the mobile device is enabled to perform the method in the sixth aspect or any one of the implementations of the sixth aspect.

According to an eleventh aspect, an electronic device is provided. The electronic device is located in a door or in a lock of a door, and the electronic device includes: a processor; a memory; a first antenna; a second antenna; and a computer program. A transmitting distance of the first antenna is a first distance, and the first distance is greater than a preset safety distance. A transmitting distance of the second antenna is a second distance, and the second distance is less than or equal to the preset safety distance. The computer program is stored in the memory, and when the computer program is executed by the processor, the electronic device is enabled to perform the following steps: The electronic device sends a first message based on a first periodicity by using the first antenna; the electronic device receives a first response message of a mobile device; the electronic device sends, in response to the first response message, a second message based on a second periodicity by using the second antenna; the electronic device receives a second response message of the mobile device; and the electronic device controls, in response to the second response message, the door or the lock to execute a specific function. The preset safety distance is a distance at which a holder of the mobile device can quickly control the electronic device, the door, or the lock. For example, the preset safety distance may be 30 cm, 20 cm, 10 cm, or the like. In this way, within the preset safety distance from the electronic device, the user can quickly control the electronic device in the door or the lock, or quickly control the door or the lock, to avoid an unsafe behavior (such as an illegal intrusion or theft) and ensure security. In this way, in a process in which the mobile device is moved close to the electronic device from far to near, if the electronic device receives, by using the second antenna (for example, a weak antenna), the second response message sent by the mobile device, it is determined that a distance between the mobile device and the electronic device meets a set condition, so that the electronic device controls the door or the lock to execute the specific function. The electronic device accurately determines the distance between the electronic device and the mobile device by using the weak antenna, to reduce or even avoid a delay of user's access while ensuring security, so as to improve user experience.

According to the eleventh aspect, the sending, in response to the first response message, a second message based on a second periodicity by using the second antenna includes: performing first identity verification on the first response message in response to the first response message; and after the first identity verification succeeds, broadcasting the second message based on the second periodicity by using the second antenna; and before the sending a first message based on a first periodicity by using the first antenna, the electronic device further performs: generating a first random number, and generating the first message based on the first random number and an ID of the electronic device. In this way, in the process in which the mobile device is moved close to the electronic device from far to near, identity verification on the mobile device is performed when the mobile device is relatively far from the electronic device; and when the mobile device is relatively close to the electronic device, the door or the lock directly performs the specific function. The entire process is imperceptible to the user, while ensuring security and preventing an unauthorized user from opening or unlocking the door.

According to the eleventh aspect or any one of the foregoing implementation of the eleventh aspect, the controlling, by the electronic device in response to the second response message, the door or the lock to execute a specific function includes: The electronic device performs second identity verification on the second response message in response to the second response message; and after the second identity verification succeeds, the electronic device controls the door or the lock to execute the specific function; and before the sending a second message based on a second periodicity by using the second antenna, the electronic device further performs: generating a second random number, and generating the second message based on the second random number and the ID of the electronic device. In this way, in a process in which the mobile device is moved to the electronic device from far to near, when the mobile device is relatively far away from the electronic device, the identity verification on the mobile device is performed; and when the mobile device is relatively close to the electronic device, the identity verification on the mobile device is performed again, and after the identity verification succeeds twice, the door or the lock performs the specific function. Therefore, the entire process is imperceptible to the user, while further ensuring security and preventing an unauthorized user from opening or unlocking the door.

According to the eleventh aspect or any one of the foregoing implementation of the eleventh aspect, the first response message includes at least one of identity information and password information of the mobile device; and after the electronic device controls the door or the lock to execute the specific function, the electronic device further sends, to the mobile device, a message indicating that the specific function is executed. In this way, after the door or the lock performs the specific function, the mobile device receives a corresponding completion result status, so that the user can easily learn of the result.

According to the eleventh aspect or any one of the foregoing implementation of the eleventh aspect, the second response message includes at least one of the identity information and the password information of the mobile device; and the second periodicity and the first periodicity are different or the same.

According to the eleventh aspect or any one of the foregoing implementation of the eleventh aspect, the electronic device further performs: after the first identity verification fails, sending the first message based on the first periodicity by using the first antenna; or after the second identity verification fails, sending the second message based on the second periodicity by using the second antenna; or after the second identity verification fails, sending the first message based on the first periodicity by using the first antenna. In this way, if the electronic device fails to verify an identity by using a response message received from the mobile device, the electronic device resends the first message or the second message, so as to obtain a corresponding message from the mobile device. In this way, an opportunity for identity verification can be provided again.

According to the eleventh aspect or any one of the foregoing implementation of the eleventh aspect, broadcasting the first message based on the first periodicity by using the first antenna after the first identity verification fails includes: after the first identity verification fails, generating the first random number, generating the first message based on the first random number and the ID of the electronic device, and broadcasting the first message based on the first periodicity by using the first antenna; and broadcasting the second message based on the second periodicity by using the second antenna after the second identity verification fails includes: after the second identity verification fails, generating the second random number, generating the second message based on the second random number and the ID of the electronic device, and broadcasting the second message based on the second periodicity by using the second antenna. In this way, a cyclic procedure is provided, so that after the identity verification fails, a corresponding step is returned and performed cyclically.

According to the eleventh aspect or any one of the foregoing implementation of the eleventh aspect, at least one of the identity information and the password information of the mobile device is preset, the specific function is associated with at least one of the identity information and the password information of the mobile device, and the specific function includes but is not limited to: opening a door or unlocking a door. In this way, the specific function may be preset by the user, and is not limited to one function, and may be a plurality of functions. For example, after presetting, in a process in which a mother holds the mobile device close to a home door from far to near, the door is automatically opened, which is imperceptible to the mother, and a voice prompt "Mum is back" is automatically played. In this way, user experience is greatly improved.

According to a twelfth aspect, an electronic device is provided. The electronic device is located in a door or in a lock of a door, and the electronic device includes: a processor; a memory; an antenna; and a computer program. A transmitting distance of the antenna at a first transmit power is a first distance, and the first distance is greater than a preset safety distance; a transmitting distance of the antenna at a second transmit power is a second distance, and the second distance is less than or equal to the preset safety distance; and the first transmit power is greater than the second transmit power. The computer program is stored in the memory, and when the computer program is executed by the processor, the electronic device is enabled to perform the following steps: The electronic device sends a first message based on a first periodicity by using the antenna at the first transmit power; the electronic device receives a first response message of a mobile device; the electronic device sends, in response to the first response message, a second message based on a second periodicity by using the antenna at the second transmit power; the electronic device receives a second response message of the mobile device; and the electronic device controls, in response to the second response message, the door or the lock to execute a specific function.

According to the twelfth aspect, the sending, in response to the first response message, a second message based on a second periodicity by using the antenna at the second transmit power includes: performing first identity verification on the first response message in response to the first response message; and after the first identity verification succeeds, broadcasting the second message based on the second periodicity by using the antenna at the second transmit power; and before the sending a first message based on a first periodicity by using the antenna at the first transmit power, the electronic device further performs: generating a first random number, and generating the first message based on the first random number and an ID of the electronic device.

According to the twelfth aspect or any one of the foregoing implementation of the twelfth aspect, the controlling, by the electronic device in response to the second response message, the door or the lock to execute a specific function includes: The electronic device performs second identity verification on the second response message in response to the second response message; and after the second identity verification succeeds, the electronic device controls the door or the lock to execute the specific function; and before the sending a second message based on a second periodicity by using the antenna at the second transmit power, the electronic device further performs: generating a second random number, and generating the second message based on the second random number and the ID of the electronic device.

According to the twelfth aspect or any one of the foregoing implementation of the twelfth aspect, the first response message includes at least one of identity information and password information of the mobile device; and after the electronic device controls the door or the lock to execute the specific function, the electronic device further sends, to the mobile device, a message indicating that the specific function is executed.

According to the twelfth aspect or any one of the foregoing implementation of the twelfth aspect, the second response message includes at least one of the identity information and the password information of the mobile device; and the second periodicity and the first periodicity are different or the same.

According to the twelfth aspect or any one of the foregoing implementation of the twelfth aspect, the electronic device further performs: after the first identity verification fails, sending the first message based on the first periodicity by using the antenna at the first transmit power; or after the second identity verification fails, sending the second message based on the second periodicity by using the antenna at the second transmit power; or after the second identity verification fails, sending the first message based on the first periodicity by using the antenna at the first transmit power.

According to the twelfth aspect or any one of the foregoing implementation of the twelfth aspect, broadcasting the first message based on the first periodicity by using the antenna at the first transmit power after the first identity verification fails includes: after the first identity verification fails, generating the first random number, generating the first message based on the first random number and the ID of the electronic device, and broadcasting the first message based on the first periodicity by using the antenna at the first transmit power; and broadcasting the second message based on the second periodicity by using the antenna at the second transmit power after the second identity verification fails includes: after the second identity verification fails, generating the second random number, generating the second message based on the second random number and the ID of the electronic device, and broadcasting the second message based on the second periodicity by using the antenna at the second transmit power.

According to the twelfth aspect or any one of the foregoing implementation of the twelfth aspect, at least one of the identity information and the password information of the mobile device is preset, the specific function is associated with at least one of the identity information and the password information of the mobile device, and the specific function includes but is not limited to: opening a door or unlocking a door. The specific function may be preset by the user, and is not limited to one function, and may be a plurality of functions.

According to a thirteen aspect, a mobile device is provided. The mobile device wirelessly communicates with the electronic device in the eleventh aspect or any one of the implementations of the eleventh aspect, or the twelfth aspect or any one of the implementations of the twelfth aspect. The mobile device includes: a processor; a memory; and a computer program. The computer program is stored in the memory, and when the computer program is executed by the processor, the mobile device is enabled to perform the following steps: receiving a first message of the electronic device within a first distance of the electronic device; sending a first response message in response to the first message; receiving a second message of the electronic device within a second distance of the electronic device; and sending a second response message in response to the second message. The first distance is greater than a preset safety distance, and the second distance is less than or equal to the preset safety distance.

According to the thirteen aspect, after sending the second response message, the mobile device further performs: receiving a third message of the electronic device within the first distance of the electronic device; and in response to the third message, displaying or playing information associated with the third message.

According to the thirteen aspect or any one of the foregoing implementation of the thirteen aspect, after receiving the third message of the electronic device, the mobile device further performs: sending a transmission message. The first response message includes at least one of identity information and password information of the mobile device. According to the thirteen aspect or any one of the foregoing implementation of the thirteen aspect, the second response message includes at least one of the identity information and the password information of the mobile device. According to the thirteen aspect or any one of the foregoing implementation of the thirteen aspect, the preset safety distance is a distance at which a holder of the mobile device can quickly control the electronic device; or the preset safety distance is a distance at which a user of the mobile device exchanges secret information with the electronic device by using the mobile device.

According to a fourteenth aspect, an automatic control method is provided. The method is applied to an electronic device. The electronic device wirelessly communicates with a mobile device. The electronic device includes: a processor, a memory, a first antenna, and a second antenna. A transmitting distance of the first antenna is a first distance, and the first distance is greater than a preset safety distance. A transmitting distance of the second antenna is a second distance, and the second distance is less than or equal to the preset safety distance. The method includes: The electronic device sends a first message based on a first periodicity by using the first antenna; the electronic device receives a first response message of the mobile device; the electronic device sends, in response to the first response message, a second message based on a second periodicity by using the second antenna; the electronic device receives a second response message of the mobile device; and the electronic device executes all or a part of a specific function in response to the second response message.

According to the fourteenth aspect, the sending, in response to the first response message, a second message based on a second periodicity by using the second antenna includes: performing first identity verification on the first response message in response to the first response message; and after the first identity verification succeeds, broadcasting the second message based on the second periodicity by using the second antenna; and before the sending a first message based on a first periodicity by using the first antenna, the method further includes: generating a first random number, and generating the first message based on the first random number and an ID of the electronic device.

According to the fourteenth aspect or any one of the foregoing implementation of the fourteenth aspect, that the electronic device controls, in response to the second response message, a door or a lock to execute the specific function includes: The electronic device performs second identity verification on the second response message in response to the second response message; and after the second identity verification succeeds, the electronic device controls the door or the lock to execute the specific function; and before the sending a second message based on a second periodicity by using the second antenna, the method further includes: generating a second random number, and generating the second message based on the second random number and the ID of the electronic device.

According to the fourteenth aspect or any one of the foregoing implementation of the fourteenth aspect, the first response message includes at least one of identity information and password information of the mobile device; and after the electronic device controls the door or the lock to execute the specific function, the electronic device further sends, to the mobile device, a message indicating that the specific function is executed.

According to the fourteenth aspect or any one of the foregoing implementation of the fourteenth aspect, the second response message includes at least one of the identity information and the password information of the mobile device; and the second periodicity and the first periodicity are different or the same.

According to the fourteenth aspect or any one of the foregoing implementation of the fourteenth aspect, the method further includes: after the first identity verification fails, sending the first message based on the first periodicity by using the first antenna; or after the second identity verification fails, sending the second message based on the second periodicity by using the second antenna; or after the second identity verification fails, sending the first message based on the first periodicity by using the first antenna.

According to the fourteenth aspect or any one of the foregoing implementation of the fourteenth aspect, broadcasting the first message based on the first periodicity by using the first antenna after the first identity verification fails includes: after the first identity verification fails, generating the first random number, generating the first message based on the first random number and the ID of the electronic device, and broadcasting the first message based on the first periodicity by using the first antenna; and broadcasting the second message based on the second periodicity by using the second antenna after the second identity verification fails includes: after the second identity verification fails, generating the second random number, generating the second message based on the second random number and the ID of the electronic device, and broadcasting the second message based on the second periodicity by using the second antenna.

According to the fourteenth aspect or any one of the foregoing implementation of the fourteenth aspect, at least one of the identity information and the password information of the mobile device is preset, the specific function is associated with at least one of the identity information and the password information of the mobile device, and the specific function includes but is not limited to: opening a door or unlocking a door.

According to a fifteenth aspect, an automatic control method is provided. The method is applied to an electronic device. The electronic device is located in a door or in a lock of a door. The electronic device includes: a processor, a memory, and an antenna. A transmitting distance of the antenna at a first transmit power is a first distance, and the first distance is greater than a preset safety distance; a transmitting distance of the antenna at a second transmit power is a second distance, and the second distance is less than or equal to the preset safety distance; and the first transmit power is greater than the second transmit power. The method includes: The electronic device sends a first message based on a first periodicity by using the antenna at the first transmit power; the electronic device receives a first response message of the mobile device; the electronic device sends, in response to the first response message, a second message based on a second periodicity by using the antenna at the second transmit power; the electronic device receives a second response message of the mobile device; and the electronic device controls the door or the lock to execute a specific function in response to the second response message.

According to the fifteenth aspect, the sending, in response to the first response message, a second message based on a second periodicity by using the antenna at the second transmit power includes: performing first identity verification on the first response message in response to the first response message; and after the first identity verification succeeds, broadcasting the second message based on the second periodicity by using the antenna at the second transmit power; and before the sending a first message based on a first periodicity by using the antenna at the first transmit power, the method further includes: generating a first random number, and generating the first message based on the first random number and an ID of the electronic device.

According to the fifteenth aspect or any one of the foregoing implementation of the fifteenth aspect, that the electronic device controls, in response to the second response message, the door or the lock to execute a specific function includes: The electronic device performs second identity verification on the second response message in response to the second response message; and after the second identity verification succeeds, the electronic device controls the door or the lock to execute the specific function; and before the sending a second message based on a second periodicity by using the antenna at the second transmit power, the method further includes: generating a second random number, and generating the second message based on the second random number and the ID of the electronic device.

According to the fifteenth aspect or any one of the foregoing implementation of the fifteenth aspect, the first response message includes at least one of identity information and password information of the mobile device; and after the electronic device controls the door or the lock to execute the specific function, the electronic device further sends, to the mobile device, a message indicating that the specific function is executed.

According to the fifteenth aspect or any one of the foregoing implementation of the fifteenth aspect, the second response message includes at least one of the identity information and the password information of the mobile device; and the second periodicity and the first periodicity are different or the same.

According to the fifteenth aspect or any one of the foregoing implementation of the fifteenth aspect, the method further includes: after the first identity verification fails, sending the first message based on the first periodicity by using the antenna at the first transmit power; or after the second identity verification fails, sending the second message based on the second periodicity by using the antenna at the second transmit power; or after the second identity verification fails, sending the first message based on the first periodicity by using the antenna at the first transmit power. According to the fifteenth aspect or any one of the foregoing implementation of the fifteenth aspect, broadcasting the first message based on the first periodicity by using the antenna at the first transmit power after the first identity verification fails includes: after the first identity verification fails, generating the first random number, generating the first message based on the first random number and the ID of the electronic device, and broadcasting the first message based on the first periodicity by using the antenna at the first transmit power; and broadcasting the second message based on the second periodicity by using the antenna at the second transmit power after the second identity verification fails includes: after the second identity verification fails, generating the second random number, generating the second message based on the second random number and the ID of the electronic device, and broadcasting the second message based on the second periodicity by using the antenna at the second transmit power.

According to the fifteenth aspect or any one of the foregoing implementation of the fifteenth aspect, at least one of the identity information and the password information of the mobile device is preset, the specific function is associated with at least one of the identity information and the password information of the mobile device, and the specific function includes but is not limited to: opening a door or unlocking a door. The specific function may be preset by the user, and is not limited to one function, and may be a plurality of functions.

According to a sixteenth aspect, an automatic control method is provided. The method is applied to a mobile device. The mobile device wirelessly communicates with the electronic device in the eleventh aspect or any one of the implementations of the eleventh aspect, or or any one of the twelfth aspect the implementations of the twelfth aspect. The mobile device includes a processor and a memory. The method includes: receiving a first message of the electronic device within a first distance of the electronic device; sending a first response message in response to the first message; receiving a second message of the electronic device within a second distance of the electronic device; and sending a second response message in response to the second message. The first distance is greater than a preset safety distance, and the second distance is less than or equal to the preset safety distance.

According to the sixteenth aspect, after sending the second response message, the method further includes: receiving a third message of the electronic device within the first distance of the electronic device; and displaying or playing, in response to the third message, information associated with the third message.

According to the sixteenth aspect or any one of the foregoing implementation of the sixteenth aspect, after receiving the third message of the electronic device, the method further includes: sending a transmission message. The first response message includes at least one of identity information and password information of the mobile device. According to the sixteenth aspect or any one of the foregoing implementation of the sixteenth aspect, the second response message includes at least one of the identity information and the password information of the mobile device. According to the sixteenth aspect or any one of the foregoing implementation of the sixteenth aspect, the preset safety distance is a distance at which a holder of the mobile device can quickly control the electronic device; or the preset safety distance is a distance at which a user of the mobile device exchanges secret information with the electronic device by using the mobile device.

According to a seventeenth aspect, a computer-readable storage medium is provided. The computer-readable storage medium includes a computer program, and when the computer program is run on an electronic device, the electronic device is enabled to perform the method in the fourteenth aspect or any one of the implementations of the fourteenth aspect, or the fifteenth aspect or any one of the implementations of the fifteenth aspect.

According to an eighteenth aspect, a computer-readable storage medium is provided. The computer-readable storage medium includes a computer program, and when the computer program is run on a mobile device, the mobile device is enabled to perform the method in the sixteenth aspect or any one of the implementations of the sixteenth aspect. According to a nineteenth aspect, a computer program product is provided. When the computer program product is run on a computer, the computer is enabled to perform the method in the fourteenth aspect or any one of the implementations of the fourteenth aspect, or the fifteenth aspect or any one of the implementations of the fifteenth aspect, or the sixteenth aspect or any one of the implementations of the sixteenth aspect.

According to a twentieth aspect, a print device is provided. The print device wirelessly communicates with a mobile device. The print device includes: a processor; a memory; a first antenna; a second antenna; and a computer program. A transmitting distance of the first antenna is a first distance, and the first distance is greater than a preset safety distance. A transmitting distance of the second antenna is a second distance, and the second distance is less than or equal to the preset safety distance. The computer program is stored in the memory, and when the computer program is executed by the processor, the print device is enabled to perform the following steps: sending a first message based on a first periodicity by using the first antenna; receiving a first response message of the mobile device; sending, in response to the first response message, a second message based on a second periodicity by using the second antenna; receiving a second response message of the mobile device, where the second response message includes a to-be-printed file; and printing the to-be-printed file in response to the second response message. The preset safety distance is a distance at which a holder of the mobile device can quickly obtain a printed file printed by the print device. For example, the preset safety distance may be 50 cm, 30 cm, 20 cm, or the like. When the preset safety distance is set to 50 cm, the user can quickly obtain the printed file at a location at most 50 cm away from the print device, to avoid an insecure behavior (for example, the printed file is stolen by another person), so as to ensure security of the printed file and another aspect. In addition, when there are a plurality of print devices in a print room or a print corner, the user may identify, based on a specific print device that the held mobile device approaches, the print device on which the printed file is located. In this way, in a process in which the user holds the mobile device close to the print device from far to near, the user only needs to select the to-be-printed file in the entire process, and no other operation is required, so that printing can be conveniently and quickly completed, and the user can easily identify the print device that actually prints a user file, and quickly obtain a printed file, to reduce a risk of theft and robbery of the printed file, reduce overall time consumption, improve user experience, and ensure information security.

According to a twenty-first aspect, a print device is provided. The print device wirelessly communicates with a mobile device. The print device includes a display. The print device further includes: a processor; a memory; a first antenna; a second antenna; and a computer program. A transmitting distance of the first antenna is a first distance, and the first distance is greater than a preset safety distance. A transmitting distance of the second antenna is a second distance, and the second distance is less than or equal to the preset safety distance. The computer program is stored in the memory, and when the computer program is executed by the processor, the print device is enabled to perform the following steps: sending a first message based on a first periodicity by using the first antenna; receiving a first response message of the mobile device; sending, in response to the first response message, a second message based on a second periodicity by using the second antenna; receiving a second response message of the mobile device; displaying a print interface in response to the second response message; receiving a message of the mobile device that includes a to-be-printed file; and printing the to-be-printed file in response to the message. A technical effect of the twenty-first aspect is similar to a technical effect of the twentieth aspect. Details are not described herein again.

According to the twenty-first aspect, before sending the first message based on the first periodicity by using the first antenna, the print device further performs the following steps: receiving a first setting message, where the first setting message includes identity information or password information of the mobile device; and in response to the first setting message, storing the identity information or the password information in the print device, or storing the identity information or the password information in a third-party device associated with the print device. The third-party device may be a server, and may be specifically a cloud server. In this way, before the print device is used, the identity information or the password information of the mobile device is set first, so that the print device pre-stores the identity information or the password information of the mobile device. When the mobile device subsequently uses the print device, verification and identification may be performed by using the pre-stored identity information or password information of the mobile device.

According to the twenty-first aspect or any one of the foregoing implementation of the twenty-first aspect, before sending the first message based on the first periodicity by using the first antenna, the print device further performs the following steps: receiving a first setting message, where the first setting message includes a first password and identity information or password information of the mobile device; and after the password is verified to be correct, storing the identity information or the password information in the print device, or storing the identity information or the password information in a third-party device associated with the print device. In this way, in a preset step before the print device is used, the identity information or the password information of the mobile device can be stored on the print device only after the password verification succeeds. This mode can be applied to an environment that is closed or with a high security requirement, such as a company or office. Employees in the company and office complete the preset step by using a password, and pre-store the identity information or password information of their mobile devices on the print device. Only employees in the company and office can use the print device. Visitors and the like cannot use the print device. When the mobile device subsequently uses the print device, the employees in the company and office may perform verification and identification by using the pre-stored identity information or password information of the mobile device.

According to the twenty-first aspect or any one of the foregoing implementation of the twenty-first aspect, before sending the first message based on the first periodicity by using the first antenna, the print device further performs the following steps: receiving the first setting message, where the first setting message includes a first password; after the password is verified to be correct, sending a first reply message by using the first antenna or the second antenna; receiving a second setting message, where the second setting message includes the identity information or the password information of the mobile device; and in response to the second setting message, storing the identity information or the password information in the print device, or storing the identity information or the password information in the third-party device associated with the print device.

According to the twenty-first aspect or any one of the foregoing implementations of the twenty-first aspect, the third-party device includes a server. Further, the third-party device includes a cloud server.

According to a twenty-second aspect, a print device is provided. The print device wirelessly communicates with a mobile device; and the print device includes: a processor; a memory; an antenna; and a computer program. A transmitting distance of the antenna at a first transmit power is a first distance, and the first distance is greater than a preset safety distance; a transmitting distance of the antenna at a second transmit power is a second distance, and the second distance is less than or equal to the preset safety distance; and the first transmit power is greater than the second transmit power. The computer program is stored in the memory, and when the computer program is executed by the processor, the print device is enabled to perform the following steps: sending a first message based on a first periodicity by using the antenna at the first transmit power; receiving a first response message of the mobile device; sending, in response to the first response message, a second message based on a second periodicity by using the antenna at the second transmit power; receiving a second response message of the mobile device, where the second response message includes a to-be-printed file; and printing the to-be-printed file in response to the second response message. According to a twenty-third aspect, a print device is provided. The print device wirelessly communicates with a mobile device. The print device includes a display. The print device further includes: a processor; a memory; an antenna; and a computer program. A transmitting distance of the antenna at a first transmit power is a first distance, and the first distance is greater than a preset safety distance; a transmitting distance of the antenna at a second transmit power is a second distance, and the second distance is less than or equal to the preset safety distance; and the first transmit power is greater than the second transmit power. The computer program is stored in the memory, and when the computer program is executed by the processor, the print device is enabled to perform the following steps: sending a first message based on a first periodicity by using the antenna at the first transmit power; receiving a first response message of the mobile device; sending, in response to the first response message, a second message based on a second periodicity by using the antenna at the second transmit power; receiving a second response message of the mobile device; displaying a print interface in response to the second response message; receiving a message of the mobile device that includes a to-be-printed file; and printing the to-be-printed file in response to the message.

According to the twenty-third aspect, before the sending a first message based on a first periodicity by using the antenna at the first transmit power, the print device further performs the following steps: receiving a first setting message, where the first setting message includes identity information or password information of the mobile device; and in response to the first setting message, storing the identity information or the password information in the print device, or storing the identity information or the password information in a third-party device associated with the print device.

According to the twenty-third aspect or any one of the foregoing implementation of the twenty-third aspect, before the sending a first message based on a first periodicity by using the antenna at the first transmit power, the print device further performs the following steps: receiving a first setting message, where the first setting message includes a first password and identity information or password information of the mobile device; and after the password is verified to be correct, storing the identity information or the password information in the print device, or storing the identity information or the password information in a third-party device associated with the print device.

According to the twenty-third aspect or any one of the foregoing implementation of the twenty-third aspect, before the sending a first message based on a first periodicity by using the antenna at the first transmit power, the print device further performs the following steps: receiving the first setting message, where the first setting message includes a first password; after the password is verified to be correct, sending a first reply message by using the antenna at the first transmit power or the antenna at the second transmit power; receiving a second setting message, where the second setting message includes the identity information or the password information of the mobile device; and in response to the second setting message, storing the identity information or the password information in the print device, or storing the identity information or the password information in the third-party device associated with the print device. According to a twenty-fourth aspect, an automatic printing method is provided, and is applied to a print device. The print device wirelessly communicates with a mobile device. The print device includes: a processor, a memory, a first antenna, and a second antenna. A transmitting distance of the first antenna is a first distance, and the first distance is greater than a preset safety distance. A transmitting distance of the second antenna is a second distance, and the second distance is less than or equal to the preset safety distance. The method includes: sending a first message based on a first periodicity by using the first antenna; receiving a first response message of the mobile device; sending, in response to the first response message, a second message based on a second periodicity by using the second antenna; receiving a second response message of the mobile device, where the second response message includes a to-be-printed file; and printing the to-be-printed file in response to the second response message.

According to a twenty-fifth aspect, an automatic printing method is provided, and is applied to a print device. The print device wirelessly communicates with a mobile device. The print device includes a display. The print device further includes: a processor, a memory, a first antenna, and a second antenna. A transmitting distance of the first antenna is a first distance, and the first distance is greater than a preset safety distance. A transmitting distance of the second antenna is a second distance, and the second distance is less than or equal to the preset safety distance. The method includes: sending a first message based on a first periodicity by using the first antenna; receiving a first response message of the mobile device; sending, in response to the first response message, a second message based on a second periodicity by using the second antenna; receiving a second response message of the mobile device; displaying a print interface in response to the second response message; receiving a message of the mobile device that includes a to-be-printed file; and printing the to-be-printed file in response to the message.

According to the twenty-fifth aspect, before sending the first message based on the first periodicity by using the first antenna, the method further includes the following steps: receiving a first setting message, where the first setting message includes identity information or password information of the mobile device; and in response to the first setting message, storing the identity information or the password information in the print device, or storing the identity information or the password information in a third-party device associated with the print device.

According to the twenty-fifth aspect or any one of the foregoing implementation of the twenty-fifth aspect, before sending the first message based on the first periodicity by using the first antenna, the method further includes the following steps: receiving a first setting message, where the first setting message includes a first password and identity information or password information of the mobile device; and after the password is verified to be correct, storing the identity information or the password information in the print device, or storing the identity information or the password information in a third-party device associated with the print device.

According to the twenty-fifth aspect or any one of the foregoing implementation of the twenty-fifth aspect, before sending the first message based on the first periodicity by using the first antenna, the method further includes the following steps: receiving the first setting message, where the first setting message includes a first password; after the password is verified to be correct, sending a first reply message by using the first antenna or the second antenna; receiving a second setting message, where the second setting message includes the identity information or the password information of the mobile device; and in response to the second setting message, storing the identity information or the password information in the print device, or storing the identity information or the password information in the third-party device associated with the print device.

According to the twenty-fifth aspect or any one of the foregoing implementations of the twenty-fifth aspect, the third-party device includes a server. Further, the third-party device includes a cloud server.

According to a twenty-sixth aspect, an automatic printing method is provided, and is applied to a print device. The print device wirelessly communicates with a mobile device. The print device includes: a processor, a memory, and an antenna. A transmitting distance of the antenna at a first transmit power is a first distance, and the first distance is greater than a preset safety distance; a transmitting distance of the antenna at a second transmit power is a second distance, and the second distance is less than or equal to the preset safety distance; and the first transmit power is greater than the second transmit power. The method further includes: sending a first message based on a first periodicity by using the antenna at the first transmit power; receiving a first response message of the mobile device; sending, in response to the first response message, a second message based on a second periodicity by using the antenna at the second transmit power; receiving a second response message of the mobile device, where the second response message includes a to-be-printed file; and printing the to-be-printed file in response to the second response message.

According to a twenty-seventh aspect, an automatic printing method is provided, and is applied to a print device. The print device wirelessly communicates with a mobile device. The print device includes a display. The print device further includes: a processor, a memory, and an antenna. A transmitting distance of the antenna at a first transmit power is a first distance, and the first distance is greater than a preset safety distance; a transmitting distance of the antenna at a second transmit power is a second distance, and the second distance is less than or equal to the preset safety distance; and the first transmit power is greater than the second transmit power. The method further includes: sending a first message based on a first periodicity by using the antenna at the first transmit power; receiving a first response message of the mobile device; sending, in response to the first response message, a second message based on a second periodicity by using the antenna at the second transmit power; receiving a second response message of the mobile device; displaying a print interface in response to the second response message; receiving a message of the mobile device that includes a to-be-printed file; and printing the to-be-printed file in response to the message. According to the twenty-seventh aspect, before the sending a first message based on a first periodicity by using the antenna at the first transmit power, the method further includes the following steps: receiving a first setting message, where the first setting message includes identity information or password information of the mobile device; and in response to the first setting message, storing the identity information or the password information in the print device, or storing the identity information or the password information in a third-party device associated with the print device. According to the twenty-seventh aspect or any one of the foregoing implementation of the twenty-seventh aspect, before the sending a first message based on a first periodicity by using the antenna at the first transmit power, the method further includes the following steps: receiving a first setting message, where the first setting message includes a first password and identity information or password information of the mobile device; and after the password is verified to be correct, storing the identity information or the password information in the print device, or storing the identity information or the password information in a third-party device associated with the print device.

According to the twenty-seventh aspect or any one of the foregoing implementation of the twenty-seventh aspect, before the sending a first message based on a first periodicity by using the antenna at the first transmit power, the method further includes the following steps: receiving the first setting message, where the first setting message includes a first password; after the password is verified to be correct, sending a first reply message by using the antenna at the first transmit power or the antenna at the second transmit power; receiving a second setting message, where the second setting message includes the identity information or the password information of the mobile device; and in response to the second setting message, storing the identity information or the password information in the print device, or storing the identity information or the password information in the third-party device associated with the print device.

According to a twenty-eigth aspect, a computer-readable storage medium is provided. The computer-readable storage medium includes a computer program, and when the computer program is run on a print device, the print device is enabled to perform the method in the twenty-fourth aspect, the twenty-fifth aspect or any one of the implementations of the twenty-fifth aspect, or the twenty-sixth aspect or any one of the implementations of the twenty-sixth aspect, or the twenty-seventh aspect or any one of the implementations of the twenty-seventh aspect.

According to a twenty-ninth aspect, a computer program product is provided. When the computer program product is run on a computer, the computer is enabled to perform the method in the twenty-fourth aspect, the twenty-fifth aspect, or any one of the implementations of the twenty-fifth aspect, or the twenty-sixth aspect or any one of the implementations of the twenty-sixth aspect, or the twenty-seventh aspect or any one of the implementations of the twenty-seventh aspect.

According to a thirtith aspect, an electronic device is provided. The electronic device wirelessly communicates with a mobile device. The electronic device includes a display or a speaker. The electronic device further includes: a processor; a memory; a first antenna; a second antenna; and a computer program. A transmitting distance of the first antenna is a first distance, and the first distance is greater than a preset safety distance. A transmitting distance of the second antenna is a second distance, and the second distance is less than or equal to the preset safety distance. The computer program is stored in the memory, and when the computer program is executed by the processor, the electronic device is enabled to perform the following steps: sending a first message based on a first periodicity by using the first antenna; receiving a first response message of the mobile device; sending, in response to the first response message, a second message based on a second periodicity by using the second antenna; receiving a second response message of the mobile device; configuring, in response to the second response message, a projection receiving mode of the electronic device based on preset projection mode information corresponding to the mobile device; receiving projection data of the mobile device; and displaying, playing, or displaying and playing the projection data in response to the projection data. The preset safety distance is a distance at which a user of the electronic device can exchange secret information in a plaintext form with the electronic device by using the mobile device. For example, the preset safety distance may be 30 cm, 20 cm, 10 cm, or the like. The mobile device can receive the secret information sent by the electronic device only when a distance between the mobile device and the electronic device is within a range less than or equal to the preset safety distance. In this way, a security risk is reduced (for example, at a location beyond the preset safety distance of the electronic device, the secret information is not received by another device), and a user of the mobile device may move the mobile device to a location within the preset safety distance of the electronic device in a surrounding security case, to improve security. In this way, in a process in which the mobile device is moved close to the electronic device from far to near, if the electronic device receives, by using the second antenna, the second response message sent by the mobile device, it is determined that a distance between the mobile device and the electronic device meets a set condition, so that automatic projection may be performed. In this way, a user operation is greatly facilitated, and user experience is improved. Especially, for a person with a relatively weak operation capability, such as an elderly person, a child, or a disabled person, the person only needs to hold the mobile device close to the electronic device, and does not need to perform a complex operation. This is easy to learn and master. In addition, when there are a plurality of electronic devices that can be projected, the user may easily, conveniently, quickly, and accurately implement projection from the mobile device to a target electronic device by moving the mobile device close to the target to-be projected electronic device. In addition, even if the mobile device of the user does not display a plurality of same or similar electronic device identifiers, a new convenient manner is provided, and automatic projection can be easily performed. In the entire process described above, the mobile device may keep in a screen-off state, a screen-locked but screen-free state, or the like.

According to the thirtith aspect, the electronic device receives the projection data of the mobile device by using a wireless local area network; the electronic device displays, plays, or displays and plays the projection data in response to the projection data; and the electronic device performs, by using Wi-Fi aware, Bluetooth, or ZigBee, the following steps: sending the first message based on the first periodicity by using the first antenna; receiving the first response message of the mobile device; sending, in response to the first response message, the second message based on the second periodicity by using the second antenna; receiving the second response message of the mobile device; and configuring, in response to the second response message, the projection receiving mode of the electronic device based on the preset projection mode information corresponding to the mobile device.

According to the thirtith aspect or any one of the foregoing implementation of the thirtith aspect, after configuring the projection receiving mode of the electronic device, and before receiving the projection data of the mobile device, the electronic device further performs the following steps: receiving a Wi-Fi P2P access request of the mobile device; and establishing a Wi-Fi P2P connection to the mobile device in response to the Wi-Fi P2P access request.

According to the thirtith aspect or any one of the foregoing implementation of the thirtith aspect, the establishing a Wi-Fi P2P connection to the mobile device in response to the Wi-Fi P2P access request includes: The electronic device establishes the Wi-Fi P2P connection to the mobile device by using the first antenna in response to the Wi-Fi P2P access request; and before sending the first message based on the first periodicity by using the first antenna, the electronic device further performs the following step: randomly generating the first message based on an identifier of the electronic device.

According to the thirtith aspect or any one of the foregoing implementation of the thirtith aspect, the first response message includes identity information or password information of the mobile device; and after receiving the first response message of the mobile device, and before sending, in response to the first response message, the second message based on the second periodicity by using the second antenna, the electronic device further performs the following steps: switching to the second antenna; and randomly generating the second message based on an identifier of the electronic device.

According to the thirtith aspect or any one of the foregoing implementation of the thirtith aspect, after receiving the first response message of the mobile device, and before switching to the second antenna, the electronic device further performs the following step: verifying the identity information or the password information, and verifying the identity information or the password information successfully.

According to the thirtith aspect or any one of the foregoing implementation of the thirtith aspect, the second response message includes identity information or password information of the mobile device; and the receiving a second response message of the mobile device, and configuring, in response to the second response message, a projection receiving mode of the electronic device based on preset projection mode information corresponding to the mobile device includes: after the second response message is received within preset duration, verifying the identity information or the password information; and after verification succeeds, configuring the projection receiving mode of the electronic device based on the preset projection mode information corresponding to the mobile device. According to the thirtith aspect or any one of the foregoing implementation of the thirtith aspect, after configuring the projection receiving mode of the electronic device, the electronic device further performs the following steps: switching to the first antenna; and sending a third message by using the first antenna. The third message includes information indicating that the electronic device is ready.

According to the thirtith aspect or any one of the foregoing implementation of the thirtith aspect, the projection data includes at least one of screen recording data, audio data, and a projection address; and the displaying, playing, or displaying and playing the projection data in response to the projection data includes: displaying the screen recording data in response to the screen recording data; or playing the audio data in response to the audio data; or in response to the screen recording data and the audio data, displaying the screen recording data, and playing the audio data; or in response to the projection address, obtaining data from the projection address, and displaying, playing, or displaying and playing the data.

According to the thirtith aspect or any one of the foregoing implementation of the thirtith aspect, the electronic device pre-stores a password, or the electronic device pre-obtains a password; and before sending the first message based on the first periodicity by using the first antenna, the electronic device further performs the following steps: receiving a first setting message, where the first setting message includes a first password; sending a first reply message after the password is verified successfully, where the first reply message includes projection mode information supported by the electronic device; receiving a second setting message of the mobile device, where the second setting message includes the identity information or the password information of the mobile device, and projection mode information selected or set by the mobile device; and storing, based on a correspondence between the identity information or the password information of the mobile device and the projection mode information selected or set by the mobile device, the identity information or the password information of the mobile device, the projection mode information selected or set by the mobile device, and the correspondence in the electronic device.

According to the thirtith aspect or any one of the foregoing implementation of the thirtith aspect, the sending a first reply message after the password is verified successfully, where the first reply message includes projection mode information supported by the electronic device includes: verifying the password, and storing the identity information after verification succeeds; switching to the second antenna; and sending the first reply message based on a fourth periodicity by using the second antenna. The first reply message includes the projection mode information supported by the electronic device.

According to the thirtith aspect or any one of the foregoing implementation of the thirtith aspect, the sending a first reply message after the password is verified successfully, where the first reply message includes projection mode information supported by the electronic device includes: after the password is verified successfully, sending the first reply message based on a fourth periodicity by using the first antenna. The first reply message includes the projection mode information supported by the electronic device.

According to the thirtith aspect or any one of the foregoing implementation of the thirtith aspect, the sending a first reply message after the password is verified successfully, where the first reply message includes projection mode information supported by the electronic device includes: verifying the password, and switching to the second antenna after verification succeeds; and sending the first reply message based on a fourth periodicity by using the second antenna. The first reply message includes the projection mode information supported by the electronic device. According to the thirtith aspect or any one of the foregoing implementation of the thirtith aspect, after storing in the electronic device, the electronic device further performs the following steps: sending a second reply message by using the first antenna, where the second reply message includes information indicating that the electronic device is set; or switching to the first antenna; and sending a second reply message by using the first antenna, where the second reply message includes information indicating that the electronic device is set.

According to the thirtith aspect or any one of the foregoing implementation of the thirtith aspect, the electronic device wirelessly communicates with the mobile device by using Wi-Fi aware, Bluetooth, or ZigBee.

According to a thirty-first aspect, an electronic device is provided. The electronic device wirelessly communicates with a mobile device. The electronic device includes a display or a speaker. The electronic device further includes: a processor; a memory; an antenna; and a computer program. A transmitting distance of the antenna at a first transmit power is a first distance, and the first distance is greater than a preset safety distance; a transmitting distance of the antenna at a second transmit power is a second distance, and the second distance is less than or equal to the preset safety distance; and the first transmit power is greater than the second transmit power. The computer program is stored in the memory, and when the computer program is executed by the processor, the electronic device is enabled to perform the following steps: sending a first message based on a first periodicity by using the antenna at the first transmit power; receiving a first response message of a mobile device; sending, in response to the first response message, a second message based on a second periodicity by using the antenna at the second transmit power; receiving a second response message of the mobile device; configuring, in response to the second response message, a projection receiving mode of the electronic device based on preset projection mode information corresponding to the mobile device; receiving projection data of the mobile device; and displaying, playing, or displaying and playing the projection data in response to the projection data.

According to a thirty-second aspect, an automatic projection method is provided. The method is applied to an electronic device. The electronic device wirelessly communicates with a mobile device. The electronic device includes a display or a speaker. The electronic device further includes: a processor, a memory, a first antenna, and a second antenna. A transmitting distance of the first antenna is a first distance, and the first distance is greater than a preset safety distance. A transmitting distance of the second antenna is a second distance, and the second distance is less than or equal to the preset safety distance. The method includes: sending a first message based on a first periodicity by using the first antenna; receiving a first response message of the mobile device; sending, in response to the first response message, a second message based on a second periodicity by using the second antenna; receiving a second response message of the mobile device; configuring, in response to the second response message, a projection receiving mode of the electronic device based on preset projection mode information corresponding to the mobile device; receiving projection data of the mobile device; and displaying, playing, or displaying and playing the projection data in response to the projection data.

According to the thirty-second aspect, the electronic device receives the projection data of the mobile device by using a wireless local area network; the electronic device displays, plays, or displays and plays the projection data in response to the projection data; and the electronic device performs, by using Wi-Fi aware, Bluetooth, or ZigBee, the following steps: sending the first message based on the first periodicity by using the first antenna; receiving the first response message of the mobile device; sending, in response to the first response message, the second message based on the second periodicity by using the second antenna; receiving the second response message of the mobile device; and configuring, in response to the second response message, the projection receiving mode of the electronic device based on the preset projection mode information corresponding to the mobile device.

According to the thirty-second aspect or any one of the foregoing implementation of the thirty-second aspect, after configuring the projection receiving mode of the electronic device, and before receiving the projection data of the mobile device, the method further includes the following steps: receiving a Wi-Fi P2P access request of the mobile device; and establishing a Wi-Fi P2P connection to the mobile device in response to the Wi-Fi P2P access request. According to the thirty-second aspect or any one of the foregoing implementation of the thirty-second aspect, the establishing a Wi-Fi P2P connection to the mobile device in response to the Wi-Fi P2P access request includes: The electronic device establishes the Wi-Fi P2P connection to the mobile device by using the first antenna in response to the Wi-Fi P2P access request; and before sending the first message based on the first periodicity by using the first antenna, the electronic device further performs the following step: randomly generating the first message based on an identifier of the electronic device.

According to the thirty-second aspect or any one of the foregoing implementation of the thirty-second aspect, the first response message includes identity information or password information of the mobile device; and after receiving the first response message of the mobile device, and before sending, in response to the first response message, the second message based on the second periodicity by using the second antenna, the method further includes the following steps: switching to the second antenna; and randomly generating the second message based on an identifier of the electronic device.

According to the thirty-second aspect or any one of the foregoing implementation of the thirty-second aspect, after receiving the first response message of the mobile device, and before switching to the second antenna, the method further includes the following step: verifying the identity information or the password information, and verifying the identity information or the password information successfully.

According to the thirty-second aspect or any one of the foregoing implementation of the thirty-second aspect, the second response message includes identity information or password information of the mobile device; and the receiving a second response message of the mobile device, and configuring, in response to the second response message, a projection receiving mode of the electronic device based on preset projection mode information corresponding to the mobile device includes: after the second response message is received within preset duration, verifying the identity information or the password information; and after verification succeeds, configuring the projection receiving mode of the electronic device based on the preset projection mode information corresponding to the mobile device.

According to the thirty-second aspect or any one of the foregoing implementation of the thirty-second aspect, after configuring the projection receiving mode of the electronic device, the electronic device further performs the following steps: switching to the first antenna; and sending a third message by using the first antenna. The third message includes information indicating that the electronic device is ready.

According to the thirty-second aspect or any one of the foregoing implementation of the thirty-second aspect, the projection data includes at least one of screen recording data, audio data, and a projection address; and the displaying, playing, or displaying and playing the projection data in response to the projection data includes: displaying the screen recording data in response to the screen recording data; or playing the audio data in response to the audio data; or in response to the screen recording data and the audio data, displaying the screen recording data, and playing the audio data; or in response to the projection address, obtaining data from the projection address, and displaying, playing, or displaying and playing the data.

According to the thirty-second aspect or any one of the foregoing implementation of the thirty-second aspect, the electronic device pre-stores a password, or the electronic device pre-obtains a password; and before sending the first message based on the first periodicity by using the first antenna, the method further includes the following steps: receiving a first setting message, where the first setting message includes a first password; sending a first reply message after the password is verified successfully, where the first reply message includes projection mode information supported by the electronic device; receiving a second setting message of the mobile device, where the second setting message includes the identity information or the password information of the mobile device, and projection mode information selected or set by the mobile device; and storing, based on a correspondence between the identity information or the password information of the mobile device and the projection mode information selected or set by the mobile device, the identity information or the password information of the mobile device, the projection mode information selected or set by the mobile device, and the correspondence in the electronic device. According to the thirty-second aspect or any one of the foregoing implementation of the thirty-second aspect, the sending a first reply message after the password is verified successfully, where the first reply message includes projection mode information supported by the electronic device includes: verifying the password, and storing the identity information after verification succeeds; switching to the second antenna; and sending the first reply message based on a fourth periodicity by using the second antenna. The first reply message includes the projection mode information supported by the electronic device.

According to the thirty-second aspect or any one of the foregoing implementation of the thirty-second aspect, the sending a first reply message after the password is verified successfully, where the first reply message includes projection mode information supported by the electronic device includes: after the password is verified successfully, sending the first reply message based on a fourth periodicity by using the first antenna. The first reply message includes the projection mode information supported by the electronic device.

According to the thirty-second aspect or any one of the foregoing implementation of the thirty-second aspect, the sending a first reply message after the password is verified successfully, where the first reply message includes projection mode information supported by the electronic device includes: verifying the password, and switching to the second antenna after verification succeeds; and sending the first reply message based on a fourth periodicity by using the second antenna. The first reply message includes the projection mode information supported by the electronic device.

According to the thirty-second aspect or any one of the foregoing implementation of the thirty-second aspect, after storing in the electronic device, the electronic device further performs the following steps: sending a second reply message by using the first antenna, where the second reply message includes information indicating that the electronic device is set; or switching to the first antenna; and sending a second reply message by using the first antenna, where the second reply message includes information indicating that the electronic device is set.

According to any one of the thirty-second aspect or the foregoing implementation of the thirty-second aspect, the electronic device wirelessly communicates with the mobile device by using Wi-Fi aware, Bluetooth, or ZigBee.

According to a thirty-third aspect, an automatic projection method is provided. The method is applied to an electronic device. The electronic device wirelessly communicates with a mobile device. The electronic device includes a display or a speaker. The electronic device further includes: a processor; a memory; and an antenna. A transmitting distance of the antenna at a first transmit power is a first distance, and the first distance is greater than a preset safety distance; a transmitting distance of the antenna at a second transmit power is a second distance, and the second distance is less than or equal to the preset safety distance; and the first transmit power is greater than the second transmit power. The method includes: sending a first message based on a first periodicity by using the antenna at the first transmit power; receiving a first response message of a mobile device; sending, in response to the first response message, a second message based on a second periodicity by using the antenna at the second transmit power; receiving a second response message of the mobile device; configuring, in response to the second response message, a projection receiving mode of the electronic device based on preset projection mode information corresponding to the mobile device; receiving projection data of the mobile device; and displaying, playing, or displaying and playing the projection data in response to the projection data.

According to a thirty-fourth aspect, a computer-readable storage medium is provided. The computer-readable storage medium includes a computer program, and when the computer program is run on a print device, the print device is enabled to perform the method in any one of the thirty-second aspect and the implementations of the thirty-second aspect, or in the thirty-third aspect.

According to a thirty-fifth aspect, a computer program product is provided. When the computer program product is run on a computer, the computer is enabled to perform the method in any one of the thirty-second aspect or the implementations of the thirty-second aspect, or in the thirty-third aspect.

According to a thirty-sixth aspect, a wireless routing device is provided. The wireless routing device includes: a processor; a memory; a first antenna; a second antenna; and a computer program. A transmitting distance of the first antenna is a first distance, and the first distance is greater than a preset safety distance. A transmitting distance of the second antenna is a second distance, and the second distance is less than or equal to the preset safety distance. The computer program is stored in the memory, and when the computer program is executed by the processor, the wireless routing device is enabled to perform the following steps: broadcasting a first message based on a first periodicity by using the first antenna; receiving a first response message of a mobile device; broadcasting, in response to the first response message, a second message based on a second periodicity by using the second antenna; receiving a Wi-Fi access request of the mobile device; and in response to the Wi-Fi access request, completing, by the wireless routing device, Wi-Fi AP access with the mobile device. The first message includes an identifier of the wireless routing device, and the second message includes authentication information corresponding to the identifier of the wireless routing device. In this way, in a scenario in which a guest visits a host's home for the first time, a mobile device of the guest is not connected to a wireless routing device in the host's home before, and the mobile device of the guest displays a plurality of same or similar wireless routing device identifiers, the guest only needs to move the mobile device of the guest to a location within the second distance of the wireless routing device in the host's home, so that the mobile device can automatically access the wireless routing device through the Wi-Fi AP, and the guest does not need to perform another operation. This greatly facilitates a user operation, and user experience is improved. Especially when the guest is a person with a weak operation capability, such as an elderly person or a child, or when only an elderly person or a child in the host's home serves the guest, the elderly person or the child may not know or may be unfamiliar with how to access the Internet. In this case, the host only needs to notify the guest to move the mobile device close to the wireless routing device in the host's home. In addition, even if the mobile device of the guest does not display the plurality of same or similar wireless routing device identifiers, a new convenient manner is provided, so that the guest can easily access the Wi-Fi network and access the Internet.

According to the thirty-sixth aspect, the first response message includes the identifier of the wireless routing device; and after broadcasting the second message based on the second periodicity by using the second antenna, and before receiving the Wi-Fi access request of the mobile device, the wireless routing device further performs the following steps: receiving a second response message of the mobile device; and switching to the first antenna in response to the second response message, where the second response message is used to indicate that the mobile device has received the authentication information; and after the wireless routing device completes the Wi-Fi AP access with the mobile device, the wireless routing device further performs: sending an acknowledgment message to the mobile device, where the acknowledgment message is used to indicate that the wireless routing device completes the Wi-Fi AP access with the mobile device.

According to the thirty-sixth aspect or any one of the foregoing implementation of the thirty-sixth aspect, the wireless routing device performs, by using Wi-Fi aware, Bluetooth, or ZigBee, the following steps: broadcasting the first message based on the first periodicity by using the first antenna; receiving the first response message of the mobile device; and broadcasting, in response to the first response message, the second message based on the second periodicity by using the second antenna; and the wireless routing device performs, by using the Wi-Fi AP, the following step: The wireless routing device receives the Wi-Fi access request of the mobile device; and in response to the Wi-Fi access request, the wireless routing device completes the Wi-Fi AP access with the mobile device. According to the thirty-sixth aspect or any one of the foregoing implementation of the thirty-sixth aspect, the wireless routing device further performs, by using Wi-Fi aware, Bluetooth, or ZigBee, the following steps: receiving the second response message of the mobile device; and switching to the first antenna in response to the second response message; and the wireless routing device further performs, by using Wi-Fi aware, Bluetooth, or ZigBee, the following step: sending the acknowledgment message to the mobile device. The acknowledgment message is used to indicate that the wireless routing device completes the Wi-Fi AP access with the mobile device.

According to the thirty-sixth aspect or any one of the foregoing implementation of the thirty-sixth aspect, after the wireless routing device enables Wi-Fi aware, Bluetooth, or ZigBee, and before broadcasting the first message based on the first periodicity by using the first antenna, the wireless routing device further performs the following steps: The wireless routing device broadcasts a Wi-Fi aware access service, a Bluetooth access service, or a ZigBee access service based on a specific periodicity; the wireless routing device receives a subscription message of the mobile device; and in response to the subscription message, the wireless routing device completes Wi-Fi aware, Bluetooth or ZigBee access with the mobile device.

According to the thirty-sixth aspect or any one of the foregoing implementation of the thirty-sixth aspect, Wi-Fi aware, Bluetooth, or ZigBee of the wireless routing device is enabled after a user input is received; the identifier of the wireless routing device includes an SSID of the wireless routing device; the first response message includes one SSID in first N SSIDs with strongest signal strength in Wi-Fi network signals detected by the mobile device; the second message includes authentication information and a unique identifier that are corresponding to the SSID of the wireless routing device, and the N SSIDs include the SSID of the wireless routing device; the second response message is used to indicate that the mobile device has received the authentication information and the unique identifier; the first periodicity is the same as or different from the second periodicity; and N is a positive integer greater than or equal to 1.

According to the thirty-sixth aspect or any one of the foregoing implementation of the thirty-sixth aspect, Wi-Fi aware, Bluetooth, or ZigBee of the wireless routing device is enabled after a user input is received; the identifier of the wireless routing device includes an SSID of the wireless routing device; the first message further includes a Wi-Fi aware access service, a Bluetooth access service, or a ZigBee access service; the first response message includes one SSID with strongest signal strength in Wi-Fi network signals detected by the mobile device; the first response message is further used to indicate the mobile device to subscribe to the Wi-Fi aware access service, the Bluetooth access service, or the ZigBee access service; the first periodicity is the same as or different from the second periodicity; and the second response message is used to indicate that the mobile device has received the authentication information. According to a thirty-seventh aspect, a wireless routing device is provided. The wireless routing device includes: a processor; a memory; an antenna; and a computer program. A transmitting distance of the antenna at a first transmit power is a first distance, and the first distance is greater than a preset safety distance. A transmitting distance of the antenna at a second transmit power is a second distance, and the second distance is less than or equal to the preset safety distance. The first transmit power is greater than the second transmit power. The computer program is stored in the memory, and when the computer program is executed by the processor, the wireless routing device is enabled to perform the following steps: The wireless routing device broadcasts a first message based on a first periodicity by using the antenna at the first transmit power; the wireless routing device receives a first response message of a mobile device; the wireless routing device broadcasts, in response to the first response message, a second message based on a second periodicity by using the antenna at the second transmit power; the wireless routing device receives a Wi-Fi access request of the mobile device; and in response to the Wi-Fi access request, the wireless routing device completes Wi-Fi access with the mobile device. The first message includes an identifier of the wireless routing device, and the second message includes authentication information corresponding to the identifier of the wireless routing device. According to the thirty-seventh aspect, the first response message includes the identifier of the wireless routing device; and after broadcasting the second message based on the second periodicity by using the antenna at the second transmit power, and before receiving the Wi-Fi access request of the mobile device, the wireless routing device further performs the following steps: receiving a second response message of the mobile device; and switching a transmit power of the antenna to the first transmit power in response to the second response message. The second response message is used to indicate that the mobile device has received the authentication information.

According to a thirty-eigth, a mobile device is provided. The mobile device includes: a processor; a memory; and a computer program. The computer program is stored in the memory, and when the computer program is executed by the processor, the mobile device is enabled to perform the following steps: receiving a first message of a wireless routing device within a first distance from the wireless routing device; sending, in response to the first message, a first response message to M wireless routing devices corresponding to first N identifiers with strongest signal strength in Wi-Fi network signals detected by the mobile device; receiving a second message of the wireless routing device within a second distance from the wireless routing device; sending a Wi-Fi access request to the wireless routing device in response to the second message; and receiving an acknowledgment message of the wireless routing device. The first message includes an identifier of the wireless routing device; the second message includes the identifier of the wireless routing device and authentication information corresponding to the identifier; the acknowledgment message is used to indicate the mobile device to complete Wi-Fi AP access with the wireless routing device; the M wireless routing devices include the wireless routing device; M and N are positive integers greater than or equal to 1, and M is less than or equal to N; and the second distance is less than the first distance, and the second distance is less than or equal to a preset safety distance.

According to the thirty-eigth aspect, the mobile device performs, by using Wi-Fi aware, Bluetooth, or ZigBee, the following steps: receiving the first message of the wireless routing device within the first distance from the wireless routing device; sending, in response to the first message, the first response message to the M wireless routing devices corresponding to first N identifiers with the strongest signal strength in the Wi-Fi network signals detected by the mobile device; and receiving the second message of the wireless routing device within the second distance from the wireless routing device; and the mobile device performs, in a Wi-Fi AP communication mode, the following steps: sending the Wi-Fi access request to the wireless routing device in response to the second message; and receiving the acknowledgment message of the wireless routing device.

According to the thirty-eigth aspect or any one of the foregoing implementation of the thirty-eigth aspect, Wi-Fi aware, Bluetooth, or ZigBee of the mobile device is enabled after a user input is received; the first message includes an SSID of the wireless routing device; the first response message includes one SSID in first N SSIDs with strongest signal strength in the Wi-Fi network signals detected by the mobile device; the second message includes authentication information corresponding to the SSID of the wireless routing device, and the first N SSIDs include the SSID of the wireless routing device; and the second response message is used to indicate that the mobile device has received the authentication information.

According to the thirty-eigth aspect or any one of the foregoing implementation of the thirty-eigth aspect, Wi-Fi aware, Bluetooth, or ZigBee of the mobile device is enabled after a user input is received; the first message includes an SSID of the wireless routing device and a Wi-Fi aware access service, a Bluetooth access service, or a ZigBee access service; the first response message includes a first SSID with strongest signal strength in the Wi-Fi network signals detected by the mobile device; the first response message is further used to indicate the mobile device to subscribe to the Wi-Fi aware access service, the Bluetooth access service, or the ZigBee access service; the second message includes authentication information corresponding to the first SSID; and the second response message is used to indicate that the mobile device has received the authentication information, and both N and M are equal to 1.

According to a thirty-ninth aspect, a method for automatically accessing a wireless routing device is provided. The method is applied to the wireless routing device. The wireless routing device includes: a processor, a memory, a first antenna, and a second antenna. A transmitting distance of the first antenna is a first distance, and the first distance is greater than a preset safety distance. A transmitting distance of the second antenna is a second distance, and the second distance is less than or equal to the preset safety distance. The method includes: The wireless routing device broadcasts a first message based on a first periodicity by using the first antenna; the wireless routing device receives a first response message of a mobile device; the wireless routing device broadcasts, in response to the first response message, a second message based on a second periodicity by using the second antenna; the wireless routing device receives a Wi-Fi access request of the mobile device; and in response to the Wi-Fi access request, the wireless routing device completes Wi-Fi AP access with the mobile device. The first message includes an identifier of the wireless routing device, and the second message includes authentication information corresponding to the identifier of the wireless routing device.

According to the thirty-ninth aspect, the first response message includes the identifier of the wireless routing device; and after broadcasting the second message based on the second periodicity by using the second antenna, and before receiving the Wi-Fi access request of the mobile device, the method further includes the following steps: receiving a second response message of the mobile device; and switching to the first antenna in response to the second response message, where the second response message is used to indicate that the mobile device has received the authentication information; and after the wireless routing device completes the Wi-Fi AP access with the mobile device, the wireless routing device further performs: sending an acknowledgment message to the mobile device, where the acknowledgment message is used to indicate that the wireless routing device completes the Wi-Fi AP access with the mobile device.

According to the thirty-ninth aspect or any one of the foregoing implementation of the thirty-ninth aspect, the wireless routing device performs, by using Wi-Fi aware, Bluetooth, or ZigBee, the following steps: broadcasting the first message based on the first periodicity by using the first antenna; receiving the first response message of the mobile device; and broadcasting, in response to the first response message, the second message based on the second periodicity by using the second antenna; and the wireless routing device performs, by using the Wi-Fi AP, the following steps: The wireless routing device receives the Wi-Fi access request of the mobile device; and in response to the Wi-Fi access request, the wireless routing device completes the Wi-Fi AP access with the mobile device.

According to the thirty-ninth aspect or any one of the foregoing implementation of the thirty-ninth aspect, the wireless routing device further performs, by using Wi-Fi aware, Bluetooth, or ZigBee, the following steps: receiving the second response message of the mobile device; and switching to the first antenna in response to the second response message; and the wireless routing device further performs, by using Wi-Fi aware, Bluetooth, or ZigBee, the following step: sending the acknowledgment message to the mobile device. The acknowledgment message is used to indicate that the wireless routing device completes the Wi-Fi AP access with the mobile device.

According to any one of the thirty-ninth aspect, or the foregoing implementation of the thirty-ninth aspect, after the wireless routing device enables Wi-Fi aware, Bluetooth, or ZigBee, and before broadcasting the first message based on the first periodicity by using the first antenna, the wireless routing device further performs the following steps: The wireless routing device broadcasts a Wi-Fi aware access service, a Bluetooth access service, or a ZigBee access service based on a specific periodicity; the wireless routing device receives a subscription message of the mobile device; and in response to the subscription message, the wireless routing device completes Wi-Fi aware, Bluetooth or ZigBee access with the mobile device.

According to the thirty-ninth aspect or any one of the foregoing implementation of the thirty-ninth aspect, Wi-Fi aware, Bluetooth, or ZigBee of the wireless routing device is enabled after a user input is received; the identifier of the wireless routing device includes an SSID of the wireless routing device; the first response message includes one SSID in first N SSIDs with strongest signal strength in Wi-Fi network signals detected by the mobile device; the second message includes authentication information and a unique identifier that are corresponding to the SSID of the wireless routing device, and the N SSIDs include the SSID of the wireless routing device; the second response message is used to indicate that the mobile device has received the authentication information and the unique identifier; the first periodicity is the same as or different from the second periodicity; and N is a positive integer greater than or equal to 1.

According to the thirty-ninth aspect any one of or the foregoing implementation of the thirty-ninth aspect, Wi-Fi aware, Bluetooth, or ZigBee of the wireless routing device is enabled after a user input is received; the identifier of the wireless routing device includes an SSID of the wireless routing device; the first message further includes a Wi-Fi aware access service, a Bluetooth access service, or a ZigBee access service; the first response message includes one SSID with strongest signal strength in Wi-Fi network signals detected by the mobile device; the first response message is further used to indicate the mobile device to subscribe to the Wi-Fi aware access service, the Bluetooth access service, or the ZigBee access service; the first periodicity is the same as or different from the second periodicity; and the second response message is used to indicate that the mobile device has received the authentication information.

According to a fortith aspect, a method for automatically accessing a wireless routing device is provided. The method is applied to the wireless routing device. The wireless routing device includes: a processor, a memory, and an antenna. A transmitting distance of the antenna at a first transmit power is a first distance, and the first distance is greater than a preset safety distance; a transmitting distance of the antenna at a second transmit power is a second distance, and the second distance is less than or equal to the preset safety distance; and the first transmit power is greater than the second transmit power. The method includes: The wireless routing device broadcasts a first message based on a first periodicity by using the antenna at the first transmit power; the wireless routing device receives a first response message of a mobile device; the wireless routing device broadcasts, in response to the first response message, a second message based on a second periodicity by using the antenna at the second transmit power; the wireless routing device receives a Wi-Fi access request of the mobile device; and in response to the Wi-Fi access request, the wireless routing device completes Wi-Fi access with the mobile device. The first message includes an identifier of the wireless routing device, and the second message includes authentication information corresponding to the identifier of the wireless routing device.

According to the fortith aspect, the first response message includes the identifier of the wireless routing device; and after broadcasting the second message based on the second periodicity by using the antenna at the second transmit power, and before receiving the Wi-Fi access request of the mobile device, the wireless routing device further performs the following steps: receiving a second response message of the mobile device; and switching a transmit power of the antenna to the first transmit power in response to the second response message. The second response message is used to indicate that the mobile device has received the authentication information.

According to a forty-first aspect, a computer-readable storage medium is provided. The computer-readable storage medium includes a computer program. When the computer program is run on a wireless routing device, the wireless routing device is enabled to perform the method in the thirty-ninth aspect or any one of the implementations of the thirty-ninth aspect, or the fortith aspect or any one of the implementations of the fortith aspect.

According to a forty-second aspect, a computer program product is provided. When the computer program product is run on a computer, the computer is enabled to perform the method in the thirty-ninth aspect or any one of the implementations of the thirty-ninth aspect, or the fortith aspect or any one of the implementations of the fortith aspect.

### BRIEF DESCRIPTION OF DRAWINGS

To describe technical solutions in embodiments of this application more clearly, the following briefly describes the accompanying drawings for embodiments. It is clear that the accompanying drawings in the following descriptions show merely some embodiments of this application, and a person of ordinary skill in the art may derive other drawings from these accompanying drawings without creative efforts.
FIG. 1 is a schematic diagram of a scenario of an automatic control method according to an embodiment of this application;
FIG. 2 is a schematic diagram of a hardware structure of a mobile device according to an embodiment of this application;
FIG. 3 is a schematic diagram of a hardware structure of an electronic device according to an embodiment of this application;
FIG. 4A is a schematic diagram of a principle of a wireless communications module and an antenna in an electronic device according to an embodiment of this application;
FIG. 4B is a schematic diagram of another principle of a wireless communications module and an antenna in an electronic device according to an embodiment of this application;
FIG. 5A to FIG. 5C are schematic diagrams of three structures of a wireless communications module and an antenna in an electronic device according to an embodiment of this application;
FIG. 6 is a schematic diagram of two transmitting distances of a wireless communications module and an antenna in an electronic device according to an embodiment of this application;
FIG. 7 is a schematic diagram of overall steps of an automatic control method according to an embodiment of this application;
FIG. 8A to FIG. 8H-1 and FIG. 8H-2 each are a schematic flowchart of steps of setting identity information or password information in an automatic control method according to an embodiment of this application;
FIG. 9A-1 and FIG. 9A-2 to FIG. 9F-1 and FIG. 9F-2 each are a schematic flowchart of steps of executing all or a part of a specific function of an electronic device, and steps of identifying identity information or password information and executing all or a part of a specific function of an electronic device in an automatic control method according to an embodiment of this application;

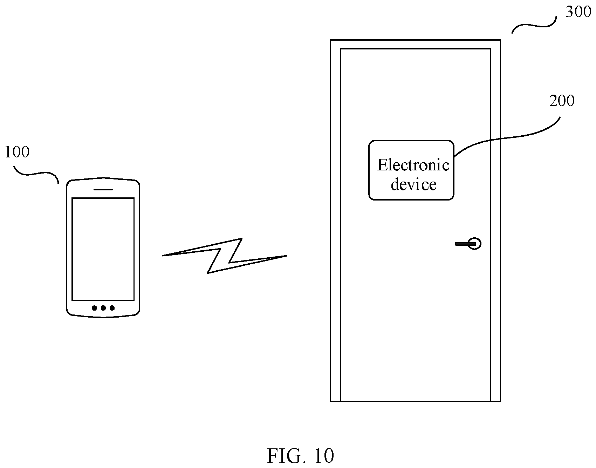

FIG. 10 is a schematic diagram of a scenario of an implementation of an automatic control method according to an embodiment of this application;

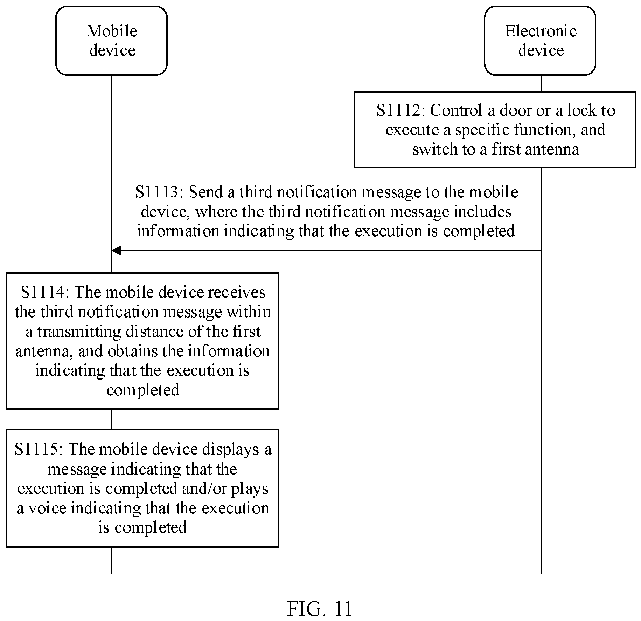

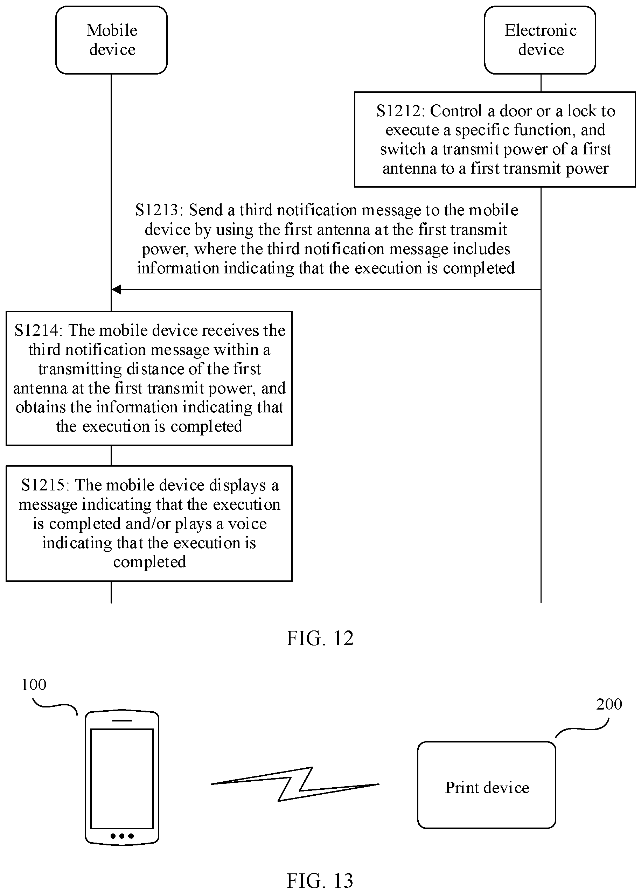

FIG. 11 and FIG. 12 each are a schematic flowchart of steps of executing all specific function of an electronic device in an implementation of an automatic control method according to an embodiment of this application;
FIG. 13 is a schematic diagram of a scenario of an implementation of an automatic control method according to an embodiment of this application;

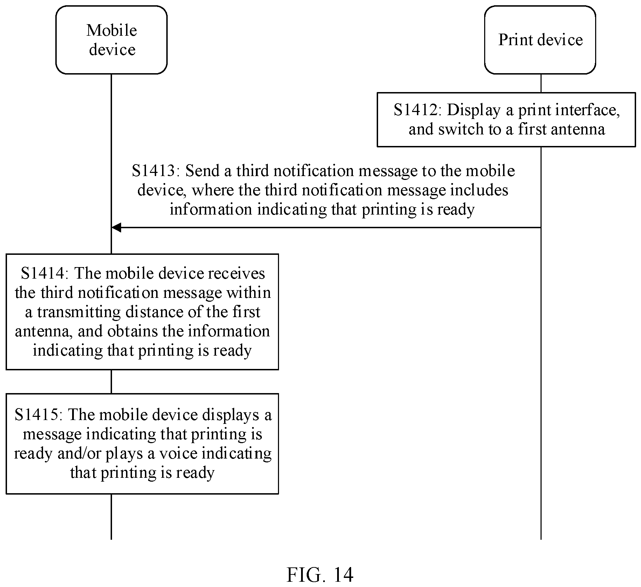

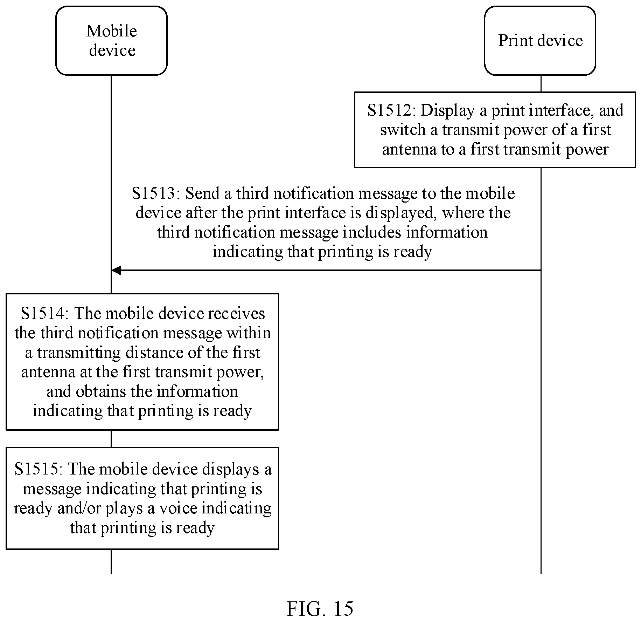

FIG. 14 and FIG. 15 each are a schematic flowchart of steps of executing a part of a specific function of an electronic device in an implementation of an automatic control method according to an embodiment of this application;

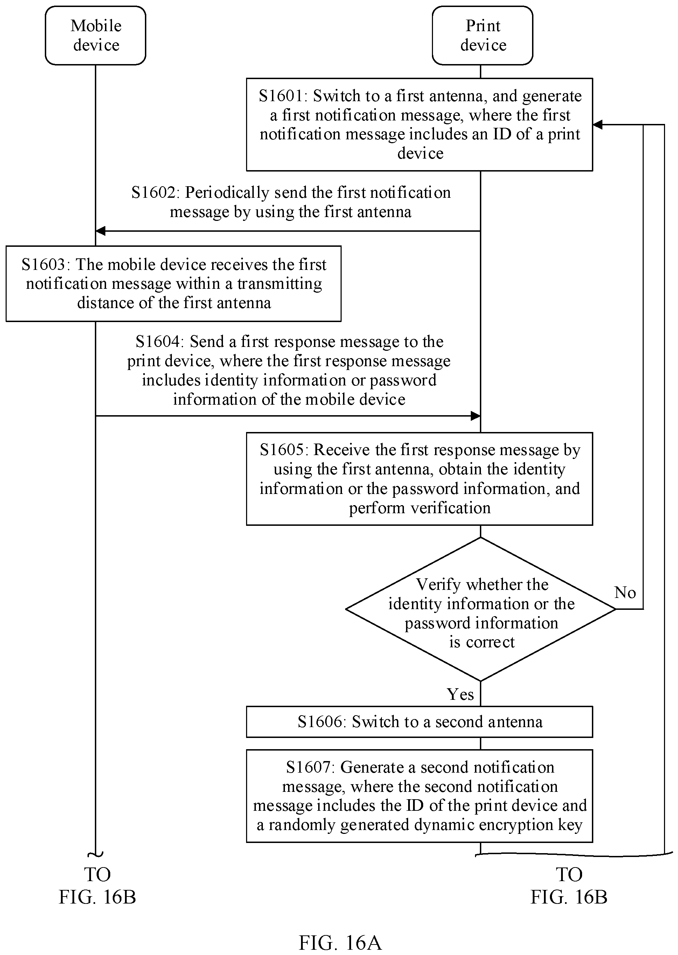

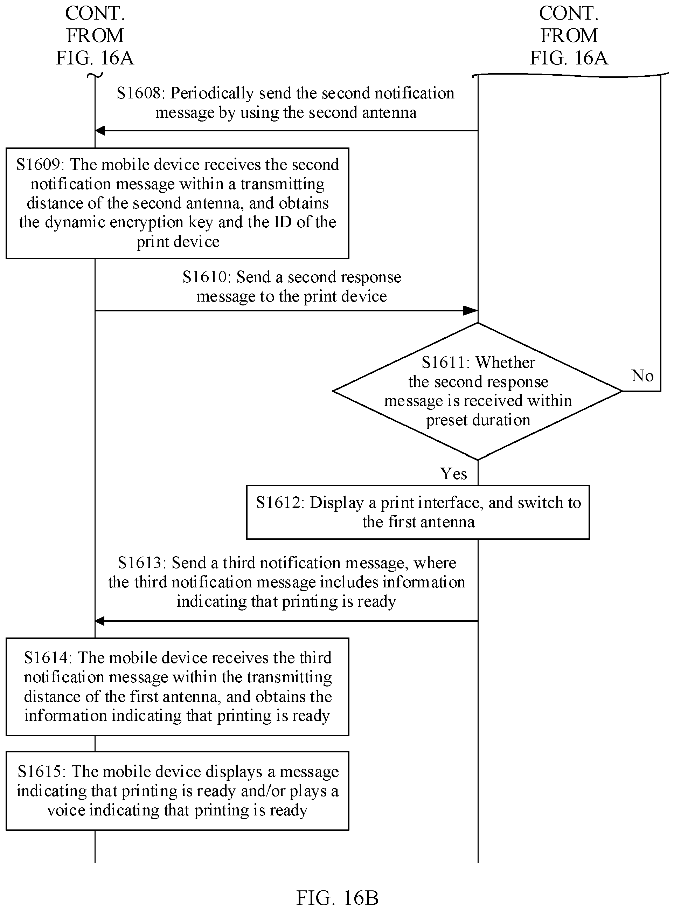

FIG. 16A and FIG. 16B are a schematic flowchart of steps of identifying identity information or password information and executing a part of a specific function of an electronic device in an implementation of an automatic control method according to an embodiment of this application;

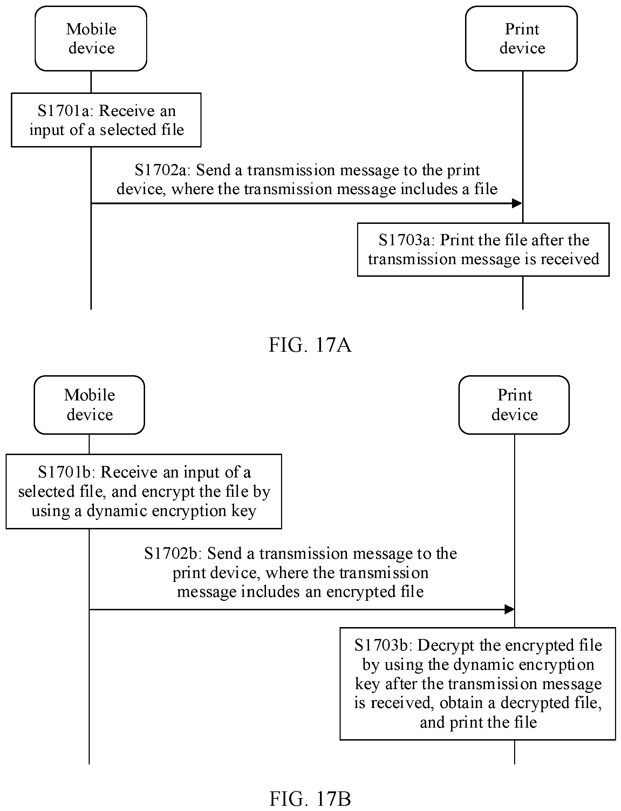

FIG. 17A and FIG. 17B each are a schematic flowchart of steps of executing a remaining part of a specific function of an electronic device in an implementation of an automatic control method according to an embodiment of this application;

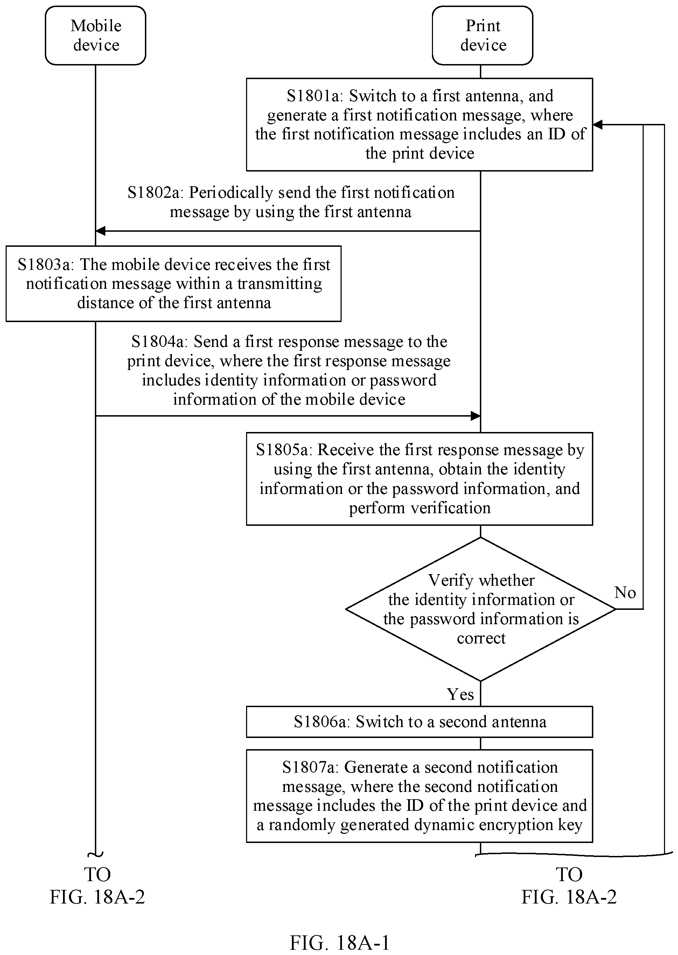

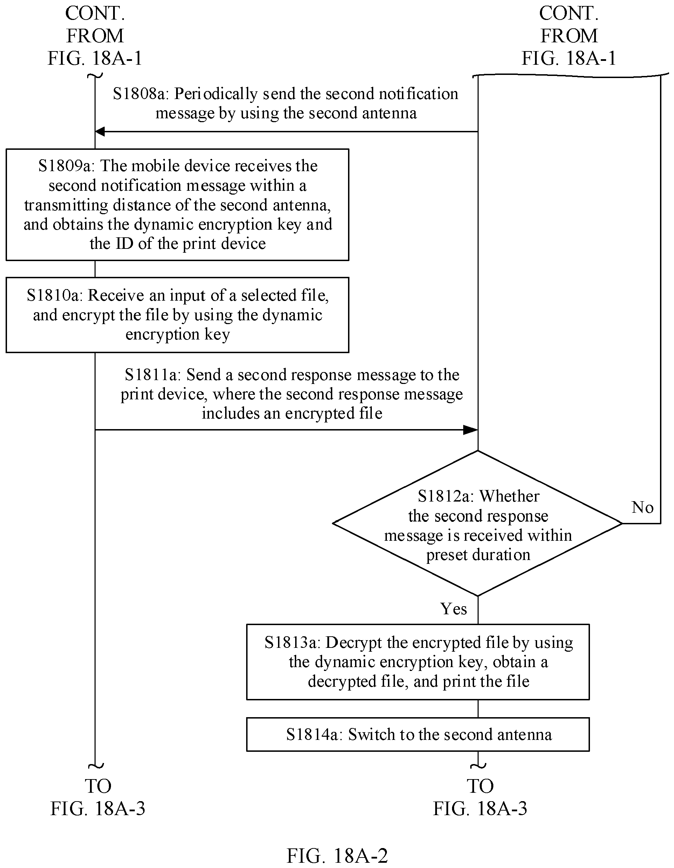

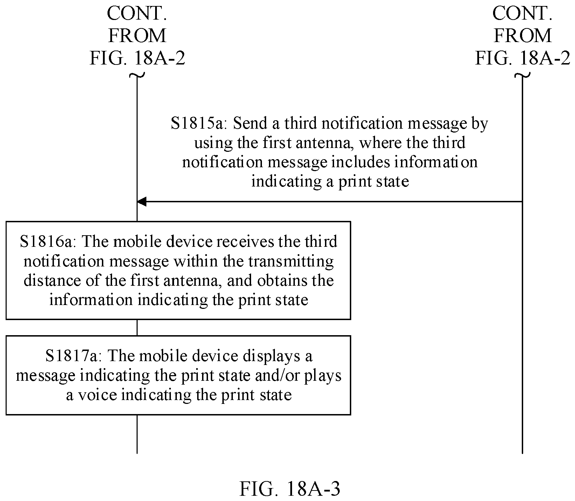

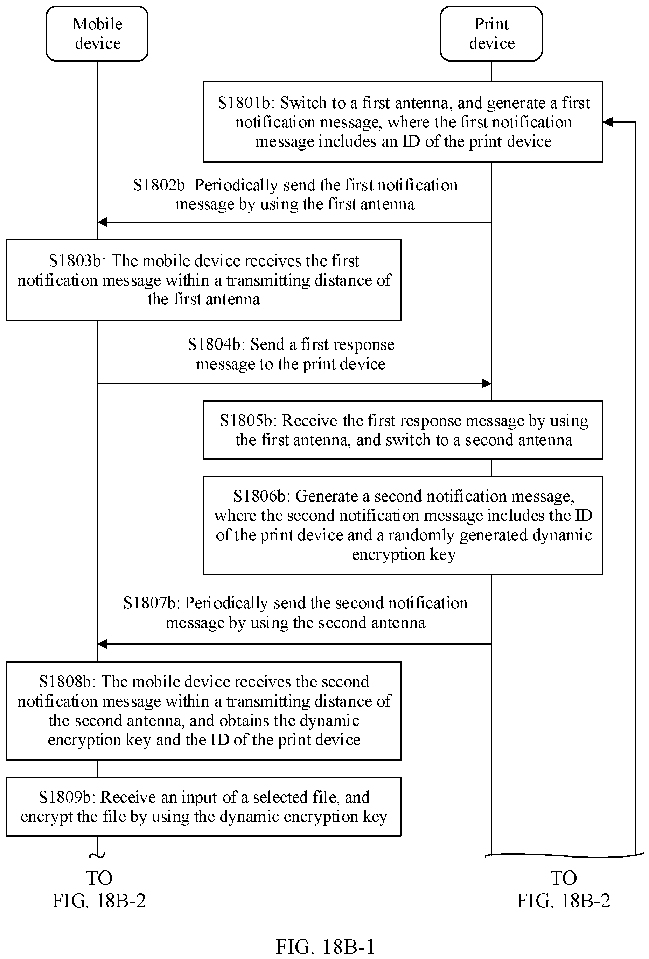

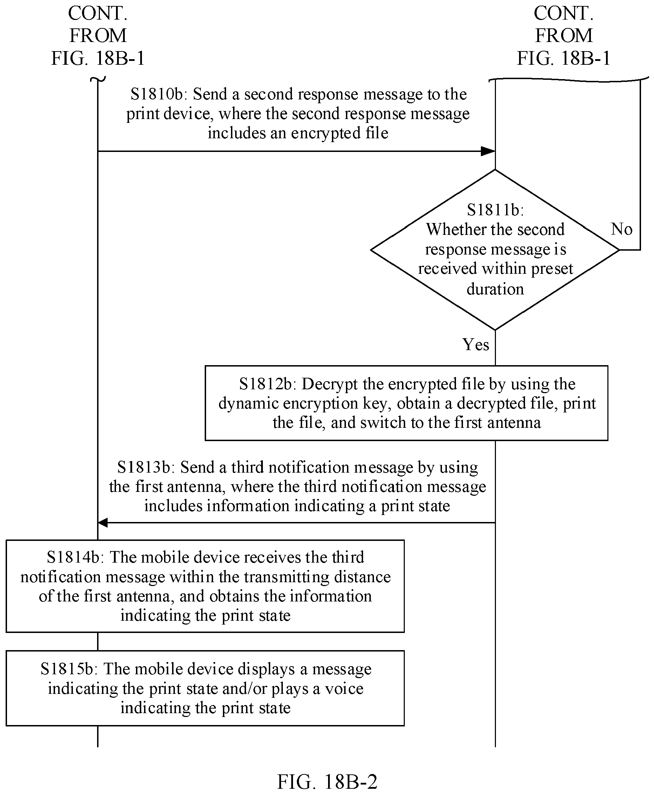

FIG. 18A-1 to FIG. 18A-3 and FIG. 18B-1 and FIG. 18B-2 each are a schematic flowchart of steps of executing all specific function of an electronic device and identifying identity information or password information in an implementation of an automatic control method according to an embodiment of this application;

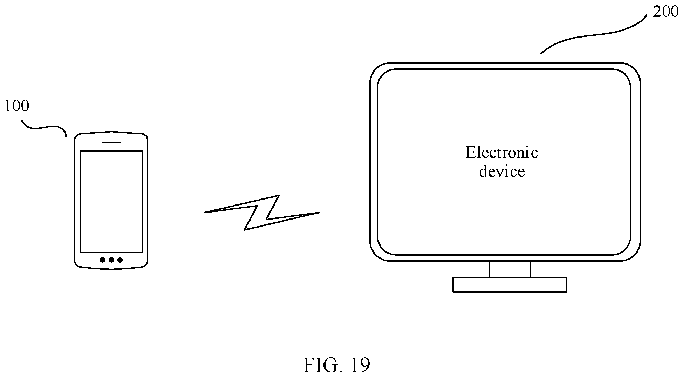

FIG. 19 is a schematic diagram of a scenario of an implementation of an automatic control method according to an embodiment of this application;
FIG. 20A-1 and FIG. 20A-2 to FIG. 20E-1 and FIG. 20E-2 each are a schematic flowchart of steps of setting identity information or password information in an implementation of an automatic control method according to an embodiment of this application;

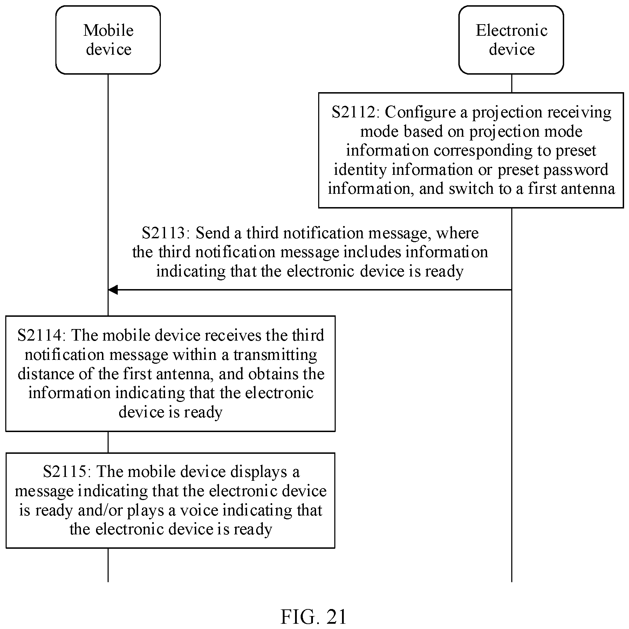

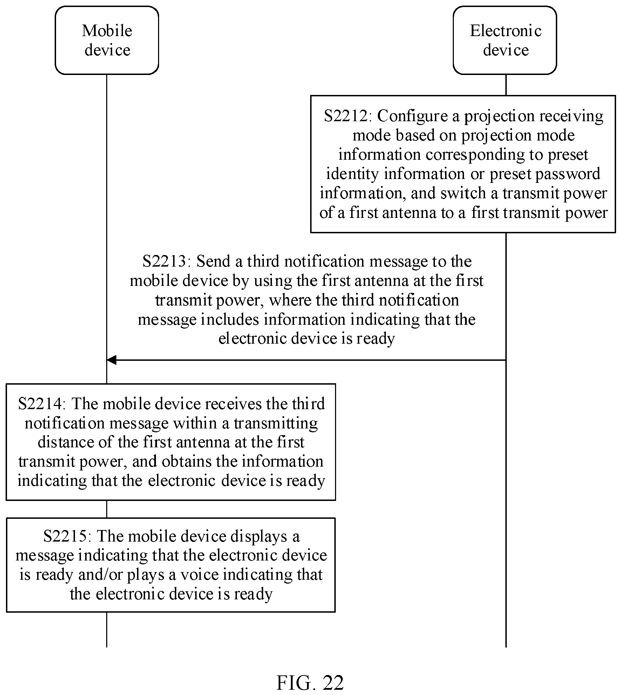

FIG. 21 and FIG. 22 each are a schematic flowchart of steps of executing a part of a specific function of an electronic device in an implementation of an automatic control method according to an embodiment of this application;

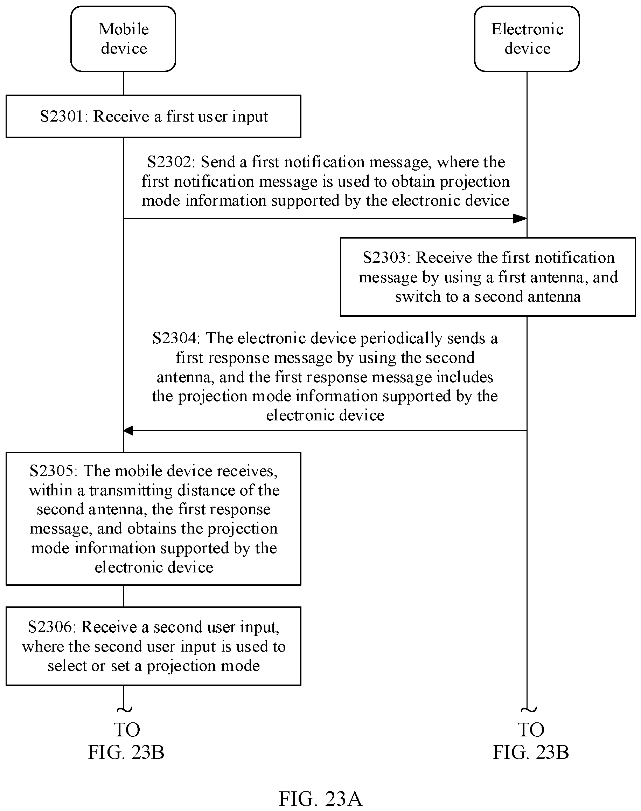

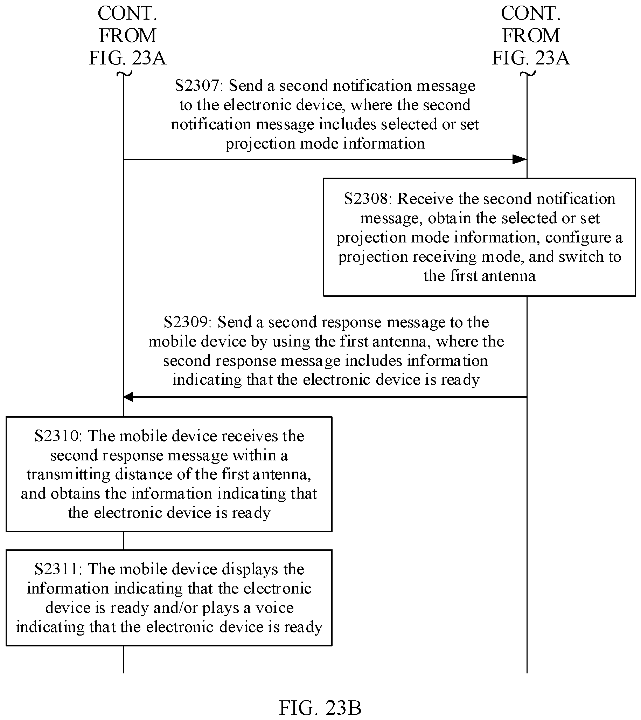

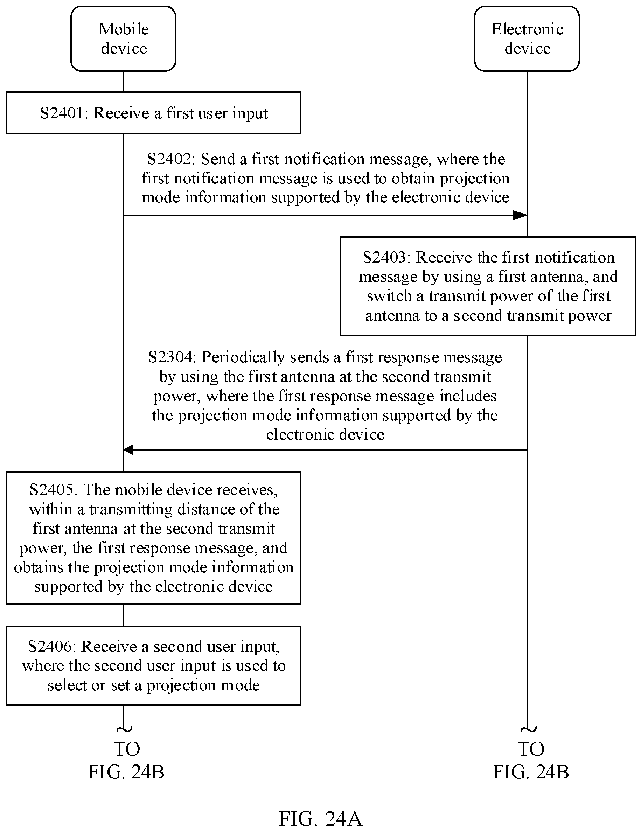

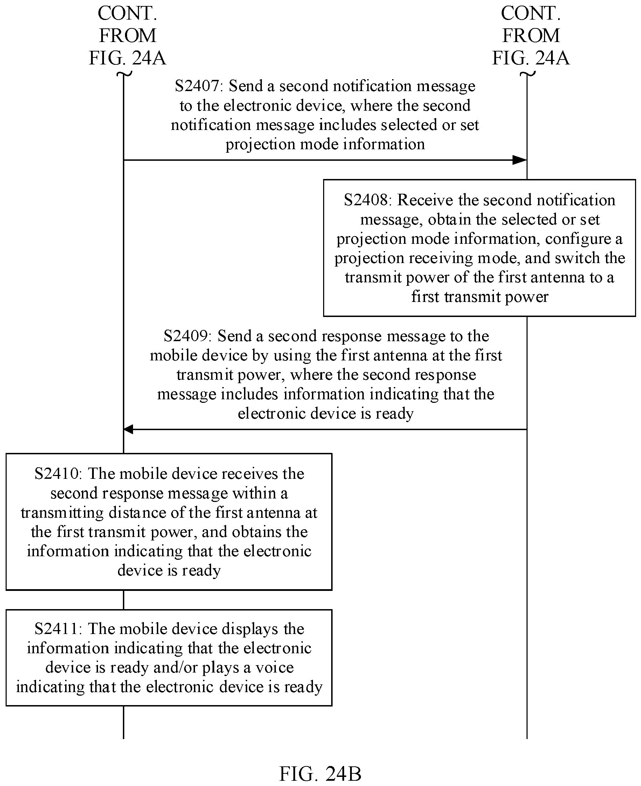

FIG. 23A and FIG. 23B and FIG. 24A and FIG. 24B each are a schematic flowchart of steps of executing a part of a specific function of an electronic device in an implementation of an automatic control method according to an embodiment of this application;

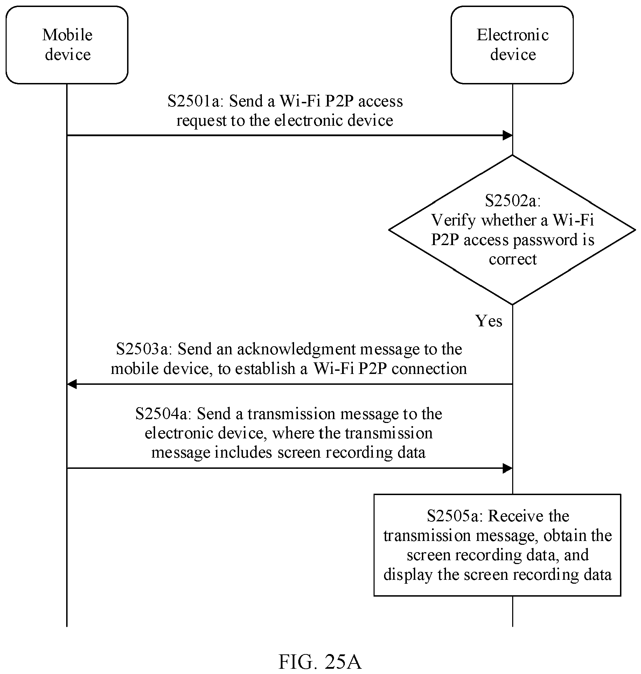

FIG. 25A to FIG. 25D each are a schematic flowchart of steps of executing a remaining part of a specific function of an electronic device in an implementation of an automatic control method according to an embodiment of this application;

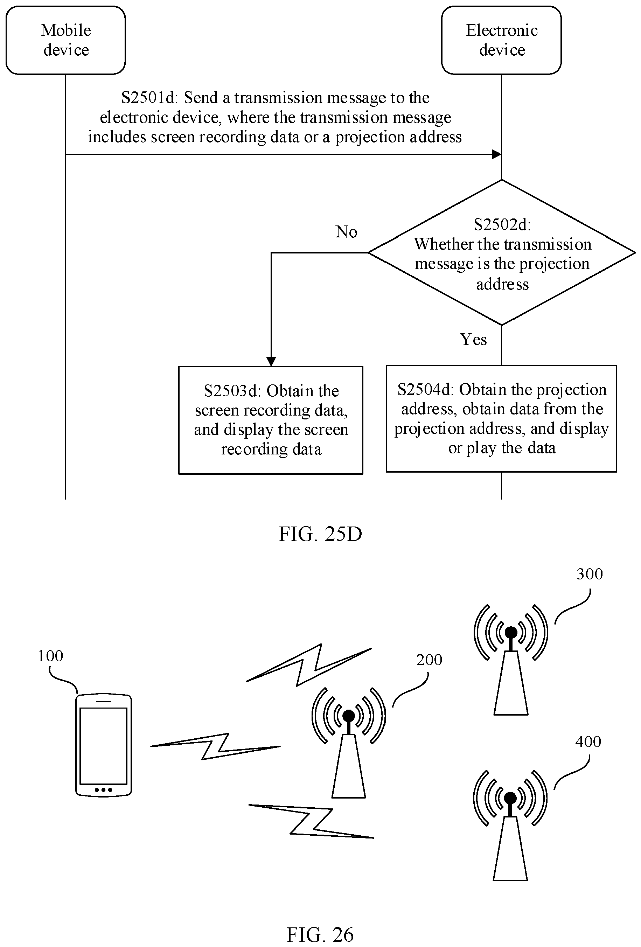

FIG. 26 is a schematic diagram of a scenario of an implementation of an automatic control method according to an embodiment of this application;

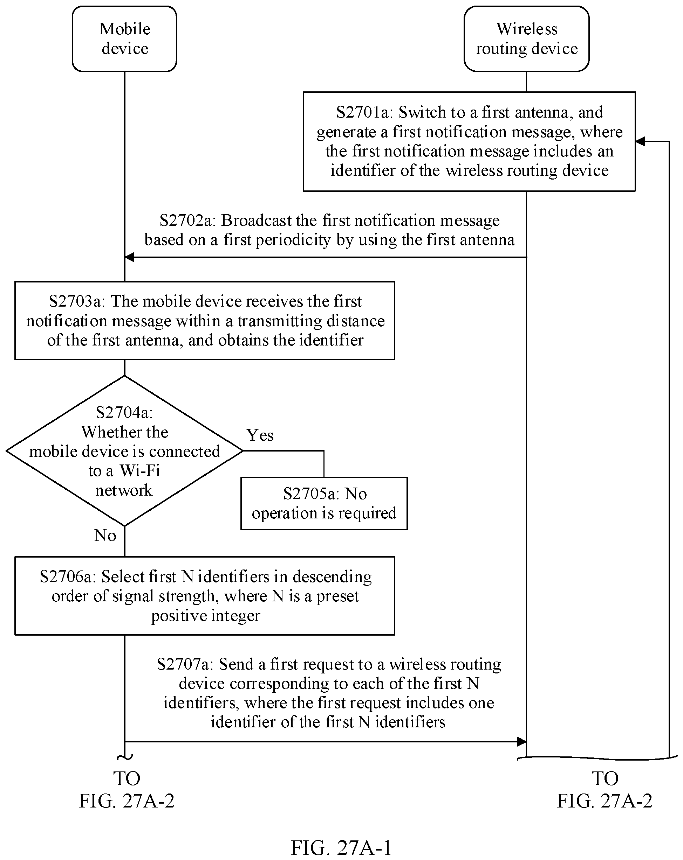

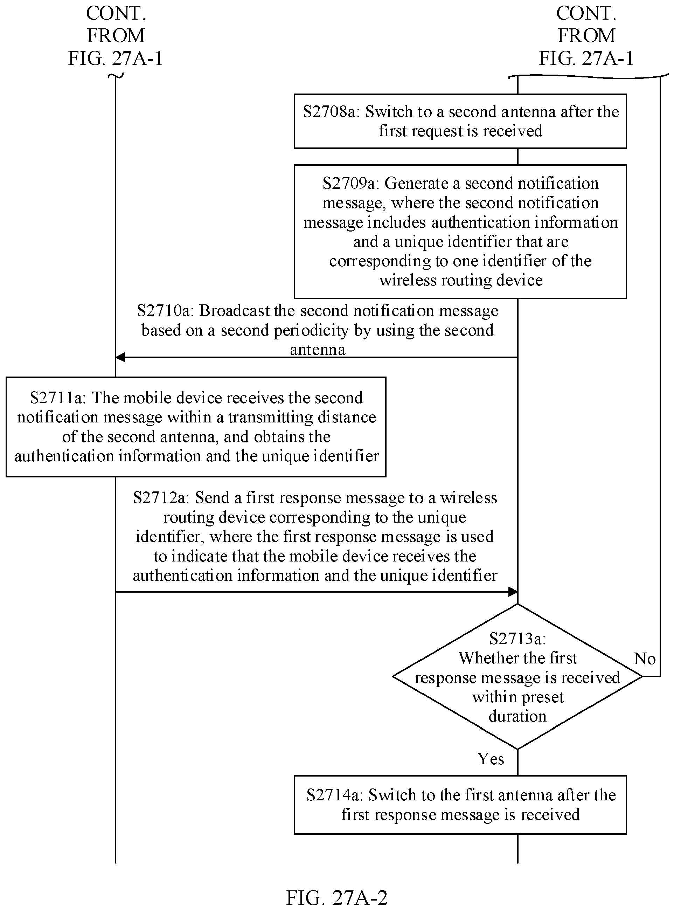

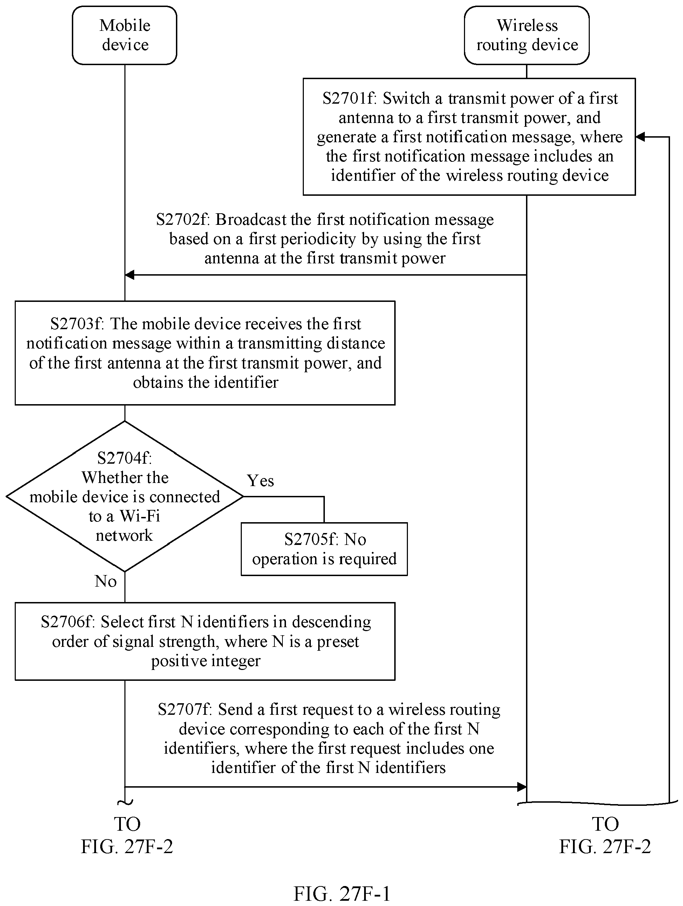

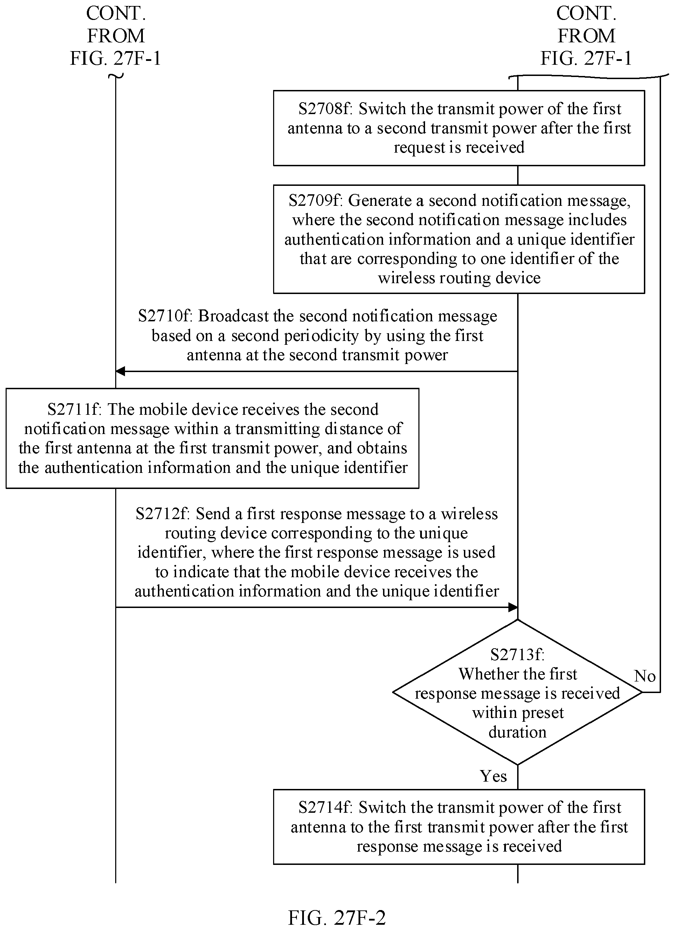

FIG. 27A-1 and FIG. 27A-2 to FIG. 27F-1 and FIG. 27F-2 each are a schematic flowchart of steps of executing a part of a specific function of an electronic device in an implementation of an automatic control method according to an embodiment of this application;

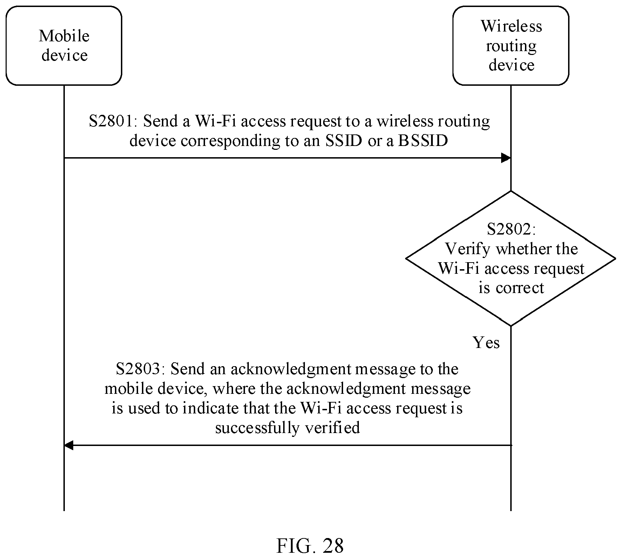

FIG. 28 is a schematic flowchart of steps of executing a remaining part of a specific function of an electronic device in an implementation of an automatic control method according to an embodiment of this application;

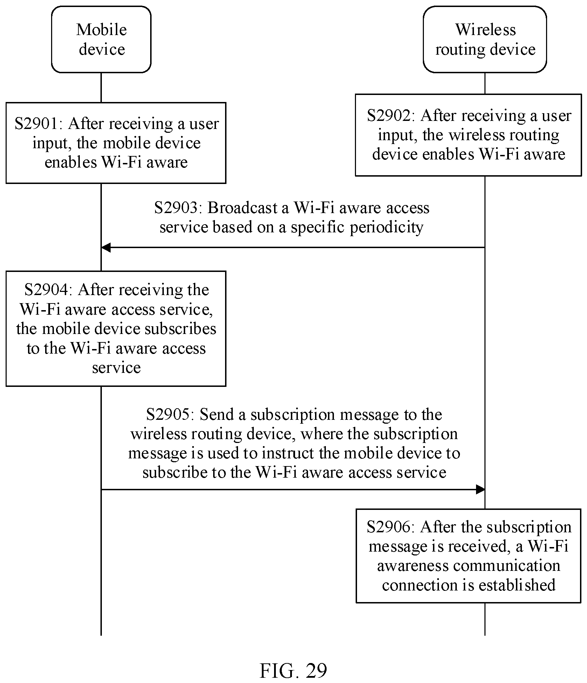

FIG. 29 is a flowchart of accessing a wireless routing device by using Wi-Fi aware by a mobile device in an implementation of an automatic control method according to an embodiment of this application;

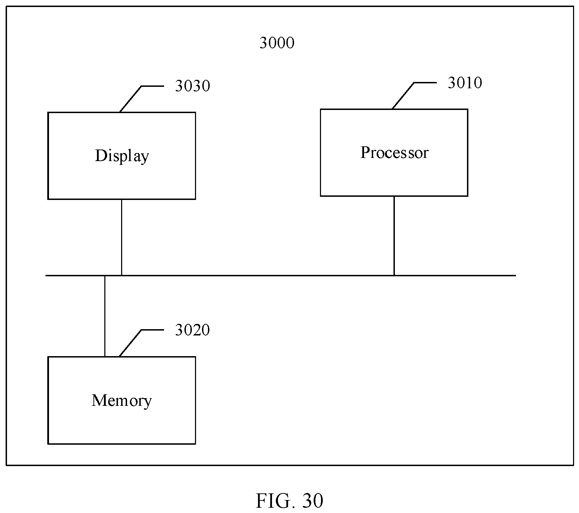

FIG. 30 is a schematic diagram of a structure of a mobile device according to an embodiment of this application; and

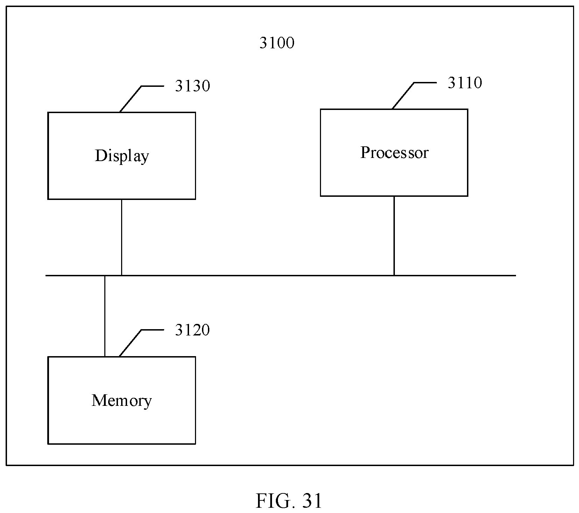

FIG. 31 is a schematic diagram of a structure of an electronic device according to an embodiment of this application.

### DESCRIPTION OF EMBODIMENTS

The following describes the technical solutions in embodiments of this application with reference to the accompanying drawings in embodiments of this application. In the descriptions of embodiments of this application, terms used in the following embodiments are merely intended to describe purposes of specific embodiments, but are not intended to limit this application. The terms "one", "a" and "this" of singular forms used in this specification and the appended claims of this application are also intended to include expressions such as "one or more", unless otherwise specified in the context clearly. It should be further understood that in the following embodiments of this application, "at least one" and "one or more" mean one, two, or more. The term "and/or" is used to describe an association relationship between associated objects and represents that three relationships may exist. For example, A and/or B may represent the following cases: Only A exists, both A and B exist, and only B exists, where A and B each may be singular or plural. The character "/" generally indicates an "or" relationship between the associated objects.

Reference to "an embodiment", "some embodiments", or the like described in this specification indicates that one or more embodiments of this application include a specific feature, structure, or characteristic described with reference to embodiments. Therefore, statements such as "in an embodiment", "in some embodiments", "in some other embodiments", and "in other embodiments" that appear at different places in this specification do not necessarily mean referring to a same embodiment. Instead, the statements mean "one or more but not all of embodiments", unless otherwise specifically emphasized in another manner. The terms "include", "have", and their variants all mean "include but are not limited to", unless otherwise specifically emphasized in another manner. The term "connection" includes a direct connection and an indirect connection, unless otherwise indicated. "First" and "second" are merely intended for a purpose of description, and shall not be understood as an indication or implication of relative importance or implicit indication of the number of indicated technical features.

In embodiments of this application, the word "example", "for example", or the like is used to represent giving an example, an illustration, or a description. Any embodiment or design scheme described as "example" or "for example" in embodiments of this application should not be explained as being more preferred or having more advantages than another embodiment or design scheme. Exactly, use of the word "example", "for example", or the like is intended to present a relative concept in a specific manner.

In many fields, to control a specific function of an electronic device, a user usually needs to browse relatively much content and perform a plurality of operations (for example, perform a plurality of operations on a plurality of interfaces). Consequently, user operations are complex, time-consuming, and inconvenient, and user experience is reduced. Especially for people with a weak operation capability or people who are inconvenient for operation, such as the elderly, children, the disabled, and patients, this is not conducive to their operation. Shortening overall time consumption, simplifying the operations to facilitate the user, and improving user experience are needed.

To resolve the foregoing technical problem, this application provides an automatic control method, an electronic device, and a computer-readable storage medium, so that after initial setting, or even without initial setting, the electronic device can automatically perform a specific operation, to shorten overall time consumption, simplify operations, and improve user experience.

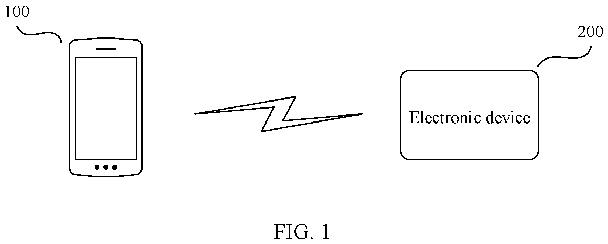

FIG. 1 is a schematic diagram of a scenario of an automatic control method according to an embodiment of this application. As shown in FIG. 1, within a specific distance from an electronic device 200, a mobile device 100 communicates with the electronic device 200 in a wireless communication manner. The electronic device 200 may work in several modes.

In one mode, the electronic device 200 broadcasts a message periodically, and the mobile device 100 receives the message when the mobile device 100 is moved to a location within a specific distance from the electronic device 200; and the mobile device 100 sends a response message to the electronic device 200, and the electronic device 200 receives the response message. The electronic device 200 determines, based on the response message and a preset matching relationship, whether the mobile device 100 matches the electronic device 200. If the two match, the mobile device 100 may control the electronic device 200 in the wireless communication manner, to implement a specific operation, or the electronic device 200 further controls another mechanism to implement a specific operation. If the two do not match, the electronic device 200 continues to broadcast the message periodically.

In another mode, the electronic device 200 does not send a message, and only receives a message. When the mobile device 100 is moved to a location within a specific distance from the electronic device 200, a user performs an input (such as a voice input or a trigger input) on the mobile device 100, so that the mobile device 100 sends a control message, and the control message includes identity information or password information. After receiving the control message, the electronic device 200 performs identity information verification or password information verification. After the verification succeeds, the electronic device 200 performs a control operation corresponding to the control message, or the electronic device 200 further controls another mechanism, to implement a specific operation.

In embodiments of this application, a mobile device includes but is not limited to a smartphone, a smart headset, a tablet computer, and a wearable electronic device (such as a smartwatch, a smart band, a smart ring, and smart glasses) with a wireless communication function. An example embodiment of the mobile device includes, but is not limited to, a portable electronic device on which iOS^{®}, Android^{®}, Harmony^{®}, Windows, Linux, or another operating system is installed. The mobile device may alternatively be another portable electronic device such as a laptop (Laptop). It should be further understood that, in some other embodiments, the mobile device may not be the portable electronic device but a desktop computer.

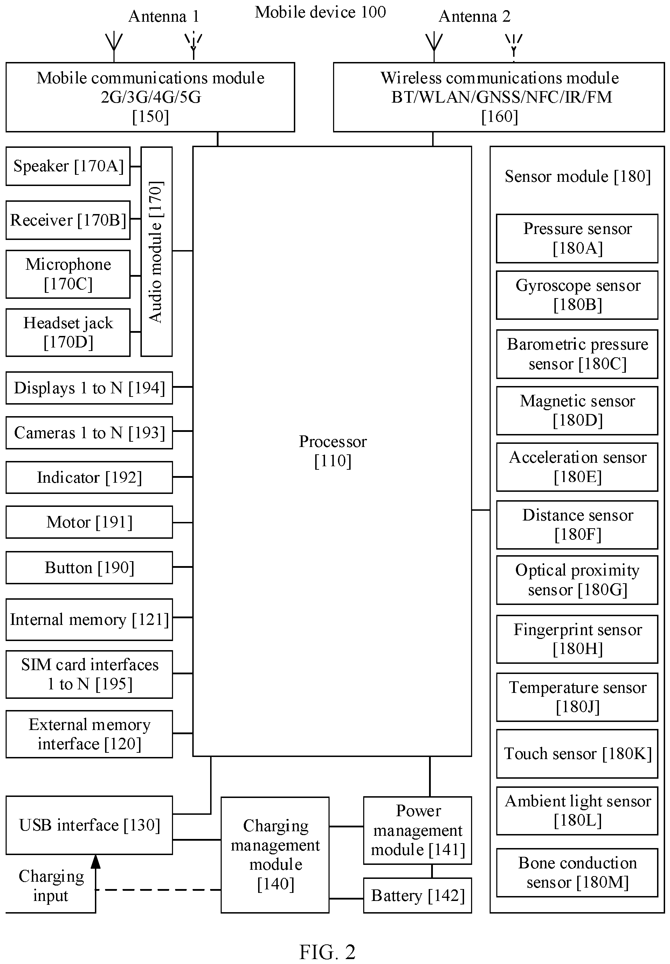

For example, FIG. 2 is a schematic diagram of a hardware structure of a mobile device 100 according to an embodiment of this application. As shown in FIG. 2, the mobile device 100 may include a processor 110, an external memory interface 120, an internal memory 121, a universal serial bus (universal serial bus, USB) interface 130, a charging management module 140, a power management module 141, a battery 142, an antenna 1, an antenna 2, a mobile communications module 150, a wireless communications module 160, an audio module 170, a speaker 170A, a receiver 170B, a microphone 170C, a headset jack 170D, a sensor module 180, a button 190, a motor 191, an indicator 192, a camera 193, a display 194, a subscriber identification module (subscriber identification module, SIM) card interface 195, and the like. The sensor module 180 may include a pressure sensor 180A, a gyroscope sensor 180B, a barometric pressure sensor 180C, a magnetic sensor 180D, an acceleration sensor 180E, a distance sensor 180F, an optical proximity sensor 180G, a fingerprint sensor 180H, a temperature sensor 180J, a touch sensor 180K, an ambient light sensor 180L, a bone conduction sensor 180M, and the like.

It can be understood that, a structure illustrated in this embodiment of this application does not constitute a specific limitation on the mobile device 100. In some other embodiments of this application, the mobile device 100 may include more or fewer components than those shown in the figure, or combine some components, or split some components, or have different component arrangements. The components shown in the figure may be implemented by hardware, software, or a combination of software and hardware.

The charging management module 140 is configured to receive a charging input from the charger. The power management module 141 is configured to connect to the battery 142, the charging management module 140, and the processor 110. A wireless communication function of the mobile device 100 may be implemented through the antenna 1, the antenna 2, the mobile communications module 150, the wireless communications module 160, the modem processor, the baseband processor, and the like.

The antenna 1 and the antenna 2 are configured to transmit and receive an electromagnetic wave signal. Each antenna in the mobile device 100 may be configured to cover one or more communication frequency bands. Different antennas may be further multiplexed, to improve antenna utilization. For example, the antenna 1 may be multiplexed as a diversity antenna of a wireless local area network. In some other embodiments, an antenna may be used in combination with a tuning switch.

The mobile communications module 150 may provide a wireless communication solution that includes 2G, 3G, 4G, 5G, or the like and that is applied to the mobile device 100. The mobile communications module 150 may include at least one filter, a switch, a power amplifier, a low noise amplifier (low noise amplifier, LNA), and the like. The mobile communications module 150 may receive an electromagnetic wave through the antenna 1, perform processing such as filtering or amplification on the received electromagnetic wave, and transmit the electromagnetic wave to the modem processor for demodulation. The mobile communications module 150 may further amplify a signal modulated by the modem processor, and convert the signal into an electromagnetic wave for radiation through the antenna 1. In some embodiments, at least some functional modules in the mobile communications module 150 may be disposed in the processor 110.

The modem processor may include a modulator and a demodulator. The modulator is configured to modulate a to-be-sent low-frequency baseband signal into a medium-high frequency signal. The demodulator is configured to demodulate a received electromagnetic wave signal into a low-frequency baseband signal. Then, the demodulator transmits the low-frequency baseband signal obtained through demodulation to the baseband processor for processing. The low-frequency baseband signal is processed by the baseband processor and then transmitted to the application processor. The application processor outputs a sound signal by an audio device (which is not limited to the speaker 170A, the receiver 170B, or the like), or displays an image or a video by the display 194. In some embodiments, the modem processor may be an independent component. In some other embodiments, the modem processor may be independent of the processor 110, and is disposed in a same device as the mobile communications module 150 or another functional module.

The wireless communications module 160 may provide a wireless communication solution applied to the mobile device 100, and the wireless communication solution includes wireless communication a wireless local area network (wireless local area networks, WLAN) (for example, a wireless fidelity (wireless fidelity, Wi-Fi) network), Bluetooth (bluetooth, BT), a global navigation satellite system (global navigation satellite system, GNSS), frequency modulation (frequency modulation, FM), a near field communication (near field communication, NFC) technology, an infrared (infrared, IR) technology, and the like. The wireless communications module 160 may be one or more components integrating at least one communications processor module. The wireless communications module 160 receives an electromagnetic wave by the antenna 2, performs frequency modulation and filtering processing on an electromagnetic wave signal, and sends a processed signal to the processor 110. The wireless communications module 160 may further receive a to-be-sent signal from the processor 110, perform frequency modulation and amplification on the signal, and convert the signal into an electromagnetic wave for radiation through the antenna 2.

In some embodiments, in the mobile device 100, the antenna 1 and the mobile communications module 150 are coupled, and the antenna 2 and the wireless communications module 160 are coupled, so that the mobile device 100 can communicate with a network and another device by using a wireless communications technology. The wireless communications technology may include a global system for mobile communications (global system for mobile communications, GSM), a general packet radio service (general packet radio service, GPRS), code division multiple access (code division multiple access, CDMA), wideband code division multiple access (wideband code division multiple access, WCDMA), time-division code division multiple access (time-division code division multiple access, TD-SCDMA), long term evolution (long term evolution, LTE), BT, a GNSS, a WLAN, NFC, FM, an IR technology, and/or the like. The GNSS may include a global positioning system (global positioning system, GPS), a global navigation satellite system (global navigation satellite system, GLONASS), a BeiDou navigation satellite system (beidou navigation satellite system, BDS), a quasi-zenith satellite system (quasi-zenith satellite system, QZSS), and/or a satellite based augmentation system (satellite based augmentation system, SBAS).

The mobile device 100 may implement a photographing function through the ISP, the camera 193, the video codec, the GPU, the display 194, the application processor, and the like.

The external memory interface 120 may be configured to connect to an external storage card, for example, a Micro SD card, to extend a storage capability of the mobile device 100. The external memory card communicates with the processor 110 through the external memory interface 120, to implement a data storage function. For example, files such as music and a video are stored in the external memory card.

The mobile device 100 may implement audio functions by using the audio module 170, the speaker 170A, the receiver 170B, the microphone 170C, the headset jack 170D, the application processor, and the like, and the like.

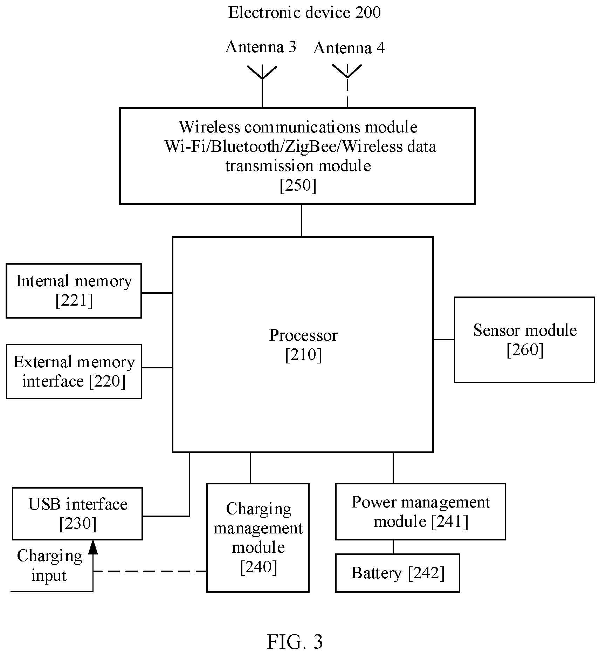

For example, FIG. 3 is a schematic diagram of a hardware structure of an electronic device 200 according to an embodiment of this application. The electronic device 200 may include a processor 210, an external memory interface 220, an internal memory 221, a universal serial bus (universal serial bus, USB) interface 230, a charging management module 240, a power management module 241, a battery 242, an antenna 3, an antenna 4, a wireless communications module 250, a sensor module 260, and the like.

It may be understood that, the structures shown in embodiments of this application do not constitute specific limitation on the electronic device 200. In some other embodiments of this application, the electronic device 200 may include more or fewer components than those shown in the figure, or combine some components, or split some components, or have different component arrangements. The components shown in the figure may be implemented by hardware, software, or a combination of software and hardware. For example, the electronic device 200 may be a print device. The print device may further include a printing function module 270 (not shown in the figure). The printing function module 270 may implement at least one of operations such as printing, copying, and faxing.

The processor 210 may include one or more processing units. For example, the processor 210 may include an application processor (application processor, AP), a modem processor, a graphics processing unit (graphics processing unit, GPU), an image signal processor (image signal processor, ISP), a controller, a video codec, a digital signal processor (digital signal processor, DSP), a baseband processor, and/or a neural-network processing unit (neural-network processing unit, NPU). Different processing units may be independent components, or may be integrated into one or more processors. In some embodiments, the electronic device 200 may alternatively include one or more processors 210. The controller may generate an operation control signal based on instruction operation code and a time sequence signal, to complete control of instruction reading and instruction execution.

In some embodiments, the processor 210 may include one or more interfaces. The interface may include an inter-integrated circuit (inter-integrated circuit, I2C) interface, an integrated circuit sound (integrated circuit sound, I2S) interface, a pulse code modulation (pulse code modulation, PCM) interface, a universal asynchronous receiver/transmitter (universal asynchronous receiver/transmitter, UART) interface, a mobile industry processor interface (mobile industry processor interface, MIPI), a general-purpose input/output (general-purpose input/output, GPIO) interface, a SIM card interface, a USB interface, and/or the like. A USB interface 230 is an interface that conforms to a USB standard specification, and may be specifically a Mini USB interface, a Micro USB interface, a USB Type C interface, or the like. The USB interface 230 may be configured to connect to a charger to charge the electronic device 200, or may be configured to perform data transmission between the electronic device 200 and a peripheral device.

It may be understood that, an interface connection relationship between the modules shown in this embodiment of this application is merely an example for description, and does not constitute a limitation on the structure of the electronic device 200. In some other embodiments of this application, the electronic device 200 may alternatively use an interface connection mode different from an interface connection mode in this embodiment, or a combination of a plurality of interface connection modes.

The charging management module 240 is configured to receive a charging input from the charger. The charger may be a wireless charger or a wired charger. In some embodiments of wired charging, the charging management module 240 may receive a charging input of a wired charger through the USB interface 230. In some embodiments of wireless charging, the charging management module 240 may receive a wireless charging input by using a wireless charging coil of the electronic device 200. When charging the battery 242, the charging management module 240 may further supply power to the electronic device by using the power management module 241.

The power management module 241 is configured to connect to the battery 242, the charging management module 240, and the processor 210. The power management module 241 receives an input of the battery 242 and/or the charging management module 240, to supply power to the processor 210, the internal memory 221, the external memory interface 220, the wireless communications module 250, and the like. The power management module 241 may be further configured to monitor parameters such as a battery capacity, a quantity of battery cycles, and a battery health status (electric leakage and impedance). In some other embodiments, the power management module 241 may alternatively be disposed in the processor 210. In some other embodiments, the power management module 241 and the charging management module 240 may alternatively be disposed in a same device.

A wireless communication function of the electronic device 200 may be implemented by using the antenna 3, the antenna 4, the wireless communications module 250, and the like.

The wireless communications module 250 may provide a wireless communications solution applied to the electronic device 200, and the wireless communications solution includes Wi-Fi, Bluetooth (bluetooth, BT), a wireless data transmission module (for example, 433 MHz, 868 MHz, or 915 MHz), and the like. The wireless communications module 250 may be one or more components integrating at least one communications processing module. The wireless communications module 250 receives an electromagnetic wave through the antenna 3 or the antenna 4, performs filtering and frequency modulation processing on an electromagnetic wave signal, and sends a processed signal to the processor 210. The wireless communications module 250 may further receive a to-be-sent signal from the processor 210, perform frequency modulation and amplification on the signal, and convert the signal into an electromagnetic wave for radiation through the antenna 3 or the antenna 4.

In this embodiment of this application, the electronic device 200 may send a broadcast message by using the wireless communications module. The broadcast message may carry a device identifier or a product identifier of the electronic device 200, so that a surrounding second device discovers the electronic device 200. The electronic device 200 may further receive, by using the wireless communications module, a message sent by the second device.

The external memory interface 220 may be configured to connect to an external storage card, for example, a Micro SD card, to extend a storage capability of the electronic device 200. The external storage card communicates with the processor 210 through the external memory interface 220, to implement a data storage function. For example, files such as music and videos are stored in the external storage card.

The internal memory 221 may be configured to store one or more computer programs, and the one or more computer programs include instructions. The processor 210 may run the instructions stored in the internal memory 221, so that the electronic device 200 performs an automatic unlocking method provided in some embodiments of this application, various applications, data processing, and the like. The internal memory 221 may include a code storage area and a data storage area. The code storage area may store an operating system. The data storage area may store data created during use of the electronic device 200, and the like. In addition, the internal memory 221 may include a high-speed random access memory, or may include a nonvolatile memory, for example, one or more magnetic disk storage devices, a flash memory device, or a universal flash storage (universal flash storage, UFS). In some embodiments, the processor 210 may run the instructions stored in the internal memory 221 and/or instructions stored in the memory disposed in the processor 210, to enable the electronic device 200 to perform the automatic control method provided in embodiments of this application, other applications, and data processing.

The electronic device 200 includes but is not limited to a tablet computer, a desktop computer, a portable electronic device (for example, a laptop, Laptop), a smart television (for example, a smart screen), a vehicle-mounted computer, a smart speaker, an augmented reality (augmented reality, AR) device, a virtual reality (virtual reality, VR) device, another smart device with a display, and another smart device with a speaker. An example embodiment of the electronic device includes, but is not limited to, a portable or non-portable electronic device on which iOS^{®}, Android^{®}, Harmony^{®}, Windows^{®}, Linux, or another operating system is installed.

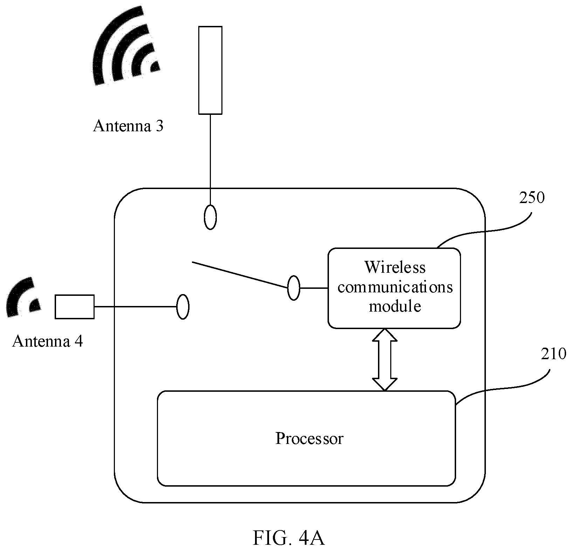

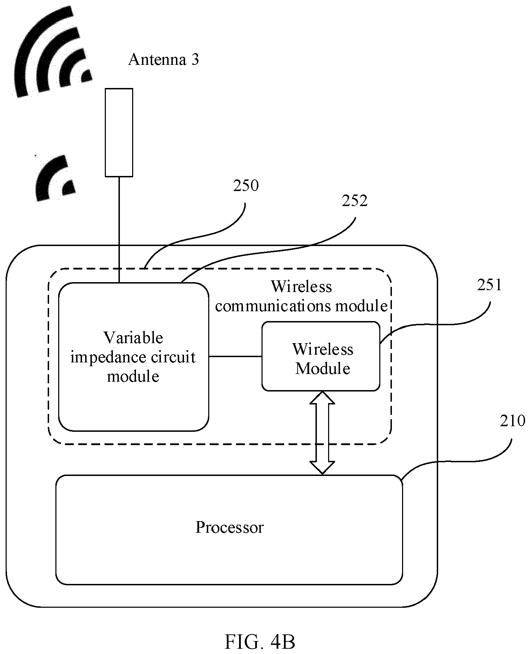

In this embodiment of this application, a wireless communication manner between a mobile device and an electronic device includes but is not limited to a manner such as BLE and Wi-Fi aware. The wireless communication manner such as BLE and Wi-Fi aware is interaction performed based on a medium access control (medium access control, MAC) layer, also referred to as interaction performed based on data link layer protocol extension, and does not need to involve upper-layer network communication at the MAC layer, and data interaction can be fully implemented at the data link layer. The BLE is an ultra-low power consumption near field wireless communication solution that is launched by a Bluetooth Special Interest Group in 2016 and that is applied to an electronic device, and may implement communication by using the MAC layer. Wi-Fi Aware (Wi-Fi neighborhood aware network, Wi-Fi neighborhood aware network, NAN for short) is a new low-power Wi-Fi Mesh communications technology with point-to-point interconnection and interworking. The technology can bypass a network infrastructure (such as an access point (access point, AP) or a cellular network), to implement one-to-one, one-to-many, or many-to-many connection communication between devices, and may also implement communication by using the MAC layer. As shown in FIG. 4, a mobile device 100 may specifically complete communication with an electronic device 200 in the wireless communication manner such as BLE or Wi-Fi aware. It should be noted that this wireless communication manner is different from a common Wi-Fi connection or Bluetooth connection. Specifically, in the wireless communication manner such as BLE or Wi-Fi aware, the data interaction may be directly implemented at the MAC layer of a computer network by sending a beacon frame, without a need to involve data interaction at a network layer that is higher than the MAC layer in the computer network. Communication between devices implemented in the wireless communication manner such as BLE or Wi-Fi aware can not only improve communication efficiency (the mobile device 100 does not need to complete steps such as Wi-Fi or Bluetooth connection and user identity login verification with the electronic device 200, and does not need to involve content such as a network protocol of an upper-layer network), and but also improve security of the data interaction (the data transmission at the MAC layer).

In an example, FIG. 4A shows a principle structure of a wireless communications module and an antenna in an electronic device according to an embodiment of this application. As shown in FIG. 4A, the electronic device 200 may include a processor 210, a wireless communications module 250, an antenna 3, and an antenna 4.

The antenna 3 (for example, a strong antenna) and the antenna 4 (for example, a weak antenna) are configured to transmit and receive an electromagnetic wave. Further, the wireless communications module 250 converts an electromagnetic wave received from the antenna 3 or the antenna 4 into a signal, and sends the signal to the processor 210 for processing; or the wireless communications module 250 receives a to-be-sent signal from the processor 210, and converts the to-be-sent signal into an electromagnetic wave for radiation through the strong antenna or the weak antenna. In this embodiment of this application, a first transmitting distance (for example, 10 meters or 5 meters, and this may be specifically set by a user) for transmitting a signal by the strong antenna is greater than a second transmitting distance (for example, 0.2 meter or 0.3 meter, and this may be specifically set by the user) for transmitting a signal by the weak antenna. A second transmitting distance for transmitting a signal by the weak antenna is less than or equal to a preset safety distance, and the preset safety distance is a distance at which a user of the electronic device 200 exchanges secret information with the electronic device 200 by using the mobile device 100. In an embodiment, the preset safety distance is a safety distance at which the user of the electronic device 200 exchanges the secret information with the electronic device 200 by using the mobile device 100. For example, the preset safety distance may be 50 cm, 40 cm, 30 cm, or 20 cm. In this way, the secret information sent by the electronic device 200 can be received only when a distance between the mobile device 100 and the electronic device 200 is within a range less than or equal to the preset safety distance. In this way, a security risk is reduced (for example, the secret information is not received by another device beyond 50 cm from the electronic device 200), and a user of the mobile device 100 may move the mobile device 100 close to a location within the preset safety distance of the electronic device 200 when surrounding is safe, to improve security. In some embodiments, the processor 210 may control switching between the strong antenna and the weak antenna. When the electronic device 200 uses the strong antenna, the mobile device 100 receives a signal sent by the electronic device 200 only when the distance between the mobile device 100 and the electronic device 200 is less than the first transmitting distance; or when the electronic device 200 uses the weak antenna, the mobile device receives a signal sent by the electronic device 200 only when the distance between the mobile device 100 and the electronic device 200 is less than the second transmitting distance. The first transmitting distance is greater than the preset safety distance, and the second transmitting distance is less than or equal to the preset safety distance. In some embodiments, the first transmitting distance and the second transmitting distance may be respectively referred to as a first distance and a second distance.

In another example, FIG. 4B shows another principle structure of a wireless communications module and an antenna in an electronic device according to an embodiment of this application. As shown in FIG. 4B, the electronic device 200 may include a processor 210, a wireless communications module 250, and an antenna 3. The wireless communications module 250 includes a wireless module 251 and a variable impedance circuit module 252. The antenna 3 is configured to transmit and receive a radio signal. The variable impedance circuit module 252 may be a circuit, an integrated line, or the like, including a variable impedance part. The processor 210 adjusts, by controlling and adjusting a resistance value of the variable impedance circuit module 252, power loaded on the antenna 3, so as to control a transmitting distance for transmitting a radio signal by the antenna 3. For example, when the resistance value of the variable impedance circuit module 252 is a first resistance value, a transmit power of the antenna 3 is a first transmit power. In this case, a distance for transmitting the wireless signal by the antenna 3 is a first transmitting distance (a function of a strong antenna is implemented). When the resistance value of the variable impedance circuit module 252 is a second resistance value, a transmit power of the antenna 3 is a second transmit power. In this case, a distance for transmitting the wireless signal by the antenna 3 is a second transmitting distance (a function of a weak antenna is implemented). The first transmit power is greater than the second transmit power. The first transmitting distance is greater than a preset safety distance, and the second transmitting distance is less than or equal to the preset safety distance. In some embodiments, the first transmitting distance and the second transmitting distance may be respectively referred to as a first distance and a second distance. In another example corresponding to FIG. 4B, other descriptions about the processor 210 and the wireless communications module 250 are the same as related descriptions in an example corresponding to FIG. 4A. Details are not described herein again.

It may be understood that principle structures shown in the example corresponding to FIG. 4A and the another example corresponding to FIG. 4B do not constitute a specific limitation on the wireless communications module and the antenna in the electronic device 200. In some other embodiments, structures of the wireless communications module and the antenna in the electronic device 200 may include more or fewer components than those shown in the figure, or some components may be combined, or some components may be split, or different component arrangements may be used. The components shown in the figure may be implemented by hardware, software, or a combination of software and hardware.

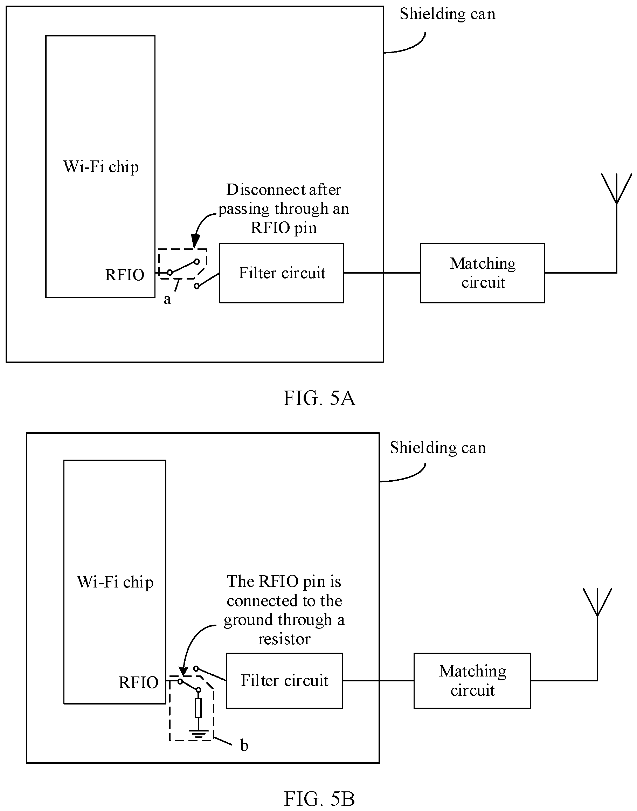

In some embodiments, the second antenna and the weak antenna may share a part of cabling, for example, descriptions in embodiments shown in FIG. 5A to FIG. 5C.

For example, FIG. 5A to FIG. 5C show three implementations of the weak antenna in FIG. 4A. As shown in FIG. 5A to FIG. 5C, the strong antenna and the weak antenna may share a part of cabling.

In this embodiment of this application, the strong antenna and the weak antenna in the electronic device may be switched by using a radio frequency switch. Physically, both the weak antenna and the radio frequency switch (the weak antenna is shown in a dashed box in FIG. 5A to FIG. 5C) may be disposed in a shielding can, or the weak antenna may be disposed in a chip.

An objective of the weak antenna in this embodiment of this application is to reduce a transmitting distance as much as possible. A principle of constructing the weak antenna may be as follows:
(1) reducing a length of the antenna, to reduce an electromagnetic wave radiated to the air;
(2) reducing radiation efficiency, and converting, by using a resistor, a part of electromagnetic wave radiation into heat energy to be consumed;
(3) reducing a return loss and reflecting partial radio frequency energy back to the chip, and the like.

The weak antenna may be specifically implemented by:
(i) shortening the antenna;
(ii) disconnecting a point in a path of a physical antenna, or grounding the point through a resistor, an inductor, or a capacitor;
(iii) using a shielding can, and the like.

It should be understood that specific implementations (i) and (ii) of the weak antenna may be implemented on a PCB board or inside a chip.

It should be further understood that a function of the shielding can is to weaken radiation.

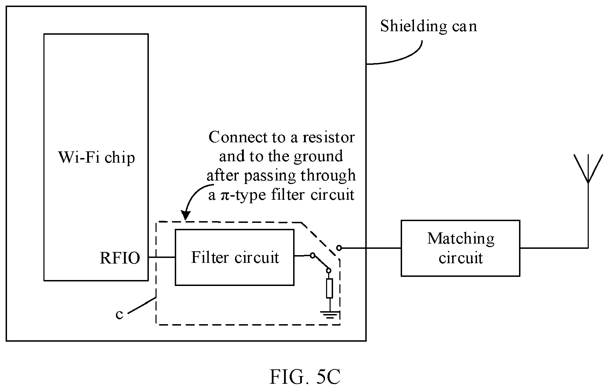

It should be further understood that the shortening the antenna means that the weak antenna is shorter than the strong antenna. Three structures of weak antennas are shown in FIG. 5A to FIG. 5C, and the weak antenna is shown in structures in the dashed box in FIG. 5A to FIG. 5C. Structures of the strong antenna in FIG. 5A to FIG. 5C are all connected to a filter circuit (for example, a π-type circuit), a matching circuit (for example, a π-type circuit), and an antenna body (for example, the antenna body may be a metal cabling) outside the matching circuit by using a radio frequency input/output (radio frequency input/output, RFIO) pin. The weak antenna a shown in the dashed box in FIG. 5A, the weak antenna b shown in the dashed box in FIG. 5B, and the weak antenna c shown in the dashed box in FIG. 5C have different lengths, but each are shorter than the strong antenna. The filter circuit is configured to prevent interference, and the matching circuit is configured to match the strong antenna.

For example, as shown in FIG. 5A, the weak antenna a may be located in the shielding can. The weak antenna a may include the RFIO pin of a Wi-Fi chip and a first-way switch in a two-way switch (the first-way switch is not connected to any component) in the shielding can. Sometimes, the weak antenna a may further include a cabling between the RFIO pin and the first-way switch. The two-way switch refers to a switch between the cabling or the RFIO pin and the filter circuit. The cabling or the RFIO pin may be connected or disconnected to or from the filter circuit by using the two-way switch. As shown in FIG. 5A, the first-way switch is the switch connected to the RFIO pin or the cabling and disconnected from the filter circuit. It should be understood that the two-way switch in this embodiment of this application may be a single-pole double-throw switch.

For example, as shown in FIG. 5B, the weak antenna b may be located in the shielding can. The weak antenna b may include the RFIO pin of a Wi-Fi chip, a first-way switch in a two-way switch (the first-way switch is connected to the resistor), and a matching component in the shielding can. Sometimes, the weak antenna b may further include a first cabling between the RFIO pin and the first-way switch. Sometimes, the weak antenna b may further include a second cabling between the matching component and the ground. The matching component may be the resistor. A part of electromagnetic wave radiation may be converted, through the resistor grounding, into heat energy to be consumed, to reduce radiation efficiency of the weak antenna b. The two-way switch refers to a switch between the RFIO pin or the first cabling, the resistor, and the filter circuit. By using the switch, the RFIO pin or the first cabling may be connected to the resistor and disconnected from the filter circuit, or the RFIO pin or the first cabling may be disconnected from the resistor and connected to the filter circuit. The first-way switch is the switch that is in the two-way switch and that is connected to the matching component and disconnected from the filter circuit.

For example, as shown in FIG. 5C, the weak antenna c may be located in the shielding can. A matching component (for example, the resistor) is connected to the ground after passing through a chip-matched filter circuit. The weak antenna c may include the RFIO pin of a Wi-Fi chip, the filter circuit, a first-way switch in a two-way switch (the first-way switch is connected to the resistor), and a matching component (for example, the resistor) in the shielding can. Sometimes, the weak antenna c may further include a first cabling between the RFIO pin and the filter circuit. Sometimes, the weak antenna c may further include a second cabling between the filter circuit and the matching component. A part of electromagnetic wave radiation may be converted, through the matching component (for example, the resistor) grounding, into heat energy to be consumed, to reduce radiation efficiency of the weak antenna c. The two-way switch refers to a switch between the filter circuit and the matching component in the shielding can and the matching circuit outside the shielding can. By using the two-way switch, the filter circuit and the matching component in the shielding can are connected, and the filter circuit is disconnected from the matching circuit outside the shielding can; or the filter circuit and the matching component in the shielding can are disconnected, and the filter circuit is connected to the matching circuit outside the shielding can. The first-way switch is the switch that connects the filter circuit and the matching component in the shielding can.

It should be understood that the strong antenna in FIG. 5A and FIG. 5B may include the RFIO pin, a second-way switch in the two-way switch, the filter circuit, the matching circuit, and the antenna body connected outside the matching circuit. Sometimes, the strong antenna in FIG. 5A and FIG. 5B may further include a cabling between the RFIO pin and the second-way switch of the two-way switch. The second-way switch is the switch configured to connect the RFIO pin and the filter circuit.

The strong antenna in FIG. 5C may include the RFIO pin, the filter circuit, the second-way switch in the two-way switch, the matching circuit, and the antenna body connected outside the matching circuit. Sometimes, the strong antenna in FIG. 5C may further include a cabling between the RFIO pin and the filter circuit. The second-way switch is the switch configured to connect the filter circuit in the shielding can and the matching circuit outside the shielding can.

It should be understood that the wireless communications module 250 shown in FIG. 4A may be the Wi-Fi chip, or may be the Wi-Fi chip and a circuit matching the Wi-Fi chip. The wireless module 251 shown in FIG. 4B may be the Wi-Fi chip, and the wireless communications module 250 shown in FIG. 4B may be the Wi-Fi chip and a circuit matching the Wi-Fi chip.

The different structures of weak antennas cooperate with different transmit power (Tx power) of the Wi-Fi chip, so that different ultra-short-haul communication requirements (for example, from 10 cm to 2 m) can be met.

For example, Table 1 shows communication distances of several different structures of weak antennas in cooperation with different transmit powers.

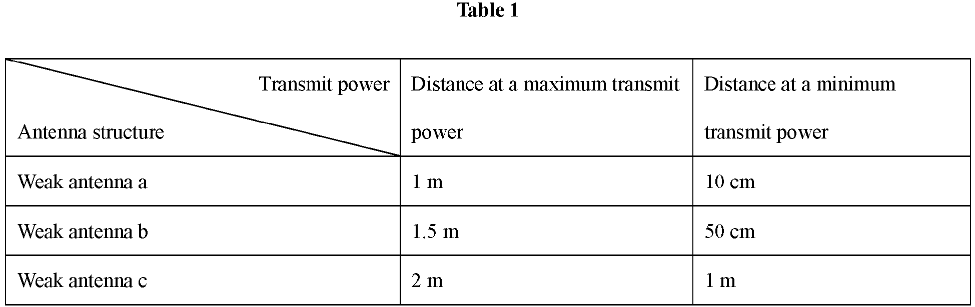

Due to a characteristic of a physical component in the chip, difference between maximum transmit powers and minimum transmit powers of the antenna are related. If a minimum transmit power of the electronic device is reduced to a very low value, a maximum transmit power is also reduced. In this way, a distance requirement during normal working is not met. Because different electronic devices have different structures and have different security performance requirements, manufacturers of the electronic devices may use different structures of weak antennas and transmit powers to ensure a communication distance of the electronic devices. For example, for different electronic device manufacturers, thicknesses of electronic device housings may be different. In this case, when structures of weak antennas and transmit powers are the same, communication distances that the electronic devices can be discovered may also be different. Different electronic device manufacturers may test and obtain, based on a structure of the electronic device, a structure of the weak antenna, and a specific transmit power, a safety distance at which the electronic device is discovered. The user may set a transmit power for three types of weak antennas (the weak antenna a, the weak antenna b, and the weak antenna c) based on Table 1, and adjust the transmit power based on a test result, so that the weak antennas reach a corresponding distance during transmission.

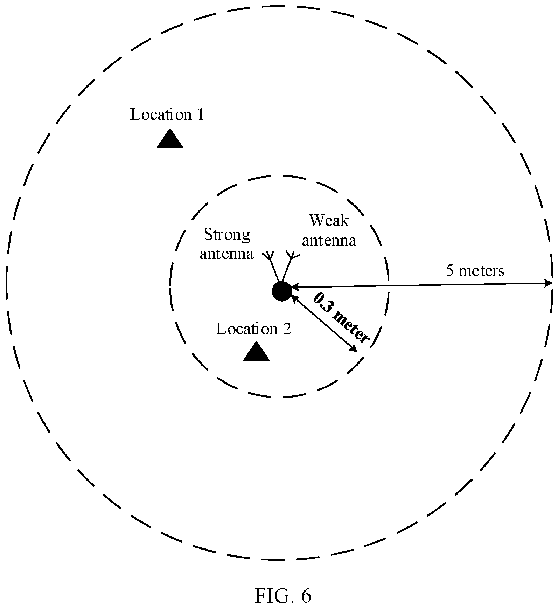

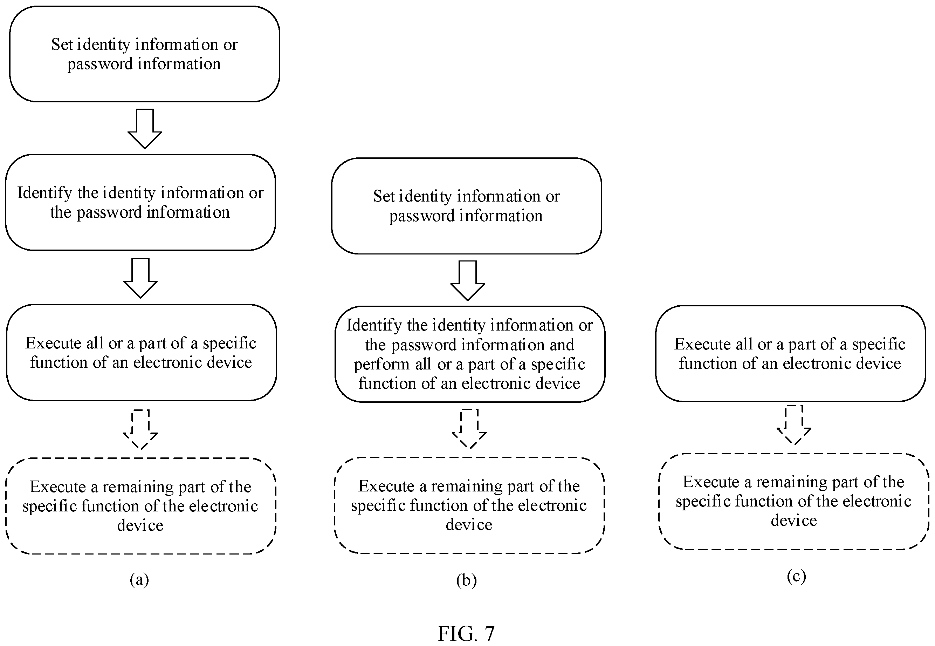

With reference to the foregoing example, an example in which the first distance is 5 meters and the second distance is 0.3 meter is used. When the electronic device uses the strong antenna, if a distance between the electronic device (located at a center of a circle shown in FIG. 6) and another device (for example, the mobile device) is less than the first distance (for example, the mobile device is located at a location 1 shown in FIG. 6), the electronic device may communicate with the another device (for example, the mobile device); or when the electronic device uses the weak antenna, if a distance between the electronic device (located at a center of a circle shown in FIG. 6) and another device (for example, the mobile device) is less than the second distance (for example, the mobile device is located at a location 2 shown in FIG. 6), the electronic device may communicate with the another device (for example, the mobile device). For example, as shown in (a) in FIG. 7, the method includes a step of setting identity information or password information, a step of identifying the identity information or the password information, and a step of executing all or a part of a specific function of the electronic device. Optionally, the method may further include a step of executing a remaining part of the specific function of the electronic device (as shown in a dashed box in (a) in FIG. 7). Setting the identity information or the password information, identifying the identity information or the password information, execution of all or the part of the specific function of the electronic device, and execution of the remaining part of the specific function of the electronic device are merely examples.

As shown in (b) in FIG. 7, the method includes only a step of setting identity information or password information, and a step of identifying the identity information or the password information and executing all or a part of a specific function of the electronic device. Optionally, the method may further include a step of executing a remaining part of the specific function of the electronic device (as shown in a dashed box in (b) in FIG. 7). Setting the identity information or the password information, identifying the identity information or the password information, execution of all or the part of the specific function of the electronic device, and execution of the remaining part of the specific function of the electronic device are merely examples.

As shown in (c) in FIG. 7, the method includes only a step of executing all or a part of a specific function of the electronic device. Optionally, the method may further include a step of executing a remaining part of the specific function of the electronic device (as shown in a dashed box in (c) in FIG. 7). Execution of all or the part of the specific function of the electronic device, and execution of the remaining part of the specific function of the electronic device are merely examples.

In (a) in FIG. 7, (b) in FIG. 7, and (c) in FIG. 7, steps with a same name have same content. For example, content of "executing the remaining part of the specific function of the electronic device" in (a) in FIG. 7, (b) in FIG. 7, and (c) in FIG. 7 is the same.

The following describes in detail steps in the automatic control method provided in this embodiment of this application with reference to accompanying drawings.

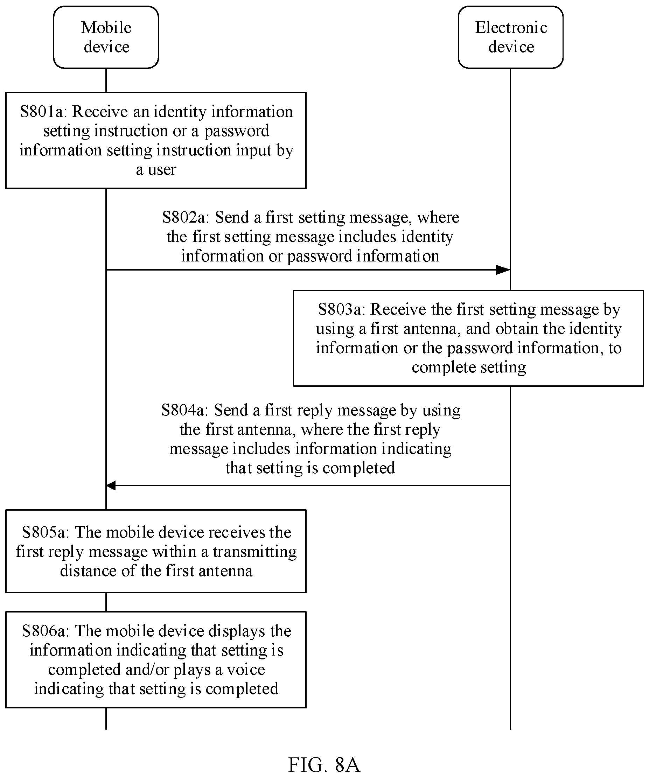

FIG. 8A to FIG. 8H-1 and FIG. 8H-2 each are a schematic flowchart of steps of setting identity information or password information in an automatic control method according to an embodiment of this application. FIG. 8A to FIG. 8H-1 and FIG. 8H-2 show a procedure of steps of setting the identity information or the password information in different embodiments. The following describes in detail with reference to FIG. 8A to FIG. 8H-1 and FIG. 8H-2.

As shown in FIG. 8A, the steps of setting the identity information or the password information in the automatic control method may include the following steps.

S801a: The mobile device receives an identity information setting instruction or a password information setting instruction input by a user.

During initial setting, the user may set by using the mobile device. Specifically, the user inputs the identity information or password information setting instruction on the mobile device. For example, the user may touch a button on an interface of the mobile device to input, or the user inputs by using a voice.

The identity information may be an identifier that can uniquely identify the mobile device, such as a device ID or a MAC address of the mobile device. This is not limited herein. It may be understood that the identity information is used to complete identity information setting. The password information may be input password information received by the mobile device.

S802a: The mobile device sends a first setting message, and the first setting message includes the identity information or the password information.

The sending may be performed in a broadcast manner, or may be performed in a manner of directionally sending to the electronic device (for example, an icon or another identifier of the electronic device is displayed on an interface of the mobile device, and a directionally sending to the electronic device may be performed by touching the icon or the another identifier).

Optionally, the first setting message may be a message encrypted by using a preset key (for example, a public key), or may be a message (plaintext) unencrypted by using a preset key (for example, a public key).

S803a: The electronic device receives the first setting message by using a first antenna, and obtains the identity information or the password information, to complete setting.

Optionally, the electronic device receives the first setting message (plaintext) by using the first antenna (for example, a strong antenna), obtains the identity information or the password information of the mobile device from the first setting message, and stores the identity information or the password information locally or in a third-party device (for example, a cloud server) associated with the electronic device, to complete setting.

Optionally, the electronic device receives an encrypted first setting message by using the first antenna (for example, a strong antenna), decrypts the encrypted first setting message by using a preset key (for example, a private key), obtains the identity information or the password information of the mobile device from a decrypted first setting message, and stores the identity information or the password information locally or in a third-party device (for example, a cloud server) associated with the electronic device, to complete setting.

In an implementation, the electronic device may store obtained identity information or password information in a preset storage table (the storage table may be located on the electronic device or the third-party device associated with the electronic device), and the storage table may be considered as a trust list. A mobile device corresponding to the identity information or the password information in the storage table may control the electronic device to execute all or the part of the specific function; or control the electronic device, to enable the electronic device to further control another mechanism, to execute all or the part of the specific function.

S804a: The electronic device sends a first reply message by using the first antenna, and the first reply message includes information indicating that setting is completed.

After completing setting, the electronic device sends the first reply message to the mobile device by using the first antenna, to notify the mobile device that the electronic device has completed setting of the identity information or the password information of the mobile device.

S805a: The mobile device receives the first reply message within a transmitting distance of the first antenna.

When the mobile device is located within the transmitting distance of the first antenna (for example, the strong antenna), the mobile device receives the first reply message.

The transmitting distance of the first antenna may be 10 m, 8 m, 5 m, or the like, and may be specifically preset and adjusted by the user as required.

S806a: The mobile device displays information indicating that setting is completed and/or plays a voice indicating that setting is completed.

Specifically, the mobile device may display, on a display, a message box indicating that setting is completed; and/or play the voice that "Setting is completed", so as to prompt the user that setting is completed.

It should be noted that S804a, S805a, and S806a are optional steps, and are not mandatory steps. For example, this embodiment may include S804a, but does not include S805a and S806a; or this embodiment may not include S804a to S806a.

Further, if there is a requirement for information transmission security, for example, identity information sent by the mobile device may be encrypted once or a plurality of times in an identity information setting process, so as to improve security of the identity information in a transmission process.

FIG. 8B-1 and FIG. 8B-2 are a schematic flowchart of steps of setting identity information or password information in an automatic control method. As shown in FIG. 8B-1 and FIG. 8B-2, the steps of setting the identity information or the password information in the automatic control method may include the following steps.

S801b: The mobile device receives an identity information setting instruction or a password information setting instruction input by a user.

During initial setting, the user may set by using the mobile device. Specifically, the user inputs the identity information or password information setting instruction on the mobile device. For example, the user may touch a button on an interface of the mobile device to input, or the user inputs by using a voice.

The identity information may be an identifier that can uniquely identify the mobile device, such as a device ID or a MAC address of the mobile device. This is not limited herein. It may be understood that the identity information is used to complete identity information setting. The password information may be input password information received by the mobile device.

S802b: The mobile device sends a first setting message to the electronic device, and the first setting message includes a first password.

For example, the first password may be an initial password. The initial password may be specifically an initial password of the electronic device set before delivery. The initial password may be printed on paper or a card attached to packaging of the electronic device. Alternatively, the initial password is preset in a memory inside the electronic device, and the initial password may be obtained by performing a specific operation on the electronic device. It may be understood that only after the user obtains the initial password, the mobile device used by the user has "permission" to set the identity information with the electronic device, so as to ensure security of the identity information setting. Optionally, after the user enters the initial password, the mobile device sends the initial password to the electronic device by using Wi-Fi Aware, Bluetooth, or ZigBee. After the initial password is used, the user can change the password. The identity information or the password information can be set for another mobile device only by using a changed password.

For example, the first password may not be an initial password.

Optionally, the first setting message may include a unique identifier of an identity of the mobile device.

S803b: The electronic device receives the first setting message by using a first antenna, obtains the first password, and verifies the first password.

If the first password is verified to be correct, step S804b is performed; otherwise, step S803b continues to be performed again. The first antenna may be the strong antenna.

S804b: The electronic device sends a first reply message by using the first antenna, and the first reply message includes information indicating that verification of the first password succeeds.

Optionally, the first reply message may further include the unique identifier of the identity of the mobile device. Optionally, the electronic device periodically broadcasts the first reply message by using the first antenna; or the electronic device periodically sends the first reply message to the mobile device (by using the unique identifier of the identity of the mobile device) by using the first antenna.

S805b: The mobile device receives, within a transmitting distance of the first antenna, the first reply message, and obtains the information indicating that verification of the first password succeeds.

S806b: The mobile device sends second setting message to the electronic device, and the second setting message includes the identity information or the password information.

For specific content of S806b, refer to specific content of S802a. Details are not described herein again.

S807b: The electronic device receives the second setting message by using the first antenna, and obtains the identity information or the password information, to complete setting.

For specific content of S807b, refer to specific content of S803a. Details are not described herein again.

S808b: The electronic device sends a second reply message by using the first antenna, and the second reply message includes information indicating that setting is completed.

For specific content of S808b, refer to specific content of S804a. Details are not described herein again.

S809b: The mobile device receives the second reply message within the transmitting distance of the first antenna. For specific content of S809b, refer to specific content of S805a. Details are not described herein again.

S810b: The mobile device displays information indicating that setting is completed and/or plays a voice indicating that setting is completed.

For specific content of S810b, refer to specific content of S806a. Details are not described herein again.

It should be noted that, without special emphasis and no conflict, expanded content of steps shown in FIG. 8B-1 and FIG. 8B-2 is the same as or similar to expanded content of corresponding steps shown in FIG. 8A. Details are not described herein.

FIG. 8C-1 and FIG. 8C-2 are a schematic flowchart of steps of setting identity information or password information in an automatic control method. As shown in FIG. 8C-1 and FIG. 8C-2, the steps of setting the identity information or the password information in the automatic control method may include the following steps.

S801c to S803c are respectively the same as S801a to S803a. For S801c to S803c, refer to S801a to S803a.

If the first password is verified to be correct, step S804c is performed; otherwise, step S803c continues to be performed. The first antenna may be the strong antenna.

S804c: The electronic device switches to a second antenna.

In an implementation, the second antenna may be the weak antenna. A transmitting distance of the weak antenna is less than a transmitting distance of the strong antenna. For example, the transmitting distance of the strong antenna is 5 m, and the transmitting distance of the weak antenna is 0.3 m. The transmitting distance of the weak antenna is a safety distance. The transmitting distance of the weak antenna can be preset by the user as required.

In a procedure in FIG. 8C-1 and FIG. 8C-2, after verifying that the first password sent by the mobile device is correct, the electronic device switches to the second antenna. It may be understood that, generally, in an identity information setting procedure, a step of transmitting the identity information has a higher requirement on security. Therefore, switching of the second antenna may be set after the first password is verified successfully.

In another possible implementation, switching of the second antenna is not limited to a time point after the first password is verified successfully, a procedure of setting the identity information may alternatively be completed in a state of the second antenna throughout the process. A switching occasion of the second antenna is not limited herein.

FIG. 8C-1 and FIG. 8C-2 show only an example procedure.

S805c: The electronic device sends a first reply message by using the second antenna, and the first reply message includes information indicating that verification of the first password succeeds.

Optionally, the electronic device periodically broadcasts the first reply message by using the second antenna; or the electronic device periodically sends the first reply message to the mobile device (for example, by using a unique identifier of an identity of the mobile device) by using the second antenna.

S806c: The mobile device receives, within a transmitting distance of the second antenna, the first reply message, and obtains the information indicating that verification of the first password succeeds.

It may be understood that the transmitting distance of the second antenna is relatively short, and is a safety distance. The transmitting distance may be set to a range such as 50 cm, 30 cm, 20 cm, or 10 cm. Specifically, the user may preset and adjust the transmitting distance as required. In this case, the mobile device needs to be moved close to the electronic device, and may receive, within the transmitting distance of the second antenna, the information indicating that verification of the first password of the electronic device succeeds. Communication is performed within the transmitting distance of the second antenna, so that data transmission security can be improved.

S807c is the same as S806b. For S807c, refer to S806b.

S808c: Receive a second setting message by using the second antenna, and obtain the identity information or the password information, to complete setting.

Specific content of S808c is the same as specific content of S803a, and only a difference lies in whether receiving is performed by using the second antenna or by using the first antenna. For specific content, refer to S803a.

S809c: Switch to the first antenna.

Specifically, after the electronic device completes setting, the electronic device switches to the first antenna.

S810c to S812c are respectively the same as S808b to S810b. For S810c to S812c, refer to S808b to S810b.

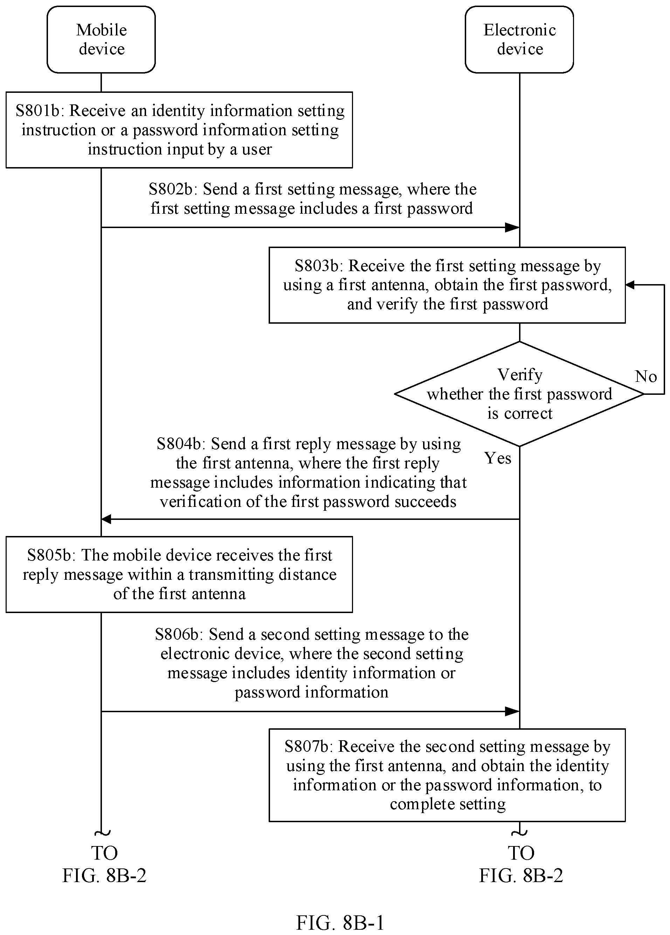

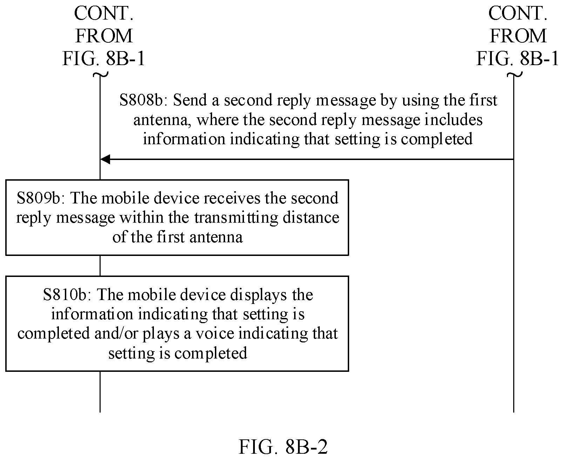

It should be noted that, without special emphasis and no conflict, expanded content of steps shown in FIG. 8C-1 and FIG. 8C-2 is the same as or similar to expanded content of corresponding steps shown in FIG. 8A and FIG. 8B-1 and

FIG. 8B-2. Details are not described herein.

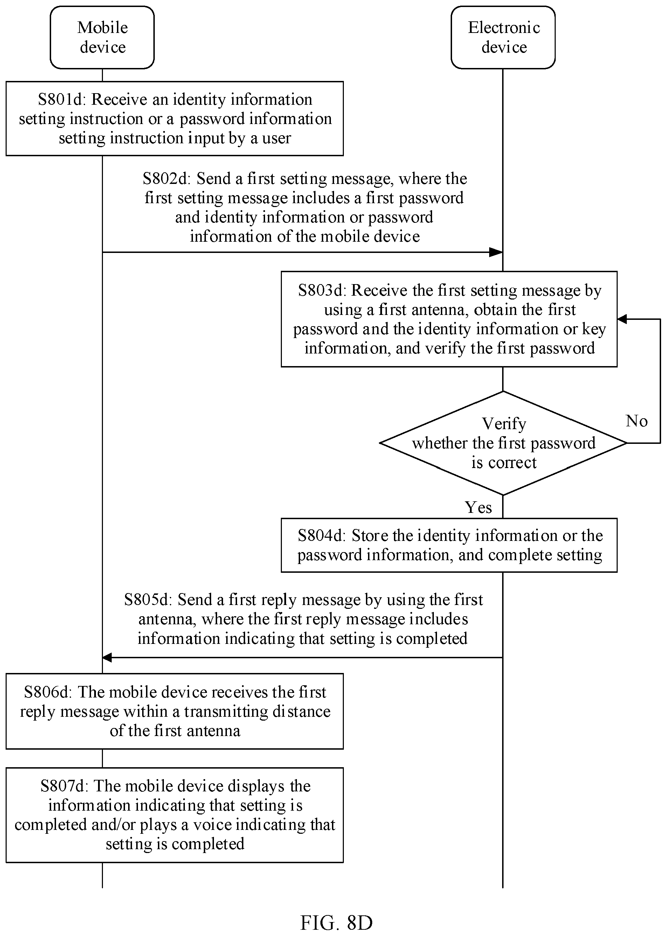

FIG. 8D is a schematic flowchart of steps of setting identity information or password information in an automatic control method. As shown in FIG. 8D, the steps of setting the identity information or the password information in the automatic control method may include the following steps.

S801d: The mobile device receives an identity information setting instruction input by a user.

During initial setting, the user may set by using the mobile device. Specifically, the user inputs the identity information setting instruction on the mobile device. For example, the user may touch a button on an interface of the mobile device to input, or the user inputs by using a voice.

S802d: The mobile device sends a first setting message, and the first setting message includes a first password and the identity information or the password information of the mobile device.

Optionally, the mobile device may send the first setting message through broadcasting; or the mobile device may send the first setting message to the electronic device. For example, an icon or another identifier of the electronic device is displayed on an interface of the mobile device, and the first setting message may be sent to the electronic device by touching the icon or the another identifier.

The identity information may be an identifier that can uniquely identify the mobile device, such as a device ID or a MAC address of the mobile device. This is not limited herein. It may be understood that the identity information is used to complete identity information setting. The password information may be password information received by the mobile device.

S803d: The electronic device receives the first setting message by using a first antenna, obtains the first password and the identity information or the password information, and verifies the first password.

Optionally, the electronic device receives the first setting message by using the first antenna (for example, a strong antenna), obtains the first password from the first setting message, and verifies the first password.

Further, the electronic device may further obtain the identity information of the mobile device from the first setting message, so as to subsequently store the identity information locally on the electronic device or on a third-party device (for example, a cloud server) associated with the electronic device.

Optionally, the electronic device receives an encrypted first setting message by using the first antenna (for example, a strong antenna), decrypts the encrypted first setting message by using a preset key (for example, a private key), obtains the first password from a decrypted first setting message, and verifies the first password.

Further, the electronic device may further obtain the identity information of the mobile device from the decrypted first setting message, so as to subsequently store the identity information locally on the electronic device or on a third-party device (for example, a cloud server) associated with the electronic device.

If the first password is verified to be correct, step S804d is performed; otherwise, step S803d continues to be performed. The first antenna may be the strong antenna.

S804d: Store the identity information or the password information, and complete setting.

In an implementation, the electronic device may store obtained identity information or password information in a preset storage table (the storage table may be located on the electronic device or the third-party device associated with the electronic device), and the storage table may be considered as a trust list. A mobile device corresponding to the identity information or the password information in the storage table may control the electronic device to execute all or the part of the specific function; or control the electronic device, to enable the electronic device to further control another mechanism, to execute all or the part of the specific function.

S805d to S807d are respectively the same as S804a to S806a. For S805d to S807d, refer to S804a to S806a.

It should be noted that, without special emphasis and no conflict, expanded content of steps shown in FIG. 8D is the same as or similar to expanded content of corresponding steps shown in FIG. 8A and FIG. 8C-1 and FIG. 8C-2. Details are not described herein.

FIG. 8E-1 and FIG. 8E-2 are a schematic flowchart of steps of setting identity information or password information in an automatic control method. As shown in FIG. 8E-1 and FIG. 8E-2, the steps of setting the identity information or the password information in the automatic control method may include the following steps.

S801e: Receive a password information setting instruction input by a user.

During initial setting, the user may set by using the mobile device. Specifically, the user inputs an identity information setting instruction on the mobile device. For example, the user may touch a button on an interface of the mobile device to input, or the user inputs by using a voice.

S802e: The mobile device sends a first setting message, and the first setting message includes a first password and the identity information of the mobile device.

Optionally, the mobile device may send the first setting message through broadcasting; or the mobile device may send the first setting message to the electronic device. For example, an icon or another identifier of the electronic device is displayed on an interface of the mobile device, and the first setting message may be sent to the electronic device by touching the icon or the another identifier.

The identity information may be an identifier (or referred to as a unique identifier of an identity) that can uniquely identify the mobile device, such as a device ID or a MAC address of the mobile device. This is not limited herein. It may be understood that the identity information is used to complete identity information setting.

S803e: Receive the first setting message by using a first antenna, obtain the first password and the identity information, and verifies the first password.

If the first password is verified to be correct, step S804e is performed; otherwise, step S803e continues to be performed. The first antenna may be a strong antenna.

S804e: Store the identity information, and switch to a second antenna.

For example, the electronic device may store obtained identity information in a preset storage table (the storage table may be located on the electronic device or a third-party device associated with the electronic device), and switch to the second antenna.

S805e: The electronic device sends a first reply message by using the second antenna, and the first reply message includes information indicating that verification of the first password succeeds.

Optionally, the electronic device periodically broadcasts the first reply message by using the second antenna; or the electronic device periodically sends the first reply message to the mobile device (for example, by using the unique identifier of the identity of the mobile device) by using the second antenna.

S806e: The mobile device receives the first reply message within a transmitting distance of the second antenna. S807e: The mobile device receives the password information input by the user.

For example, the password information may include but is not limited to at least one of a letter, a Chinese character, and a punctuation mark. Optionally, letters are case sensitive.

S808e: The mobile device sends a second setting message to the electronic device, and the second setting message includes the password information.

S809e: The electronic device receives the second setting message, and obtains the password information corresponding to the identity information, to complete the setting.

Specifically, the electronic device may store the password information in the preset storage table in a manner of corresponding to the identity information. In this way, the storage table stores the identity information and the password information. The password information corresponding to the identity information may be found by using the identity information.

S810e: The electronic device switches to the first antenna.

S811e to S813e are respectively the same as S810c to S812c. For S811e to S813e, refer to descriptions of S810c to S812c. Details are not described herein again.

It should be noted that, without special emphasis and no conflict, expanded content of steps shown in FIG. 8E-1 and FIG. 8E-2 is the same as or similar to expanded content of corresponding steps shown in FIG. 8A and FIG. 8D. Details are not described herein.

FIG. 8F-1 and FIG. 8F-2 are a schematic flowchart of steps of setting identity information or password information in an automatic control method. As shown in FIG. 8F-1 and FIG. 8F-2, the steps of setting the identity information or the password information in the automatic control method may include the following steps.

S801f to S803f are respectively the same as S801e to S803e. For S801f to S803f, refer to descriptions of S801e to S803e. Details are not described herein again.

If the first password is verified to be correct, step S804f is performed; otherwise, step S803f continues to be performed. The first antenna may be a strong antenna.

S804f. The electronic device randomly generates the password information, stores the identity information and the password information, and switches to a second antenna.

For example, after randomly generating the password information, the electronic device stores the password information in a preset storage table in a manner of corresponding to the identity information. The storage table may be located on the electronic device, or on a third-party device associated with the electronic device. In this way, the storage table stores the identity information and the password information. Password information corresponding to the identity information may be found by using the identity information. In addition, the electronic device switches to the second antenna.

S805f: The electronic device sends a first reply message by using the second antenna, and the first reply message includes the password information.

Optionally, the electronic device periodically broadcasts the first reply message by using the second antenna; or the electronic device periodically sends the first reply message to the mobile device (for example, by using a unique identifier of an identity of the mobile device) by using the second antenna.

S806f: The mobile device receives the first reply message within a transmitting distance of the second antenna, and obtains the password information.

The mobile device is located within the transmitting distance of the second antenna (for example, a weak antenna), so that the mobile device receives the first reply message and obtains the password information. The transmitting distance of the second antenna may be 50 cm, 30 cm, 10 cm, or the like, and may be specifically preset and adjusted by a user as required.

S807f: The mobile device sends a second setting message to the electronic device, and the second setting message includes information indicating that setting is completed.

Alternatively, the second setting message in S807f may not include information indicating that setting is completed, but includes information indicating that the mobile device has obtained the password information.

S808f: The electronic device receives the second setting message, and displays the information indicating that setting is completed, and/or plays a voice indicating that setting is completed.

S809f: The electronic device switches to the first antenna.

It should be noted that, without special emphasis and no conflict, expanded content of steps shown in FIG. 8F-1 and FIG. 8F-2 is the same as or similar to expanded content of corresponding steps shown in FIG. 8A to FIG. 8E-1 and FIG. 8E-2. Details are not described herein.

FIG. 8G-1 to FIG. 8G-3 are a schematic flowchart of steps of setting identity information or password information in an automatic control method. As shown in FIG. 8G-1 to FIG. 8G-3, the steps of setting the identity information or the password information in the automatic control method may include the following steps.

S801g to S804g are respectively the same as S801e to S804e. For S801g to S804g, refer to descriptions of S801e to S804e. Details are not described herein again.

S805g: The electronic device sends a first reply message by using the second antenna, and the first reply message includes a reminder message for reminding the mobile device to send an encryption password.

The encryption password is used to encrypt a dynamic encryption key, so that a dynamic encryption key generated by the electronic device can be securely transmitted to the mobile device. The mobile device may use the dynamic encryption key to decrypt transmitted password information.

S806g: The mobile device receives the first reply message within a transmitting distance of the second antenna, and obtains the reminder message.

In an implementation, when the mobile device is located within the transmitting distance of the second antenna of the electronic device, for example, within 30 cm, the mobile device may receive the first reply message. Specifically, a user is prompted, in a manner such as displaying an input interface for a user to input the encryption password on a display of the mobile device, and/or playing a voice, to input the encryption password.

S807g: The mobile device receives the encryption password input by the user.

After the user inputs the encryption password on the mobile device, the mobile device receives the encryption password.

S808g: The mobile device sends a second setting message to the electronic device, and the second setting message includes the encryption password.

Optionally, the second setting message may be encrypted by using a preset key. After the electronic device receives the second setting message, the second setting message may be decrypted by using the preset key. In this way, security may be improved.

S809g: The electronic device receives the second setting message, obtains the encryption password, randomly generates the dynamic encryption key, and encrypts the dynamic encryption key by using the encryption password, to obtain an encrypted dynamic encryption key.

It may be understood that the dynamic encryption key may be used to encrypt key information such as password information and a public-private key pair. Before sending the dynamic encryption key to the mobile device, the electronic device needs to encrypt the dynamic encryption key by using the encryption password sent by the mobile device, so as to improve transmission security of the dynamic encryption key.

S810g: The electronic device sends a second reply message by using the second antenna, and the second reply message includes the encrypted dynamic encryption key.

Optionally, the electronic device periodically broadcasts the second reply message by using the second antenna; or the electronic device periodically sends the second reply message to the mobile device (for example, by using a unique identifier of an identity of the mobile device) by using the second antenna.

S811g: Receive the second reply message within the transmitting distance of the second antenna, obtain the encrypted dynamic encryption key, and perform decryption by using the encryption password, to obtain the dynamic encryption key.

When the mobile device is located within the transmitting distance of the second antenna (for example, a weak antenna), the mobile device receives the second reply message, obtains the encrypted dynamic encryption key, and perform decryption by using the encryption password, so as to obtain the dynamic encryption key. The transmitting distance of the second antenna may be 50 cm, 30 cm, 10 cm, or the like, and may be specifically preset and adjusted by a user as required.

S812g: The mobile device sends a third setting message to the electronic device, and the third setting message includes information indicating that the mobile device has obtained the dynamic encryption key.

S813g: The electronic device receives the third setting message, randomly generates the public-private key pair and the password information, stores password information corresponding to the identity information, and encrypts the public key and the password information by using the dynamic encryption key.

S814g: The electronic device sends a third reply message by using the second antenna, and the third reply message includes an encrypted public key and the password information.

Optionally, the electronic device periodically broadcasts the third reply message by using the second antenna; or the electronic device periodically sends the third reply message to the mobile device (for example, by using the unique identifier of the identity of the mobile device) by using the second antenna.

S815g: The mobile device receives the third reply message, obtains the encrypted public key and the password information, and performs decryption by using the dynamic encryption key, to obtain the public key and the password information.

S816g: The mobile device displays a message indicating that the password information is set, and/or plays a voice indicating that the password information is set.

For example, S816g is not a mandatory step. In an embodiment, the steps of setting the identity information or the password information in the automatic control method may not include S816g.

S817g: The mobile device sends a fourth setting message to the electronic device, and the fourth setting message includes information indicating that setting is completed.

Alternatively, the fourth setting message in S817g may not include information indicating that setting is completed, but includes information indicating that the mobile device has obtained the password information.

S818g: The electronic device displays a message indicating that the password information is set, and/or plays a voice indicating that the password information is set.

S819g: The electronic device switches to the first antenna.

It should be noted that, without special emphasis and no conflict, expanded content of steps shown in FIG. 8F-1 and FIG. 8F-2 is the same as or similar to expanded content of corresponding steps shown in FIG. 8A and FIG. 8F-1 and FIG. 8F-2. Details are not described herein.

FIG. 8H-1 and FIG. 8H-2 are a schematic flowchart of steps of setting identity information or password information in an automatic control method. As shown in FIG. 8H-1 and FIG. 8H-2, the steps of setting the identity information or the password information in the automatic control method may include the following steps.

S801h to S803h are respectively the same as S801c to S803c. For S801h to S803h, refer to descriptions of S801c to S803c. Details are not described herein again.

If a first password is verified to be correct, step S804h is performed; otherwise, step S803h continues to be performed. The first antenna may be the strong antenna.

S804h: The electronic device switches a transmit power of the first antenna to a second transmit power.

After the first password is verified to be correct, the electronic device switches the transmit power of the first antenna to the second transmit power. In an implementation, a transmitting distance of the first antenna at the second transmit power is less than or equal to a preset safety distance; and the transmitting distance of the first antenna at a first transmit power is greater than the preset safety distance. For example, the transmitting distance of the first antenna at the second transmit power is 0.3 meter, and the transmitting distance of the first antenna at the first transmit power is 10 meters. The preset safety distance may be preset by a user, for example, set to 0.4 meter or 0.3 meter. The first transmit power and the second transmit power may be adjusted and set by the user.

S805h: The electronic device sends a first reply message by using the first antenna at the second transmit power, and the first reply message includes information indicating that verification of a first password succeeds.

Optionally, the electronic device sends the first reply message to the mobile device by using the first antenna at the second transmit power, and specifically, sends the first reply message to the mobile device by using a unique identifier of an identity of the mobile device.

Optionally, the electronic device periodically broadcasts the first reply message by using the first antenna at the second transmit power.

S806h: The mobile device receives the first reply message within the transmitting distance of the first antenna at the second transmit power.

If the mobile device is located beyond the transmitting distance of the first antenna at the second transmit power, the mobile device cannot receive the first reply message.

In an example, the mobile device is moved close to the electronic device from far to near. When the mobile device is moved to a location within the transmitting distance of the first antenna at the second transmit power, the mobile device receives an encrypted first reply message, and obtains a decrypted first reply message through decryption. The foregoing encryption manner and decryption manner are set only on the mobile device 100 and the electronic device 200. Another device cannot decrypt a received message.

S807h and S808h are respectively the same as S807c and S808c. For S807h and S808h, refer to descriptions of S807c and S808c. Details are not described herein again.

S809h: The electronic device switches the transmit power of the first antenna to the first transmit power.

After setting, the electronic device switches the transmit power of the first antenna to the first transmit power, to facilitate subsequent communication.

S810h: The electronic device sends a second reply message by using the first antenna at the first transmit power, and the second reply message includes information indicating that setting is completed.

Optionally, the electronic device sends the second reply message to the mobile device by using the first antenna at the first transmit power, and the second reply message includes the information indicating that setting is completed. The second reply message is used to notify the mobile device that the electronic device is set.

Optionally, the electronic device sends the second reply message through broadcasting by using the first antenna at the first transmit power; or the electronic device sends the second reply message to the mobile device through directionally sending by using the first antenna at the first transmit power.

S811h: The mobile device receives the second reply message within the transmitting distance of the first antenna at the first transmit power.

If the mobile device is located beyond the transmitting distance of the first antenna at the first transmit power, the mobile device cannot receive the second reply message. The transmitting distance of the first antenna at the first transmit power may be 10 meters, 8 meters, 15 meters, or the like. Specifically, the user may adjust and set the first transmit power as required, so that the transmitting distance of the first antenna at the first transmit power is set accordingly. The transmitting distance of the first antenna at the first transmit power is greater than the preset safety distance. The preset safety distance is also adjusted and set by the user as required.

S812h is the same as S812c. For S812h, refer to description of S812c. Details are not described herein again.

It should be noted that, without special emphasis and no conflict, expanded content of steps shown in FIG. 8H-1 and FIG. 8H-2 is the same as or similar to expanded content of corresponding steps shown FIG. 8C-1 and FIG. 8C-2. Details are not described herein.

It should be noted that, in the foregoing steps in FIG. 8A to FIG. 8H-1 and FIG. 8H-2, communication between the mobile device and the electronic device may be performed by using one of wireless communications technologies such as Wi-Fi aware (Wi-Fi aware), Bluetooth low energy (bluetooth low energy, BLE), and ZigBee (ZigBee), and only one of wireless communications technologies such as Wi-Fi aware, BLE, or ZigBee is used throughout a process. FIG. 9A-1 and FIG. 9A-2 to FIG. 9F-1 and FIG. 9F-2 each are a schematic flowchart of steps of executing all or a part of a specific function of an electronic device, and steps of identifying identity information or password information and executing all or a part of a specific function of an electronic device in an automatic control method according to an embodiment of this application. FIG. 9A-1 and FIG. 9A-2 to FIG. 9F-1 and FIG. 9F-2 show a procedure of steps of identifying the identity information or the password information in different embodiments. The following describes in detail with reference to FIG. 9A-1 and FIG. 9A-2 to FIG. 9F-1 and FIG. 9F-2.

As shown in FIG.9A-1 and FIG. 9A-2, the steps of identifying the identity information or the password information and executing all or the part of the specific function of the electronic device in the automatic control method may include the following steps.

S901a: The electronic device generates a first random number, and generates a first notification message based on the first random number and an ID of the electronic device.

The electronic device generates the first notification message based on the generated first random number and the ID of the electronic device. In an implementation, the electronic device encrypts the generated first notification message. S902a: The electronic device periodically sends the first notification message by using a first antenna.

For example, the electronic device periodically broadcasts the first notification message based on a first periodicity (for example, 5s or 20s, and this may be specifically set by a user) by using a strong antenna. A transmitting distance of the strong antenna is a first distance (for example, 5 meters or 10 meters, and this may be specifically set by the user). If the mobile device is moved to a location within the first distance from the electronic device, the mobile device may receive the first notification message.

In an implementation, the electronic device periodically broadcasts an encrypted first notification message based on the first periodicity (for example, 5s or 20s, and this may be specifically set by the user) by using the strong antenna. For example, the electronic device periodically sends, based on the first periodicity, the first notification message (unencrypted, plaintext) or the encrypted first notification message (encrypted, ciphertext) to the mobile device by using a pre-obtained identity, address, and the like of the mobile device through strong antenna.

S903a: The mobile device receives the first notification message within a transmitting distance of the first antenna.

For example, the mobile device cannot receive the first notification message when the mobile device is located outside the transmitting distance of the strong antenna. In an example, the mobile device is moved close to the electronic device from far to near. When the mobile device is moved to a location within the transmitting distance of the strong antenna, the mobile device receives the first notification message, and the mobile device obtains the ID of the electronic device based on the first notification message.

In an implementation, when the mobile device is moved to a location within the transmitting distance of the strong antenna, the mobile device receives the encrypted first notification message, and obtains the first notification message through decryption. The mobile device obtains the ID of the electronic device based on the first notification message. For example, when the mobile device of the user is moved to a location within the transmitting distance of the first antenna, the mobile device may receive the first notification message broadcast by the electronic device. In this process, the user does not need to perform any operation on the mobile device.

S904a: The mobile device sends a first response message to the electronic device, and the first response message includes identity information or password information of the mobile device.

For example, the identity information or the password information of the mobile device in the first response message is encrypted information. Specifically, the identity information or the password information may be encrypted by using a preset key.

For example, the identity information or the password information of the mobile device in the first response message is unencrypted information.

For example, the identity information of the mobile device may be a unique identifier such as a MAC address or an ID of the mobile device.

For example, the password information of the mobile device may be pre-stored password information, for example, password information that is input by the user and that is received in a step of setting the identity information or the password information.

S905a: The electronic device receives the first response message by using the first antenna, obtains the identity information or the password information, and performs verification.

For example, encrypted identity information or password information may be decrypted by using the preset key.

If the identity information or the password information is verified to be correct, S906a is performed; otherwise, S901a is performed.

In an implementation, after receiving the encrypted identity information or password information, the electronic device obtains the identity information or the password information through decryption. The electronic device verifies the identity information or the password information, so that an unauthorized mobile device may be prevented from performing control. If the identity information or the password information is verified to be correct, S906a is performed, and a second antenna is switched to. If the identity information or the password information is verified to be incorrect, S901a is performed.

For example, although FIG. 9A-1 and FIG. 9A-2 show a manner of separately verifying the identity information or the password information, a person skilled in the art may understand that a manner of verifying the identity information and the password information together also falls within the protection scope of this application.

S906a: The electronic device switches to the second antenna.

For example, the second antenna is a weak antenna, and the electronic device switches to the weak antenna. A transmitting distance of the weak antenna is less than the transmitting distance of the strong antenna. For example, the transmitting distance of the strong antenna is 5 m, and the transmitting distance of the weak antenna is 0.3 m. The transmitting distance of the weak antenna is a safety distance. The transmitting distance of the weak antenna can be adjusted and set by the user.

S907a: The electronic device generates a second random number, and generates a second notification message based on the second random number and the ID of the electronic device.

For example, the electronic device encrypts the generated second notification message.

S908a: The electronic device periodically sends the second notification message by using the second antenna.

For example, the electronic device periodically broadcasts the second notification message based on a second periodicity (for example, 1s or 500 ms, and this may be specifically set by the user) by using the weak antenna. The transmitting distance of the weak antenna is a second distance (for example, 0.3 meter or 0.2 meter, and this may be specifically set by the user). If the mobile device is moved to a location within the second distance from the electronic device, the mobile device may receive the second notification message.

For example, the electronic device periodically sends, based on the second periodicity, the second notification message (unencrypted, plaintext) or an encrypted second notification message (encrypted, ciphertext) to the mobile device by using the pre-obtained identity, address, and the like of the mobile device through the weak antenna.

Optionally, the second periodicity may be less than, greater than, or equal to the first periodicity.

Optionally, the sending may be performed in a broadcast manner, or may be performed in a manner of directionally sending to a specific device.

S909a: The mobile device receives the second notification message within a transmitting distance of the second antenna.

The mobile device cannot receive the second notification message when the mobile device is located outside the transmitting distance of the weak antenna.

In an example, the mobile device is moved close to the electronic device from far to near. When the mobile device is moved to a location within the transmitting distance of the weak antenna, the mobile device receives the second notification message.

In a specific implementation, the user carries the mobile device, and verification of the mobile device is completed, once the mobile device is moved to a location within the transmitting distance of the first antenna. Then, when the user carries the mobile device and continues to move towards the electronic device, the mobile device receives the second notification message within the transmitting distance of the second antenna.

S910a: The mobile device sends a second response message to the electronic device.

S911a: The electronic device receives the second response message.

For example, if the electronic device receives the second response message, it may be determined that the mobile device is located within the transmitting distance of the weak antenna of the electronic device, that is, it is determined that a distance between the mobile device and the electronic device meets a set condition. For example, if the transmitting distance of the weak antenna is 0.3 m, and the electronic device receives the second response message, it may be determined that the distance between the mobile device and the electronic device is less than or equal to 0.3 m.

Optionally, after the electronic device sends the second notification message, if the second response message is not received within preset duration, the electronic device may send first prompt information, to prompt the user to move the mobile device close to the electronic device.

S912a: The electronic device executes all or the part of the specific function, and switches to the first antenna.

The electronic device executes all or the part of the specific function, or executes all or the part of the specific function by using another mechanism or system, and switches to the first antenna.

For example, after the part of the specific function is executed, the electronic device may display a specific interface, to notify that the part of the specific function is executed. For example, the electronic device is a print device, and when a part of a printing function is executed, the electronic device displays a print interface, to notify that the part of the printing function is executed. The user sends a to-be-printed file by using the mobile device, so that a remaining part can be performed.

S913a: Send a third notification message to the mobile device, where the third notification message includes information indicating that the execution is completed.

For example, that all the specific function is executed includes: All the specific function is finished. For example, the electronic device is a smart door lock, and the specific function is an automatic door opening function. That all the automatic door opening function is executed includes: The automatic door opening function is finished, that is, the door is automatically opened.

For example, that the part of the specific function is executed includes: The specific function is ready to be performed. For example, the electronic device is a print device, and the specific function is an automatic printing function. That a part of the automatic printing function is executed includes automatically displaying a print interface, that is, the printing function is ready.

For example, the information indicating that the execution is completed includes information indicating that all the specific function is executed, or information indicating that the part of the specific function is executed; and the information indicating that the part of the specific function is executed includes information indicating that the specific function is ready. For example, information indicating that the part of the printing function is executed includes information indicating that the printing function is ready.

Optionally, after all or the part of the specific function is executed, the electronic device sends the third notification message to the mobile device, and the third notification message includes the information indicating that the execution is completed.

Optionally, after all or the part of the specific function is executed, the electronic device periodically sends the third notification message to the mobile device based on a third periodicity.

The third periodicity may be greater than, equal to, or less than the second periodicity or the first periodicity.

S914a: The mobile device receives the third notification message within the transmitting distance of the first antenna, and obtains the information indicating that the execution is completed.

S915a: The mobile device displays the message indicating that the execution is completed and/or plays a voice indicating that the execution is completed.

In an execution procedure of the specific function shown in FIG. 9A-1 and FIG. 9A-2, an identity of the mobile device is first verified. After the identity of the mobile device is verified as a host identity or an administrator identity, the electronic device switches to the second antenna. After receiving a response message of the mobile device within the transmitting distance of the second antenna, the electronic device executes all or a part of a preset specific function, or controls another mechanism or system to execute all or a part of a preset specific function.

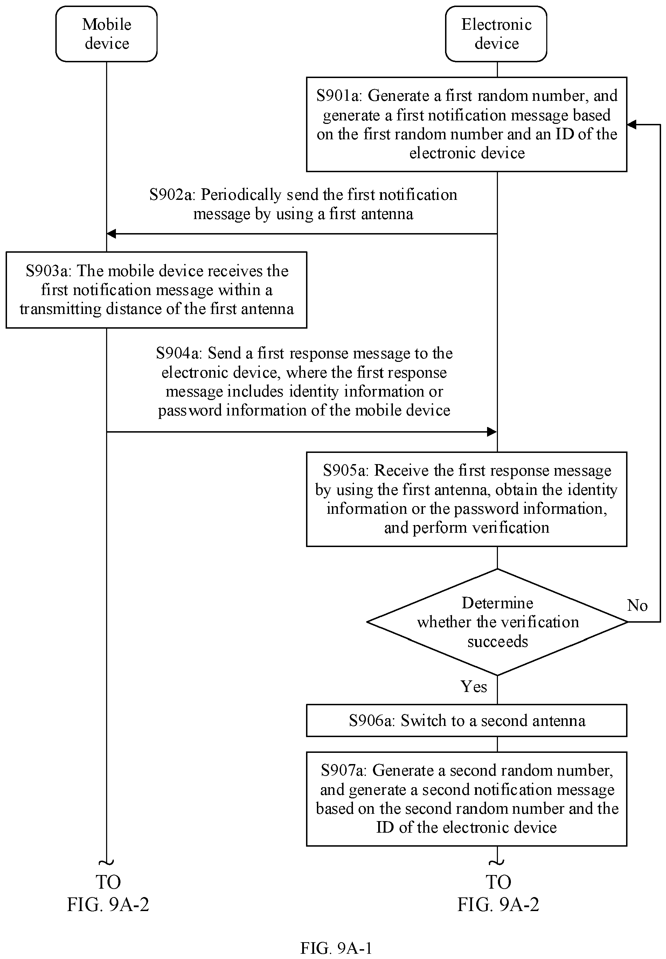

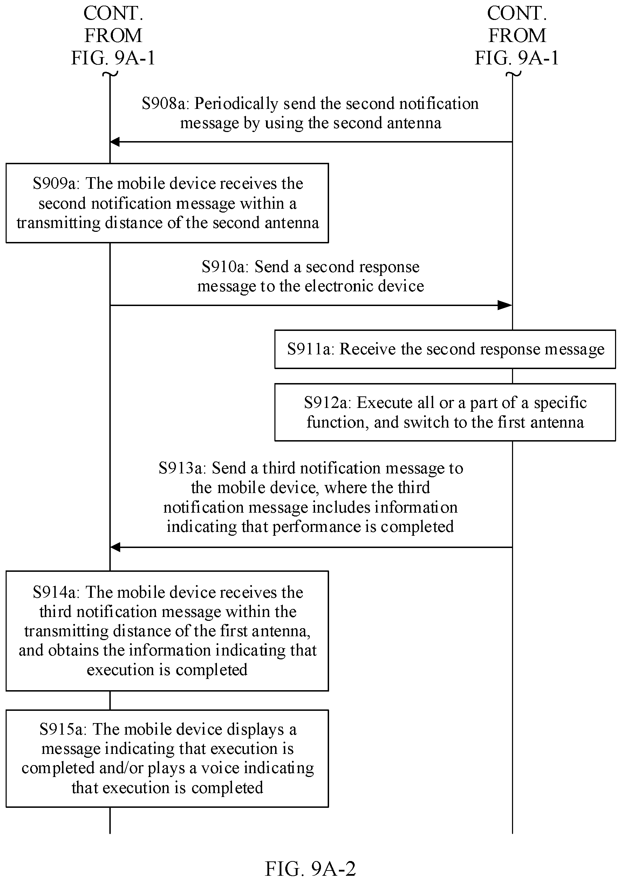

It should be noted that at least one of S913a to S915a in the example in FIG. 9A-2 is optional. For example, in an embodiment, the steps of identifying the identity information or the password information and executing all or the part of the specific function of the electronic device in the automatic control method may not include S913a to S915a. Alternatively, in an embodiment, the steps of identifying the identity information or the password information and executing all or the part of the specific function of the electronic device in the automatic control method may not include S914a and S915a. Alternatively, in an embodiment, the steps of identifying the identity information or the password information and executing all or the part of the specific function of the electronic device in the automatic control method may not include S915a.

In this way, in a process in which the mobile device carried by the user is moved close to the electronic device from far to near, the electronic device performs identity verification on the mobile device when the mobile device is located within the transmitting distance (for example, 10 m) of the first antenna. After the verification succeeds, the mobile device carried by the user continues to be moved close to the electronic device, the electronic device automatically executes all or the part of the specific function when the mobile device is located within the transmitting distance (for example, 30 cm) of the second antenna. In a process in which the electronic device automatically executes all the specific function, the user does not need to perform any operation throughout the process. From a perspective of user experience, the user only needs to carry and move the mobile device close to the electronic device from far to near. The entire process is imperceptible to the user, and user experience is relatively good. When the electronic device automatically executes the part of the specific function, the user only needs to perform an operation on the remaining part of the specific function, so that complex operations in some steps are reduced, and user experience is improved. As shown in FIG. 9B-1 to FIG. 9B-3, the steps of identifying the identity information or the password information and executing all or the part of the specific function of the electronic device in the automatic control method may include the following steps.

S901b to S909b are respectively the same as S901a to S909a. For S901b to S909b, refer to descriptions of S901a to S909a.

S910b: The mobile device sends a second response message to the electronic device, and the second response message includes identity information or password information of the mobile device.

S911b: The electronic device receives the second response message by using the second antenna, obtains the identity information or the password information, and performs verification.

If the verification succeeds, S912b is performed. If the verification fails, S907b is performed.

In an alternative embodiment, if the verification fails, S901b is performed.

S912b to S915b are respectively the same as S912a to S915a. For S912b to S915b, refer to descriptions of S912a to S915a. Details are not described herein again.

In an execution procedure of the specific function shown in FIG. 9B-1 to FIG. 9B-3, an identity of the mobile device is first verified. After the identity of the mobile device is verified as a host identity or an administrator identity, the electronic device switches to the second antenna; and the identity of the mobile device is verified again within the transmitting distance of the second antenna. After the identity of the mobile device is verified as a host identity or an administrator identity again, the electronic device executes all or a part of a preset specific function, or controls another mechanism or system to execute all or a part of a preset specific function. In this way, identity verification is performed twice on the mobile device separately under the strong antenna and the weak antenna, so that security can be further improved.

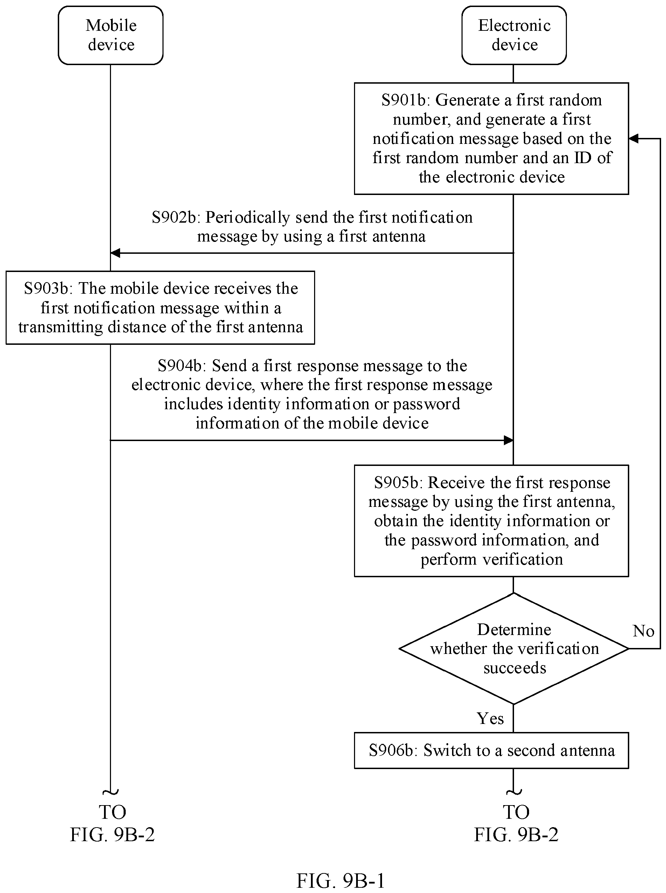

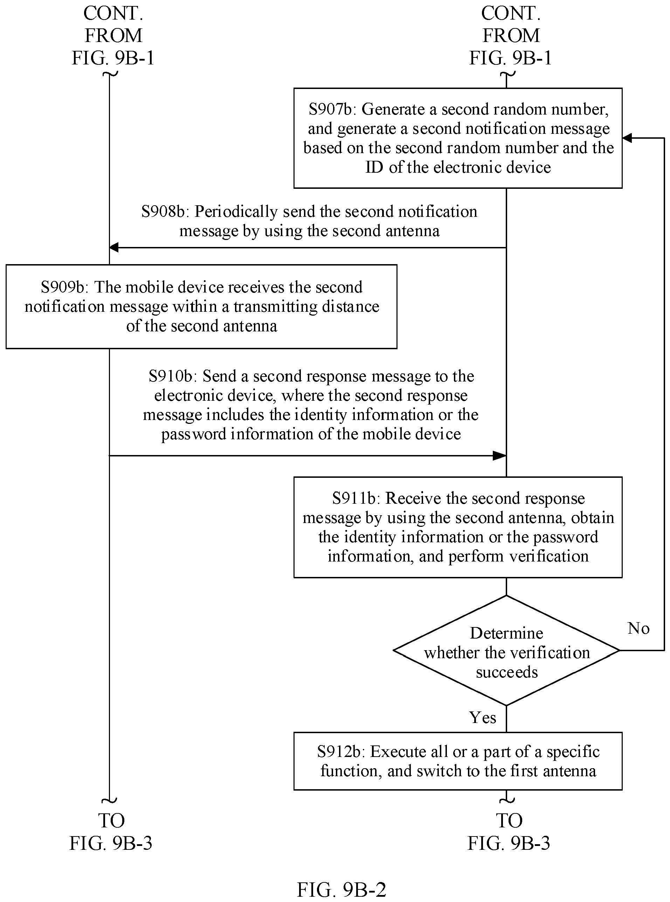

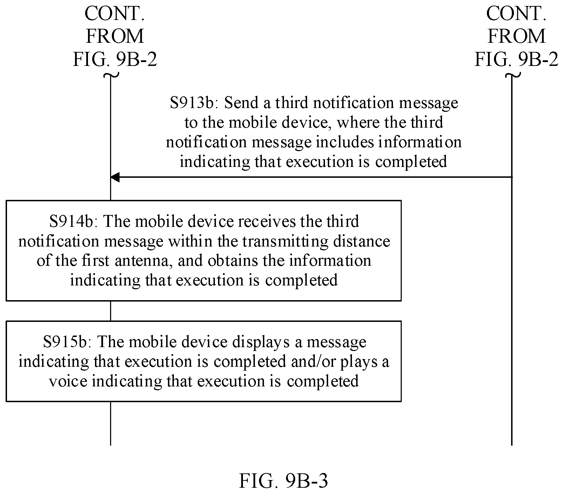

It should be noted that at least one of S913b to S915b in the example in FIG. 9B-3 is optional. For example, in an embodiment, the steps of identifying the identity information or the password information and executing all or the part of the specific function of the electronic device in the automatic control method may not include S913b to S915b. Alternatively, in an embodiment, the steps of identifying the identity information or the password information and executing all or the part of the specific function of the electronic device in the automatic control method may not include S914b and S915b. Alternatively, in an embodiment, the steps of identifying the identity information or the password information and executing all or the part of the specific function of the electronic device in the automatic control method may not include S915b.

It should be noted that, without special emphasis and no conflict, expanded content of steps shown in FIG. 9B-1 to FIG. 9B-3 is the same as or similar to expanded content of corresponding steps shown in FIG. 9A-1 and FIG. 9A-2. Details are not described herein.

In this way, in a process in which the mobile device carried by the user is moved close to the electronic device from far to near, the electronic device performs identity verification on the mobile device when the mobile device is located within the transmitting distance (for example, 10 m) of the first antenna. After the verification succeeds, the mobile device carried by the user continues to be moved close to the electronic device, and the electronic device performs identity verification on the mobile device again when the mobile device is located within the transmitting distance (for example, 30 cm) of the second antenna. After the two times of identity verification succeed, the electronic device automatically executes all or the part of the specific function. In a process in which the electronic device automatically executes all the specific function, the user does not need to perform any operation throughout the process. From a perspective of user experience, the user only needs to carry and move the mobile device close to the electronic device from far to near. The entire process is imperceptible to the user, and user experience is relatively good. When the electronic device automatically executes the part of the specific function, the user only needs to perform an operation on the remaining part of the specific function, so that complex operations in some steps are reduced, and user experience is improved.

As shown in FIG. 9C-1 and FIG. 9C-2, the steps of identifying the identity information or the password information and executing all or the part of the specific function of the electronic device in the automatic control method may include the following steps.

S901c to S903c are respectively the same as S901b to S903b. For S901c to S903c, refer to descriptions of S901b to S903b. Details are not described herein again.

S904c: The mobile device sends a first response message to the electronic device.

S905c: The electronic device receives the first response message by using the first antenna, and the electronic device switches to a second antenna.

After the electronic device receives the first response message by using the first antenna, the electronic device switches to the second antenna.

S906c to S914c are respectively the same as S907b to S915b. For S906c to S914c, refer to descriptions of S907b to S915b.

In an execution procedure of the specific function shown in FIG. 9C-1 and FIG. 9C-2, compared with FIG. 9A-1 and FIG. 9A-2, steps of the procedure are adjusted, a step of sending a response message by the mobile device based on a request is performed earlier, and after the electronic device receives the response message, the electronic device switches to the second antenna. Verification steps originally completed in the first antenna in FIG. 9A-1 and FIG. 9A-2 are completed in the second antenna, and after the identity of the mobile device is successfully verified, all or the part of the specific function is controlled to be performed. It may be understood that FIG. 9C-1 and FIG. 9C-2 provide still another possible specific procedure. Sensitive information such as the identity information or the password information of the mobile device is sent within the transmitting distance of the second antenna, so that security of transmission of the sensitive information can be ensured.

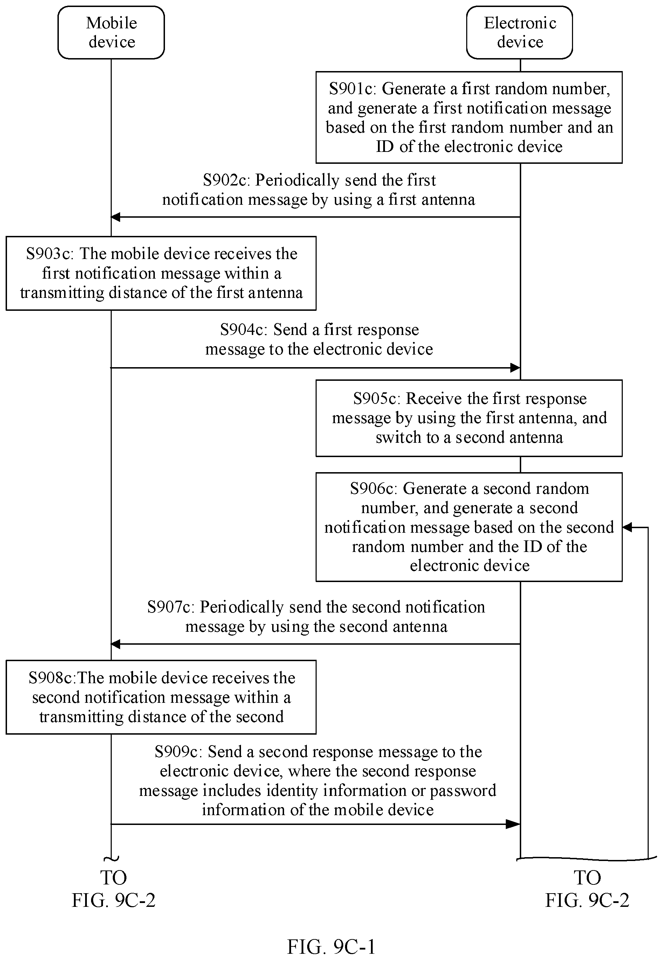

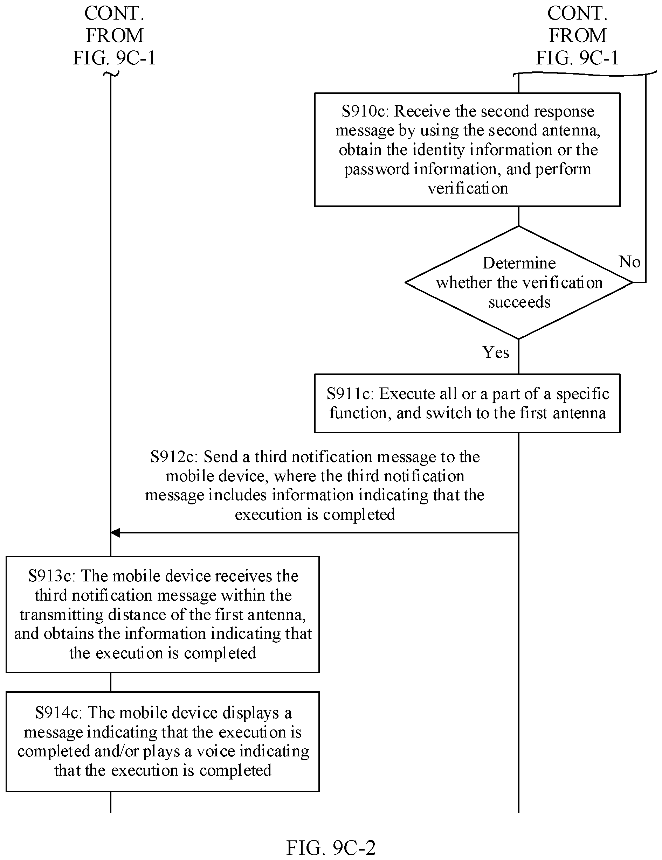

It should be noted that at least one of S912c to S914c in the example in FIG. 9C-2 is optional. For example, in an embodiment, the steps of identifying the identity information or the password information and executing all or the part of the specific function of the electronic device in the automatic control method may not include S912c to S914c. Alternatively, in an embodiment, the steps of identifying the identity information or the password information and executing all or the part of the specific function of the electronic device in the automatic control method may not include S913c and S914c. Alternatively, in an embodiment, the steps of identifying the identity information or the password information and executing all or the part of the specific function of the electronic device in the automatic control method may not include S914c.

It should be noted that, without special emphasis and no conflict, expanded content of steps shown in FIG. 9C-1 and FIG. 9C-2 is the same as or similar to expanded content of corresponding steps shown in FIG. 9A-1 and FIG. 9A-2 and FIG. 9B-1 to FIG. 9B-3. Details are not described herein.

In this way, in a process in which the mobile device carried by the user is moved close to the electronic device from far to near, the electronic device switches to the second antenna when the mobile device is located within the transmitting distance (for example, 10 m) of the first antenna. The mobile device carried by the user continues to be moved close to the electronic device, the electronic device performs identity verification on the mobile device when the mobile device is located within the transmitting distance (for example, 30 cm) of the second antenna. After the identity verification succeeds, the electronic device automatically executes all or the part of the specific function. In a process in which the electronic device automatically executes all the specific function, the user does not need to perform any operation throughout the process. From a perspective of user experience, the user only needs to carry and move the mobile device close to the electronic device from far to near. The entire process is imperceptible to the user, and user experience is relatively good. When the electronic device automatically executes the part of the specific function, the user only needs to perform an operation on the remaining part of the specific function, so that complex operations in some steps are reduced, and user experience is improved.

As shown in FIG. 9D-1 to FIG. 9D-3, the steps of identifying the identity information or the password information and executing all or the part of the specific function of the electronic device in the automatic control method may include the following steps.

S901d to S903d are respectively the same as S901b to S903b. For S901d to S903d, refer to descriptions of S901b to S903b.

S904d: The mobile device sends a first response message to the electronic device, and the first response message includes the identity information of the mobile device.

For example, the identity information of the mobile device in the first response message is encrypted information. Specifically, the identity information may be encrypted by using a preset key.

For example, the identity information of the mobile device in the first response message is unencrypted information. S905d: The electronic device receives the first response message by using the first antenna, obtains the identity information, and performs verification.

If the identity information is verified to be correct, S906d is performed; otherwise, S901d is performed.

For example, encrypted identity information may be decrypted by using the preset key. After decryption, verification is performed.

In an implementation, after receiving the encrypted identity information, the electronic device obtains the identity information through decryption. The electronic device verifies the identity information, so that an unauthorized mobile device may be prevented from performing control. If the identity information is verified to be correct, S906d is performed, and a second antenna is switched to. If the identity information is verified to be incorrect, S901d is performed.

S906d: The electronic device switches to the second antenna.

S907d: Randomly generate a dynamic encryption key, and encrypt the dynamic encryption key by using a private key, to obtain a second notification message.

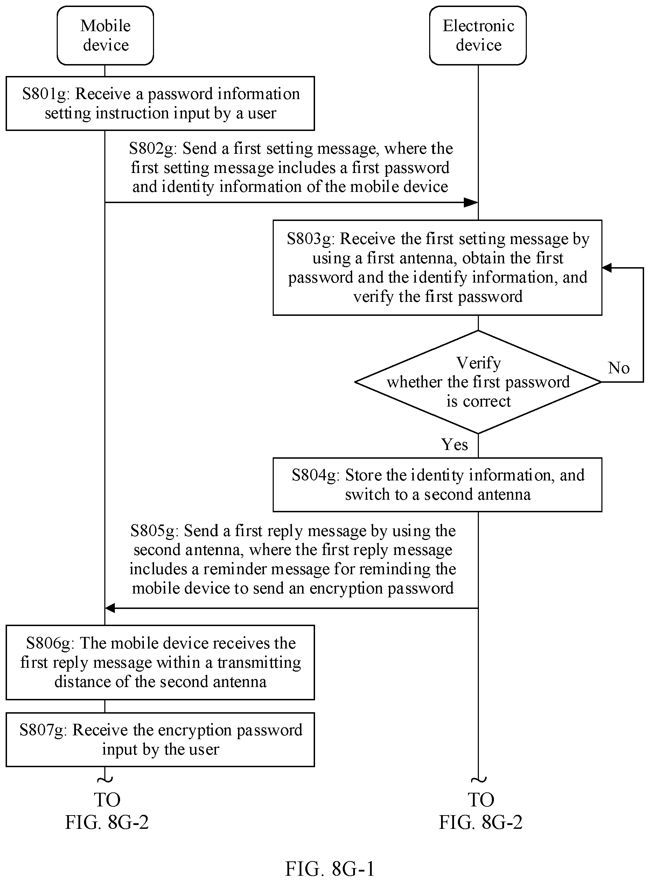

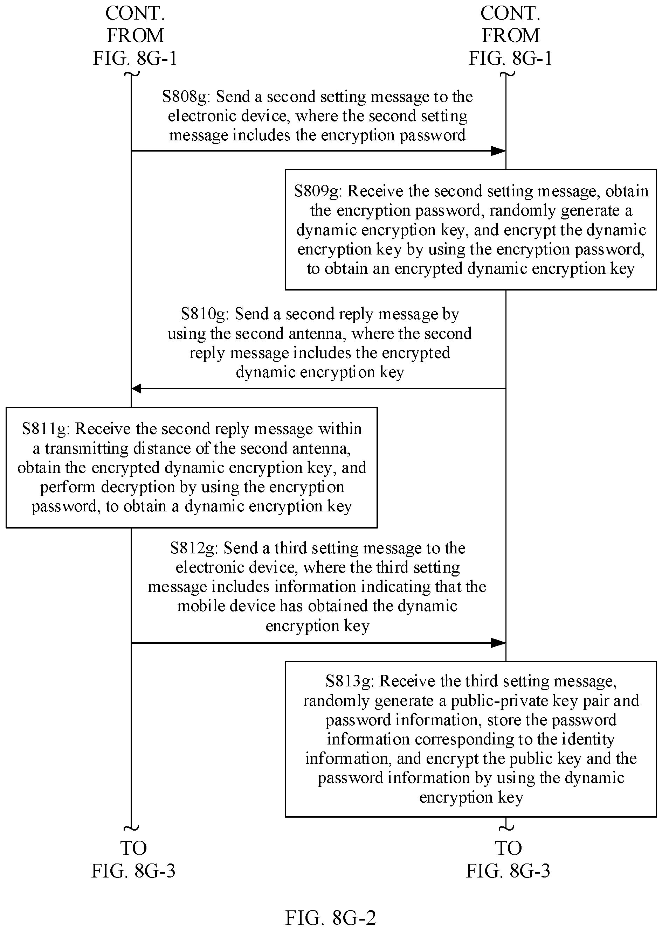

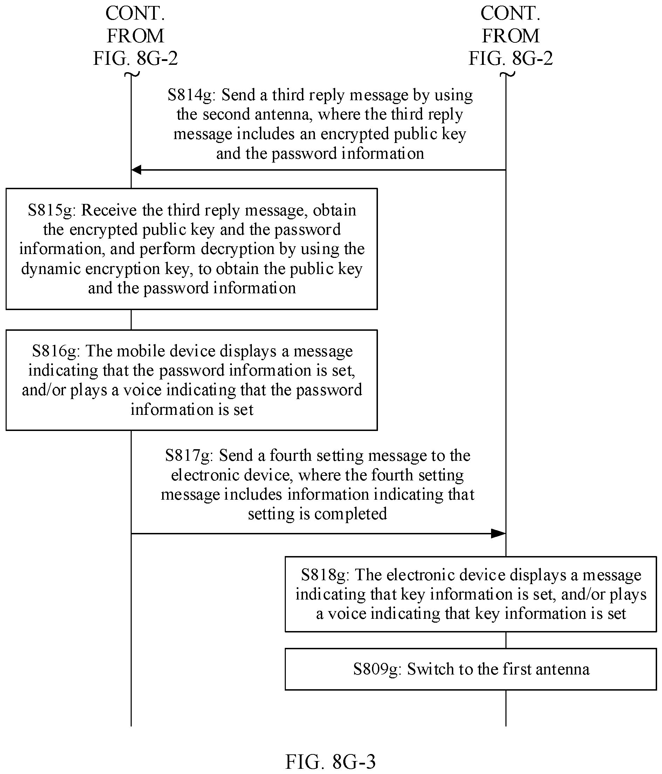

The private key is the private key in the public-private key pair randomly generated by the electronic device in S813g in FIG. 8G-2.

For example, the dynamic encryption key herein is randomly generated in S907d, and is not the dynamic encryption key randomly generated in S809g in FIG. 8G-2. In other words, a new dynamic encryption key is randomly generated in S907d.

S908d and S909d are respectively the same as S908b and S909b. For S908d and S909d, refer to descriptions of S908b and S909b.

S910d: The mobile device decrypts the second notification message by using a public key, to obtain the dynamic encryption key, and encrypts the password information by using the dynamic encryption key.

The private key is the public key in the public-private key pair randomly generated by the electronic device in S813g in FIG. 8G-2.

S911d: The mobile device sends a second response message to the electronic device, and the second response message includes encrypted password information.

S912d: The electronic device receives the second response message by using the second antenna, to obtain the encrypted password information, and performs decryption by using the dynamic encryption key, to obtain the password information, so as to verify the password information.

If verification succeeds, S913d is performed. If verification succeeds, S907d is performed.

S913d to S916d are respectively the same as S912b to S915b. For S913d to S916d, refer to descriptions of S912b to S915b.

Compared with the example shown in FIG. 9B-1 to FIG. 9B-3, in an execution procedure of the specific function shown in FIG. 9D-1 to FIG. 9D-3, when the mobile device uses the second antenna to perform communication, that is, before all or the part of the specific function is executed, the password information is encrypted by using the randomly generated dynamic encryption key, so that security in a transmission process is further improved.

It should be noted that, without special emphasis and no conflict, expanded content of steps shown in FIG. 9D-1 to FIG. 9D-3 is the same as or similar to expanded content of corresponding steps shown in FIG. 9A-1 and FIG. 9A-2 and FIG. 9C-1 and FIG. 9C-2. Details are not described herein.

In this way, in a process in which the mobile device carried by the user is moved close to the electronic device from far to near, the electronic device performs identity verification on the mobile device when the mobile device is located within the transmitting distance (for example, 10 m) of the first antenna. After the verification succeeds, the mobile device carried by the user continues to be moved close to the electronic device, and the electronic device performs identity verification on the mobile device again when the mobile device is located within the transmitting distance (for example, 30 cm) of the second antenna. After the two times of identity verification succeed, the electronic device automatically executes all or the part of the specific function. In addition, for the second time of identity verification, all related data transmitted between the mobile device and the electronic device before the second time of identity verification is encrypted, so that security is further improved. In a process in which the electronic device automatically executes all specific functions, the user does not need to perform any operation throughout the process. From a perspective of user experience, the user needs to carry and move only the mobile device close to the electronic device from far to near. The entire process is imperceptible to the user, and user experience is relatively good. When the electronic device automatically executes the part of the specific function, the user only needs to perform an operation on the remaining part of the specific function, so that complex operations in some steps are reduced, and user experience is improved.

As shown in FIG. 9E-1 to FIG. 9E-3, the steps of identifying the identity information or the password information and executing all or the part of the specific function of the electronic device in the automatic control method may include the following steps.

S901e is the same as S901a. For S901e, refer to descriptions of S901a.

S902e: The electronic device periodically sends the first notification message by using a first antenna at a first transmit power.

A transmit power of the first antenna includes at least the first transmit power and a second transmit power. The first transmit power is greater than the second transmit power. At the first transmit power, a transmitting distance of the first antenna is a first transmitting distance; and at the second transmit power, a transmitting distance of the second antenna is a second transmitting distance. The first transmitting distance is greater than a preset safety distance, and the second transmitting distance is less than or equal to the preset safety distance.

The preset safety distance is a distance at which the mobile device and the electronic device can securely exchange secret information in a plaintext form. For example, the preset safety distance may be 50 cm, 40 cm, 30 cm, 20 cm, or the like. In this way, the mobile device can receive the secret information sent by the electronic device only when a distance between the mobile device and the electronic device is within a range less than or equal to the preset safety distance. In this way, a security risk is reduced (for example, at a location beyond 50 cm of the electronic device, the secret information is not received by another device), and a user of the mobile device may move the mobile device to a location within the preset safety distance of the electronic device in a surrounding security case, to improve security. The preset safety distance may be set or adjusted by the user based on a requirement of the user.

For example, the electronic device periodically sends the first notification message based on a first periodicity (for example, 5s or 20s, and this may be specifically set by the user) by using the first antenna at the first transmit power. The first transmitting distance may be referred to as a first distance (for example, 5 meters or 10 meters, and this may be specifically set by the user). If the mobile device is moved to a location within the first distance from the electronic device, the mobile device may receive the first notification message.

For example, the electronic device periodically sends an encrypted first notification message based on the first periodicity (for example, 5s or 20s, and this may be specifically set by the user) by using the first antenna at the first transmit power.

For example, the electronic device periodically sends the first notification message (unencrypted, plaintext) or the encrypted first notification message (encrypted, ciphertext) to the mobile device based on the first periodicity by using a pre-obtained identity, address, and the like of the mobile device and the first antenna at the first transmit power. S903e: The mobile device receives the first notification message within the transmitting distance of the first antenna at the first transmit power.

The transmitting distance of the first antenna at the first transmit power is the first transmitting distance.

For example, the mobile device cannot receive the first notification message when the mobile device is located outside the first transmitting distance. In an example, the mobile device is moved close to the electronic device from far to near. When the mobile device is moved to a location within the first transmitting distance, the mobile device receives the first notification message, and the mobile device obtains the ID of the electronic device based on the first notification message.

In an implementation, when the mobile device is moved to a location within the first transmitting distance, the mobile device receives the encrypted first notification message, and obtains the first notification message through decryption. The mobile device obtains the ID of the electronic device based on the first notification message.

For example, when the mobile device of the user is moved to a location within the first transmitting distance, the mobile device may receive the first notification message broadcast by the electronic device. In this process, the user does not need to perform any operation on the mobile device.

S904e and S905e are respectively the same as S904a and S905a. For S904e and S905e, refer to descriptions of S904a and S905a.

If verification succeeds, S906e is performed. If verification is incorrect, S901e is performed.

S906e: Switch the transmit power of the first antenna to the second transmit power.

S907e is the same as S907a. For S907e, refer to descriptions of S907a.

S908e: Periodically send the second notification message by using the first antenna at the second transmit power.

For example, the electronic device periodically sends the second notification message based on a second periodicity (for example, 1s or 500 ms, and this may be specifically set by the user) by using the first antenna at the second transmit power. The second transmitting distance may be referred to as a second distance (for example, 0.3 meter or 0.2 meter, and this may be specifically set by the user). If the mobile device is moved to a location within the second distance from the electronic device, the mobile device may receive the second notification message.

For example, the electronic device periodically sends the second notification message (unencrypted, plaintext) or an encrypted second notification message (encrypted, ciphertext) to the mobile device based on the second periodicity by using the pre-obtained identity, address, and the like of the mobile device and the first antenna at the second transmit power.

S909e: The mobile device receives the second notification message within the transmitting distance of the first antenna at the second transmit power.

For example, the mobile device is moved close to the electronic device from far to near. When the mobile device is located outside the second transmitting distance, the mobile device cannot receive the second notification message. When the mobile device is moved to a location within the second transmitting distance, the mobile device receives the second notification message.

S910e is the same as S910a. For S910e, refer to descriptions of S910a.

S911e: Determine whether the second response message is received within preset duration.

In an implementation, since the electronic device sends the second notification message for the first time, S901e is performed if the second response message is not received within the preset duration, or S912e is performed if the second response message is received within the preset duration.

In an implementation, a timing start point of the preset duration may be the time point at which the transmit power of the first antenna is just switched to the second transmit power in S906e, or may be the time point at which the second notification message is just generated in 907e, or may be another timing start point. In addition, a time point after the foregoing listed timing start point is delayed by specific duration may also be used as the timing start point of the preset duration. For example, a time point after 1s is delayed when the second notification message is just generated in S907e is the timing start point of the preset duration. The timing start point of the preset duration is not limited in this application.

Optionally, if the electronic device does not receive the second response message within another preset duration from the timing start point of the preset duration, the electronic device may send prompt information to prompt the user to move the mobile device close to the electronic device. For example, the electronic device displays the prompt information "Please move the mobile device close to the electronic device" by using a display. For another example, the electronic device plays a voice "Please move the mobile device close to the electronic device" by using a speaker. The another preset duration is less than the preset duration.

It should be noted that, the electronic device receives the second response message within the preset duration, but the electronic device is not required to wait until the preset duration expires after receiving the second response message. For example, the preset duration is 5 seconds. The electronic device receives the second response message after 1 second from the timing start point, and a condition is met, S912e is performed, and remaining 4 seconds are not waited. S912e: Execute all or the part of the specific function, and switch the transmit power of the first antenna to the first transmit power.

The electronic device executes all or the part of the specific function, or executes all or the part of the specific function by using another mechanism or system, and switches the transmit power of the first antenna to the first transmit power. For example, after the part of the specific function is executed, the electronic device may display a specific interface, to notify that the part of the specific function is executed. For example, the electronic device is a print device, and when a part of a printing function is executed, the electronic device displays a print interface, to notify that the part of the printing function is executed. The user sends a to-be-printed file by using the mobile device, so that a remaining part can be performed.

S913e: The mobile device sends a third notification message to the mobile device by using the first antenna at the first transmit power, and the third notification message includes information indicating that the execution is completed. S914e: The mobile device receives the third notification message within the transmitting distance of the first antenna at the first transmit power, and obtains the information indicating that the execution is completed.

S915e: The mobile device displays the message indicating that the execution is completed and/or plays a voice indicating that the execution is completed.

In an execution procedure of the specific function shown in FIG. 9E-1 to FIG. 9E-3, an identity of the mobile device is first verified. After the identity of the mobile device is verified as a host identity or an administrator identity, the transmit power of the first antenna is switched to the second transmit power. Then, after receiving the second response message of the mobile device within the preset duration, the electronic device executes all or a part of a preset specific function, or controls another mechanism or system to execute all or a part of a preset specific function. The transmit power of the first antenna is switched to the first transmit power.

It should be noted that at least one of S913e to S915e in the example in FIG. 9E-2 and FIG. 9E-3 is optional. For example, in an embodiment, the steps of identifying the identity information or the password information and executing all or the part of the specific function of the electronic device in the automatic control method may not include S913e to S915e. Alternatively, in an embodiment, the steps of identifying the identity information or the password information and executing all or the part of the specific function of the electronic device in the automatic control method may not include S914e and S915e. Alternatively, in an embodiment, the steps of identifying the identity information or the password information and executing all or the part of the specific function of the electronic device in the automatic control method may not include S915e.

It should be noted that, without special emphasis and no conflict, expanded content of steps shown in FIG. 9E-1 to FIG. 9E-3 is the same as or similar to expanded content of corresponding steps shown in FIG. 9A-1 and FIG. 9A-2. Details are not described herein.

In this way, in a process in which the mobile device carried by the user is moved close to the electronic device from far to near, the electronic device performs identity verification on the mobile device when the mobile device is located within the transmitting distance (for example, 10 m) of the first antenna. After the verification succeeds, the mobile device carried by the user continues to be moved close to the electronic device. Within the preset duration, the electronic device automatically executes all or the part of the specific function when the mobile device is located within the transmitting distance (for example, 30 cm) of the second antenna. In a process in which the electronic device automatically executes all the specific function, the user does not need to perform any operation throughout the process. From a perspective of user experience, the user only needs to carry and move the mobile device close to the electronic device from far to near. The entire process is imperceptible to the user, and user experience is relatively good. When the electronic device automatically executes the part of the specific function, the user only needs to perform an operation on the remaining part of the specific function, so that complex operations in some steps are reduced, and user experience is improved.

As shown in FIG. 9F-1 and FIG. 9F-2, the steps of identifying the identity information or the password information and executing all or the part of the specific function of the electronic device in the automatic control method may include the following steps.

S901f to S910f are respectively the same as S901a to S910a. For S901f to S910f, refer to descriptions of S901a to S910a.

S91 1f: Determine whether the second response message is received within preset duration.

If the second response message is received within the preset duration, S912f is performed. If the second response message is not received within the preset duration, S901f is performed.

S912f to S915f are respectively the same as S912a to S915a. For S912f to S915f, refer to descriptions of S912a to S915a.

In an execution procedure of the specific function shown in FIG. 9F-1 and FIG. 9F-2, an identity of the mobile device is first verified. After the identity of the mobile device is verified as a host identity or an administrator identity, the electronic device switches to the second antenna. Then, after receiving the second response message of the mobile device within the preset duration, the electronic device executes all or a part of a preset specific function, or controls another mechanism or system to execute all or a part of a preset specific function. The first transmit power is switched to.

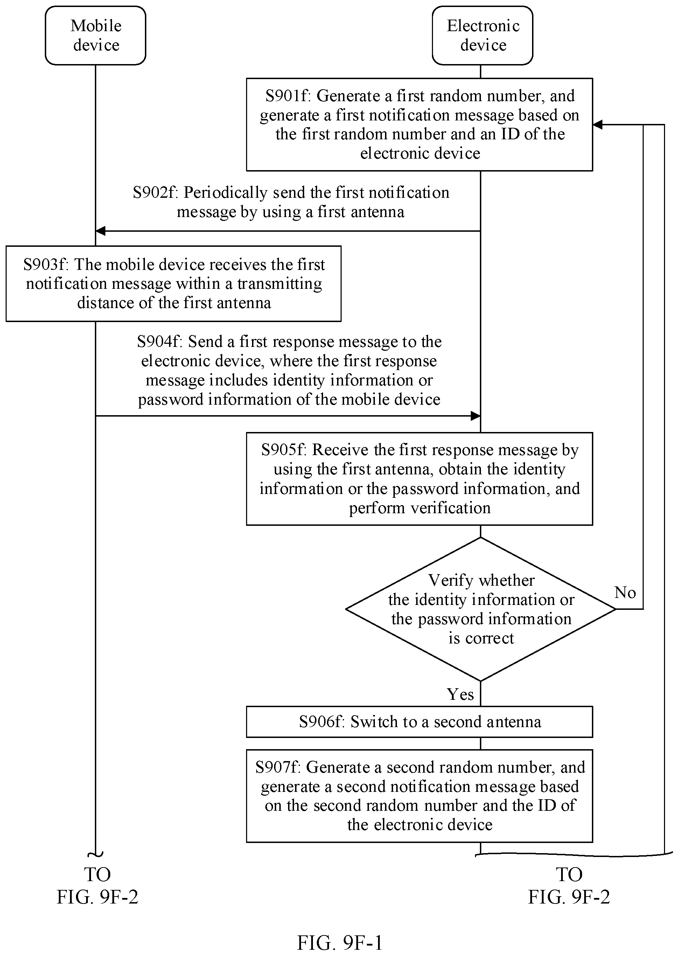

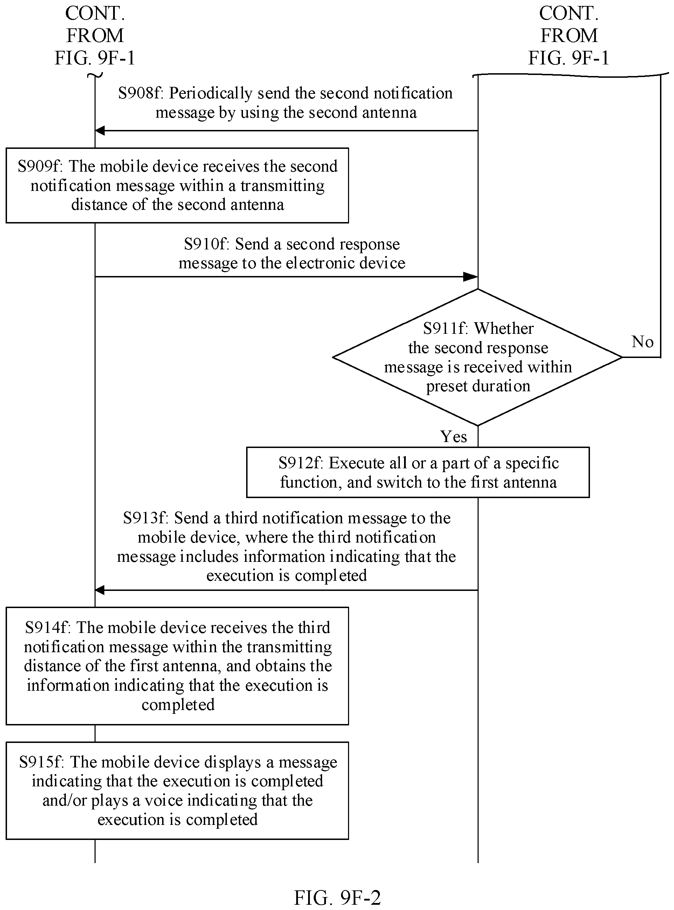

It should be noted that at least one of S913f to S915f in the example in FIG. 9F-2 is optional. For example, in an embodiment, the steps of identifying the identity information or the password information and executing all or the part of the specific function of the electronic device in the automatic control method may not include S913f to S915f. Alternatively, in an embodiment, the steps of identifying the identity information or the password information and executing all or the part of the specific function of the electronic device in the automatic control method may not include S914f and S915f. Alternatively, in an embodiment, the steps of identifying the identity information or the password information and executing all or the part of the specific function of the electronic device in the automatic control method may not include S915f.

It should be noted that, without special emphasis and no conflict, expanded content of steps shown in FIG. 9F-1 and

FIG. 9F-2 is the same as or similar to expanded content of corresponding steps shown in FIG. 9A-1 and FIG. 9A-2. Details are not described herein.

In this way, in a process in which the mobile device carried by the user is moved close to the electronic device from far to near, the electronic device performs identity verification on the mobile device when the mobile device is located within the transmitting distance (for example, 10 m) of the first antenna. After the verification succeeds, the mobile device carried by the user continues to be moved close to the electronic device. Within the preset duration, the electronic device automatically executes all or the part of the specific function when the mobile device is located within the transmitting distance (for example, 30 cm) of the second antenna. In a process in which the electronic device automatically executes all the specific function, the user does not need to perform any operation throughout the process. From a perspective of user experience, the user only needs to carry and move the mobile device close to the electronic device from far to near. The entire process is imperceptible to the user, and user experience is relatively good. When the electronic device automatically executes the part of the specific function, the user only needs to perform an operation on the remaining part of the specific function, so that complex operations in some steps are reduced, and user experience is improved.

It should be noted that all or a part of technical features in the foregoing implementations and embodiments provided in this application may be used in any combination with each other.

To describe related technical solutions more fully and specifically, the following further describes the technical solutions with reference to Scenario 1, Scenario 2, Scenario 3, and Scenario 4.

Scenario 1: In an environment with a specific security requirement, for example, a home or a specific office environment, to enable a door to automatically perform a specific operation such as opening, a user identity needs to be verified first, and the door can be opened only after verification succeeds. In this way, although security is ensured, the user needs to cooperate to perform a specific operation, for example, pressing a fingerprint. Consequently, user operations are complex and user's access is delayed. Reducing or even avoiding a delay of user's access while ensuring security is needed.

Scenario 2: When a mobile device prints a file, a user needs to first select a print option on the mobile device, and then after the mobile device displays a name of a searched print device that can be used for printing, the user selects a name of a print device that is to be used for printing, and sometimes even further selects a button with a similar function, for example, a determining button, to complete a print operation on the mobile device. In addition, a plurality of operations may further need to be performed on the print device. For example, a touch is performed first, so that the mobile device displays a home page, and then touches are performed step by step, so that the mobile device displays a print interface. This process causes a complex user operation. In addition, in an operation performed on the mobile device, the mobile device may display names of a plurality of similar or same print devices, and the user needs to browse the names one by one to identify the names. Alternatively, the name of the print device may be long and difficult to confirm, and the user needs to carefully identify the name to confirm. In addition, after a plurality of print devices with a printing function simultaneously print at a same location, the user may need to identify the devices one by one and find out a device that actually prints a user file. Consequently, the user spends much effort, identification takes a relatively long time, and user experience is relatively poor. Especially for people with a weak operation capability, such as the elderly, children, the disabled, and patients, this is not conducive to their operation. In addition, it takes a specific period of time from a time point at which the mobile device completes the printing operation to a time point at which the user obtains a printed file from the print device. In this specific period of time, the printed file may be stolen by another person, or content of the printed file may be learned by another person. This is unfavorable to information security. Therefore, shortening overall time consumption, simplifying the operations to facilitate the user, improving user experience, and ensuring the information security are needed.

Scenario 3: During projection by a mobile device, a user needs to first enable a projection function on the mobile device, and then after the mobile device displays a name of a searched electronic device that can be projected, the user selects a name of a to-be-projected electronic device, and sometimes even further selects a projection mode, or even taps a button with a similar function such as connection, selection, or confirmation, to implement projection. This process causes a complex user operation. In addition, names of a plurality of similar or same electronic devices may be displayed, and the user needs to browse the names one by one to identify the electronic devices. Alternatively, the name of the electronic device may be long and difficult to confirm, and the user needs to carefully identify the name to confirm. Consequently, the user spends much effort, identification takes a relatively long time, and user experience is relatively poor. Especially for people with a weak operation capability, such as the elderly, children, and the disabled, this is not conducive to their operation. Shortening overall time consumption, simplifying the operations to facilitate the user, and improving user experience are needed.

Scenario 4: When a mobile device accesses a wireless routing device for the first time, a plurality of service set identifiers (service set identifier, SSID) with similar names or a same name may be displayed on a Wi-Fi selection interface. The user needs to browse and identify the service set identifiers one by one, select a service set identifier after identification, and input a correct password on an interface displayed after selection, to access the wireless routing device. In this way, the user spends much effort, identification and recognition are time-consuming, an operation is complex, and user experience is relatively poor. In addition, for people with a weak operation capability, such as the elderly, children, the disabled, and patients, this is not conducive to their operation. Reducing effort consumption of the user, shortening overall time consumption, simplifying the operations to facilitate the user, and improving user experience are needed.

A related technical solution is described below separately by using Scenario 1 to Scenario 4 as an example.

For Scenario 1, this application provides a control method, an electronic device, and a computer-readable storage medium, so that a specific operation can be automatically performed after initial setting of a user, to reduce or even avoid a delay of user's access while ensuring security, and improve user experience.

FIG. 10 is a schematic diagram of a scenario of an implementation of an automatic control method according to an embodiment of this application. A person skilled in the art understands that FIG. 10 is a specific scenario diagram of FIG. 1. As shown in FIG. 10, within a specific distance from the electronic device 200, the mobile device 100 communicates with the electronic device 200 in a wireless communication manner, and the electronic device 200 is located inside or on an outer surface of furniture such as a door 300. The electronic device 200 may work in several modes.

In one mode, the electronic device 200 broadcasts a message periodically, and the mobile device 100 receives the message when the mobile device 100 is moved to a location within a specific distance from the electronic device 200; and the mobile device 100 sends a response message to the electronic device 200, and the electronic device 200 receives the response message. The electronic device 200 determines, based on the response message and a preset matching relationship, whether the mobile device 100 matches the electronic device 200. If the two match, the mobile device 100 may control the electronic device 200 in the wireless communication manner, to further control the furniture such as the door 300, to implement a specific operation. If the two do not match, the electronic device 200 continues to broadcast the message periodically.

In another mode, the electronic device 200 does not send a message, and only receives a message. When the mobile device 100 is moved to a location within a specific distance from the electronic device 200, a user performs an input (such as a voice input or a trigger input) on the mobile device 100, so that the mobile device 100 sends a control message, and the control message includes identity information. After receiving the control message, the electronic device 200 performs identity verification. After the verification succeeds, the electronic device 200 controls the door to perform a door control operation corresponding to a control signal.

In addition, a location of the electronic device 200 on the door 300 is merely an example, and is not intended to limit. The electronic device 200 may be placed at any position on the door 300. Further, the specific operation includes but is not limited to opening a door, closing a door, unlocking a door, and locking a door. Locking is locking. For example, the specific operation includes opening the door and playing a specific ringtone, a specific sound, or a specific prompt. For example, when the door is opened, a voice prompt "Dad is back" or "Mum is back" is further played. The foregoing dad or mum is merely an example, and specifically, a corresponding voice is played based on a user identity. For example, it is identified that a mobile phone of the dad is close to a home door from far to near. This application is applicable to a scenario in which the user holding the mobile device goes home and a scenario in which the user holding the mobile device leaves home.

Further, whether the mobile device of the user is located outside the door or inside the door may be further identified based on a positioning algorithm. When the mobile device is located outside the door, the foregoing or the following method is performed. When the mobile device is located inside the door, the foregoing or the following method is still performed, and only the corresponding voice is adjusted to a voice prompt such as "Dad is out" or "Mum is out". Further, when a family member outside the door moves close to the door from far to near, the foregoing or the following method is still performed. In this case, a specific function is opening the door and unlocking the door. Further, if a family member in the door moves away from the door from near to far, the foregoing or the following method is still performed. In this case, a specific function is closing the door or locking the door.

Further, an arbitration mechanism or a priority may be further set. For example, if a family member outside the door moves close to the door from far to near, and another family inside the door moves close to the door from near to far, the door is opened and unlocked, or the door is kept open or unlocked based on an arbitration result or a priority, to avoid closing the door or locking the door.

Optionally, a locking function may be further set on the mobile device of the user, so that after the user activates the locking function through inputting, the mobile device cannot perform a corresponding method. Therefore, after the user holds the mobile device and returns to the home, specifically, after entering the home door, the user may activate the locking function, to avoid a case in which the user holds the mobile device to the door and does not want to go out, but the user is mistaken by the electronic device as wanting to go out, and the door is automatically opened and the lock is automatically unlocked.

Optionally, other furniture such as a window, or another household appliance such as a refrigerator may also replace the door. For example, the electronic device is disposed on an outer surface or inside a refrigerator door.

Optionally, the electronic device 200 may alternatively be located in a lock. The lock can be used for any furniture. FIG. 2 to FIG. 9F-1 and FIG. 9F-2 and content corresponding to FIG. 2 to FIG. 9F-1 and FIG. 9F-2 are also applicable to an embodiment of Scenario 1. In addition to FIG. 2 to FIG. 9F-1 and FIG. 9F-2 and the content corresponding to FIG. 2 to FIG. 9F-1 and FIG. 9F-2, the embodiment of Scenario 1 further includes FIG. 11 and FIG. 12. Specifically, last four steps in FIG. 9A-2 to FIG. 9D-3 and FIG. 9F-2 may be replaced with steps in FIG. 11, and last four steps in FIG. 9E-2 and FIG. 9E-3 may be replaced with steps in FIG. 12.

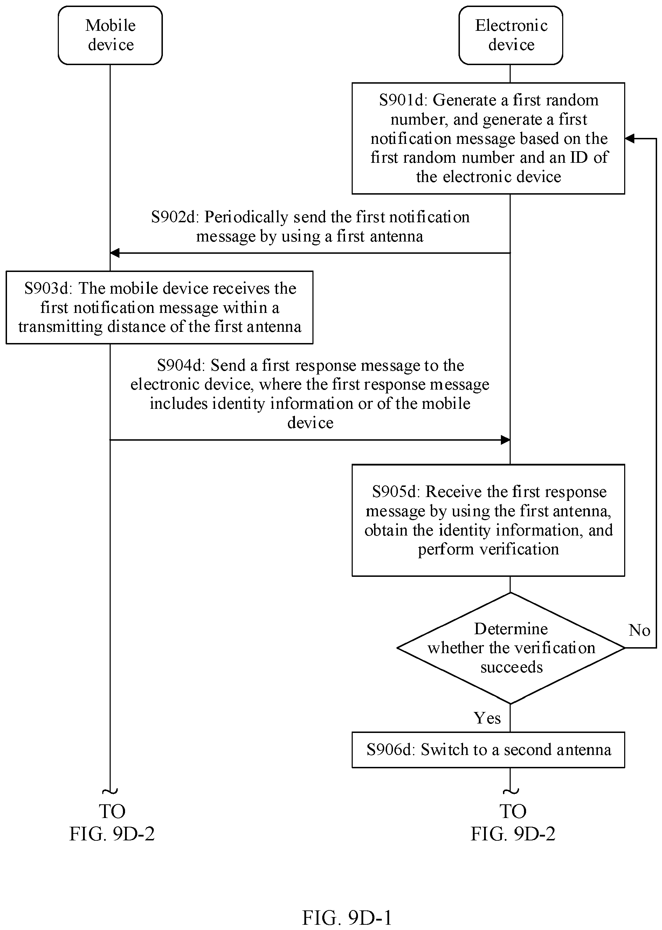

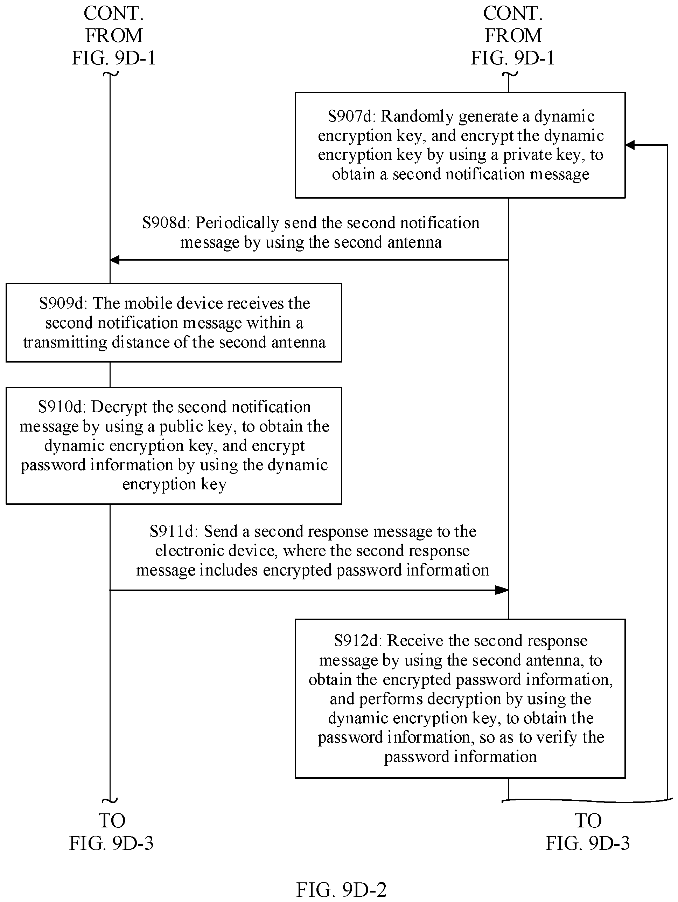

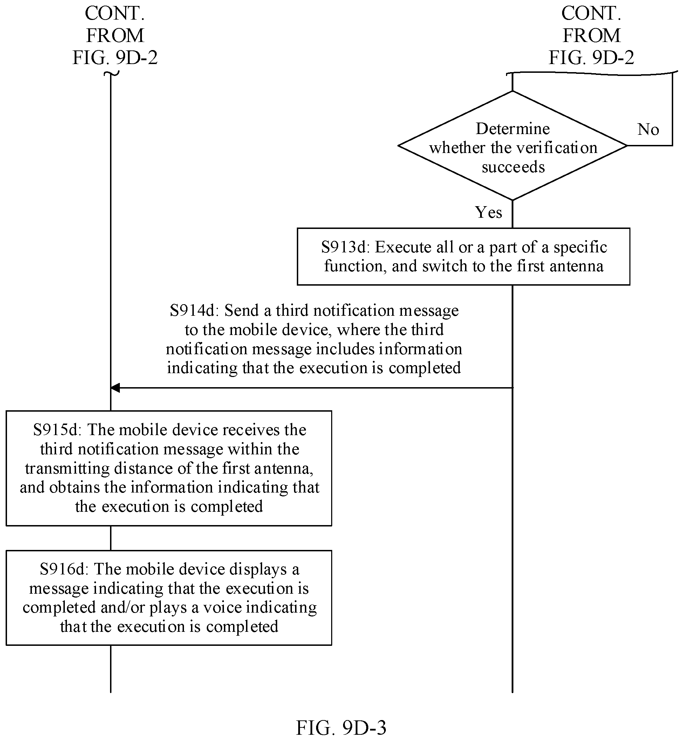

FIG. 11 and FIG. 12 each are a schematic flowchart of steps of executing all specific function of an electronic device in an implementation of an automatic control method according to an embodiment of this application. In FIG. 11, S1112 to S1115 may replace S912a to S915a in FIG. 9A-2, may replace S912b to S915b in FIG. 9B-2 and FIG. 9B-3, may replace S911c to S914c in FIG. 9C-2, may replace S913d to S916d in FIG. 9D-3, and may replace S912f to S915f in FIG. 9F-2. In FIG. 12, S1212 to S1215 may replace S912e to S915e in FIG. 9E-2 and FIG. 9E-3.

As shown in FIG. 11, the steps of executing all the specific function of the electronic device may include the following steps.

S1112: Control the door or the lock to execute the specific function, and switch to a first antenna.

For example, the electronic device may directly control the door or the lock to execute the specific function; or the electronic device may control another mechanism or system, and control, by using the another mechanism or system, the door or the lock to execute the specific function; and switch to the first antenna.

S1113: Send a third notification message to the mobile device, where the third notification message includes information indicating that the execution is completed.

For example, after the door or the lock completes the specific function, the electronic device sends the third notification message to the mobile device.

S1114: The mobile device receives the third notification message within a transmitting distance of the first antenna, and obtains the message indicating that the execution is completed.

S1115: The mobile device displays the message indicating that the execution is completed and/or plays a voice indicating that the execution is completed.

In addition, S1113 to S1115 are also optional steps, and are not mandatory steps. For example, the steps of executing all the specific function of the electronic device in FIG. 11 include S1112 and S1113, and do not include S1114 and S1115.

As shown in FIG. 12, the steps of executing all the specific function of the electronic device may include the following steps.

S1212: Control a door or a lock to execute the specific function, and switch a transmit power of a first antenna to a first transmit power.

For example, the electronic device may directly control the door or the lock to execute the specific function; or the electronic device may control another mechanism or system, and control, by using the another mechanism or system, the door or the lock to execute the specific function; and switch the transmit power of the first antenna to the first transmit power.

S1213: Send a third notification message to the mobile device by using the first antenna at the first transmit power, where the third notification message includes information indicating that the execution is completed.

For example, after the door or the lock completes the specific function, the electronic device sends the third notification message to the mobile device.

S1214: The mobile device receives the third notification message within a transmitting distance of the first antenna at the first transmit power, and obtains the message indicating that the execution is completed.

S1215: The mobile device displays the message indicating that the execution is completed and/or plays a voice indicating that the execution is completed.

In addition, S1213 to S1215 are also optional steps, and are not mandatory steps. For example, the steps of executing all the specific function of the electronic device in FIG. 12 include S1212 and S1213, and do not include S1214 and S1215.

The specific function includes but is not limited to opening a door, closing a door, unlocking a door, and locking a door. For example, the specific function includes opening a door and playing a specific sound. Specifically, a voice prompt may be further played when the door is opened.

In the example of Scenario 1, in FIG. 9A-1 and FIG. 9A-2 to FIG. 9F-1 and FIG. 9F-2, the electronic device verifies the identity information or the password information, so that an unauthorized mobile device can be prevented from controlling the door or the lock.

In this way, after the last four steps in FIG. 9A-2 to FIG. 9F-2 are replaced with the steps in FIG. 11 and FIG. 12, several embodiments in which a door is controlled to execute a specific function are provided. Specific logic and specific steps performed in these embodiments may be different. However, for a user, operation experience is basically the same. Specifically, an implementation scenario may be as follows: When a user carries a mobile device home, the user moves close to a door from far to near. When the user walks to a location 30 cm away from the door, the door automatically performs an operation such as unlocking or opening the door. This entire process is imperceptible to the user, and the user does not need to perform any operation.

Alternatively, first two steps in FIG. 9A-1 to FIG. 9F-1 may be omitted. For example, for FIG. 9A-1, S901a and S902a in FIG. 9A-1 may be omitted. In addition, the third step (for example, S903a in FIG. 9A-1) in FIG. 9A-1 to FIG. 9F-1 may be replaced with: The mobile device receives one user input. In this way, the user may control the specific function in an active initiation manner, and actively trigger a door or lock control procedure by using one user input. Communication in the foregoing control method may implement unlocking by using a wireless communication manner such as Wi-Fi Aware, BLE, and Zigbee. The wireless communication manner is not limited herein. The wireless communication manner uses a communication manner in which information transmission can be implemented at a MAC layer. Compared with a conventional Wi-Fi connection and a conventional Bluetooth connection, the communication manner consumes less power and is more secure in terms of data transmission.

In this embodiment of this application, a control method is implemented by switching between a strong antenna and a weak antenna. The mobile device establishes initial communication with the electronic device within a transmitting distance of the strong antenna, and the electronic device switches to the weak antenna accordingly. Then, when the mobile device is located within a transmitting distance of the weak antenna, the electronic device performs second communication with the mobile device, and the electronic device performs the specific function such as opening a door or unlocking a door, or the electronic device controls a door or a lock to execute the specific function such as opening the door or unlocking the door. In implementation of the control method, a delay of user's access can be reduced or even avoided, to improve user experience. This entire process is imperceptible to the user. After the user carries the mobile device close to the electronic device, a door or lock in which the electronic device is located automatically performs an operation such as opening the door or unlocking the door.

It should be noted that all or a part of technical features in the foregoing implementations and embodiments provided in this application may be used in any combination with each other.

For scenario 2, this application provides an automatic print method, a print device, and a computer-readable storage medium, so that printing can be conveniently and quickly completed subsequently after initial setting of a user, overall time consumption is relatively low, operations are simplified, efficiency is improved, and the user can easily identify a print device that actually prints a user file, to improve user experience and ensure information security.

FIG. 13 is a schematic diagram of a scenario of an implementation (an automatic print method) of an automatic control method according to an embodiment of this application. A person skilled in the art understands that FIG. 13 is a specific scenario diagram of FIG. 1. As shown in FIG. 13, within a specific distance from a print device 200, the mobile device 100 communicates with the print device 200 in the wireless communication manner. The print device 200 has a printing function module 270, and the printing function module 270 can implement at least one of functions such as printing, copying, and faxing. The mobile device 100 may send, through wireless communication with the print device 200, a to-be-printed file on the mobile device 100 to the print device 200 for printing. The print device 200 may work in several modes.

In one mode, the print device 200 broadcasts a message periodically, and the mobile device 100 receives the message when the mobile device 100 is moved to a location within a specific distance from the print device 200; the mobile device 100 sends a response message to the print device 200, and the print device 200 receives the response message; and the print device 200 sends, based on the response message, information for guiding to move close to a printer. The mobile device 100 receives the information that is sent by the print device 200 and that is for guiding to move close to the printer. After the mobile device 100 is further moved close to the print device 200 and is within a preset distance, the mobile device 100 sends the to-be-printed file on the mobile device 100 to the print device 200 for printing, and the print device 200 returns a message indicating that printing is completed to the mobile device 100, to complete a printing procedure.

In another mode, the mobile device 100 broadcasts a message periodically, and the print device 200 receives the message when the mobile device 100 is moved to a location within a specific distance from the print device 200; and the print device 200 sends, to the mobile device 100, information for guiding to move close to a printer. The mobile device 100 receives the information that is sent by the print device 200 and that is for guiding to move close to the printer. After the mobile device 100 is further moved close to the print device 200 and is within a preset distance, the mobile device 100 sends the to-be-printed file to the print device 200 for printing, and the print device 200 returns a message indicating that printing is completed to the mobile device 100, to complete a printing procedure.

In another mode, the print device 200 does not send a message, and only receives a message. The mobile device 100 is moved to a location within a specific distance from the print device 200, a user performs an input (such as a voice input or a trigger input) on the print device 100, so that the mobile device 100 sends a message; the print device 200 sends a response message to the mobile device 100, and the mobile device 100 receives the response message; and the response message indicates and guides the mobile device 100 to be moved close to the print device 200. After the mobile device 100 is further moved close to the print device 200 and is within a preset distance, the mobile device 100 sends the to-be-printed file on the mobile device 100 to the print device 200 for printing, and the print device 200 returns a message indicating that printing is completed to the mobile device 100, to complete a printing procedure.

It may be understood that the print device 200 is merely an example, and may be a copying device, a fax device, or the like, or may be a composite device integrating at least two functions of printing, copying, and faxing.

FIG. 2 to FIG. 9F-1 and FIG. 9F-2 and content corresponding to FIG. 2 to FIG. 9F-1 and FIG. 9F-2 are also applicable to an embodiment of Scenario 2. In addition to FIG. 2 to FIG. 9F-1 and FIG. 9F-2 and the content corresponding to FIG. 2 to FIG. 9F-1 and FIG. 9F-2, the embodiment of Scenario 2 further includes FIG. 14 to FIG. 18B-1 and FIG. 18B-2. Specifically, last four steps in FIG. 9A-2 to FIG. 9D-3 and FIG. 9F-2 may be replaced with steps in FIG. 14, and last four steps in FIG. 9E-2 and FIG. 9E-3 may be replaced with steps in FIG. 15. In addition, the embodiment of Scenario 2 further provides steps of identifying identity information or password information and executing a part of a specific function of an electronic device shown in FIG. 16 A and FIG. 16B. After steps shown in FIG. 14 to FIG. 16 A and FIG. 16B are performed, steps shown in FIG. 17A or FIG. 17B may be further performed. In addition, the embodiment of Scenario 2 further provides steps of identifying identity information or password information and executing all specific function of an electronic device shown in FIG. 18A-1 to FIG. 18A-3 or FIG. 18B-1 and FIG. 18B-2. The following provides specific descriptions with reference to FIG. 11 to FIG. 18B-1 and FIG. 18B-2.

FIG. 14 and FIG. 15 each are a schematic flowchart of steps of executing a part of a specific function of an electronic device in an implementation of an automatic control method according to an embodiment of this application. In FIG. 14, S1412 to S1415 may replace S912a to S915a in FIG. 9A-2, may replace S912b to S915b in FIG. 9B-2 and FIG. 9B-3, may replace S911c to S914c in FIG. 9C-2, may replace S913d to S916d in FIG. 9D-3, and may replace S912f to S915f in FIG. 9F-2. In FIG. 15, S1512 to S1515 may replace S912e to S915e in FIG. 9E-2 and FIG. 9E-3.

As shown in FIG. 14, the steps of executing the part of the specific function of the electronic device may include the following steps.

S1412: Display a print interface, and switch to a first antenna.

Optionally, the print device may be in a low power consumption state such as a lock screen state or a sleep state, or in another state, or the print device displays another interface such as a non-print interface. After verification performed after S911a and before 912b is correct, verification performed before 911c is correct, and verification performed before 913d is correct, and after determining that the second response message is received within preset duration in 911f, the print device automatically, immediately, and directly displays the print interface. The print interface is merely an example, and another function interface such as the copying interface or the fax interface may also replace the print interface. In addition, the print device switches an antenna from a second antenna to a first antenna. In this way, the user only needs to move the mobile device close to the print device, so that the print device can automatically display the print interface and switch to the first antenna, and the user does not need to perform an additional operation throughout an entire process.

S1413: Send a third notification message to the mobile device, where the third notification message includes information indicating that printing is ready.

Optionally, after the print interface is displayed, the print device sends the third notification message to the mobile device by using the first antenna. The third notification message includes information indicating that the print device is ready, and the third notification message is used to notify the mobile device that the print device is ready and waits to receive to-be-printed data.

Optionally, after the print interface is displayed, the print device sends the third notification message through broadcasting by using the first antenna. The third notification message includes information indicating that the print device is ready, and the third notification message is used to notify the mobile device that the print device is ready and waits to receive to-be-printed data.

S1414: The mobile device receives the third notification message within a transmitting distance of the first antenna, and obtains the message indicating that printing is ready.

Optionally, after receiving the third notification message, the mobile device no longer provides any prompt information for the user. That is, subsequent S1415 may not exist.

S1415: The mobile device displays a message indicating that printing is ready and/or plays a voice indicating that printing is ready.

Optionally, the mobile device receives the third notification message sent by the print device, and displays text of the third notification message on a display, and/or plays a voice of the third notification message by using a speaker. For example, after receiving the third notification message sent by the print device, the mobile device displays, on the display, text that "The print device is ready", and/or plays a voice that "The print device is ready".

Alternatively, in S1415, the mobile device may not display the text of the third notification message, and/or may not play the voice of the third notification message, but notify the user in another manner. For example, the mobile device performs at least one of vibration, blinking, displaying a specific pattern, lighting a specific signal light, and the like, to notify the user that the mobile device receives the third notification message.

In this way, the user can intuitively feel, by using the mobile device, that the print device is ready.

For ease of description, an example in which a transmitting distance of the second antenna is 30 cm is used for description. The user only needs to move the mobile device close to the print device for a short time, and does not need to move the mobile device close to the print device for a long time (for example, a distance between the mobile device and the print device is less than 30 cm). That is, for example (using FIG. 9A-1 and FIG. 9A-2 as an example), after S909a, the mobile device may be moved away from the print device, and does not need to be always within the transmitting distance of the second antenna of the print device until S915a. After the mobile device is moved away from the print device (for example, the distance between the mobile device and the print device is greater than 30 cm), S910a to S915a may also be performed.

Optionally, S1413 to S1415 are also optional steps, and are not mandatory steps. For example, the steps of executing the part of the specific function of the electronic device in FIG. 14 include S1412 and S 1413, and do not include S1414 and S1415. For example, after S910a, the mobile device performs S1701a shown in FIG. 17A, to start a procedure shown in FIG. 17A. Optionally, S1701a shown in FIG. 17A may be performed after S1415, to start the procedure shown in FIG. 17A.

It should be noted that, in the foregoing steps, communication between the mobile device and the print device is performed by using one of wireless communications technologies such as Wi-Fi aware (Wi-Fi aware), BLE (bluetooth low energy), and ZigBee (ZigBee), and only one of wireless communications technologies such as Wi-Fi aware, BLE, or ZigBee is used throughout the process.

As shown in FIG. 15, the steps of executing the part of the specific function of the electronic device may include the following steps.

S1512: Display a print interface, and switch a transmit power of a first antenna to a first transmit power.

S1513: Send a third notification message to the mobile device by using the first antenna at the first transmit power, where the third notification message includes information indicating that the print device is ready.

Optionally, after the print interface is displayed, the print device sends the third notification message to the mobile device by using the first antenna at the first transmit power. The third notification message includes the information indicating that the print device is ready, and the third notification message is used to notify the mobile device that the print device is ready and waits to receive to-be-printed data.

Optionally, after the print interface is displayed, the print device sends the third notification message through broadcasting by using the first antenna. The third notification message includes the information indicating that the print device is ready, and the third notification message is used to notify the mobile device that the print device is ready and waits to receive to-be-printed data.

S1514: The mobile device receives the third notification message within a transmitting distance of the first antenna at the first transmit power, and obtains a message indicating that the print device is ready.

Optionally, after receiving the third notification message, the mobile device no longer provides any prompt information for the user. That is, subsequent S1515 may not exist.

S1515: The mobile device displays the message indicating that print device is ready and/or plays a voice indicating that print device is ready.

Optionally, the mobile device receives the third notification message sent by the print device, and displays text of the third notification message on a display, and/or plays a voice of the third notification message by using a speaker. For example, after receiving the third notification message sent by the print device, the mobile device displays, on the display, text that "The print device is ready", and/or plays a voice that "The print device is ready".

Alternatively, in S1515, the mobile device may not display the text of the third notification message, and/or may not play the voice of the third notification message, but notify the user in another manner. For example, the mobile device performs at least one of vibration, blinking, displaying a specific pattern, lighting a specific signal light, and the like, to notify the user that the mobile device receives the third notification message.

In this way, the user can intuitively feel, by using the mobile device, that the print device is ready.

In addition, S1513 to S1515 are also optional steps, and are not mandatory steps. For example, the steps of executing the part of the specific function of the electronic device in FIG. 15 include S1512 and S1513, and do not include S1514 and S1515. For example, after S910e, the mobile device performs S1701b shown in FIG. 17B, to start a procedure shown in FIG. 17B. Optionally, S1701b shown in FIG. 17B may be performed after S1515, to start the procedure shown in FIG. 17B.

It should be noted that, in the foregoing steps, communication between the mobile device and the print device is performed by using one of wireless communications technologies such as Wi-Fi aware (Wi-Fi aware), BLE (bluetooth low energy), and ZigBee (ZigBee), and only one of wireless communications technologies such as Wi-Fi aware, BLE, or ZigBee is used throughout the process.

As shown in FIG. 16 A and FIG. 16B, the steps of identifying the identity information or the password information of the electronic device and executing the part of the specific function of the electronic device may include the following steps.

S1601 to S1606 are respectively the same as S901a to S906a. For S1601 to S1606, refer to descriptions of S901a to S906a.

S1607: Generate a second notification message, where the second notification message includes an ID of the print device and a randomly generated dynamic encryption key.

Optionally, the second notification message may be first encrypted by using a private key on the print device. In this way, an encrypted second notification message is periodically broadcast by using the second antenna, or is directionally sent to the mobile device. In this way, within a transmitting distance of the second antenna, the mobile device receives the message, and then the mobile device decrypts the message by using a public key on the mobile device, to obtain the second notification message, so as to obtain the dynamic encryption key. However, for another device other than the mobile device (no public key is preset), even if the another device receives the encrypted second notification message within the transmitting distance of the second antenna, the another device cannot obtain the second notification message because the another device cannot decrypt the second notification message, and consequently, the another device cannot obtain the dynamic encryption key.

The private key is the private key in the public-private key pair randomly generated by the electronic device (specifically, in the embodiment of Scenario 2, the electronic device is the print device) in S813g in FIG. 8G-2. The public key is the public key in the public-private key pair randomly generated by the electronic device in S813g in FIG. 8G-2.

S1608: Periodically send the second notification message by using the second antenna.

In an implementation, the second antenna is the weak antenna. The print device periodically sends the second notification message based on a second periodicity (for example, 1s or 500 ms, and this may be specifically set by the user) by using the weak antenna. The transmitting distance of the weak antenna is a second distance (for example, 0.3 meter or 0.2 meter, and this may be specifically set by the user). If the mobile device is moved to a location within the second distance from the print device, the mobile device may receive the second notification message.

Optionally, the second periodicity may be less than, greater than, or equal to the first periodicity.

Optionally, the sending may be performed in a broadcast manner, or may be performed in a manner of directionally sending to a specific device.

S1609: The mobile device receives the second notification message within the transmitting distance of the second antenna, and obtains the dynamic encryption key and the ID of the print device.

The mobile device cannot receive the second notification message when the mobile device is located outside the transmitting distance of the second antenna (for example, the weak antenna).

In an example, the mobile device is moved close to the print device from far to near. The mobile device receives the second notification message when the mobile device is moved to a location within the transmitting distance of the second antenna, to obtain the dynamic encryption key and the ID of the print device.

S1610 to S1615 are respectively the same as S911a to S915a. For S1610 to S1615, refer to descriptions of S911a to S915a.

Next, based on procedures shown in FIG. 17A and FIG. 17B, the mobile device sends to-be-printed data to the print device, and the print device performs printing after receiving the to-be-printed data.

As shown in FIG. 17A, steps of performing the printing function in the automatic print method in this embodiment of this application may include the following steps.

S1701a: Receive an input of a selected file.

Specifically, the mobile device receives selection and inputs performed by the user for one or more files. The input may be a touch input or a voice input.

S 1702a: Send a transmission message to the print device, where the transmission message includes a file. Specifically, in response to the input of the selected file, the mobile device sends a transmission message to the print device, and the transmission message includes the selected file and is used to send the selected file to the print device. S1703a: After receiving the transmission message, the print device obtains the file and prints the file.

After receiving the transmission message, the print device obtains the file from the transmission message and prints the file.

As shown in FIG. 17B, steps of performing the printing function in the automatic print method in this embodiment of this application may include the following steps.

S1701b: The mobile device receives an input of a selected file, and encrypts the file by using the dynamic encryption key.

Specifically, the mobile device receives selection and inputs performed by the user for one or more files. The input may be a touch input or a voice input. After receiving the input, the mobile device encrypts the file by using the dynamic encryption key. Alternatively, a password preset on the mobile device may also be used for encryption.

S1702b: The mobile device sends a transmission message to the print device, and the transmission message includes an encrypted file.

The mobile device sends a transmission message to the print device, and the transmission message includes encrypted selected one or more files and is used to send the encrypted file to the print device.

S1703b: After receiving the transmission message, the print device decrypts the encrypted file by using the dynamic encryption key, obtains a decrypted file, and prints the file.

After receiving the encrypted transmission message, the print device obtains the encrypted file, decrypts the file by using the dynamic encryption key, obtains the file, and prints the file. Alternatively, a password preset on the print device may also be used for decryption.

It should be noted that the procedures shown in FIG. 17A and FIG. 17B are merely examples in which the mobile device sends the to-be-printed data to the print device. Another related procedure in which the mobile device transmits the to-be-printed data to the print device falls within protection scope of this application.

An application scenario of this embodiment of this application may be as follows: A user holding a mobile device walks to a print room or a print corner from far to near, and a plurality of print devices are in the print room or the print corner. For ease of description, for example, a print device 1, a print device 2, and a print device 3 are in the print room or the print corner. When a distance between the mobile device and each of the print device 1, the print device 2, and the print device 3 is within 10 m, the print device 1, the print device 2, and the print device 3 are all switched to a second antenna, or all switch a transmit power of a first antenna to a second transmit power of the first antenna. Then, the user holds the mobile device only close to the print device 3, and does not close to the print device 1 and the print device 2. Therefore, the mobile device receives only a second notification message sent by the print device 3, and sends only a second response message to the print device 3. Then, only the print device 3 displays a print interface, and the user performs selection and an input on to-be-printed data. In response to the input, the mobile device sends a message including selected to-be-printed data to the print device 3, and the print device 3 prints the to-be-printed data after receiving the message. In this scenario, the user only needs to move the mobile device close to the print device from far to near, so that the print device close to the mobile device can automatically display the print interface without another operation performed by the user. Then, based on the to-be-printed data selected by the user, the print data is automatically transmitted to the print device, and the print device automatically prints the print data. For the user, this is very convenient. Especially for people with a weak operation capability, such as the elderly, children, and the disabled, this is more convenient.

With reference to FIG. 7, the following describes in detail steps of identifying the identity information or the password information and performing a printing function. Specifically, with reference to FIG. 18A-1 to FIG. 18A-3 and FIG. 18B-1 and FIG. 18B-2, the steps of identifying the identity information or the password information and performing the printing function in FIG. 7 are described in detail.

FIG. 18A-1 to FIG. 18A-3 are a schematic flowchart of steps of identifying identity information or password information and performing a printing function in an automatic print method. The method may include: S1801ato S1809aare respectively the same as S1601 to S1609. For S1801a to S1809a, refer to descriptions of S1601 to S1609.

S1810a is the same as S1701b. For S1810a, refer to descriptions of S1701b.

S1811a: A mobile device sends a second response message to a print device, and the second response message includes an encrypted file.

Optionally, the second response message may further include an ID of the mobile device. The ID of the mobile device may be a unique ID of the mobile device. For example, an ID that uniquely identifies a mobile device, such as a MAC address or an IP address.

S1812a is the same as S1611. For S1812a, refer to descriptions of S1611.

S1813a: Decrypt the encrypted file by using a dynamic encryption key, obtain a decrypted file, and print the file. After receiving the second response message within preset duration, the print device obtains the encrypted file, decrypts the file by using the dynamic encryption key, obtains the file, and prints the file. Alternatively, a key preset on the print device may also be used for decryption.

S1814a is the same as S1613. For S1814a, refer to descriptions of S1613.

S1815a: The print device sends a third notification message by using a first antenna, to notify a print status. Optionally, the print device sends the third notification message to the mobile device by using the first antenna, to notify the print status of the mobile device, such as printing completed or printing.

Optionally, the print device sends the third notification message by using the first antenna through broadcasting, to notify the print status of the mobile device, such as printing completed or printing.

S1816a is the same as S1615. For S1816a, refer to descriptions of S1615.

S1817a: The mobile device displays a message indicating the print state and/or plays a voice indicating the print state. Optionally, the mobile device receives the third notification message sent by the print device, and displays text of the third notification message on a display, and/or plays a voice of the third notification message by using a speaker. For example, after receiving the third notification message sent by the print device, the mobile device displays, on the display, text that "Printing is completed", and/or plays a voice that "Printing is completed".

Alternatively, in S1817a, the mobile device may not display the text of the third notification message, and/or may not play the voice of the third notification message, but notify the user in another manner. For example, the mobile device performs at least one of vibration, blinking, displaying a specific pattern, lighting a specific signal light, and the like, to notify the user that the mobile device receives the third notification message.

For ease of description, an example in which a transmitting distance of a second antenna is 30 cm is used for description. The user only needs to move the mobile device close to the print device for a short time, and does not need to move the mobile device close to the print device for a long time (for example, a distance between the mobile device and the print device is less than 30 cm). That is, after S1809a, the mobile device may be moved away from the print device, and does not need to be always within the transmitting distance of the second antenna of the print device until S1817a. After the mobile device is moved away from the print device (for example, the distance between the mobile device and the print device is greater than 30 cm), S1810a to S1817a may also be performed.

Optionally, S1815a to S1817a are not mandatory steps. The steps of identifying the identity information or the password information and performing the printing function provided in this embodiment of this application may not include S1815a to S1817a, or may include only at least one of S1815a to S1817a. For example, only S1815a and S1816a are included, and S1817a is not included.

It should be noted that, in the foregoing steps, communication between the mobile device and the print device is performed by using one of wireless communications technologies such as Wi-Fi aware, BLE, and ZigBee, and only one of wireless communications technologies such as Wi-Fi aware, BLE, or ZigBee is used throughout a process.

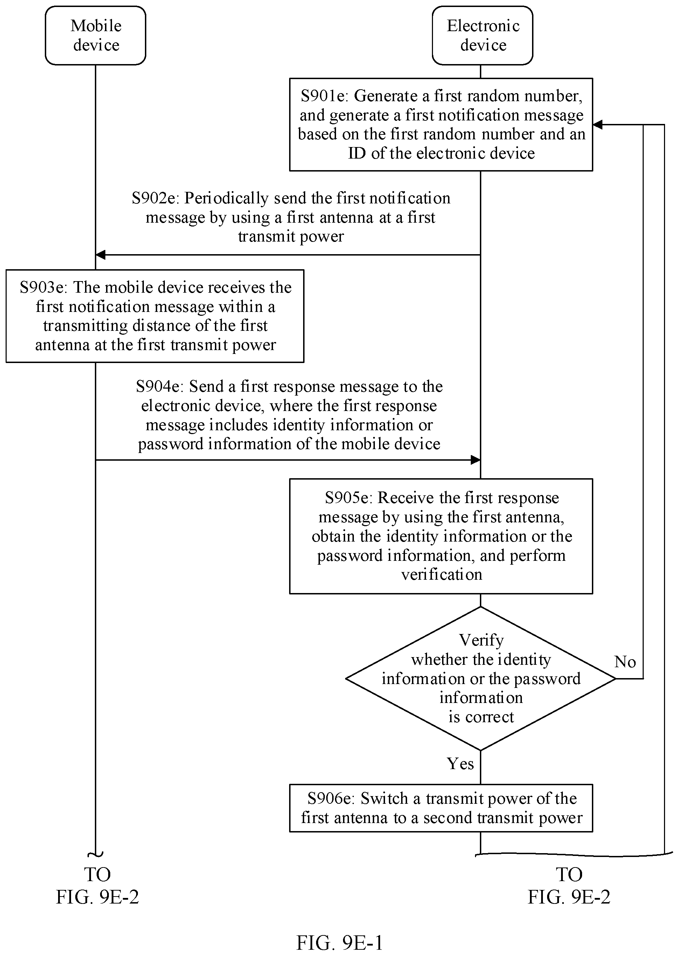

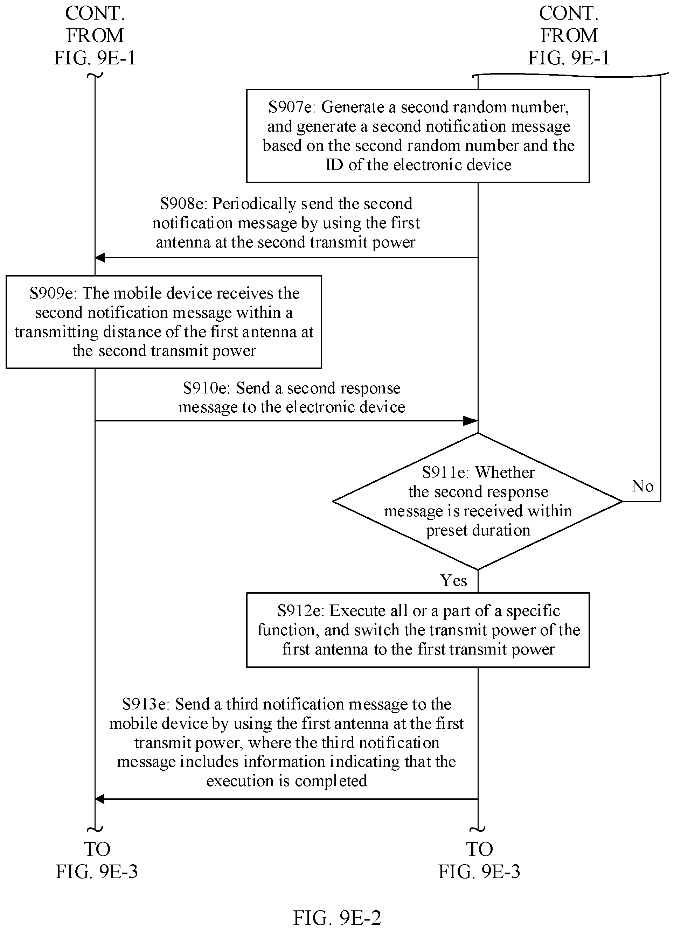

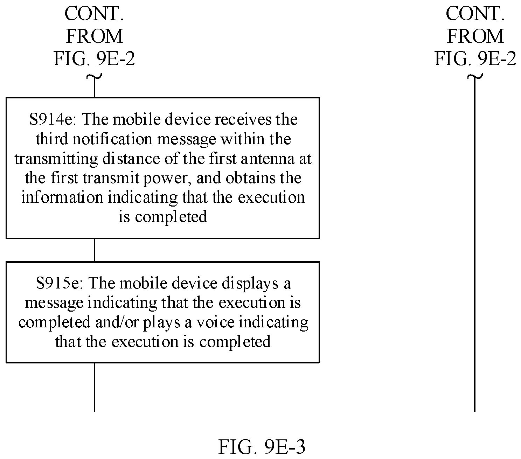

Similarly, for related embodiments such as FIG. 9A-1 and FIG. 9A-2 to FIG. 9F-1 and FIG. 9F-2, and FIG. 14 and FIG. 15, a corresponding modification or change may also be made with reference to S1810a, S1811a, S1813a, S1815a, S1817a, and the like in FIG. 18A-1 to FIG. 18A-3. A related embodiment of FIG. 9E-1 to FIG.9E-3 is used as an example. For example, after S909e in FIG. 9E-2 and before S910e in FIG. 9E-2, "Receive an input of a selected file" is added; "the second response message includes the selected file" is added in S910e; S912e is replaced with "Obtain and print a file, and switch the transmit power of the first antenna to the first transmit power"; S913e is replaced with "Send a third notification message by using the first antenna at the first transmit power, so as to notify a print state"; and S915e is replaced with "The mobile device displays a message indicating the print state and/or plays a voice indicating the print state". In addition, technical solutions obtained after the corresponding modification or change is made to the related embodiments such as FIG. 9A-1 and FIG. 9A-2 to FIG. 9F-1 and FIG. 9F-2, and FIG. 14 and FIG. 15 also fall within protection scope of this application. Details are not described herein again.

It should be noted that all or a part of technical features in the foregoing implementations and embodiments provided in this application may be used in any combination with each other.

With reference to FIG. 18B-1 and FIG. 18B-2, the following describes in detail steps of identifying the identity information or the password information and performing a printing function in FIG. 7.

S1801b to S1803b are respectively the same as S1801a and S1802a. For S1801b to S1803b, refer to descriptions of S1801a and S1803a.

S1804b: The mobile device sends a first response message to the print device.

Optionally, the first response message may include the identity information or the password information of the mobile device, or may not include the identity information or the password information of the mobile device.

S1805b: The print device receives the first response message by using a first antenna, and switches to a second antenna. S1806b to S1815b are the same as S1807a to S1817a. For S1806b to S1815b, refer to descriptions of S1807a to S1817a.

Generally, compared with a procedure shown in FIG. 18A-1 to FIG. 18A-3, a procedure shown in FIG. 18B-1 and FIG. 18B-2 does not include a process in which the print device verifies the identity information or the password information of the electronic device.

For ease of description, an example in which a transmitting distance of the second antenna is 30 cm is used for description. The user only needs to move the mobile device close to the print device for a short time, and does not need to move the mobile device close to the print device for a long time (for example, a distance between the mobile device and the print device is less than 30 cm). That is, after S1808b, the mobile device may be moved away from the print device, and does not need to be always within the transmitting distance of the second antenna of the print device until S1815b. After the mobile device is moved away from the print device (for example, the distance between the mobile device and the print device is greater than 30 cm), S1809b to S1815b may also be performed.

Optionally, S1813b to S1815b are not mandatory steps. The steps of identifying the identity information or the password information and performing the printing function provided in this embodiment of this application may not include S1813b to S1815b, or may include only at least one of S1813b to S1815b. For example, only S1813b and S1814b are included, and S1815b is not included.

It should be noted that, in the foregoing steps, communication between the mobile device and the print device is performed by using one of wireless communications technologies such as Wi-Fi aware, BLE, and ZigBee, and only one of wireless communications technologies such as Wi-Fi aware, BLE, or ZigBee is used throughout a process.

Similarly, for related embodiments such as FIG. 9A-1 and FIG. 9A-2 to FIG. 9F-1 and FIG. 9F-2, and FIG. 14 and FIG. 15, a corresponding modification or change may also be made with reference to S1809b, S1810b, S1812b, S1813b, S1815b, and the like in FIG. 18B-1 and FIG. 18B-2. For example, processes of transmission of the identity information or the password information and verifying whether the identity information or the password information is correct is removed. Further, the following modification or change may be further performed. A related embodiment of FIG. 9F-1 and FIG. 9F-2 is used as an example. For example, S907f in FIG. 9F-1 is replaced with "Generate a second notification message, where the second notification message includes the ID of the print device and a randomly generated dynamic encryption key"; after S909f and before S910f, "Receive an input of a selected file, and encrypt the file by using the dynamic encryption key"; in S910f, "the second response message includes an encrypted file" is added; S912f is replaced with "Decrypt the encrypted file by using the dynamic encryption key, obtain a decrypted file, print the file, and switch to the first antenna"; S913f is replaced with "Send a third notification message by using the first antenna, where the third notification message includes information indicating a print state"; and S915f is replaced with "The mobile device displays a message indicating the print state and/or plays a voice indicating the print state". In addition, technical solutions obtained after the corresponding modification or change is made to the related embodiments such as FIG. 9A-1 and FIG. 9A-2 to FIG. 9F-1 and FIG. 9F-2, and FIG. 14 and FIG. 15 also fall within protection scope of this application. Details are not described herein again.

In this way, without performing the steps of setting the identity information or the password information, a mobile device may also use the print device according to the foregoing embodiment. Because the steps of setting the identity information or the password information are not required, the automatic print method in the foregoing embodiment does not need to include the process of identifying the identity information or the password information, and automatic printing can be implemented by directly performing the steps of performing the printing function.

An application scenario of this embodiment of this application may be as follows: A user holding a mobile device walks to a print room or a print corner from far to near, and a plurality of print devices are in the print room or the print corner. For ease of description, for example, a print device 1, a print device 2, and a print device 3 are in the print room or the print corner. When a distance between the mobile device and each of the print device 1, the print device 2, and the print device 3 is within 10 m, the print device 1, the print device 2, and the print device 3 are all switched to a second antenna, or all switch a transmit power of a first antenna to a second transmit power of the first antenna. Then the user holds the mobile device only close to the print device 3 and within 30 cm away from the print device 3 (not close to the print device 1 and the print device 2), the mobile device receives only a second notification message sent by the print device 3, and sends, based on to-be-printed data selected by the user, only a second response message including the to-be-printed data to the print device 3. Then, after receiving the to-be-printed data, the print device 3 automatically prints the to-be-printed data. In this scenario, the user only needs to move the mobile device close to the print device from far to near, and select the to-be-printed data, to complete printing of the to-be-printed data without performing another operation. In this entire process, the user only needs to select the to-be-printed data without performing another operation. For the user, this is very convenient. Especially for people with a weak operation capability or people who are inconvenient for operation, such as the elderly, children, the disabled, and patients, this is more convenient.

This embodiment of this application provides an automatic print method, a print device, and a computer-readable storage medium, so that printing can be conveniently and quickly completed, overall time consumption is relatively low, operations are simplified, efficiency is improved, and a user can easily identify a print device that actually prints a user file, to improve user experience. The automatic print method provided in this embodiment of this application is applicable to the print device and the mobile device.

It should be noted that all or a part of technical features in the foregoing implementations and embodiments provided in this application may be used in any combination with each other.

For Scenario 3, this application provides an automatic projection method, an electronic device, and a computer-readable storage medium, so that after initial setting by a user, projection can be conveniently and quickly performed, overall time consumption is relatively low, and operations are simplified, to improve efficiency and improve user experience.

FIG. 19 is a schematic diagram of a scenario of an automatic projection method according to an embodiment of this application. A person skilled in the art understands that FIG. 19 is a specific scenario diagram of FIG. 1. As shown in FIG. 19, the mobile device 100 is moved close to the electronic device 200 from far to near. The "from far to near" does not strictly require that the mobile device 100 is closer to the electronic device 200 after each movement. However, on the whole, the mobile device 100 is moved from a location far away from the electronic device 200 to a location close to the electronic device 200. In a movement process, the following case may exist: After one or more times of movement, the mobile device 100 is farther away from the electronic device 200 than a last time.

Within a specific distance from the electronic device 200, the mobile device 100 communicates with the electronic device 200 in the wireless communication manner. The mobile device 100 may be configured to project a projection to the electronic device 200. The electronic device 200 may receive projection data that includes but is not limited to projection data of the mobile device 100. In some embodiments, compared with the mobile device 100, the electronic device 200 has a larger display. In some other embodiments, compared with the mobile device 100, the electronic device 200 has a smaller display. The electronic device 200 may work in several modes.

In one mode, the electronic device 200 does not send a signal. When the mobile device 100 is moved to a location within a specific distance from the electronic device 200, the user performs an input (such as a voice input or a touch input) on the mobile device 100, so that the mobile device 100 sends a projection message, and the projection message includes the identity information and the projection data. After receiving the projection message, the electronic device 200 performs identity verification. After verification succeeds, the electronic device 200 configures, based on the identity and a preset correspondence between the identity and projection mode information, a projection receiving mode corresponding to the identity, and displays the projection data. After the electronic device 200 receives an input, the electronic device 200 stops displaying the projection data, and exits the projection procedure. The input may be an input from the mobile device 100, or may be an input from the user or another device (for example, a voice input performed by the user to the electronic device 200, or an input performed by the user to the electronic device 200 by using a remote control). The projection mode information includes, but is not limited to, push mode projection such as a digital living network alliance (digital living network alliance, DLNA) protocol, an airplay push protocol, and a lelink protocol, and mirror mode projection such as a mirror mode miracast, an airplay mirror, and a lelink mirror. The identity information may be an identifier that can uniquely identify the mobile device, such as a device ID or a MAC address of the mobile device. This is not limited herein.

In another mode, the electronic device 200 periodically sends a message, and the mobile device 100 receives the message when the mobile device 100 is moved to a location within a specific distance from the electronic device 200; the mobile device 100 sends a response message to the electronic device 200, and the electronic device 200 receives the response message; and the electronic device 200 configures, based on the response message and a preset correspondence, a corresponding projection receiving mode, and sends a notification message to the mobile device 100, to notify that electronic device 200 is ready. After receiving the notification message, the mobile device 100 establishes a Wi-Fi P2P connection to the electronic device 200. Then, the mobile device 100 sends projection data to the electronic device 200. After receiving the projection data, the electronic device 200 displays the projection data. After the electronic device 200 receives an input, the electronic device 200 stops displaying the projection data, and exits a projection procedure. The input may be an input from the mobile device 100, or may be an input from the user or another device (for example, a voice input performed by the user to the electronic device 200, or an input performed by the user to the electronic device 200 by using a remote control). The sending may be broadcasting, or may be sending to a target device.

Optionally, a locking function may be set on a mobile device of the user, so that after the user activates the locking function (for example, activates by using a voice input or activates by using a touch input), the mobile device cannot perform the automatic projection method provided in this embodiment of this application. Therefore, after the user holds the mobile device 100 close to the electronic device 200, the mobile device 100 and the electronic device 200 do not perform the automatic projection method. In this way, it can be avoid that when the user does not want to perform projection, and the user only happens to carry the mobile device 100 close to the electronic device 200, the mobile device 100 and the electronic device 200 mistakenly consider that the user wants to perform projection, so as to perform projection.

Optionally, an arbitration mechanism or a priority may be further set. For example, when both a mobile device A and a mobile device B are moved close to the electronic device 200 from far to near, the electronic device 200 obtains an arbitration result or a priority based on a set decision mechanism and priority. Then, the electronic device 200 preferentially performs, based on the arbitration result or the priority, projection of a mobile device with a prior arbitration result or a high priority. For example, if the arbitration result or the priority discloses that the mobile device A has priority over the mobile device B, projection of the mobile device A is preferentially performed; and after the projection of the mobile device A ends, projection of the mobile device B is performed.

Further, only projection of a mobile device with a prior arbitration result or a high priority may be performed. For example, only projection of a mobile device A with a high priority is performed. After the projection of the mobile device A ends, projection of the mobile device B is not performed any more, unless the mobile device B is moved close to the electronic device 200 from far to near again after the projection of the mobile device A ends.

FIG. 2 to FIG. 9F-1 and FIG. 9F-2 and content corresponding to FIG. 2 to FIG. 9F-1 and FIG. 9F-2 are also applicable to an embodiment of Scenario 3. In addition to FIG. 2 to FIG. 9F-1 and FIG. 9F-2 and the content corresponding to FIG. 2 to FIG. 9F-1 and FIG. 9F-2, the embodiment of Scenario 3 further includes FIG. 20A-1 and FIG. 20A-2 to FIG. 25D. FIG. 20A-1 and FIG. 20A-2 to FIG. 20E-1 and FIG. 20E-2 each are a schematic flowchart of steps of setting identity information or password information in an automatic projection method according to an embodiment of this application. A person skilled in the art understands that procedure shown in FIG. 20A-1 and FIG. 20A-2 to FIG. 20E-1 and FIG. 20E-2 is a specific application of the procedure shown in FIG. 8A to FIG. 8H-1 and FIG. 8H-2 in the automatic projection method. FIG. 20A-1 and FIG. 20A-2 to FIG. 20E-1 and FIG. 20E-2 show a procedure of steps of setting the identity information or the password information in different embodiments. The following describes in detail with reference to FIG. 20A-1 and FIG. 20A-2 to FIG. 20E-1 and FIG. 20E-2.

As shown in FIG. 20A-1 and FIG. 20A-2, the steps of setting the identity information or the password information in the automatic projection method may include the following steps.

S2001a: The mobile device receives an identity information setting instruction or a password information setting instruction input by the user.

During initial setting, the user may perform setting by using the mobile device. Specifically, the user inputs the identity information setting instruction or the password information setting instruction on the mobile device. For example, the user may perform an input on an interface of the mobile device through touching or voicing.

Alternatively, the mobile device receives the identity information setting instruction and the password information setting instruction input by the user.

Optionally, when the user needs to perform resetting, the user inputs the identity information setting instruction or the password information setting instruction on the mobile device again. In this case, the mobile device performs S2001a. S2002a: The mobile device sends a first setting message, and the first setting message includes a first password. The sending may be performed in a broadcast manner, or may be performed in a manner of sending to the electronic device.

For example, a quick response code may be attached on a surface of the electronic device, or a quick response code may be printed on a surface of the electronic device. The mobile device obtains the identifier of the electronic device by scanning the quick response code. Further, the quick response code may be scanned by using a scanning function of the mobile device. In this case, the mobile device prompts to first download an APP matching the electronic device. After the APP is downloaded and installed, and registration and login are performed, the mobile device may obtain an identifier of the quick response code by scanning the quick response code through the APP.

Alternatively, the quick response code may be scanned by using the APP matching the electronic device. After the mobile device logs in to the APP, and scanning of the quick response code is completed, the mobile device may obtain an identifier of the quick response code.

Further, the identifier of the electronic device may be the unique identifier of the electronic device. For example, the unique identifier of the electronic device is a MAC address, an IP address (after accessing a network).

The first password may be an initial password. The initial password may be specifically a password of the electronic device set before delivery. The initial password may be printed on paper or a card attached to packaging of the electronic device. Alternatively, the initial password may be preset in a memory inside the electronic device, and the initial password may be obtained by performing a specific operation on the electronic device. Alternatively, the initial password may be a password obtained from a sales person after the user purchases the electronic device. Alternatively, the initial password may be a password obtained by using the APP or by using a received password short message after the user purchases the electronic device and registers and logs in to the electronic device by using a specific website, or after the user registers and logs into the electronic device by using the APP matching the electronic device. In an example, the initial password may be used only for a first use, and becomes invalid after the first use. In an example, the initial password may be valid for a specific date, for example, one month. In an example, the initial password may be valid within a specific quantity of times of use, for example, 100 times.

It may be understood that only after a mobile device of the user obtains the initial password, the mobile device used has "permission" to set the identity information with the electronic device, so as to ensure security of identity information setting.

Optionally, after the mobile device logs in to the APP, and scanning of the quick response code is completed, the mobile device may not only obtain the identifier of the quick response code, but also obtain the first password.

The first password may be a random password. That is, the first password is randomly generated every time. The mobile device may obtain the random password from the APP after installing the APP matching the electronic device, registering and logging in, and inputting an ID of the electronic device or scanning the quick response code of the electronic device (also to obtain device information of the electronic device, and the device information includes the ID of the electronic device). In addition, the electronic device also obtains the random password. Therefore, the electronic device may verify whether the random password obtained from the mobile device is the same as the random password obtained from a server by the electronic device, that is, a verification step after S2003a. That is, after receiving related information input of the mobile device on the APP, the server generates a random password, and separately sends the random password to the mobile device and the electronic device. The electronic device may subsequently perform verification on the random password and the random password sent by the mobile device, to determine whether to perform a subsequent step.

It should be noted that, when the mobile device generates a random password for the first time, the mobile device needs to input the related information, and sends the random password to the electronic device for verification. Then, the electronic device records device information (which may also be referred to as identity information) of the mobile device. In this way, the mobile device does not need to repeat the foregoing process subsequently. In other words, the foregoing operation is required only for the first time.

In an implementation, after the user inputs the initial password, the mobile device may send the initial password to the electronic device by using Wi-Fi Aware.

Optionally, the first setting message is encrypted. The mobile device sends an encrypted first setting message through broadcasting; or the mobile device sends an encrypted first setting message to the electronic device.

Optionally, the first setting message may be periodically sent based on a specific periodicity.

S2003a: The electronic device receives the first setting message by using a first antenna, obtains the first password, and verifies the first password.

If the first password is verified to be correct, step S2004a is performed; otherwise, step S2003a continues to be performed again.

In an implementation, the first antenna may be a strong antenna, and a transmitting distance of the first antenna is greater than a transmitting distance of a second antenna (a weak antenna).

The electronic device may receive the first setting message by using the first antenna, and verify the obtained first password, so as to determine whether the mobile device that sends the first password has "permission" to set the identity information of the electronic device.

S2004a: The electronic device sends a first reply message by using the first antenna, and the first reply message includes projection mode information supported by the electronic device.

After the first password is verified to be correct, the electronic device replies, to the mobile device by using the first reply message, the projection mode information supported by the electronic device.

Optionally, the first reply message further includes the device information of the electronic device.

S2005a: The mobile device receives, within a transmitting distance of the first antenna, the first reply message, and obtains the projection mode information supported by the electronic device.

If the mobile device is located beyond the transmitting distance of the first antenna, the mobile device cannot receive the first reply message.

In an example, the mobile device is moved close to the electronic device from far to near. When the mobile device is moved to a location within the transmitting distance of the first antenna, the mobile device receives an encrypted first reply message, and obtains a first reply message through decryption. The mobile device obtains, based on the first reply message, the projection mode information supported by the electronic device. Optionally, the mobile device may further obtain the device information of the electronic device based on the first reply message. The foregoing encryption manner and decryption manner are set only on the mobile device 100 and the electronic device 200. Another device cannot decrypt a received message.

S2006a: The mobile device receives a user input, and the user input is used to select or set the projection mode information.

A corresponding interface may be displayed on the mobile device, and the interface may display the projection mode information supported by the electronic device. The interface may further display the device information of the electronic device. The user selects a default projection mode from the projection mode information, or sets a priority sequence of a plurality of projection modes from the projection mode information (for example, a projection mode A and a projection mode B is selected, and the projection mode A is prior to the projection mode B; and when the projection mode A cannot respond within preset duration, the projection mode B is performed).

Optionally, the user input may be one user input, or may be a plurality of user inputs.

S2007a: The mobile device sends a second setting message to the electronic device, and the second setting message includes the identity information or the password information, and selected or set projection mode information.

The mobile device sends the second setting message including the identity information of the mobile device or set password information to the electronic device. The second setting message further includes the projection mode information selected or set by the user. Optionally, the password information may be randomly generated by the mobile device, or may be input by the user of the mobile device, or may be randomly generated by the mobile device based on the user input.

The identity information may be an identifier that can uniquely identify the mobile device, such as a device ID or a MAC address of the mobile device. This is not limited herein.

S2008a: The electronic device receives the second setting message, obtains the identity information or the password information, and the selected or set projection mode information, and completes setting.

The electronic device receives the second setting message, obtains, from the second setting message, the identity information of the mobile device or the password information set by the mobile device, and the information of the projection mode selected or set by the mobile device, performs setting based on the identity information or the password information and the selected or set projection mode information, and completes setting. The electronic device may store the obtained identity information and the obtained projection mode information in a memory of the electronic device. In an implementation, the memory of the electronic device stores a table, and the table stores identity information and corresponding projection mode information.

Optionally, after setting is completed, the electronic device performs at least one of displaying information indicating that setting is completed, playing a voice indicating that setting is completed, flashing light, displaying a specific pattern, lighting up a specific signal light, and the like, to notify the user of the mobile device that the electronic device is set.

S2009a: The electronic device sends a second reply message by using the first antenna, and the second reply message includes the information indicating that setting is completed.

The electronic device sends, by using the first antenna, to the mobile device, the second reply message including the information indicating that setting is completed, and the second reply message is used to notify the mobile device that the electronic device is set.

S2010a: The mobile device receives the second reply message within the transmitting distance of the first antenna, and obtains the information indicating that setting is completed.

S2011a: The mobile device displays the information indicating that setting is completed and/or plays the voice indicating that setting is completed.

The mobile device displays the information indicating that setting is completed and/or plays the voice indicating that setting is completed, to notify the user of the mobile device that the steps of setting the identity information or the password information is completed.

Alternatively, in S2011a, the mobile device may not display the information indicating that setting is completed and/or play the voice indicating that setting is completed, but notify the user in another manner. For example, the mobile device performs at least one of vibration, blinking, displaying a specific pattern, lighting a specific signal light, and the like, to notify the user.

It should be noted that S2009a to S2011a are optional steps, and are not mandatory steps. That is, in some embodiments, the steps of setting the identity information or the password information may include at least one of S2009a to S2011a, or may not include S2009a to S2011a.

It should be noted that, in the foregoing steps, communication between the mobile device and the electronic device is performed by using wireless communications technologies such as Wi-Fi aware, BLE, and ZigBee, and only one of wireless communications technologies such as Wi-Fi aware, BLE, or ZigBee is used.

Alternatively, in an identity information or password information setting procedure in FIG. 20A-1 and FIG. 20A-2, the second antenna may be used throughout the procedure, to implement communication between the mobile device and the electronic device.

Further, if there is a requirement for information transmission security, in the identity information or password information setting procedure shown in FIG. 20A-1 and FIG. 20A-2, a message transmitted between the mobile device and the electronic device may be encrypted once or a plurality of times, to improve security.

Alternatively, the identity information or the password information in FIG. 20A-1 and FIG. 20A-2 may be replaced with the identity information and the password information. In this way, a procedure of setting the identity information and the password information in the automatic projection method is provided. Because the procedure is similar to the procedure of each step in FIG. 20A-1 and FIG. 20A-2, details are not described herein again. In the procedure shown in this implementation, a sequence of steps may be adjusted as required.

As shown in FIG. 20B-1 and FIG. 20B-2, the steps of setting the identity information or the password information in the automatic projection method may include the following steps.

S2001b to S2003b are respectively the same as S2001a to S2003a. For S2001b to S2003b, refer to descriptions of S2001a to S2003a.

S2004b: The electronic device switches to a second antenna.

After the first password is verified to be correct, the electronic device switches to the second antenna. In an implementation, the second antenna is a weak antenna. A transmitting distance of the weak antenna is less than a transmitting distance of a strong antenna. For example, the transmitting distance of the strong antenna is 10 m, and the transmitting distance of the weak antenna is 0.3 m.

S2005b: The electronic device periodically sends a first reply message by using the second antenna, and the first reply message includes projection mode information supported by the electronic device.

Optionally, the first reply message further includes the device information of the electronic device.

In an implementation, the first reply message is sent based on a first periodicity.

S2006b: The mobile device receives, within a transmitting distance of the second antenna, the first reply message, and obtains the projection mode information supported by the electronic device.

If the mobile device is located beyond the transmitting distance of the second antenna, the mobile device cannot receive the first reply message.

In an example, the mobile device is moved close to the electronic device from far to near. When the mobile device is moved to a location within the transmitting distance of the second antenna, the mobile device receives an encrypted first reply message, and obtains a first reply message through decryption. The mobile device obtains, based on the first reply message, the projection mode information supported by the electronic device. Optionally, the mobile device may further obtain the device information of the electronic device based on the first reply message. The foregoing encryption manner and decryption manner are set only on the mobile device 100 and the electronic device 200. Another device cannot decrypt a received message.

S2007b to S2008b are respectively the same as S2007a to S2008a. For S2007b to S2008b, refer to descriptions of S806a to S808a.

S2009b: The electronic device receives a second setting message, obtains the identity information or the password information, and the selected or set projection mode information, completes setting, and switches to the first antenna. S2009b includes all content of S2008a, and further includes content of switching to the first antenna. Subsequently, the electronic device sends and receives by using the first antenna.

S2010b to S2012b are respectively the same as S2009a to S2011a. For S2010b to S2012b, refer to descriptions of S2009a to S2011a.

It should be noted that, in the foregoing steps, communication between the mobile device and the electronic device is performed by using wireless communications technologies such as Wi-Fi aware, BLE, and ZigBee, and only one of wireless communications technologies such as Wi-Fi aware, BLE, or ZigBee is used.

It should be emphasized that, unless specially specified, related content of an embodiment shown in FIG. 20B-1 and FIG. 20B-2 is the same as related content of an embodiment shown in FIG. 20A-1 and FIG. 20A-2. Details are not described herein.

As shown in FIG. 20C-1 and FIG. 20C-2, the steps of setting the identity information or the password information in the automatic projection method may include the following steps.

S2001c: The mobile device receives a password information setting instruction input by a user.

During initial setting, the user may perform setting by using the mobile device. Specifically, the user inputs the password information setting instruction on the mobile device. For example, the user may perform an input on an interface of the mobile device through touching or voicing.

Optionally, when the user needs to perform resetting, the user inputs the password information setting instruction on the mobile device again. In this case, the mobile device performs S2001c.

S2002c: The mobile device sends a first setting message, and the first setting message includes a first password and the identity information of the mobile device.

Different from S2002b, in S2002c, in addition to the first password, the first setting message further includes the identity information of the mobile device.

S2003c: The electronic device receives the first setting message by using a first antenna, obtains the first password, and verifies the first password.

Different from S2003b, in S2003c, in addition to obtaining the first password, the electronic device further obtains the identity information of the mobile device from the first setting message.

If the first password is verified to be correct, step S2004c is performed; otherwise, step S2003c continues to be performed again.

S2004c: Store the identity information, and switch to a second antenna.

The electronic device stores the obtained identity information, may store the obtained identity information locally or in a third-party device (for example, a cloud server) associated with the electronic device, and switches from the first antenna to the second antenna.

S2005c to S2008c are respectively the same as S2005b to S2008b. For S2005c to S2008c, refer to descriptions of S2005b to S2008b.

S2009c: The electronic device receives a second setting message, obtains the password information, and the selected or set projection mode information, completes setting, and switches to the first antenna.

The electronic device receives the second setting message, obtains, from the second setting message, the password information set by the mobile device, and the projection mode information selected or set by the mobile device, performs setting based on the password information and the selected or set projection mode information, and completes setting.

Optionally, after setting is completed, the electronic device performs at least one of displaying information indicating that setting is completed, playing a voice indicating that setting is completed, flashing light, displaying a specific pattern, lighting up a specific signal light, and the like, to notify the user of the mobile device S2010c to S2012c are respectively the same as S2010b to S2012b. For S2010c to S2012c, refer to descriptions of S2010b to S2020b.

It should be noted that, in the foregoing steps, communication between the mobile device and the electronic device is performed by using wireless communications technologies such as Wi-Fi aware, BLE, and ZigBee, and only one of wireless communications technologies such as Wi-Fi aware, BLE, or ZigBee is used.

It should be emphasized that, unless specially specified, related content of an embodiment shown in FIG. 20C-1 and FIG. 20C-2 is the same as the related content of the embodiment shown in FIG. 20B-1 and FIG. 20B-2. Details are not described herein.

As shown in FIG. 20D-1 and FIG. 20D-2, the steps of setting the identity information or the password information in the automatic projection method may include the following steps.

S2001d to S2003d are the same as S2001c to S2003c. For S2001d to S2003d, refer to descriptions of S2001c to S2003c.

If the first password is verified to be correct, step S2004d is performed; otherwise, step S2003d continues to be performed again.

S2004d: The electronic device stores the identity information and randomly generates password information.

The electronic device stores the obtained identity information, may store the obtained identity information locally or in a third-party device (for example, a cloud server) associated with the electronic device, and randomly generates the password information.

S2005d: The electronic device switches to a second antenna.

S2006d: The electronic device periodically sends a first reply message by using the second antenna, and the first reply message includes the password information and projection mode information supported by the electronic device. Different from S2005c, in S2006d, the first reply message further includes the password information.

S2007d: The mobile device receives, within a transmitting distance of the second antenna, the first reply message, and obtains the password information and the projection mode information supported by the electronic device.

If the mobile device is located beyond the transmitting distance of the second antenna, the mobile device cannot receive the first reply message.

In an example, the mobile device is moved close to the electronic device from far to near. When the mobile device is moved to a location within the transmitting distance of the second antenna, the mobile device receives an encrypted first reply message, and obtains a first reply message through decryption. The mobile device obtains, based on the first reply message, the projection mode information supported by the electronic device. Optionally, the mobile device may further obtain the device information of the electronic device based on the first reply message. The foregoing encryption manner and decryption manner are set only on the mobile device 100 and the electronic device 200. Another device cannot decrypt a received message.

S2008d: Receive a user input used to select or set the projection mode information.

A corresponding interface may be displayed on the mobile device, and the interface may display the projection mode information supported by the electronic device. The interface may further display the device information of the electronic device. The user selects a default projection mode from the projection mode information, or sets a priority sequence of a plurality of projection modes from the projection mode information (for example, a projection mode A and a projection mode B is selected, and the projection mode A is prior to the projection mode B; and when the projection mode A cannot respond within preset duration, the projection mode B is performed).

The user input may be one user input, or may be a plurality of user inputs.

S2009d: The mobile device sends a second setting message to the electronic device, and the second setting message includes selected or set projection mode information.

S2010d: The electronic device receives the second setting message, obtains the selected or set projection mode information, and completes setting.

S2011d: The electronic device switches to the first antenna.

S2012d to S2014d are respectively the same as S2010c to S2012c. For S2012d to S2014d, refer to descriptions of S2010c to S2012c.

It should be noted that, in the foregoing steps, communication between the mobile device and the electronic device is performed by using wireless communications technologies such as Wi-Fi aware, BLE, and ZigBee, and only one of wireless communications technologies such as Wi-Fi aware, BLE, or ZigBee is used.

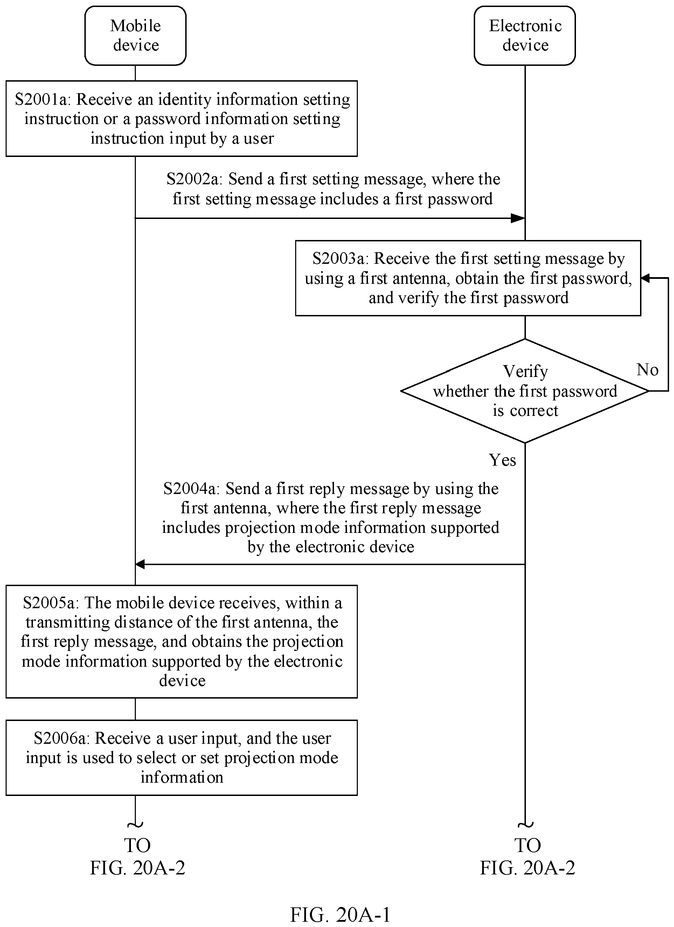

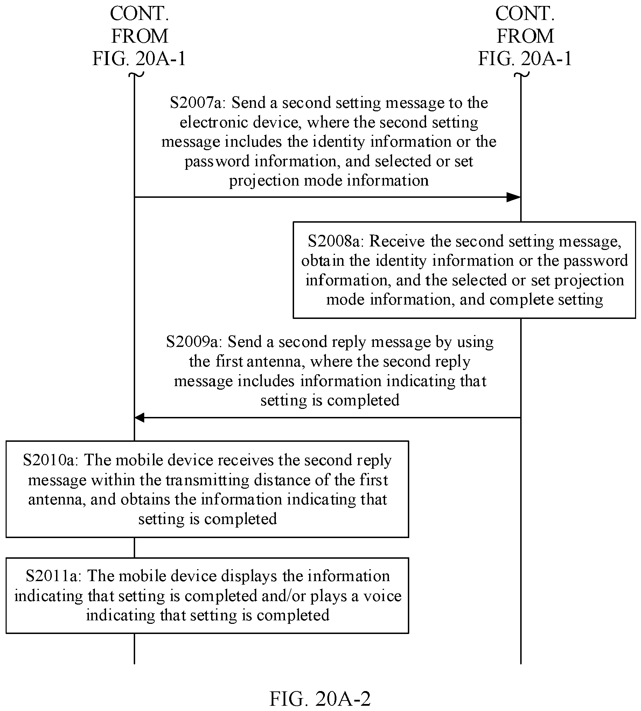

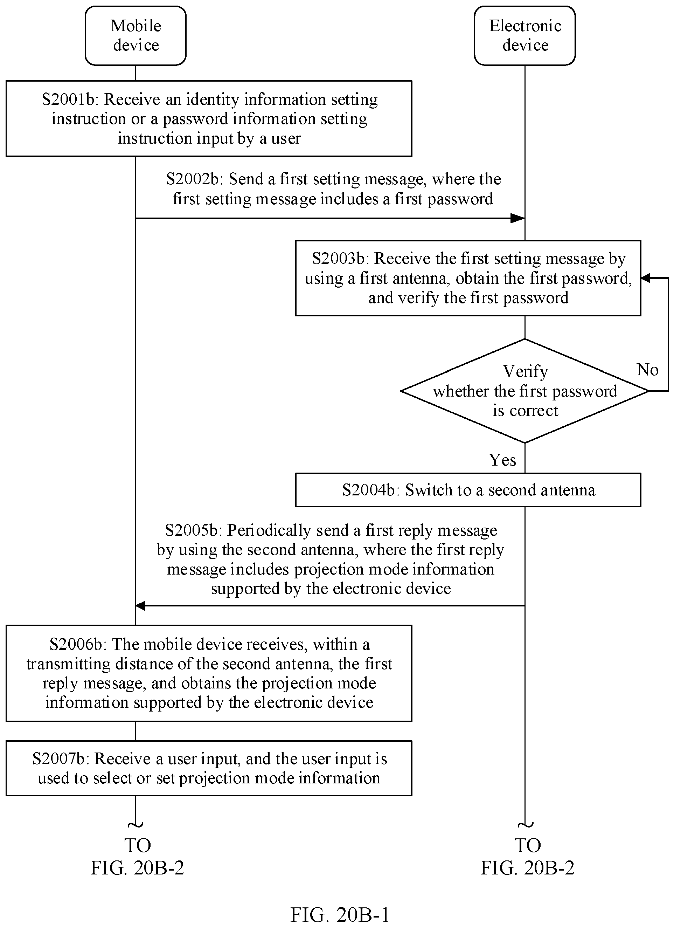

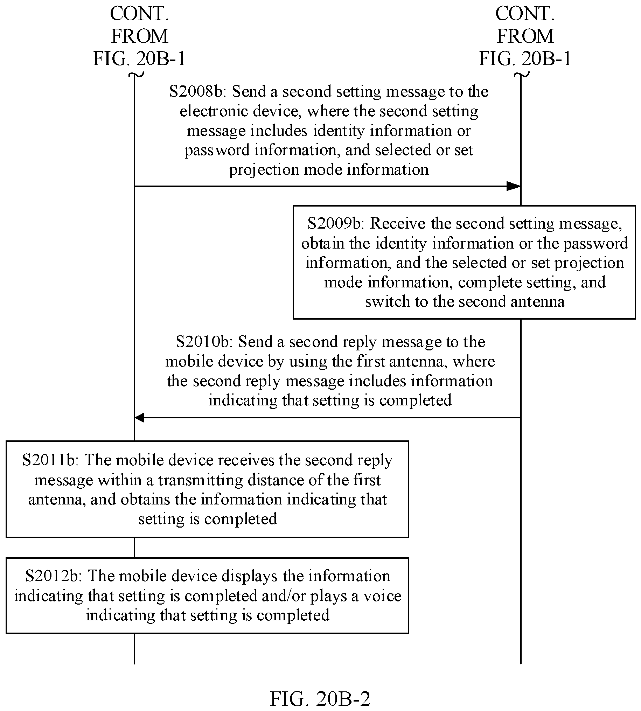

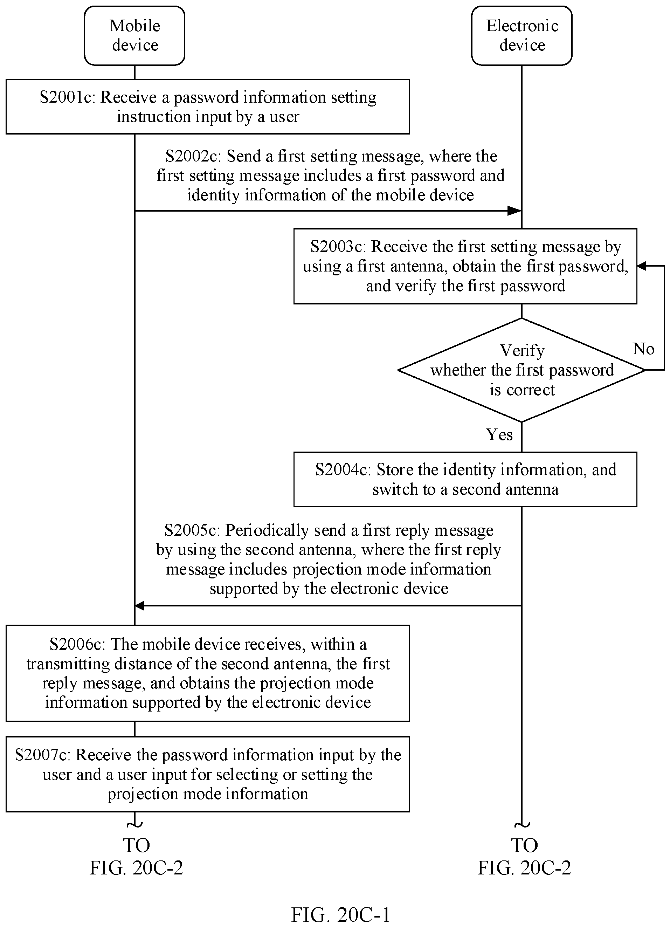

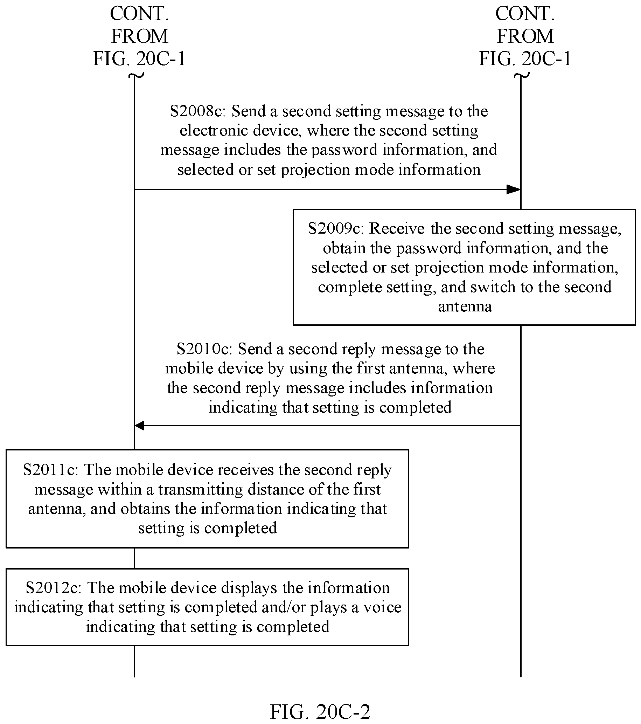

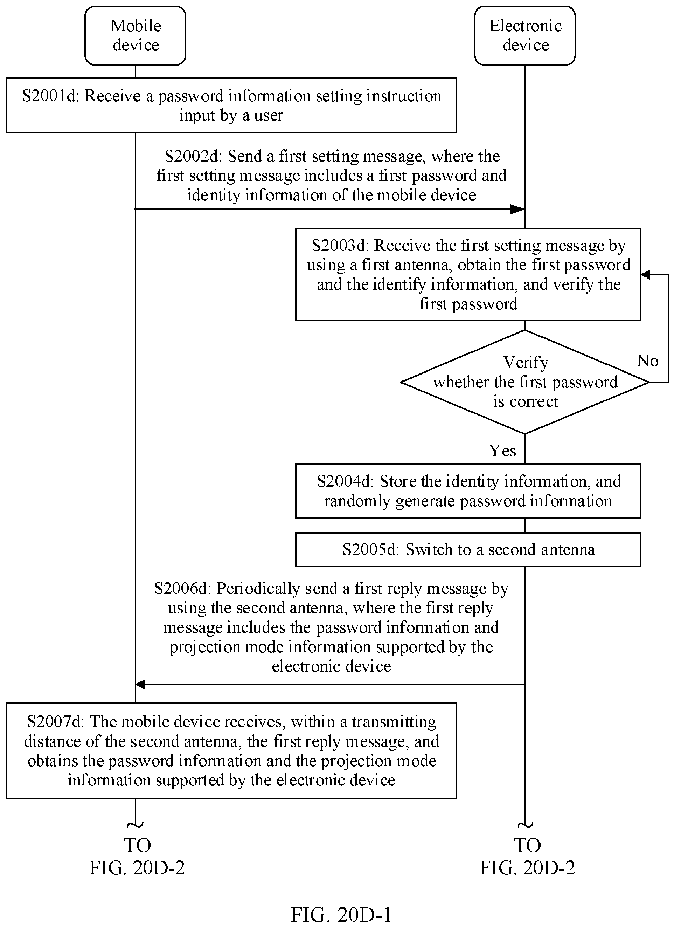

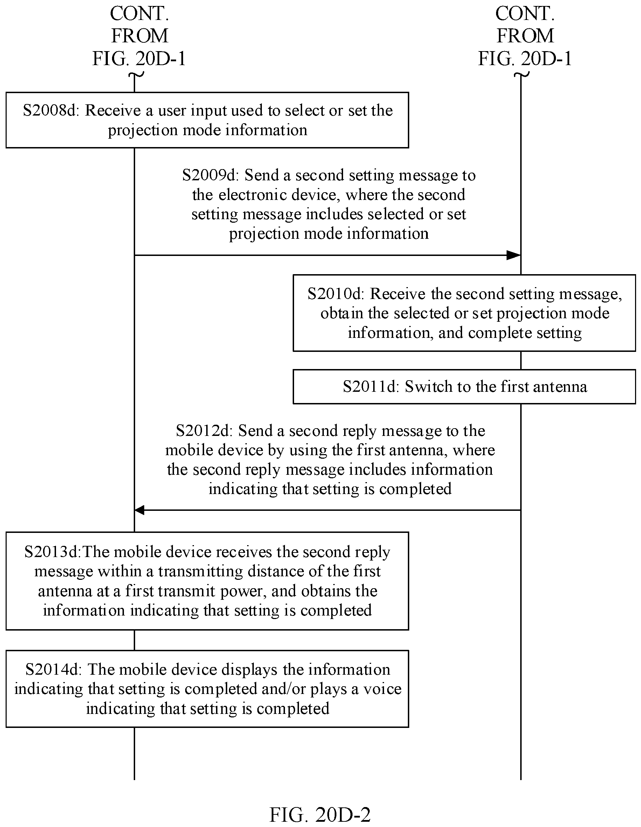

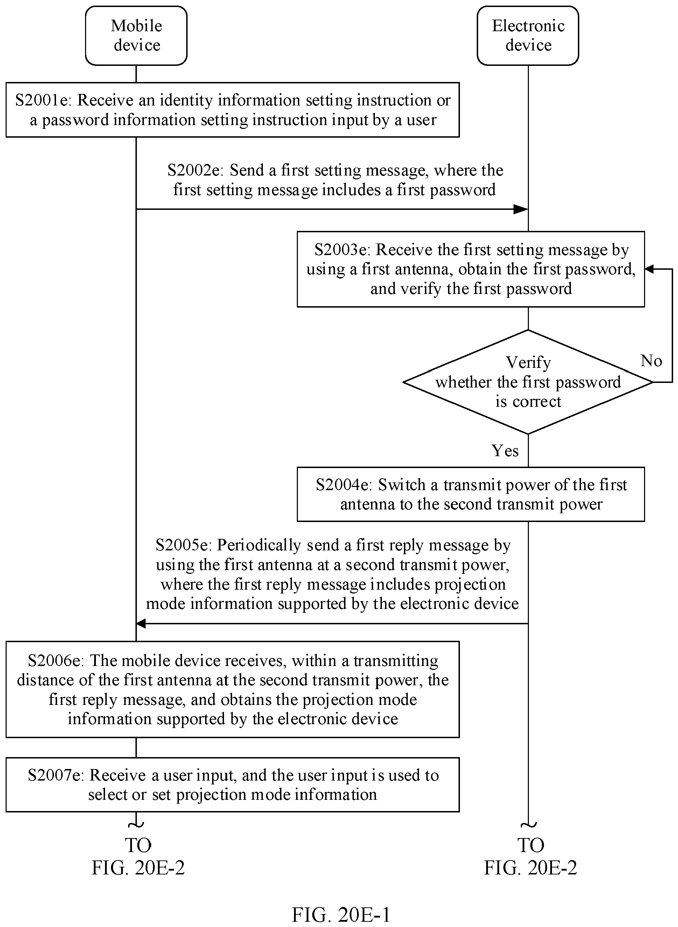

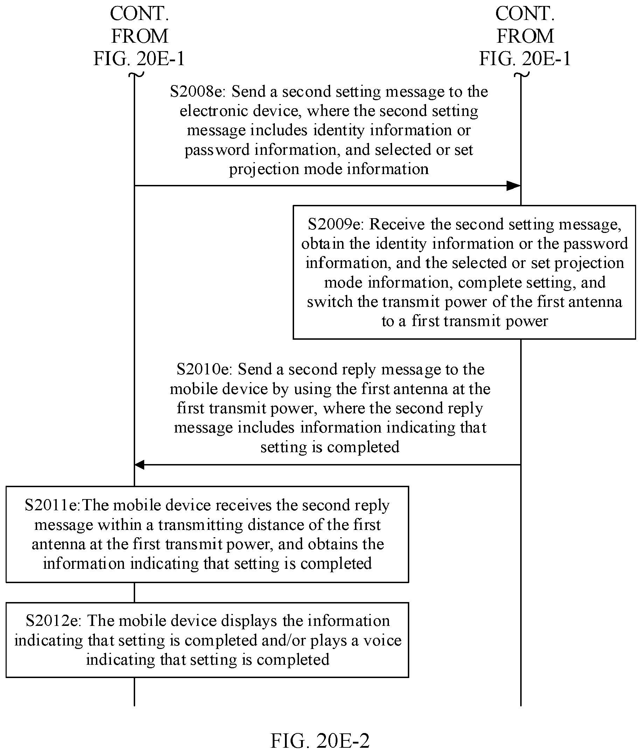

It should be emphasized that, unless specially specified, related content of an embodiment shown in FIG. 20D-1 and

FIG. 20D-2 is the same as the related content of the embodiment shown in FIG. 20C-1 and FIG. 20C-2. Details are not described herein.

All or a part of steps in this embodiment of this application may be freely combined.

As shown in FIG. 20E-1 and FIG. 20E-2, the steps of setting the identity information or the password information in the automatic projection method may include the following steps.

S2001e to S2003e are respectively the same as S2001b to S2003b. For S2001e to S2003e, refer to descriptions of S2001b to S2003b.

If the first password is verified to be correct, step S2004e is performed; otherwise, step S2003e continues to be performed again.

S2004e: The electronic device switches a transmit power of the first antenna to a second transmit power.

After the first password is verified to be correct, the electronic device switches the transmit power of the first antenna to the second transmit power. In an implementation, a transmitting distance of the first antenna at the second transmit power is less than or equal to a preset safety distance; and the transmitting distance of the first antenna at a first transmit power is greater than the preset safety distance. For example, the transmitting distance of the first antenna at the second transmit power is 0.3 meter, and the transmitting distance of the first antenna at the first transmit power is 10 meters. The preset safety distance may be preset by the user. For example, the preset safety distance may be 0.3 meter. The first transmit power and the second transmit power may be adjusted and set by the user.

S2005e: The electronic device periodically sends a first reply message by using the first antenna at the second transmit power, and the first reply message includes projection mode information supported by the electronic device. Optionally, the first reply message further includes the device information of the electronic device.

In an implementation, the first reply message is sent based on a first periodicity.

S2006e: The mobile device receives, within a transmitting distance of the first antenna at the second transmit power, the first reply message, and obtains the projection mode information supported by the electronic device.

If the mobile device is located beyond the transmitting distance of the first antenna at the second transmit power, the mobile device cannot receive the first reply message.

In an example, the mobile device is moved close to the electronic device from far to near. When the mobile device is moved to a location within the transmitting distance of the first antenna at the second transmit power, the mobile device receives an encrypted first reply message, and obtains a first reply message through decryption. The mobile device obtains, based on the first reply message, the projection mode information supported by the electronic device. Optionally, the mobile device may further obtain the device information of the electronic device based on the first reply message. The foregoing encryption manner and decryption manner are set only on the mobile device 100 and the electronic device 200. Another device cannot decrypt a received message.

S2007e and S2008e are respectively the same as S2007b and S2008b. For S2007e and S2008e, refer to descriptions of S2007b and S2008b.

S2009e: Receive a second setting message, obtain the identity information or the password information, and the selected or set projection mode information, complete setting, and switch the transmit power of the first antenna to the first transmit power.

Different from S2009b, in S2009e, the transmit power of the first antenna is switched to the first transmit power. After setting, the electronic device switches the transmit power of the first antenna to the first transmit power, to facilitate subsequent communication.

S2010e: Send a second reply message to the mobile device by using the first antenna at the first transmit power, where the second reply message includes information indicating that setting is completed.

The electronic device sends, by using the first antenna at the first transmit power, to the mobile device, the second reply message including the information indicating that setting is completed, and the second reply message is used to notify the mobile device that the electronic device is set.

S2011e: The mobile device receives the second reply message within the transmitting distance of the first antenna at the first transmit power, and obtains the information indicating that setting is completed.

S2012e is the same as S2012b. For S2012e, refer to descriptions of S2012b.

It should be noted that, in the foregoing steps, communication between the mobile device and the electronic device is performed by using wireless communications technologies such as Wi-Fi aware, BLE, and ZigBee, and only one of wireless communications technologies such as Wi-Fi aware, BLE, or ZigBee is used.

It should be emphasized that, unless specially specified, related content of an embodiment shown in FIG. 20E-1 and FIG. 20E-2 is the same as the related content of the embodiment shown in FIG. 20B-1 and FIG. 20B-2. Details are not described herein.

Similarly, a switching mechanism between the first antenna and the second antenna in embodiments related to FIG. 20C-1 and FIG. 20C-2 and FIG. 20D-1 and FIG. 20D-2 may also be similar to a switching mechanism in FIG. 20E-1 and FIG. 20E-2, and may be correspondingly modified to a switching mechanism between the first antenna at the first transmit power and the second antenna at the second transmit power. In addition, this also falls within protection scope of this application. Details are not described herein again.

In addition, the embodiment of Scenario 3 further includes FIG. 21 and FIG. 22. Specifically, last four steps in FIG. 9A-2 to FIG. 9D-3 and FIG. 9F-2 may be replaced with steps in FIG. 21, and last four steps in FIG. 9E-2 and FIG. 9E-3 may be replaced with steps in FIG. 22. In addition, the embodiment of Scenario 3 further provides steps of identifying the identity information or the password information and executing a part of a specific function of the electronic device shown in FIG. 23A and FIG. 23B and FIG. 24A and FIG. 24B. After steps shown in FIG. 21 to FIG. 24A and FIG. 24B are performed, steps shown in FIG. 25A to FIG. 25D may be further performed. The following provides specific descriptions with reference to FIG. 21 to FIG. 25D.

FIG. 21 and FIG. 22 each are a schematic flowchart of steps of executing a part of a specific function of an electronic device in an implementation of an automatic control method according to an embodiment of this application. In FIG. 21, S2112 to S2115 may replace S912a to S915a in FIG. 9A-2, may replace S912b to S915b in FIG. 9B-2 and FIG. 9B-3, may replace S911c to S914c in FIG. 9C-2, may replace S913d to S916d in FIG. 9D-3, and may replace S912f to S915f in FIG. 9F-2. In FIG. 22, S2212 to S2215 may replace S912e to S915e in FIG. 9E-2 and FIG. 9E-3.

As shown in FIG. 21, the steps of executing the part of the specific function of the electronic device may include the following steps.

S2112: The electronic device configures a projection receiving mode based on projection mode information corresponding to preset identity information or preset password information, and switches to the first antenna.

If the electronic device receives the second response message, or the electronic device receives the second response message within the preset duration, the electronic device may determine that the mobile device is located within the transmitting distance of the second antenna of the electronic device, that is, it is determined that a distance between the mobile device and the electronic device meets the set condition. For example, the second antenna is the weak antenna. For example, if the transmitting distance of the weak antenna is 0.3 m, and the electronic device receives the second response message, it may be determined that the distance between the mobile device and the electronic device is less than or equal to 0.3 m. In this case, the electronic device may configure the projection receiving mode of the electronic device based on the projection mode information corresponding to the preset identity information or the preset password information of the mobile device, and switch to the first antenna. In this way, the user only needs to move the mobile device close to the electronic device, so that the electronic device can automatically configure the corresponding projection receiving mode. This entire process is imperceptible to the user.

S2113: The electronic device sends a third notification message, and the third notification message includes information indicating that the electronic device is ready.

Optionally, the electronic device sends the third notification message to the mobile device by using the first antenna, and the third notification message includes the information indicating that the electronic device is ready, and the third notification message is used to notify the mobile device that the electronic device is ready and waits to receive the projection data.

Optionally, the electronic device broadcasts the third notification message by using the first antenna, and the third notification message includes the information indicating that the electronic device is ready, and the third notification message is used to notify that the electronic device is ready and waits to receive the projection data. In this way, any device (including but not limited to the mobile device) located within the transmitting distance of the first antenna may receive the third notification message, and may send the projection data to the electronic device.

S2114: The mobile device receives the third notification message within the transmitting distance of the first antenna, and obtains information indicating that the electronic device is ready.

S2115: The mobile device displays the message indicating that the electronic device is ready and/or plays a voice indicating that the electronic device is ready.

Optionally, after receiving the third notification message, the mobile device does not provide any prompt information for the user. That is, a procedure shown in FIG. 21 may not include S2115.

Optionally, the mobile device receives the third notification message sent by the electronic device, and displays text of the third notification message on a display, and/or plays a voice of the third notification message by using a speaker. For example, after receiving the third notification message sent by the electronic device, the mobile device displays, on the display, text that "The electronic device is configured", and/or plays a voice that "The electronic device is configured".

Alternatively, in S2115, the mobile device may not display the text of the third notification message, and/or may not play the voice of the third notification message, but notify the user in another manner. For example, the mobile device performs at least one of vibration, blinking, displaying a specific pattern, lighting a specific signal light, and the like, to notify the user that the mobile device receives the third notification message.

In this way, the user may intuitively perceive, by using the mobile device, that the projection receiving mode is configured for the electronic device.

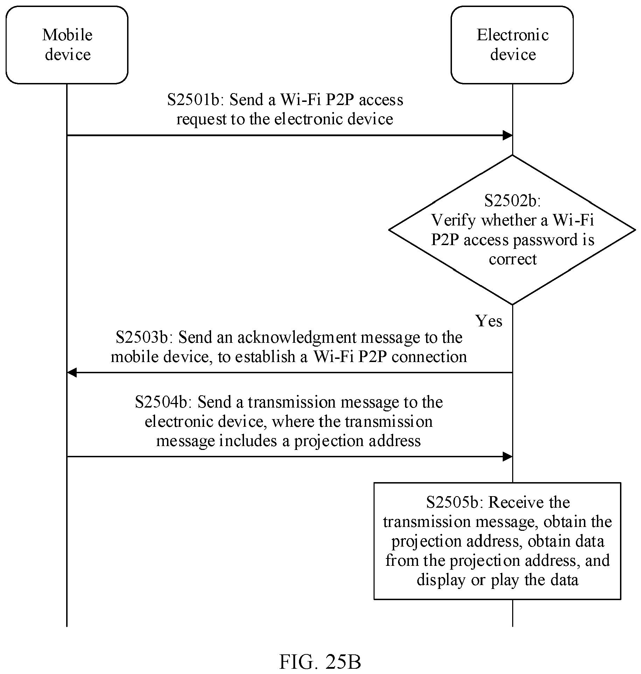

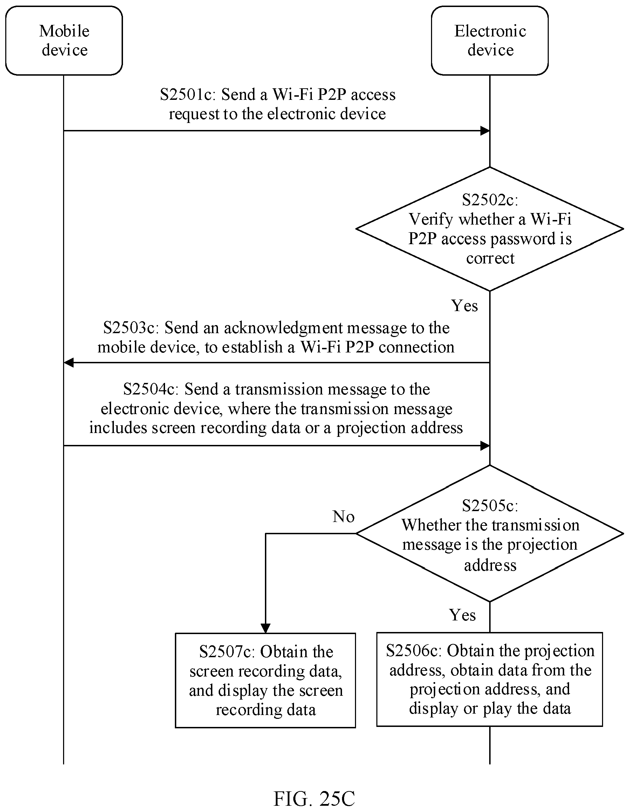

For ease of description, an example in which the transmitting distance of the second antenna is 30 cm is used for description. The user only needs to move the mobile device close to the electronic device for a short time, and does not need to move the mobile device close to the electronic device for a long time (for example, the distance between the mobile device and the electronic device is less than 30 cm). Procedures shown in FIG. 9A-1 and FIG. 9A-2 and FIG. 21 are used as an example. After S909a, the mobile device may be moved away from the electronic device, and does not need to be always within the transmitting distance of the second antenna of the electronic device until S2115. After the mobile device is moved away from the electronic device (for example, the distance between the mobile device and the electronic device is greater than 30 cm), S910a and S911a and S2112 to S2115 may also be performed. Optionally, S2113 to S2115 are not mandatory steps. For example, after S910a, specific duration is delayed, and then the mobile device performs S2501a shown in FIG. 25A, to start a procedure shown in FIG. 25A; or after S910a, specific duration is delayed, and then the mobile device performs S2501b shown in FIG. 25B, to start a procedure shown in FIG. 25B; or after S910a, specific duration is delayed, and then the mobile device performs S2501c shown in FIG. 25C, to start a procedure shown in FIG. 25C; or after S910a, specific duration is delayed, and then the mobile device performs S2501d shown in FIG. 25D, to start a procedure shown in FIG. 25D. An alternative manner of the procedure shown in FIG. 25D may also be performed based on the foregoing procedure, that is, after S910a, the procedure is performed after specific duration is delayed.

As shown in FIG. 22, the steps of executing the part of the specific function of the electronic device may include the following steps.

S2212: The electronic device configures a projection receiving mode based on projection mode information corresponding to preset identity information or preset password information, and switches the transmit power of the first antenna to the first transmit power.

Different from S2112, in S2212, the transmit power of the first antenna is switched to the first transmit power, and other content is the same as content in S2112.

S2213: The electronic device sends a third notification message to the mobile device by using the first antenna at the first transmit power, and the third notification message includes information indicating that the electronic device is ready.

The electronic device sends the third notification message to the mobile device by using the first antenna at the first transmit power, and the third notification message is used to notify the mobile device that the electronic device is ready and waits to receive the projection data.

S2214: The mobile device receives the third notification message within the transmitting distance of the first antenna at the first transmit power, and obtains the information indicating that the electronic device is ready.

S2215 is the same as S2115. For S2215, refer to descriptions of S2115.

For ease of description, an example in which the transmitting distance of the second antenna is 30 cm is used for description. The user only needs to move the mobile device close to the electronic device for a short time, and does not need to move the mobile device close to the electronic device for a long time (for example, the distance between the mobile device and the electronic device is less than 30 cm). Procedures shown in FIG. 9E-1 to FIG. 9E-3 and FIG. 22 are used as an example. After S909e, the mobile device may be moved away from the electronic device, and does not need to be always within the transmitting distance of the second antenna of the electronic device until S2215. After the mobile device is moved away from the electronic device (for example, the distance between the mobile device and the electronic device is greater than 30 cm), S910e and S911e and S2212 to S2215 may also be performed. Optionally, S2213 to S2215 are not mandatory steps. For example, after S910e, specific duration is delayed, and then the mobile device performs S2501a shown in FIG. 25A, to start a procedure shown in FIG. 25A; or after S910e, specific duration is delayed, and then the mobile device performs S2501b shown in FIG. 25B, to start a procedure shown in FIG. 25B; or after S910e, specific duration is delayed, and then the mobile device performs S2501c shown in FIG. 25C, to start a procedure shown in FIG. 25C; or after S910e, specific duration is delayed, and then the mobile device performs S2501d shown in FIG. 25D, to start a procedure shown in FIG. 25D. An alternative manner of the procedure shown in FIG. 25D may also be performed based on the foregoing procedure, that is, after S910e, the procedure is performed after specific duration is delayed.

Next, the mobile device and the electronic device may establish a Wi-Fi P2P channel with the electronic device based on the procedure shown in FIG. 25A, FIG. 25B, or FIG. 25C, and send projection data or a projection address (for example, a URL) to the electronic device by using the Wi-Fi P2P channel.

Before the procedure shown in FIG. 25A, FIG. 25B, or FIG. 25C is described, the mobile device and the electronic device no longer use a wireless communications technology in wireless communications technologies such as Wi-Fi aware, Bluetooth, and ZigBee, but use Wi-Fi P2P communication to establish the Wi-Fi P2P channel. In this case, for use of an antenna, a wireless routing device no longer uses a second antenna, and may use a first antenna, or may use a third antenna other than the first antenna and the second antenna.

As shown in FIG. 25A, steps of performing a corresponding projection function in the automatic projection method in this embodiment of this application may include the following steps.

S2501a: The mobile device sends a Wi-Fi P2P access request to the electronic device.

In an example, the Wi-Fi P2P access request includes a Wi-Fi P2P access password.

In an example, the Wi-Fi P2P access request does not include a Wi-Fi P2P access password.

S2502a: The electronic device verifies whether the Wi-Fi P2P access password is correct.

If verification succeeds, S2503a is performed.

In an implementation, if the verification fails, a quantity of verification times is recorded as 1, and verification is performed again after predetermined duration. If the verification fails again, a quantity of verification times is increased by 1. This process repeats. If the verification still fails after the quantity of verification times reaches a preset quantity of verification times, the verification is stopped.

In another implementation, if the verification fails, verification is performed again after preset duration. If the verification fails again, a message is sent to the mobile device, to notify the mobile device that the Wi-Fi P2P password is incorrect. Alternatively, the electronic device notifies the mobile device that the Wi-Fi P2P password is incorrect by outputting a voice or displaying a message.

In some embodiments, when the mobile device sends the Wi-Fi P2P access request to the electronic device, no password is required. In other words, when receiving the Wi-Fi P2P access request of the mobile device, the electronic device establishes a connection, and there is no password verification process. Therefore, in some embodiments, S2502a does not exist.

S2503a: The electronic device sends an acknowledgment message to the mobile device, to acknowledge that the Wi-Fi P2P connection is established.

The mobile device receives the acknowledgment message sent by the electronic device. The Wi-Fi P2P connection channel is established.

It should be noted that S2501a to S2503a are merely an example for description. In a process of establishing the Wi-Fi P2P channel between the mobile device and the electronic device, there may be a plurality of cyclic processes similar to S2501a to S2503a. However, a message sent by the mobile device to the electronic device and a message sent by the electronic device to the mobile device are replaced or changed. Details are not described herein again. S2504a: The mobile device sends a transmission message to the electronic device, and the transmission message includes screen recording data.

When the projection mode information of the electronic device corresponding to the identity information or the password information of the mobile device is a mirror projection mode, the mobile device sends the screen recording data to the electronic device by using a mirror projection mode such as a mirror mode miracast, an airplay mirror mode, or a lelink mirror mode. That is, the mobile device continuously performs screen recording, obtains the screen recording data, and sends the screen recording data to the electronic device.

S2505a: The electronic device receives the transmission message, obtains the screen recording data, and displays the screen recording data.

The screen recording data herein may be at least one of various display elements such as a video, audio, an image, text, and an animation. In this case, an interface displayed by the electronic device is consistent with an interface displayed by the mobile device.

In addition, this application further provides another implementation. As shown in FIG. 25B, steps of performing a corresponding projection function in the automatic projection method in this embodiment of this application may include the following steps.

S2501b to S2503b are respectively the same as S2501a to S2503a. For S2501b to S2503b, refer to descriptions of S2501a to S2503a.

S2504b: The mobile device sends a transmission message to the electronic device, and the transmission message includes a projection address.

When the projection mode information of the electronic device corresponding to the identity information or the password information of the mobile device is a push projection mode, the mobile device sends the projection address to the electronic device by using a push projection mode such as a DLNA protocol mode, an airplay push protocol mode, or a lelink protocol mode.

The projection address may be preset by the user, or may be set by the user on site.

S2505b: The electronic device receives the transmission message, obtains the projection address, obtains data from the projection address, and displays or plays data.

After receiving the transmission message, the electronic device obtains the projection address, obtains corresponding data from the projection address, and displays or plays the data. For example, after receiving a video address, the electronic device plays a video corresponding to the video address.

It should be emphasized that, unless specially specified, related content of an embodiment shown in FIG. 25B is the same as related content of an embodiment shown in FIG. 25A. Details are not described herein.

In some implementations, steps of performing a corresponding projection function in the automatic projection method in this embodiment of this application may include a combination of two manners in FIG. 25A and FIG. 25B. As shown in FIG. 25C, steps of performing a corresponding projection function in the automatic projection method in this embodiment of this application may include the following steps.

S2501c to S2503c are respectively the same as S2501b to S2503b. For S2501c to S2503c, refer to descriptions of S2501b to S2503b.

S2504c: The mobile device sends a transmission message to the electronic device, and the transmission message includes screen recording data or a projection address.

When the projection mode information of the electronic device corresponding to the identity information or the password information of the mobile device is a mirror projection mode, the mobile device sends the screen recording data to the electronic device by using a mirror projection mode such as a mirror mode miracast, an airplay mirror mode, or a lelink mirror mode. That is, the mobile device continuously performs screen recording, obtains the screen recording data, and sends the screen recording data to the electronic device.

When the projection mode information of the electronic device corresponding to the identity information or the password information of the mobile device is a push projection mode, the mobile device sends the projection address to the electronic device by using a push projection mode such as a DLNA protocol mode, an airplay push protocol mode, or a lelink protocol mode.

S2505c: The electronic device determines whether the transmission message includes the projection address.

After the electronic device determines that the transmission message includes the projection address, S2506c is performed; otherwise, S2507c is performed.

S2506c: After obtaining the projection address, the electronic device obtains data from the projection address, and displays or plays the data.

After obtaining the projection address, the electronic device obtains corresponding data from the projection address, and displays or plays the data. For example, after receiving a video address, the electronic device plays a video corresponding to the video address.

S2507c: After obtaining the screen recording data, the electronic device displays the screen recording data.

The screen recording data herein may be at least one of various display elements such as a video, audio, an image, text, and an animation. In this case, an interface displayed by the electronic device is consistent with an interface displayed by the mobile device.

It should be emphasized that, unless specially specified, related content of an embodiment shown in FIG. 25C is the same as the related content of the embodiment shown in FIG. 25A and FIG. 25B. Details are not described herein. In the embodiment shown in FIG. 25C, the electronic device autonomously determines whether the transmission message sent by the mobile device includes the projection address or the screen recording data, and displays the screen recording data when determining that the screen recording data is included; or obtains the data from the projection address and displays or plays the data when determining that the screen recording data is included.

It should be noted that the Wi-Fi P2P connection shown in FIG. 25A to FIG. 25C are merely an example. When both the mobile device and the electronic device access a wireless local area network (for example, both the mobile device and the electronic device access the wireless local area network by using Wi-Fi), the mobile device may negotiate, by using the wireless local area network, a projection mode (or a projection protocol) with the electronic device connected to the wireless local area network. A specific procedure may be shown in FIG. 25D. Before 2501d in FIG. 25D, the mobile device and the electronic device are connected to the network by using an electronic device such as a routing device, instead of establishing a P2P network connection. 2501d to S2504d in FIG. 25D are respectively the same as S2504c to S2507c in FIG. 25C. Details are not described herein again.

Certainly, FIG. 25D is merely an example. In an implementation, S2501d in FIG. 25D may also be replaced with "Send screen recording data to the electronic device". Correspondingly, S2502d and S2504d may be removed, and only S2503d is reserved. In an implementation, S2501d in FIG. 25D may also be replaced with "Send a projection address to the electronic device". Correspondingly, S2502d and S2503d may be removed, and only S2504d is reserved. In other words, after the procedure shown in FIG. 21 or FIG. 22, the procedures shown in FIG. 25A to FIG. 25D may be performed, or an alternative procedure of the procedure shown in FIG. 25D may be performed.

In addition, this application further provides an embodiment shown in FIG. 23A and FIG. 23B or FIG. 24A and FIG. 24B. In this way, projection can be implemented without the steps of setting the identity information or the password information. For example, a guest does not need to perform the steps of setting the identity information or the password information, and may directly use a procedure shown in FIG. 23A and FIG. 23B or FIG. 24A and FIG. 24B and the subsequent procedures shown in FIG. 25A to FIG. 25D to implement the projection function.

As shown in FIG. 23A and FIG. 23B, the steps of executing the part of the specific function of the electronic device may include the following steps.

S2301: Receive a first user input.

Specifically, the first user input may be a touch input, a voice input, or another input.

The first user input may be a plurality of inputs, or may be one input. In a case of a plurality of inputs, a part of the plurality of inputs are touch inputs, a part of the plurality of inputs are voice inputs, and the like.

S2302: The mobile device sends a first notification message, and the first notification message is used to obtain projection mode information supported by the electronic device.

The mobile device sends the first notification message in response to the first user input.

Optionally, the mobile device periodically sends the first notification message based on a specific periodicity. S2303: The electronic device receives the first notification message by using a first antenna, and switches to a second antenna.

After the electronic device receives the first notification message by using the first antenna, the electronic device switches to the second antenna.

S2304: The electronic device periodically sends a first response message by using the second antenna, and the first response message includes the projection mode information supported by the electronic device.

Optionally, the first response message further includes device information of the electronic device. The device information of the electronic device includes but is not limited to information such as an ID and a MAC address of the electronic device.

For example, in S2304, the electronic device periodically sends the first response message based on another periodicity. The another periodicity may be greater than, equal to, or less than the periodicity in S2302.

Alternatively, the electronic device periodically sends an encrypted first response message by using the second antenna, and the first response message includes the projection mode information supported by the electronic device; and encryption may be performed by using a preset key.

S2305: The mobile device receives, within a transmitting distance of the second antenna, the first response message, and obtains the projection mode information supported by the electronic device.

If the mobile device is located beyond the transmitting distance of the second antenna, the mobile device cannot receive the first response message.

In an example, the mobile device is moved close to the electronic device from far to near. When the mobile device is moved to a location within the transmitting distance of the second antenna, the mobile device receives an encrypted first response message, and obtains a first response message through decryption. The mobile device obtains, based on the first response message, the projection mode information supported by the electronic device. Optionally, the mobile device may further obtain the device information of the electronic device based on the first response message. The decryption may be performed by using the preset key. The foregoing encryption manner and decryption manner are set only on the mobile device 100 and the electronic device 200. Another device cannot decrypt a received message. S2306: Receive a second user input, where the second user input is used to select or set a projection mode. Specifically, the second user input may be a touch input, a voice input, or another input.

The second user input may be a plurality of inputs, or may be one input. In a case of a plurality of inputs, a part of the plurality of inputs are touch inputs, a part of the plurality of inputs are voice inputs, and the like.

For example, the user selects or sets, by using the second user input, a projection mode from the projection mode information supported by the electronic device.

S2307: The mobile device sends a second notification message to the electronic device, and the second notification message includes selected or set projection mode information.

The mobile device sends the second notification message to the electronic device in response to the second user input. Optionally, the second notification message may be sent to the electronic device after being encrypted.

Optionally, the mobile device sends the second notification message to the electronic device based on the device information (for example, the ID or the MAC address of the electronic device) of the electronic device. Alternatively, the mobile device sends an encrypted second notification message through broadcasting. Because only the mobile device and the electronic device are preconfigured with an encryption manner and a decryption manner, another device cannot decrypt a received encrypted second notification message.

S2308: The electronic device receives the second notification message, obtains the selected or set projection mode information, configures a projection receiving mode, and switches to the first antenna.

The electronic device obtains, based on the received second notification message, projection mode information selected or set on the mobile device, configures the projection mode of the electronic device based on the projection mode information, and switches to the first antenna.

Optionally, the electronic device receives the encrypted second notification message, to obtain, through decryption, the projection mode information selected or set on the mobile device, performs configuration, and switches to the first antenna.

S2309: The electronic device sends a second response message to the mobile device by using the first antenna, and the second response message includes information indicating that the electronic device is ready.

The electronic device sends the second response message to the mobile device by using the first antenna, and the second response message includes the information indicating that the electronic device is ready; and the second response message is used to notify the mobile device that the electronic device is ready.

S2310: The mobile device receives the second response message within a transmitting distance of the first antenna of the electronic device, and obtains the information indicating that the electronic device is ready.

S2311: The mobile device displays the information indicating that the electronic device is ready and/or plays a voice indicating that the electronic device is ready.

Optionally, after receiving the second response message, the mobile device does not provide any prompt information for the user.

Optionally, the mobile device receives the second response message sent by the electronic device, and displays text of the second response message on a display, and/or plays a voice of the second response message by using a speaker. For example, after receiving the second response message sent by the electronic device, the mobile device displays, on the display, text that "The electronic device is ready", and/or plays a voice that "The electronic device is ready". Alternatively, in S2311, the mobile device may not display the text of the second response message, and/or may not play the voice of the second response message, but notify the user in another manner. For example, the mobile device performs at least one of vibration, blinking, displaying a specific pattern, lighting a specific signal light, and the like, to notify the user that the mobile device receives the third notification message.

In this way, the user may intuitively perceive, by using the mobile device, that the projection receiving mode is configured for the electronic device.

It should be noted that S2309 to S2311 are optional steps, and are not mandatory steps. In other words, in some embodiments, the steps of executing the part of the specific function of the electronic device may include at least one of S2309 to S2311, or may not include S2310 and S2311.

It should be noted that, in the foregoing steps, communication between the mobile device and the electronic device is performed by using wireless communications technologies such as Wi-Fi aware, BLE, and ZigBee, and only one of wireless communications technologies such as Wi-Fi aware, BLE, or ZigBee is used.

The procedure of the steps of executing the part of the specific function of the electronic device shown in FIG. 24A and FIG. 24B is basically the same as the procedure of the steps of executing the part of the specific function of the electronic device shown in FIG. 23A and FIG. 23B. A difference lies only in that FIG. 23A and FIG. 23B show switching between the first antenna and the second antenna, and FIG. 24A and FIG. 24B show switching between a first transmit power of the first antenna and a second transmit power of the first antenna. For detailed content in FIG. 24A and FIG. 24B, refer to detailed content in FIG. 23A and FIG. 23B and the foregoing related content in this application. Details are not described herein again.

After the procedure in FIG. 23A and FIG. 23B or FIG. 24A and FIG. 24B is performed, the procedures in FIG. 25A to FIG. 25D may be performed, so as to implement projection.

An application scenario of this embodiment of this application may be as follows: A user holds a mobile device and wants to perform projection to one of a plurality of electronic devices with a projection function. For ease of description, an example in which the mobile device performs projection to an electronic device 3 among an electronic device 1, an electronic device 2, and an electronic device 3 is used for description. When a distance between the mobile device and each of the electronic device 1, the electronic device 2, and the electronic device 3 is within 30 cm, the electronic device 1, the electronic device 2, and the electronic device 3 all switch to the second antenna. Then, the user holds the mobile device only close to the electronic device 3, but not close to the electronic device 1 and the electronic device 2. Therefore, the mobile device receives only a second notification message sent by the electronic device 3, and sends only a second response message to the electronic device 3. Correspondingly, only the electronic device 3 configures a projection receiving mode based on projection mode information corresponding to identity information or password information of the mobile device. In addition, after switching to the first antenna, only the electronic device 3 establishes a Wi-Fi P2P connection to the mobile device, and then receives screen recording data or a projection address sent by the mobile device for display. In this scenario, for a mirror projection mode, the user only needs to move the mobile device close to the electronic device from far to near, to implement mirror projection without performing another operation. For a push projection mode, after the user presets the projection address, the user only needs to move the mobile device close to the electronic device from far to near without performing another operation, to implement push projection. For the user, this is very convenient. Especially for people with a weak operation capability, such as the elderly, children, and the disabled, this is more convenient.

Embodiments of this application provide an automatic projection method, an electronic device, and a computer-readable storage medium, so that projection can be conveniently and quickly performed, and operations are simplified, to improve efficiency and improve user experience. The automatic projection method provided in embodiments of this application is applicable to the following electronic device and mobile device.

In addition, in the foregoing procedure, to ensure security of message transmission, provided that a message that is not sent by a second antenna (that is, not a weak antenna) and a message sent by the mobile device are involved, an encryption manner may be applied, and a message (that is, ciphertext data) is sent after plaintext data is encrypted; or an encryption manner is applied to some steps related to a key message, and a message (that is, ciphertext data) is sent after plaintext data is encrypted. After receiving the message, the electronic device obtains plaintext data through decryption. A key required for encryption and decryption may be a preset key, or may be a key negotiated by both parties. In this solution, the foregoing encryption and decryption manners applied to the message sent by the mobile device and all or a part of the message that is not sent by the second antenna (that is, not the weak antenna), and may be also applied to another scenario or embodiment of this application. In other words, the foregoing manners may be also applied to another technical solution of this application. For example, a first setting message or a second setting message.

In addition, in an implementation, the electronic device may display a 6-digit PIN code on a display of the electronic device (the 6-digit PIN code may change with time, for example, the 6-digit PIN code is one 6-digit PIN code in two minutes, is automatically changed to another 6-digit PIN code after two minutes, and changes like this, and each 6-digit PIN code is random), and then the user may input, on the mobile device, the 6-digit PIN code displayed on the electronic device. Alternatively, the display of the electronic device and the mobile device simultaneously display a number, and the user is required to confirm whether the numbers are equal. After the user confirms that the numbers are equal, the electronic device stores a trust list 1, and the mobile device stores a trust list 2. In addition, the electronic device and the mobile device negotiate a symmetric key. The trust list 1 includes a universally unique identifier (universally unique identifier, UUID) generated by a MAC address of the mobile device and the like and the symmetric key negotiated by both parties. The trust list 2 includes a universally unique identifier (universally unique identifier, UUID) generated by a MAC address of the electronic device and the like and the symmetric key negotiated by both parties. The UUID in the trust list 1 is different from the UUID in the trust list 2. The symmetric key in the trust list 1 is the same as the symmetric key in the trust list 2. In an example, the MAC address may be considered as the UUID. During subsequent projection, a session key generated by the symmetric key in the trust list is used to encrypt a request and response based on the MAC address of the peer party, for example, data transmission. This implementation may also be applied to another scenario or embodiment of this application, that is, this implementation may also be applied to another technical solution of this application.

It should be noted that all or some of the steps in embodiments of this application may be freely combined. A technical solution obtained through freely combining also falls within the scope of this application.

For Scenario 4, this application provides a method for automatically accessing a wireless routing device, a wireless routing device, and a computer-readable storage medium, so that after initial setting by a user, the wireless routing device can be conveniently and quickly accessed subsequently, overall time consumption is relatively low, and operations are simplified, to improve efficiency and improve user experience.

FIG. 26 is a schematic diagram of a scenario of a method for automatically accessing a wireless routing device according to an embodiment of this application. A person skilled in the art understands that FIG. 26 is a specific scenario diagram of FIG. 1. The electronic device 200 in FIG. 1 is a wireless routing device 200 in FIG. 26. As shown in FIG. 26, the mobile device 100 is moved close to the wireless routing devices 200, 300, and 400 from far to near (the three wireless routing devices are merely examples; a quantity of wireless routing devices may be larger or smaller). The mobile device 100 does not access any one of the wireless routing devices 200, 300, and 400 through a Wi-Fi AP. When the mobile device 100 is located at a location relatively away from the wireless routing devices, no one of the wireless routing devices 200, 300, and 400 is detected. When the mobile device 100 is located at a location relatively close to the wireless routing devices, the wireless routing devices 200, 300, and 400 are detected. The mobile device 100 gradually moves from far to near. The foregoing "moving gradually from far to near" does not strictly require that the mobile device be closer to the wireless routing device after each movement, but on the whole, the mobile device may be moved from a location away from the wireless routing device to a location close to the wireless routing device, and a case in which the mobile device is farther away from the wireless routing device after movement may exist.

The wireless routing devices 300 and 400 are around the wireless routing device 200. The wireless routing devices 300 and 400 are not mandatory. In some cases, only the mobile device 100 and the wireless routing device 200 exist, and no wireless routing device 300 or 400. The wireless routing device 200 and the possible wireless routing device 300 and 400 may be located in various places such as a home, an office, a shopping mall, or a school. For simplicity, the mobile device 100 and the wireless routing device 200 (no other wireless routing device is around the wireless routing device 200) are taken as an example, to describe a process of establishing first communication between the mobile device 100 and the wireless routing device 200 in different modes.

In one mode, the wireless routing device 200 broadcasts a message frame based on a specific periodicity, and the mobile device 100 receives the message frame when the mobile device 100 is moved to a location within a specific distance from the wireless routing device 200; the mobile device 100 sends a request message to the wireless routing device 200; after the wireless routing device 200 receives the request message, the wireless routing device 200 sends an identifier and authentication information to the mobile device 100; and after the mobile device 100 receives the identifier and the authentication information sent by the wireless routing device 200, the mobile device 100 accesses a Wi-Fi network of the wireless routing device 200 by using the identifier and the authentication information, so as to access the Internet.

In another mode, when the mobile device 100 is moved to a location within a specific distance from the wireless routing device 200, the user makes the mobile device 100 send a request message by inputting (for example, a voice input or a touch input) to the mobile device 100; after the wireless routing device 200 receives the request message, the wireless routing device 200 sends an identifier and authentication information to the mobile device 100; and after the mobile device 100 receives the identifier and the authentication information sent by the wireless routing device 200, the mobile device 100 accesses a Wi-Fi network of the wireless routing device 200 by using the identifier and the authentication information, so as to access the Internet.

In still another mode, when the mobile device 100 is moved to a location within a specific distance from the wireless routing device 200, the mobile device 100 detects an identifier of the wireless routing device 200, and the user inputs a password obtained in advance (for example, a voice input or a touch input) for the identifier, so that the mobile device 100 sends a request message; after the wireless routing device 200 receives the request message, the wireless routing device 200 performs verification; and after the verification of the wireless routing device 200 succeeds, the mobile device 100 accesses a Wi-Fi network of the wireless routing device 200, so as to access the Internet.

In the foregoing three modes, broadcasting and sending of the foregoing messages (such as a message frame, a request message, an identifier, and an authentication information) may be implemented by using a wireless communications technology such as Wi-Fi aware, Bluetooth, or ZigBee. Bluetooth in this application includes bluetooth low energy (bluetooth low energy, BLE). The identifier may be an SSID, a basic service set identifier (basic service set identifier, BSSID), a MAC address of the wireless routing device, or the like.

The authentication information includes but is not limited to a security mode. The security mode in this application includes but is not limited to: no encryption, wired equivalent privacy (wired equivalent privacy, WEP), Wi-Fi protected access 2-pre-shared key (wi-fi protected access 2-pre-shared key, WPA2-PSK), Wi-Fi protected access/wi-fi protected access 2-pre-shared key (wi-fi protected access/wi-fi protected access 2-pre-shared key, WPA/WPA2-PSK).

The wireless routing device in this embodiment of this application includes a wireless router, and also includes a wireless routing device that provides a function of the wireless router. For example, if a mobile device can enable a wireless hotspot function, the mobile device is the wireless routing device.

When a mobile device connects to a wireless router for the first time, a Wi-Fi selection interface of the mobile device may display a plurality of SSIDs with the same or similar names, such as HUAWEI-M6LWHQ, HUAWEI-M8LQHW, HUAWEI-ML6WQH, HUAWEI-M6LQWH, HUAWEI-M8LWHQ, and HUAWEI-M8LWQH. Because SSID names are similar or even may be the same, it is difficult for the user to distinguish and identify the SSIDs, and the user needs to carefully browse and identify the SSIDs one by one. Consequently, the user consumes a lot of energy and feels tired. In addition, the wireless routing device can be accessed only after the user browses and identifies the wireless routing device, for example, determines that the wireless routing device is HUAWEI-M8LWQH, and inputs a correct password on an interface displayed after HUAWEI-M8LWQH is selected. In this way, the user spends much effort, identification and recognition are time-consuming, an operation is complex, and user experience is relatively poor. In addition, for people with a weak operation capability, such as the elderly, children, and the disabled, this is not conducive to their operation. For example, the elderly cannot correctly input a password due to relatively old age, insensitivity of finger touch, weakening of eyesight, reduced memory, and the like, and user experience is relatively poor. Even if only one wireless routing device and no another wireless routing device exists, the user needs to separately tap on a plurality of interfaces of the mobile device, and input a connection password. An operation is still complex. Such complex operation is especially inconvenient for people with a weak operation capability, such as the elderly or children. Therefore, a technical solution in an embodiment of Scenario 4 is provided.

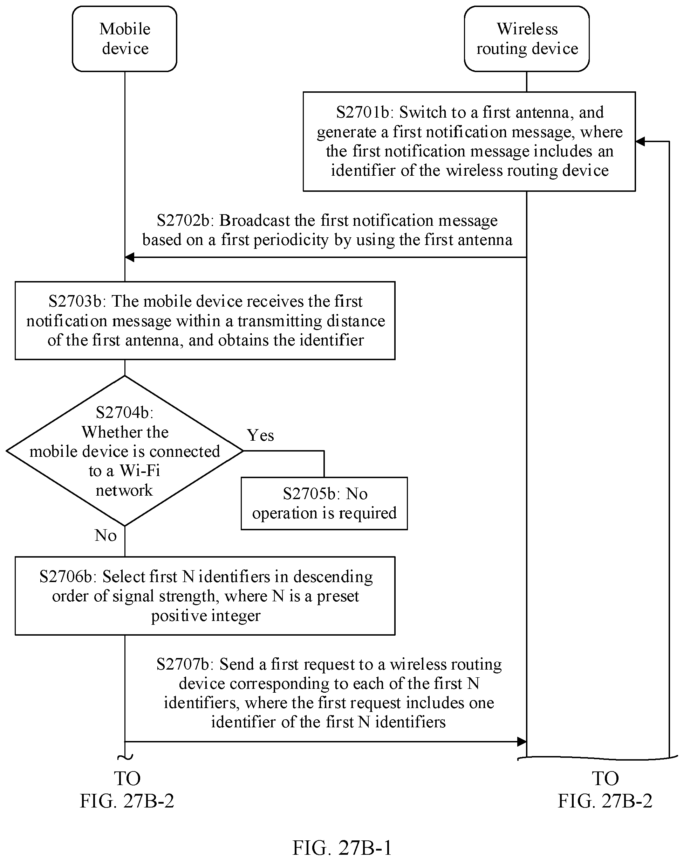

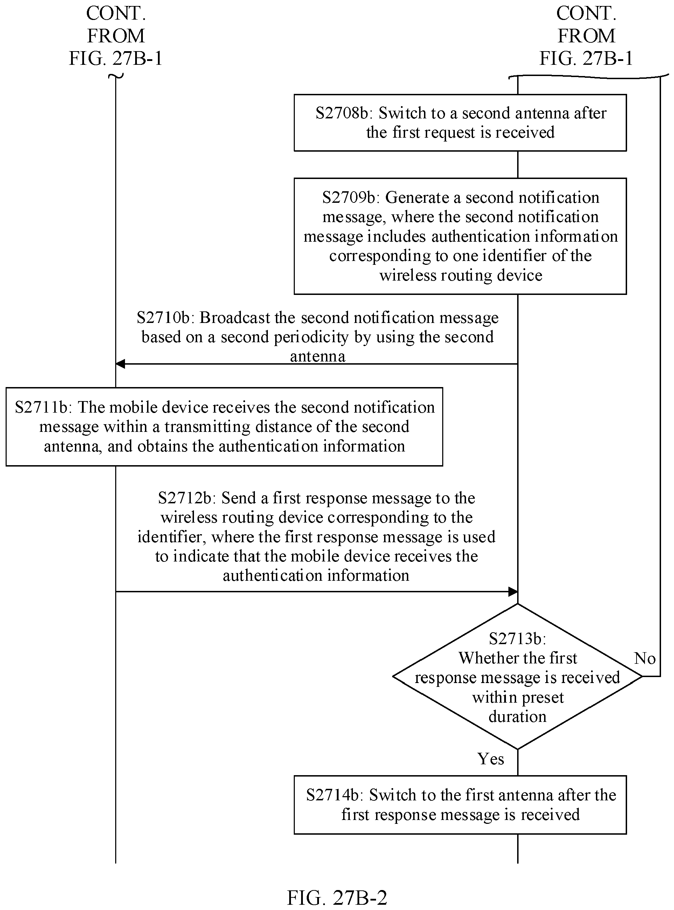

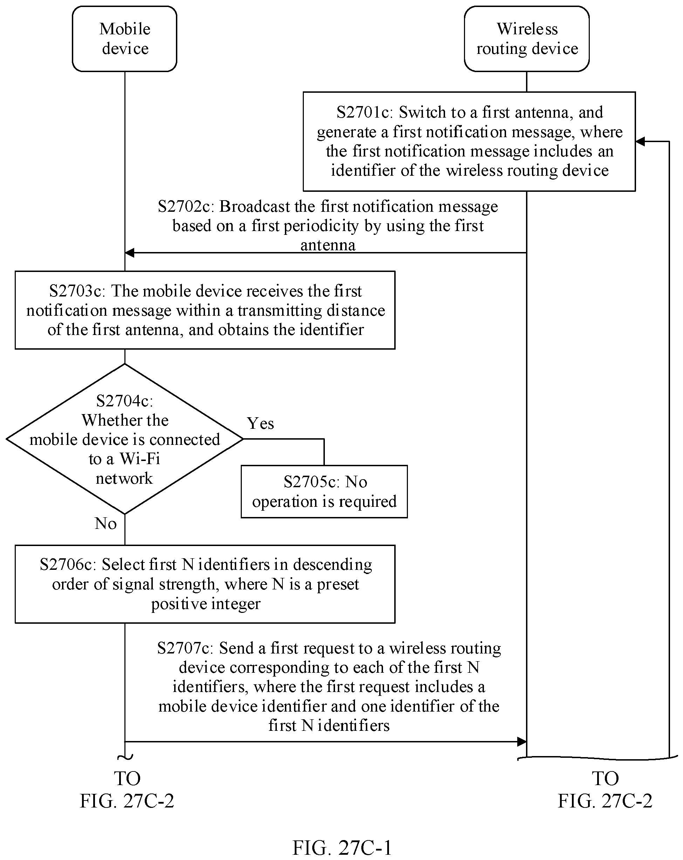

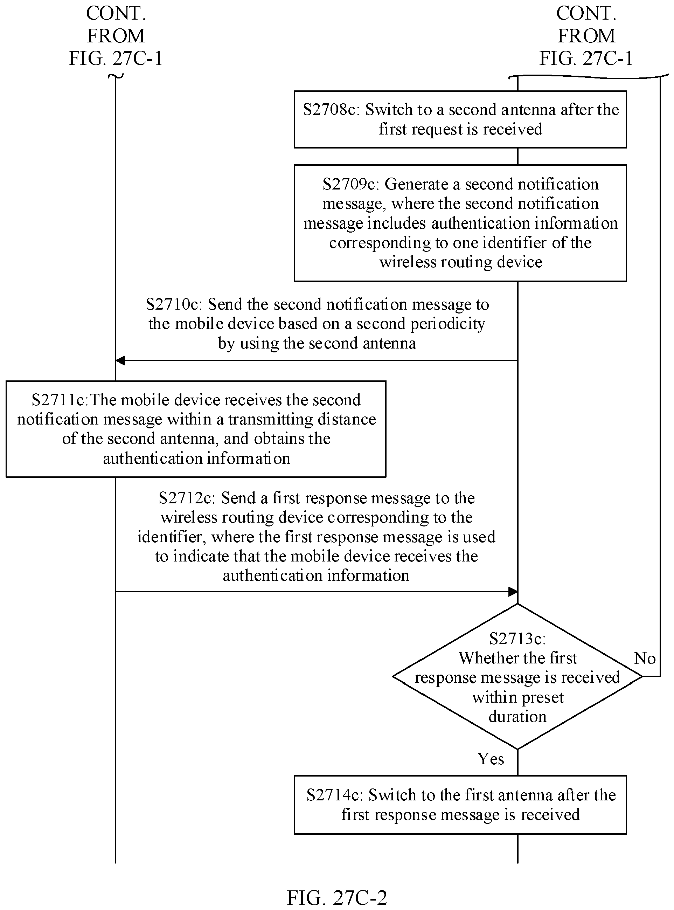

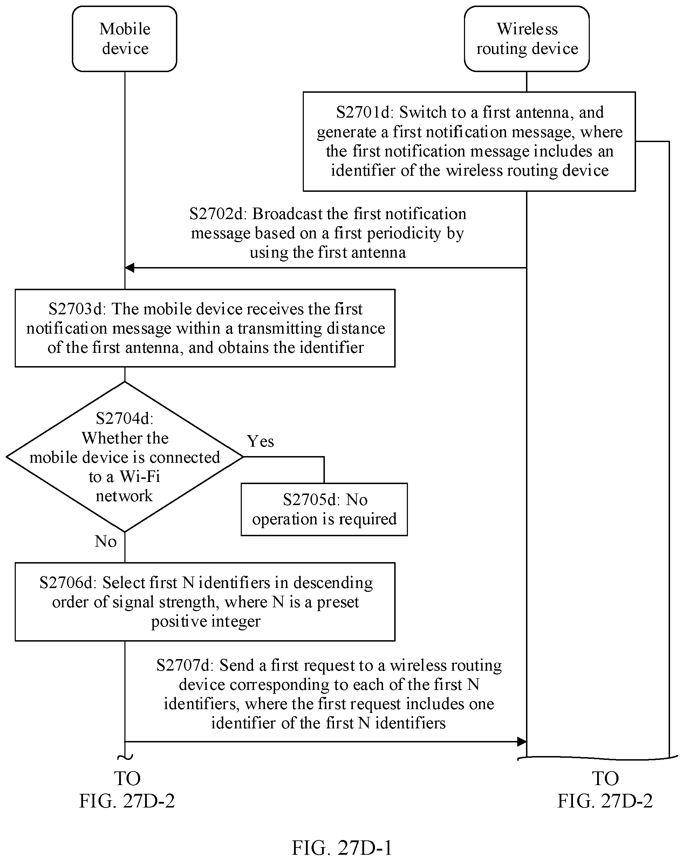

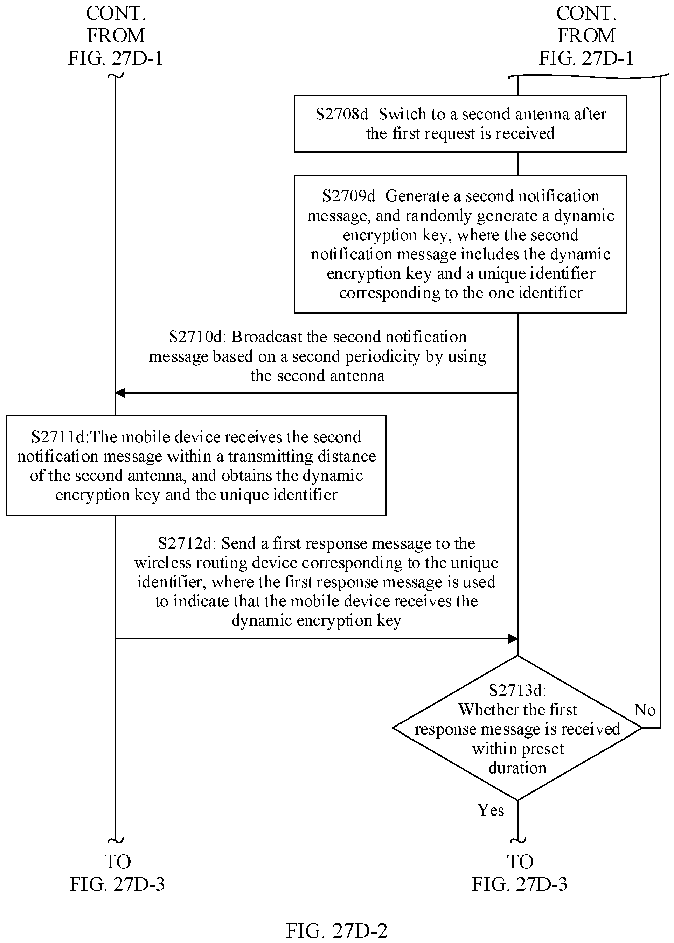

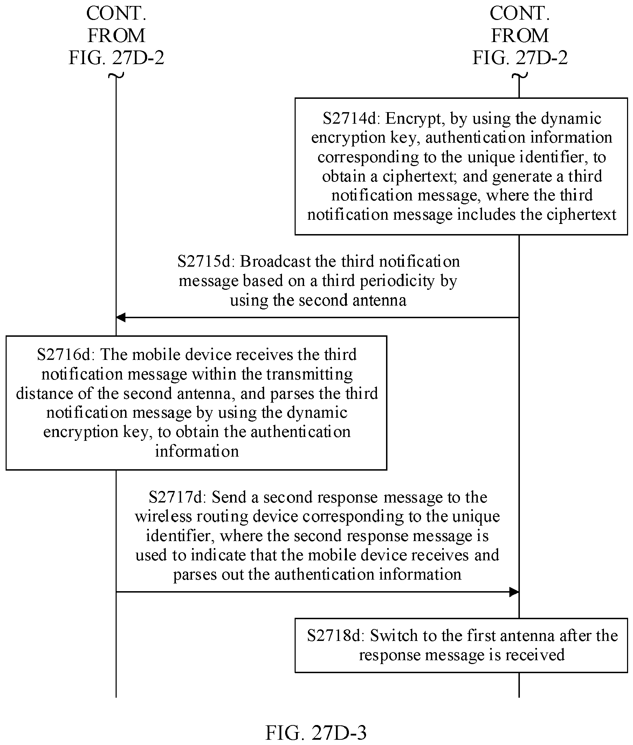

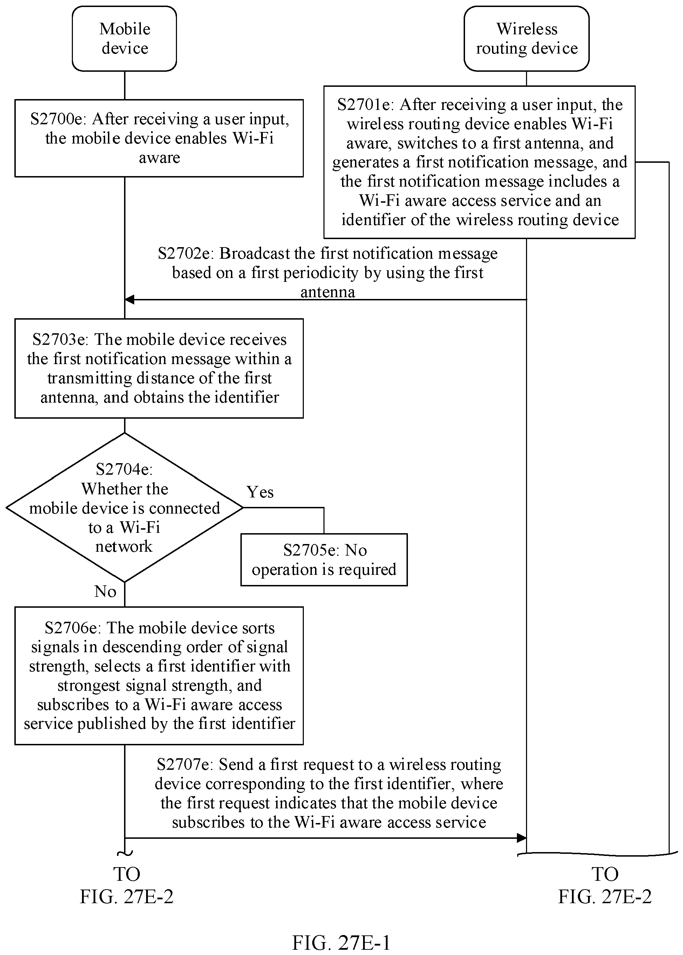

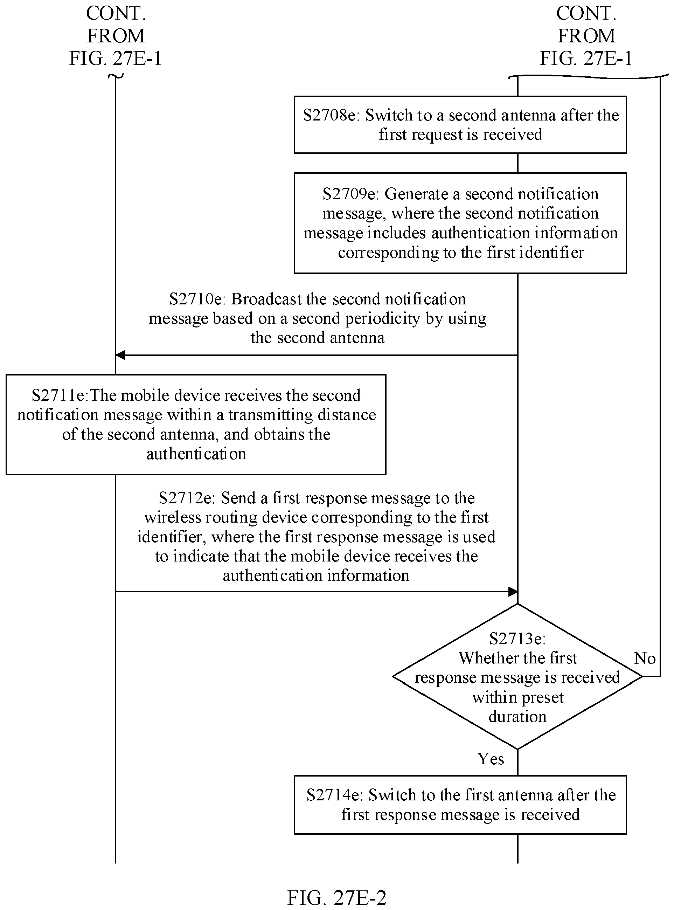

FIG. 2 to FIG. 9F-1 and FIG. 9F-2 and content corresponding to FIG. 2 to FIG. 9F-1 and FIG. 9F-2 are also applicable to the embodiment of Scenario 4. In addition to FIG. 2 to FIG. 9F-1 and FIG. 9F-2 and the content corresponding to FIG. 2 to FIG. 9F-1 and FIG. 9F-2, the embodiment of Scenario 4 further includes FIG. 27A-1 and FIG. 27A-2 to FIG. 29. FIG. 27A-1 and FIG. 27A-2 to FIG. 27F-1 and FIG. 27F-2 each are a schematic flowchart of steps of executing a part of an access function of a wireless routing device in a method for automatically accessing a wireless routing device according to an embodiment of this application. FIG 28 is a schematic flowchart of steps of executing a remaining part of an access function of a wireless routing device in a method for automatically accessing a wireless routing device according to an embodiment of this application. FIG. 29 is a flowchart of accessing a wireless routing device by using Wi-Fi aware by a mobile device in a method for automatically accessing a wireless routing device according to an embodiment of this application.

A person skilled in the art understands that procedure shown in FIG. 27A-1 and FIG. 27A-2 to FIG. 27F-1 and FIG. 27F-2 is a specific application of the procedure shown in FIG. 9A-1 and FIG. 9A-2 to FIG. 9F-1 and FIG. 9F-2 in the method for automatically accessing a wireless routing device. FIG. 27A-1 and FIG. 27A-2 to FIG. 27F-1 and FIG. 27F-2 show procedure of the steps of executing the part of the access function of the wireless routing device in different embodiments. The following describes in detail with reference to FIG. 27A-1 and FIG. 27A-2 to FIG. 27F-1 and FIG. 27F-2.

The method for accessing the wireless routing device provided in this embodiment of this application relates to the mobile device and the wireless routing device. Both the mobile device and the wireless routing device enable at least one of communication functions such as Wi-Fi aware, Bluetooth, and ZigBee, and both the mobile device and the wireless routing device enable a same communication function. For example, both the mobile device and the wireless routing device enable the Wi-Fi aware communication function. The mobile device does not access the wireless routing device through a Wi-Fi AP; the mobile device is moved close to the wireless routing device from far to near; and the foregoing from far to near is general, and does not strictly require that the mobile device be closer to the wireless routing device after each movement, but on the whole, the mobile device may be moved from a location away from the wireless routing device to a location close to the wireless routing device. In this case, as shown in FIG. 27A-1 and FIG. 27A-2, the steps of setting the identity information or the password information in the automatic projection method may include the following steps.

S2701a: The wireless routing device switches to a first antenna, and generates a first notification message, and the first notification message includes an identifier of the wireless routing device.

For example, the identifier of the wireless routing device includes at least one of an SSID and a BSSID of the wireless routing device. The BSSID is a unique MAC address that identifies the SSID. The BSSID uniquely identifies the SSID of the wireless routing device. The first notification message may further include other information. This is not limited in this application.

In an implementation, the first antenna may be a strong antenna.

Optionally, the first notification message is broadcast in a plaintext form.

S2702a: The wireless routing device broadcasts the first notification message based on a first periodicity by using the first antenna.

In an example, the wireless routing device periodically broadcasts the first notification message based on the first periodicity (for example, 2s or 5s, and this may be specifically set by the user) by using the strong antenna. A transmitting distance of the strong antenna is a first distance (for example, 5 meters or 10 meters, and this may be specifically set by the user). If the mobile device is moved to a location within the first distance from the wireless routing device, the mobile device may receive the first notification message.

S2703a: The mobile device receives the first notification message within a transmitting distance of the first antenna, and obtains the identifier.

The mobile device cannot receive the first notification message when the mobile device is located outside the transmitting distance of the strong antenna. In an example, the mobile device is moved close to the wireless routing device from far to near. When the mobile device is moved to a location within the transmitting distance of the strong antenna, the mobile device receives the first notification message, and obtains the SSID based on the first notification message. Further, the mobile device may further obtain the BSSID or even other information based on the first notification message.

In one scenario, a guest first visits the host's home, and the guest enters the host's home from far to near. A guest's mobile device is initially located near the door of the host's home, and in this case, the guest's mobile device is located within the first distance of the wireless routing device in the host's home. At this time, the guest's mobile device receives the first notification message, and obtains the SSID of the wireless routing device in the host's home based on the first notification message, and further, may obtain the BSSID and even other information.

S2704a: Determine whether the mobile device is connected to a Wi-Fi network.

Whether the mobile device is connected to the Wi-Fi network is determined, to adapt to some scenarios. For example, a guest is a neighbor of the host, and a guest's mobile device is connected to a wireless routing device in the guest's home. After the guest holds the mobile device and enters the host's home for the first time, the guest's mobile device is still connected to the wireless routing device in the guest's home. In this scenario, it is unnecessary to further switch the wireless routing device in the guest's home connected to the guest's mobile device to the wireless routing device in the host's home. Based on this consideration, whether the mobile device is connected to a Wi-Fi network is first determined.

If the mobile device is connected to the Wi-Fi network, S2705a is performed. If the mobile device is not connected to the Wi-Fi network, S2706a is performed.

Optionally, S2704a is not a mandatory step. In some cases, the step of setting the identity information or the password information in the automatic projection method may not include S2704a and S2705a. Instead, S2706a is directly performed after S2703a.

S2705a: No operation is required.

If the mobile device is connected to a Wi-Fi network, the mobile device does not need to be operated, that is, no operation is required.

S2706a: Select first N identifiers in descending order of signal strength, where N is a preset positive integer.

If the mobile device is not connected to a Wi-Fi network, the mobile device sorts detected identifiers in descending order of signal strength, and selects the first N identifiers, where N is a preset positive integer, for example, N is 1, 3, or 5. For example, a quantity M of detected identifiers is 10, and preset N is 1. After the identifiers are sorted in descending order of signal strength, the first identifier is selected.

This selection is based on the following consideration: Generally, the signal strength of the identifier of the wireless routing device closer to the mobile device is stronger, and the signal strength of the identifier of the wireless routing device farther from the mobile device is weaker. However, a wireless routing device is also very close but not closest to the mobile device. In this case, it is possible that signal strength of a very close wireless routing device is the strongest, but signal strength of a nearest wireless routing device is not the strongest. For example, the wireless routing device 200 is closest to the mobile device 100, and the wireless routing device 300 is next-closest to the mobile device 100, but signal strength of an identifier of the wireless routing device 300 detected by the mobile device is the strongest. Therefore, preferably, N is preset to a positive integer greater than 1. N is preset by the user.

In addition, when the quantity M of detected identifiers is less than N, all identifiers are selected. For example, if the preset N is 5, and the quantity M of detected identifiers is 3, three identifiers are selected.

It should be noted that, in another implementation, S2704a and S2705a are not mandatory. That is, in another implementation of the method for accessing a wireless routing device, the method may not include S2704a and S2705a. After step S2703a is performed, step S2706a is performed. In this way, when step S2706a is performed, a premise that "the mobile device is not connected to the Wi-Fi network" is not set.

The signal strength can be calculated based on a received signal strength indication (received signal strength indication, RSSI). Acalculation manner of the RSSI is a common calculation manner in this field. Details are not described herein. S2707a: Send a first response message to a wireless routing device corresponding to each of the first N identifiers, where the first response message includes one identifier of the first N identifiers.

After selecting the first N identifiers, the mobile device sends the first response message to the wireless routing device corresponding to each of the first N identifiers, that is, sends the first response message to M wireless routing devices corresponding to the first N identifiers, and the first response message includes one identifier of the first N identifiers. M is a positive integer greater than or equal to 1 and less than or equal to N (M is less than N because more than two of the first N identifiers may be located on a same routing device). For example, N is 3, and M is 3. Therefore, after selecting first three identifiers (an identifier 1, an identifier 2, and an identifier 3), the mobile device sends the first response message to the wireless routing device corresponding to each of the first three identifiers, and sends three first response messages in total. For example, the identifier 1 corresponds to the wireless routing device 200, the identifier 2 corresponds to the wireless routing device 300, and the identifier 3 corresponds to the wireless routing device 400. The mobile device 100 separately sends a first response message to the wireless routing devices 200, 300, and 400. A first response message sent to the wireless routing device 200 includes the identifier 1, a first response message sent to the wireless routing device 300 includes the identifier 2, and a first response message sent to the wireless routing device 400 includes the identifier 3.

For another example, N is 1. After selecting an identifier with the strongest signal strength, the mobile device sends the first response message to the wireless routing device corresponding to the identifier, and the first response message includes the identifier. In this case, the wireless routing device corresponding to the identifier may be considered as the wireless routing device in the host's home in the scenario in which the guest visits the host's home.

It should be noted that, as described in S2706a, when a quantity K of detected identifiers is less than N, "the first N identifiers" in S2707a are replaced with "all identifiers".

If the wireless routing device corresponding to an identifier other than the first N identifiers does not receive the first response message within specific duration, the wireless routing device exits the procedure of the method, and normal running is restored. If a wireless routing device provides a plurality of identifiers, for example, two identifiers, but one identifier is within a range of the first N identifiers, and the other identifier is beyond the range of the first N identifiers, the wireless routing device continues to perform the method and does not exit the method.

S2708a: After receiving the first response message, the wireless routing device switches to a second antenna.

After receiving the first response message, the wireless routing device switches to the second antenna. The wireless routing devices corresponding to the first N identifiers or all the identifiers switch to the second antenna after receiving the first response message. In S2706a, when the quantity M of identifiers detected by the mobile device is less than N, "the first N identifiers" are replaced with "all identifiers". "All identifiers" in the following steps are in a same case, and details are not described again in the following.

In an implementation, the wireless routing device switches to a weak antenna. A transmitting distance of the weak antenna is less than the transmitting distance of the strong antenna. For example, the transmitting distance of the strong antenna is 10 m, and the transmitting distance of the weak antenna is 0.3 m.

S2709a: The wireless routing device generates a second notification message, and the second notification message includes authentication information and a unique identifier that are corresponding to an identifier of the wireless routing device.

The wireless routing devices corresponding to the first N identifiers or all the identifiers generate second notification messages, and each second notification message includes authentication information and a unique identifier that are corresponding to one of the identifiers. In an implementation, the identifier may be an SSID, and the unique identifier may be a BSSID. An example in which N is 3, an SSID 1 corresponds to the wireless routing device 200, an SSID 2 corresponds to the wireless routing device 300, and an SSID 3 corresponds to the wireless routing device 400 is used for description. The wireless routing devices 200, 300, and 400 all generate second notification messages. The second notification message generated by the wireless routing device 200 includes authentication information 1 and a unique identifier BSSID 1 that are corresponding to the SSID 1. The second notification message generated by the wireless routing device 300 includes authentication information 2 and a unique identifier BSSID 2 that are corresponding to the SSID 2. The second notification message generated by the wireless routing device 400 includes authentication information 3 and a unique identifier BSSID 3 that are corresponding to the SSID 3.

S2710a: The wireless routing device broadcasts the second notification message based on a second periodicity by using the second antenna.

In an example, the wireless routing device periodically broadcasts the second notification message based on the second periodicity (for example, 1s or 500 ms, and this may be specifically set by the user) by using the weak antenna. The transmitting distance of the weak antenna is a second distance (for example, 0.3 meter or 0.2 meter, and this may be specifically set by the user). If the mobile device is moved to a location within the second distance from the wireless routing device, the mobile device may receive the second notification message.

Optionally, the second periodicity and the first periodicity may be the same or different (for example, the second periodicity may be greater than or less than the first periodicity).

S2711a: The mobile device receives the second notification message within a transmitting distance of the second antenna, and obtains the authentication information and the unique identifier.

The mobile device cannot receive the second notification message when the mobile device is located outside the transmitting distance of the weak antenna.

In an example, the mobile device is moved close to the wireless routing device from far to near. When the mobile device is moved to a location within the transmitting distance of the weak antenna, the mobile device receives the second notification message, and obtains the authentication information and the unique identifier based on the second notification message.

S2712a: Send a first response message to the wireless routing device corresponding to the unique identifier, where the first response message is used to indicate that the mobile device receives the authentication information and the unique identifier.

S2713a: Determine whether the wireless routing device receives the first response message within preset duration. In an implementation, since the wireless routing device broadcasts the second notification message for the first time, S2701a is performed if the first response message is not received within the preset duration, or S2714a is performed if the first response message is received within the preset duration.

Optionally, since the wireless routing device broadcasts the second notification message for the first time, if the first response message is not received within another preset duration, the wireless routing device may send first prompt information, and the first prompt information is used to prompt the user to move the mobile device close to the wireless routing device. For example, the wireless routing device displays, by using a display, prompt information "Please move the mobile device close to the wireless routing device". For another example, the wireless routing device sends, by using a speaker or a loudspeaker, voice prompt information "Please move the mobile device close to the wireless routing device". The another preset duration is less than the preset duration.

S2714a: Switch to the first antenna after the first response message is received.

After the wireless routing device receives the first response message, it may be determined that the mobile device is located at a location within transmitting distance of the weak antenna of the wireless routing device, that is, it is determined that a distance between the mobile device and the wireless routing device meets a set condition. For example, if the transmitting distance of the weak antenna is 0.3 m, and the wireless routing device receives the first response message, it may be determined that the distance between the mobile device and the wireless routing device is less than or equal to 0.3 m.

Optionally, S2712a to S2714a are not mandatory steps. For example, after S2711a, S2801 in FIG. 28 is directly performed, and steps of a procedure shown in FIG. 28 are performed.

In this way, the mobile device obtains the identifier, the unique identifier, and the authentication information of the wireless routing device, for example, the password of the SSID, the BSSID, and the security mode, and the wireless routing device learns that the mobile device obtains information such as the identifier, the unique identifier, and the authentication information of the wireless routing device. Therefore, the mobile device and the wireless routing device already have a condition for accessing through the Wi-Fi AP.

The method shown in FIG. 27A-1 and FIG. 27A-2 may be applied to a scenario in which a guest visits the host's home for the first time and a plurality of SSIDs detected by a guest's mobile device in the host's home include SSIDs with a same name, for example, two SSIDs in a detected SSID list are the same.

In the procedure shown in FIG. 27A-1 and FIG. 27A-2, broadcasting, communication, and the like between the mobile device and the wireless routing device may be implemented by using wireless communications technologies such as Wi-Fi aware, Bluetooth, and ZigBee.

A person skilled in the art should understand that, when the wireless routing device runs the method for accessing the wireless routing device in this embodiment of this application, a time division multiplexing manner is used, that is, a part of time slices are used to perform the method for accessing the wireless routing device in this embodiment of this application, and the other part of time slices are used for a normal Wi-Fi AP accessing the Internet. In this way, the wireless routing device can enable a mobile device that is connected to the wireless routing device to normally access the Internet, and can also enable a new mobile device to automatically connect to the wireless routing device according to the method in this embodiment of this application. The time slice is divided according to a rule that the method for accessing the wireless routing device in this embodiment of this application accounts for a relatively small proportion, and the normal Wi-Fi AP accessing the Internet accounts for a relatively large proportion.

Further, timing may be performed when the step of sending by using the second antenna starts to be performed. When timing duration reaches a preset value t1, the step of sending by using the second antenna is suspended, and the first antenna is used to enable a connected mobile device to normally access the Internet through the Wi-Fi AP, and timing is performed again. When timing duration reaches another preset value t2, the step of sending by using the second antenna is performed by using the second antenna, and timing is performed again. When timing duration reaches the preset value t1, the foregoing step of sending by using the second antenna is suspended, and the first antenna is used to enable a connected mobile device to normally access the Internet through the Wi-Fi AP, and timing is performed again. This cycle is repeated. For example, when t1 + t2 is 1 second, t1 may be 0.2 second. Certainly, t1 + t2 is 1 second, and t1 is 0.2 second. This is merely an example. Other values also fall within the range of this application. In another implementation, the unique identifier may not be required. This embodiment of this application provides a method for accessing the wireless routing device, and the method relates to the mobile device and the wireless routing device. Both the mobile device and the wireless routing device enable at least one of communication functions such as Wi-Fi aware, Bluetooth, and ZigBee, and both the mobile device and the wireless routing device enable a same communication function. For example, both the mobile device and the wireless routing device enable the Wi-Fi aware communication function. The mobile device does not access the wireless routing device through a Wi-Fi AP; the mobile device is moved close to the wireless routing device from far to near; and the foregoing from far to near is general, and does not strictly require that the mobile device be closer to the wireless routing device after each movement, but on the whole, the mobile device may be moved from a location away from the wireless routing device to a location close to the wireless routing device. On the foregoing premise, as shown in FIG. 27B-1 and FIG. 27B-2, the method may include the following steps.

S2701b to S2708b are respectively the same as S2701a to S2708a. For S2701b to S2708b, refer to descriptions of S2701a to S2708a.

S2709b: The wireless routing device generates a second notification message, and the second notification message includes authentication information corresponding to one identifier of the wireless routing device.

The wireless routing devices corresponding to the first N identifiers or all the identifiers generate second notification messages, and each second notification message includes the authentication information corresponding to each identifier. In an implementation, the identifier may be an SSID. An example in which N is 3, an SSID 1 corresponds to the wireless routing device 200, an SSID 2 corresponds to the wireless routing device 300, and an SSID 3 corresponds to the wireless routing device 400 is used for description. The wireless routing devices 200, 300, and 400 all generate second notification messages. The second notification message generated by the wireless routing device 200 includes authentication information 1 corresponding to the SSID 1. The second notification message generated by the wireless routing device 300 includes authentication information 2 corresponding to the SSID 2. The second notification message generated by the wireless routing device 400 includes authentication information 3 corresponding to the SSID 3.

In another implementation, the identifier may be a BSSID.

S2710b is the same as S2710a. For S2710b, refer to descriptions of S2710a.

S2711b: The mobile device receives the second notification message within a transmitting distance of the second antenna, and obtains the authentication information.

The mobile device cannot receive the second notification message when the mobile device is located outside the transmitting distance of the weak antenna.

In an example, the mobile device is moved close to the wireless routing device from far to near. When the mobile device is moved to a location within the transmitting distance of the weak antenna, the mobile device receives the second notification message, and obtains the authentication information based on the second notification message. S2712b: Send a first response message to the wireless routing device corresponding to the identifier, where the first response message is used to indicate that the mobile device receives the authentication information.

S2713b and S2714b are respectively the same as S2713a and S2714a. For S2713b and S2714b, refer to descriptions of S2713a and S2714a.

Optionally, S2712b to S2714b are not mandatory steps. For example, after S2711b, S2801 in FIG. 28 is directly performed, and steps of a procedure shown in FIG. 28 are performed.

In this way, after the mobile device obtains the identifier and the authentication information of the wireless routing device, the wireless routing device learns that the mobile device obtains information such as the identifier and the authentication information of the wireless routing device. Therefore, the mobile device and the wireless routing device already have a condition for accessing through the Wi-Fi AP.

The method shown in FIG. 27B-1 and FIG. 27B-2 may be applied to a scenario in which a guest visits the host's home for the first time and a plurality of SSIDs detected by a guest's mobile device in the host's home include SSIDs with similar names but not include SSIDs with a same name, for example, three SSIDs with similar names exist in a detected SSID list.

In the procedure shown in FIG. 27B-1 and FIG. 27B-2, broadcasting, communication, and the like between the mobile device and the wireless routing device may be implemented by using wireless communications technologies such as Wi-Fi aware, Bluetooth, and ZigBee.

All parts not described in the embodiment shown in FIG. 27B-1 and FIG. 27B-2 are the same as related content in the embodiment shown in FIG. 27A-1 and FIG. 27A-2, and details are not described herein again.

In another implementation, the second notification message does not need to be sent in a broadcast manner. This embodiment of this application provides a method for accessing the wireless routing device, and the method relates to the mobile device and the wireless routing device. Both the mobile device and the wireless routing device enable at least one of communication functions such as Wi-Fi aware, Bluetooth, and ZigBee, and both the mobile device and the wireless routing device enable a same communication function. For example, both the mobile device and the wireless routing device enable the Wi-Fi aware communication function. The mobile device does not access the wireless routing device through a Wi-Fi AP; the mobile device is moved close to the wireless routing device from far to near; and the foregoing from far to near is general, and does not strictly require that the mobile device be closer to the wireless routing device after each movement, but on the whole, the mobile device may be moved from a location away from the wireless routing device to a location close to the wireless routing device. On the foregoing premise, as shown in FIG. 27C-1 and FIG. 27C-2, the method may include the following steps.

S2701c to S2706c are respectively the same as S2701b to S2706b. For S2701c to S2706c, refer to descriptions of S2701b to S2706b.

S2707c: Send a first response message to a wireless routing device corresponding to each of the first N identifiers, where the first response message includes a mobile device identifier and one identifier of the first N identifiers.

After selecting the first N identifiers, the mobile device sends the first response message to the wireless routing device corresponding to each of the first N identifiers, that is, sends the first response message to M wireless routing devices corresponding to the first N identifiers, and the first response message includes one identifier of the first N identifiers. M is a positive integer greater than or equal to 1 and less than or equal to N. For example, N is 3. After selecting the first three identifiers (an identifier 1, an identifier 2, and an identifier 3), the mobile device sends the first response message to a wireless routing device corresponding to each of the first three identifiers, and sends three first response messages in total. For example, the identifier 1 corresponds to the wireless routing device 200, the identifier 2 corresponds to the wireless routing device 300, and the identifier 3 corresponds to the wireless routing device 400. The mobile device 100 separately sends a first response message to the wireless routing devices 200, 300, and 400. A first response message sent to the wireless routing device 200 includes the identifier 1, a first response message sent to the wireless routing device 300 includes the identifier 2, and a first response message sent to the wireless routing device 400 includes the identifier 3.

For another example, N is 1. After selecting an identifier with the strongest signal strength, the mobile device sends the first response message to the wireless routing device corresponding to the identifier, and the first response message includes the identifier and the mobile device identifier. In this case, the wireless routing device corresponding to the identifier may be considered as the wireless routing device in the host's home in the scenario in which the guest visits the host's home.

It should be noted that, when a quantity K of detected identifiers is less than N, "the first N identifiers" in S607 are replaced with "all identifiers".

If the wireless routing device corresponding to an identifier other than the first N identifiers does not receive the first response message within specific duration, the wireless routing device exits the procedure of the method, and normal running is restored. If a wireless routing device provides a plurality of identifiers, for example, two identifiers, but one identifier is within a range of the first N identifiers, and the other identifier is beyond the range of the first N identifiers, the wireless routing device continues to perform the method and does not exit the method.

In an implementation, the mobile device identifier may be a unique identifier of the mobile device, such as an international mobile equipment identity (international mobile equipment identity, IMEI), a MAC address, or a serial number SN.

S2708c is the same as S2708b. For S2708c, refer to descriptions of S2708b.

S2709c: The wireless routing device generates a second notification message, and the second notification message includes authentication information corresponding to one identifier of the wireless routing device.

The wireless routing devices corresponding to the first N identifiers or all the identifiers generate second notification messages, and each second notification message includes the authentication information corresponding to each identifier. In an implementation, the identifier may be an SSID. An example in which N is 3, an SSID 1 corresponds to the wireless routing device 200, an SSID 2 corresponds to the wireless routing device 300, and an SSID 3 corresponds to the wireless routing device 400 is used for description. The wireless routing devices 200, 300, and 400 all generate second notification messages. The second notification message generated by the wireless routing device 200 includes authentication information 1 corresponding to the SSID 1. The second notification message generated by the wireless routing device 300 includes authentication information 2 corresponding to the SSID 2. The second notification message generated by the wireless routing device 400 includes authentication information 3 corresponding to the SSID 3.

In another implementation, the identifier may be a BSSID.

In an implementation, the second notification message further includes the mobile device identifier.

S2710c: Send the second notification message to the mobile device based on the second periodicity by using the second antenna.

In an implementation, the second notification message is sent to the mobile device by using the mobile device identifier. Optionally, the second periodicity and the first periodicity may be the same or different (for example, the second periodicity may be greater than or less than the first periodicity).

S2711c to S2714c are respectively the same as S2711b to S2714b. For S2711c to S2714c, refer to descriptions of S2711b to S2714b.

Optionally, S2712c to S2714c are not mandatory steps. For example, after S2711c, S2801 in FIG. 28 is directly performed, and steps of a procedure shown in FIG. 28 are performed.

In this way, after the mobile device obtains the identifier and the authentication information of the wireless routing device, the wireless routing device learns that the mobile device obtains information such as the identifier and the authentication information of the wireless routing device. Therefore, the mobile device and the wireless routing device already have a condition for accessing through the Wi-Fi AP.

The method shown in FIG. 27C-1 and FIG. 27C-2 may be applied to a scenario in which a guest visits the host's home for the first time and a plurality of SSIDs detected by a guest's mobile device in the host's home include SSIDs with similar names but not include SSIDs with a same name, for example, three SSIDs with similar names exist in a detected SSID list.

In the procedure shown in FIG. 27C-1 and FIG. 27C-2, broadcasting, communication, and the like between the mobile device and the wireless routing device may be implemented by using wireless communications technologies such as Wi-Fi aware, Bluetooth, and ZigBee.

All parts not described in the embodiment shown in FIG. 27C-1 and FIG. 27C-2 are the same as related content in the embodiment shown in FIG. 27B-1 and FIG. 27B-2, and details are not described herein again.

Next, the mobile device and the wireless routing device may access the wireless routing device through the Wi-Fi AP according to the procedure shown in FIG. 28.

Before the procedure shown in FIG. 28 is described, the mobile device and the wireless routing device no longer use Wi-Fi aware, Bluetooth, ZigBee, or the like, but use Wi-Fi communication to access a selected SSID. In this case, in the use of the antenna, the wireless routing device no longer uses the second antenna, and may use a third antenna other than the first antenna and the second antenna, or may use the first antenna.

As shown in FIG. 28, steps of accessing the selected SSID in the method for accessing the wireless routing device in this embodiment of this application may include the following steps.

S2801: The mobile device sends a Wi-Fi access request to the wireless routing device.

S2802: The wireless routing device verifies whether the Wi-Fi access request is correct.

If verification succeeds, S2803 is performed.

In an implementation, if the verification fails, a quantity of verification times is recorded as 1, and verification is performed again after predetermined duration. If the verification fails again, a quantity of verification times is increased by 1. This process repeats. If the verification still fails after the quantity of verification times reaches a preset quantity of verification times, the verification is stopped.

In another implementation, if the verification fails, verification is performed again after preset duration. If the verification fails again, a message is sent to the mobile device, to notify the mobile device that the password is incorrect. Alternatively, the wireless routing device notifies the mobile device that the password is incorrect by outputting a voice or displaying a message.

S2803: The wireless routing device sends an acknowledgment message to the mobile device, and the acknowledgment message is used to indicate that the Wi-Fi access request is successfully verified.

The mobile device may receive the acknowledgment message sent by the wireless routing device. In this way, the mobile device accesses the wireless routing device through the Wi-Fi AP. More specifically, the mobile device accesses the SSID of the wireless routing device through the Wi-Fi AP, that is, the mobile device accesses the selected SSID. Then, the mobile device may access the Internet by using the wireless routing device.

In addition, before the mobile device and the wireless routing device perform the procedure shown in FIG. 27A-1 and FIG. 27A-2, both the mobile device and the wireless routing device enable at least one of communication functions such as Wi-Fi aware, Bluetooth and ZigBee, and both the mobile device and the wireless routing device enable a same communication function, for example, both the mobile device and the wireless routing device enable the Wi-Fi aware communication function. The following uses Wi-Fi aware as an example to describe an implementation in which the mobile device and the wireless routing device enable a Wi-Fi aware communications module.

Optionally, S2803 is not a mandatory step. In some implementations, S2803 may not be required in the method.

Before FIG. 27A-1 and FIG. 27A-2 to FIG. 27C-1 and FIG. 27C-2, Wi-Fi aware is used as an example. With reference to FIG. 29, a procedure in which mobile device accesses the wireless routing device through Wi-Fi aware is described. As shown in FIG. 29, in the method for accessing the wireless routing device, the procedure in which the mobile device accesses the wireless routing device through Wi-Fi aware may include the following steps.

S2901: After receiving a user input, the mobile device enables Wi-Fi aware.

Specifically, a touch input of the user for a Wi-Fi aware enable button may be received on a Wi-Fi setting interface, and the mobile device enables Wi-Fi aware in response to the touch input.

In an implementation, a voice input of the user for the mobile device may be received on any interface of the mobile device (including a screen interface that is locked but not turned off, a screen interface that is locked and turned off), and the mobile device enables Wi-Fi aware in response to the voice input.

S2902: After receiving a user input, the wireless routing device enables Wi-Fi aware.

In an implementation, the wireless routing device receives an input of a pressed button of the wireless routing device, and in response to the input of the pressed button, the wireless routing device enables Wi-Fi aware. For a Huawei wireless routing device, the button may be an intelligent connection button, or may be another button.

In another implementation, the wireless routing device receives a voice input of the user for the wireless routing device, and in response to the voice input, the wireless routing device enables Wi-Fi aware.

S2903: The wireless routing device broadcasts a Wi-Fi aware access service based on a specific periodicity.

The wireless routing device broadcasts the Wi-Fi aware access service based on the specific periodicity (for example, 1s or 5s). The specific periodicity may be preset by the user. The Wi-Fi aware access service further includes a unique identifier of the wireless routing device.

In an implementation, the Wi-Fi aware access service further includes a MAC address of the wireless routing device. It should be noted that a sequence of S2901 and S2902 may be interchanged, and there is no strict sequence limitation on the two. Even, S2901 may be performed after S2903.

S2904: After receiving the Wi-Fi aware access service, the mobile device subscribes to the Wi-Fi aware access service. After receiving the Wi-Fi aware access service sent by the wireless routing device, the mobile device automatically subscribes to the Wi-Fi aware access service.

In an implementation, after receiving the Wi-Fi aware access service sent by the wireless routing device, the mobile device reminds the user whether to subscribe to the Wi-Fi aware access service. The mobile device subscribes to the Wi-Fi aware access service only after the user touches subscription, or inputs a voice input of the subscription or a similar word.

S2905: The mobile device sends a subscription message to the wireless routing device, and the subscription message is used to indicate the mobile device to subscribe to the Wi-Fi aware access service.

The subscription message further includes a unique identifier of the mobile device.

In an implementation, the subscription message further includes a MAC address of the mobile device, and the MAC address is used to notify the wireless routing device of which mobile device subscribes to the Wi-Fi aware access service.

In an implementation, if the wireless routing device does not receive the subscription message within preset duration, the wireless routing device exits the procedure. The preset duration may be preset by the user.

In an implementation, if the wireless routing device does not receive the subscription message within the preset duration, the wireless routing device records a quantity of verification times as 1; and if the wireless routing device still does not receive the subscription message within the preset duration, the quantity of verification times increases by 1. This cycle is repeated. If the wireless routing device still does not receive the subscription message after the quantity of verification times reaches a preset quantity of verification times, the wireless routing device exits the procedure. The preset duration may be preset by the user.

S2906: After the wireless routing device receives the subscription message, the mobile device accesses the wireless routing device through Wi-Fi aware.

After the mobile device accesses the wireless routing device through Wi-Fi aware, the mobile device and the wireless routing device may perform the method shown in FIG. 27A-1 and FIG. 27A-2, FIG. 27B-1 and FIG. 27B-2, or FIG 27C-1 and FIG. 27C-2.

A person skilled in the art should understand that, the implementation in which the mobile device and the wireless routing device enable the Bluetooth communication function, the ZigBee communication function, or another similar communication function is similar to the implementation in which the mobile device and the wireless routing device enable the Wi-Fi aware communications module. Details not described herein again.

This embodiment of this application further provides a method for accessing the wireless routing device, and the method relates to the mobile device and the wireless routing device. Both the mobile device and the wireless routing device enable at least one of communications modules such as Wi-Fi aware, Bluetooth, and ZigBee, and both the mobile device and the wireless routing device enable a same communications module. For example, both the mobile device and the wireless routing device enable the Wi-Fi aware communications module. The mobile device accesses the wireless routing device through a Wi-Fi AP; the mobile device is moved close to the wireless routing device from far to near; and the foregoing from far to near is general, and does not strictly require that the mobile device be closer to the wireless routing device after each movement, but on the whole, the mobile device may be moved from a location away from the wireless routing device to a location close to the wireless routing device. On the foregoing premise, as shown in FIG. 27D-1 to FIG. 27D-3, the method may include the following steps.

S2701d to S2708d are respectively the same as S2701a to S2708a. For S2701d to S2708d, refer to descriptions of S2701a to S2708a.

S2709d: The wireless routing device generates a second notification message, and randomly generates a dynamic encryption key, and the second notification message includes the dynamic encryption key and a unique identifier corresponding to the identifier of the wireless routing device.

For example, the identifier may be an SSID, and the unique identifier may be a BSSID.

The wireless routing devices corresponding to the first N identifiers or all the identifiers generate second notification messages and randomly generate the dynamic encryption key, and each second notification message includes an identifier corresponding to each identifier. An example in which N is 3, an SSID 1 corresponds to the wireless routing device 200, an SSID 2 corresponds to the wireless routing device 300, and an SSID 3 corresponds to the wireless routing device 400 is used for description. The wireless routing devices 200, 300, and 400 all generate second notification messages. The second notification message generated by the wireless routing device 200 includes authentication a BSSID 1 corresponding to the SSID1. The second notification message generated by the wireless routing device 300 includes a BSSID 2 corresponding to the SSID 2. The second notification message generated by the wireless routing device 400 includes authentication a BSSID 3 corresponding to the SSID 3.

S2710d: The wireless routing device broadcasts the second notification message based on a second periodicity by using the second antenna.

In an example, the wireless routing device periodically broadcasts the second notification message based on the second periodicity (for example, 1s or 500 ms, and this may be specifically set by the user) by using the weak antenna. The transmitting distance of the weak antenna is a second distance (for example, 0.3 meter or 0.2 meter, and this may be specifically set by the user). If the mobile device is moved to a location within the second distance from the wireless routing device, the mobile device may receive the second notification message.

Optionally, the second periodicity may be the same as or different from the first periodicity. For example, the second periodicity is greater than the first periodicity, or the second periodicity is less than the first periodicity.

S2711d: The mobile device receives the second notification message within a transmitting distance of the second antenna, and obtains the dynamic encryption key and the unique identifier.

The mobile device cannot receive the second notification message when the mobile device is located outside the transmitting distance of the weak antenna.

In an example, the mobile device is moved close to the wireless routing device from far to near. When the mobile device is moved to a location within the transmitting distance of the weak antenna, the mobile device receives the second notification message, and obtains the dynamic encryption key and the unique identifier based on the second notification message.

S2712d: Send a first response message to the wireless routing device corresponding to the unique identifier, where the first response message is used to indicate that the mobile device receives the dynamic encryption key.

S2713d: Determine whether the wireless routing device receives the first response message within preset duration. In an implementation, since the wireless routing device broadcasts the second notification message for the first time, S2701d is performed if the first response message is not received within the preset duration, or S2714d is performed if the first response message is received within the preset duration.

Optionally, since the wireless routing device broadcasts the second notification message for the first time, if the first response message is not received within another preset duration, the wireless routing device may send first prompt information, and the first prompt information is used to prompt the user to move the mobile device close to the wireless routing device. For example, the wireless routing device displays, by using a display, prompt information "Please move the mobile device close to the wireless routing device". For another example, the wireless routing device sends, by using a speaker or a loudspeaker, voice prompt information "Please move the mobile device close to the wireless routing device". The another preset duration is less than the preset duration.

S2714d: The wireless routing device encrypts, by using the dynamic encryption key, authentication information corresponding to the unique identifier, to obtain a ciphertext; and generates a third notification message, and the third notification message includes the ciphertext.

In an implementation, the wireless routing device encrypts, by using the dynamic encryption key, the authentication information corresponding to the BSSID, to obtain the ciphertext; and the wireless routing device generates the third notification message including the ciphertext.

In an example, the authentication information includes a password and a security mode. In an implementation, the wireless routing device encrypts only the password by using the dynamic encryption key, to obtain the ciphertext; and the wireless routing device generates the third notification message including the ciphertext and the security mode. S2715d: The wireless routing device broadcasts the third notification message based on a third periodicity by using the second antenna.

In an example, the wireless routing device periodically broadcasts the third notification message based on the third periodicity (for example, 500 ms or 300 ms, and this may be specifically set by the user) by using the weak antenna. The transmitting distance of the weak antenna is the second distance (for example, 0.3 meter or 0.2 meter, and this may be specifically set by the user). If the mobile device is moved to or remained at a location within the second distance from the wireless routing device, the mobile device may receive the second notification message. Optionally, the third periodicity may be the same as or different from the second periodicity. For example, the third periodicity is greater than the second periodicity, or the third periodicity is less than the second periodicity. Similarly, the third periodicity and the first periodicity may be the same or different (for example, the third periodicity may be greater than or less than the first periodicity).

S2716d: The mobile device receives the third notification message within the transmitting distance of the second antenna, and parses the third notification message by using the dynamic encryption key, to obtain the authentication information.

The mobile device cannot receive the third notification message when the mobile device is located outside the transmitting distance of the weak antenna.

In an example, the mobile device is moved close to the wireless routing device from far to near. When the mobile device is moved to or remained at a location within the transmitting distance of the weak antenna, the mobile device receives the third notification message, and parses the third notification message by using the dynamic encryption key, to obtain the authentication information.

S2717d: Send a second response message to the wireless routing device corresponding to the unique identifier, where the second response message is used to indicate that the mobile device receives and parses out the authentication information.

S2718d: Switch to the first antenna after the second response message is received.

After the wireless routing device receives the second response message, it may be determined that the mobile device is located at a location within transmitting distance of the weak antenna of the wireless routing device, that is, it is determined that a distance between the mobile device and the wireless routing device meets a set condition. For example, if the transmitting distance of the weak antenna is 0.3 m, and the wireless routing device receives the second response message, it may be determined that the distance between the mobile device and the wireless routing device is less than or equal to 0.3 m.

In this way, the mobile device obtains the identifier, the unique identifier, and the authentication information of the wireless routing device, and the wireless routing device learns that the mobile device obtains information such as the identifier, the unique identifier, and the authentication information of the wireless routing device. Therefore, the mobile device and the wireless routing device already have a condition for accessing through the Wi-Fi AP.

The method shown in FIG. 27D-1 to FIG. 27D-3 may be applied to a scenario in which a guest visits the host's home for the first time and a plurality of SSIDs detected by a guest's mobile device in the host's home include SSIDs with a same name, for example, two SSIDs in a detected SSID list are the same.

In the procedure shown in FIG. 27D-1 to FIG. 27D-3, broadcasting, communication, and the like between the mobile device and the wireless routing device may be implemented by using wireless communications technologies such as Wi-Fi aware, Bluetooth, and ZigBee.

All parts not described in the embodiment shown in FIG. 27D-1 to FIG. 27D-3 are the same as related content in the embodiment shown in FIG. 27A-1 and FIG. 27A-2, and details are not described herein again.

Next, the mobile device and the wireless routing device may access the wireless routing device through the Wi-Fi AP according to the procedure shown in FIG. 28. The procedure shown in FIG. 28 is described in detail above, and details are not described herein again.

In addition, before the mobile device and the wireless routing device perform the procedure shown in FIG. 27D-1 to FIG. 27D-3, both the mobile device and the wireless routing device enable at least one of communication functions such as Wi-Fi aware, Bluetooth and ZigBee, and both the mobile device and the wireless routing device enable a same communication function, for example, both the mobile device and the wireless routing device enable the Wi-Fi aware communication function. For an implementation in which the mobile device and the wireless routing device enable the Wi-Fi aware communication function, refer to FIG. 28 and the foregoing description of FIG. 28. Details are not described herein.

A person skilled in the art should understand that, the implementation in which the mobile device and the wireless routing device enable the Bluetooth communication function, the ZigBee communication function, or another similar communication function is similar to the implementation in which the mobile device and the wireless routing device enable the Wi-Fi aware communication function. Details not described herein again.

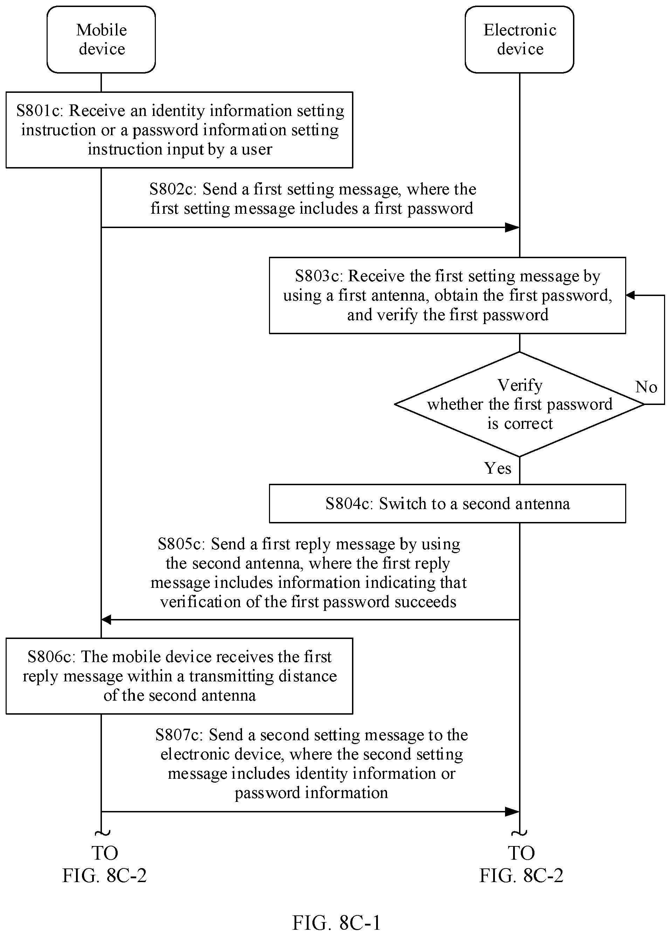

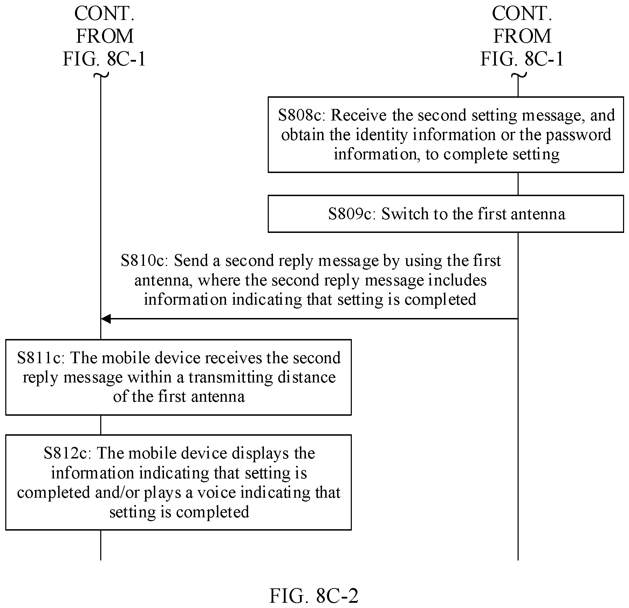

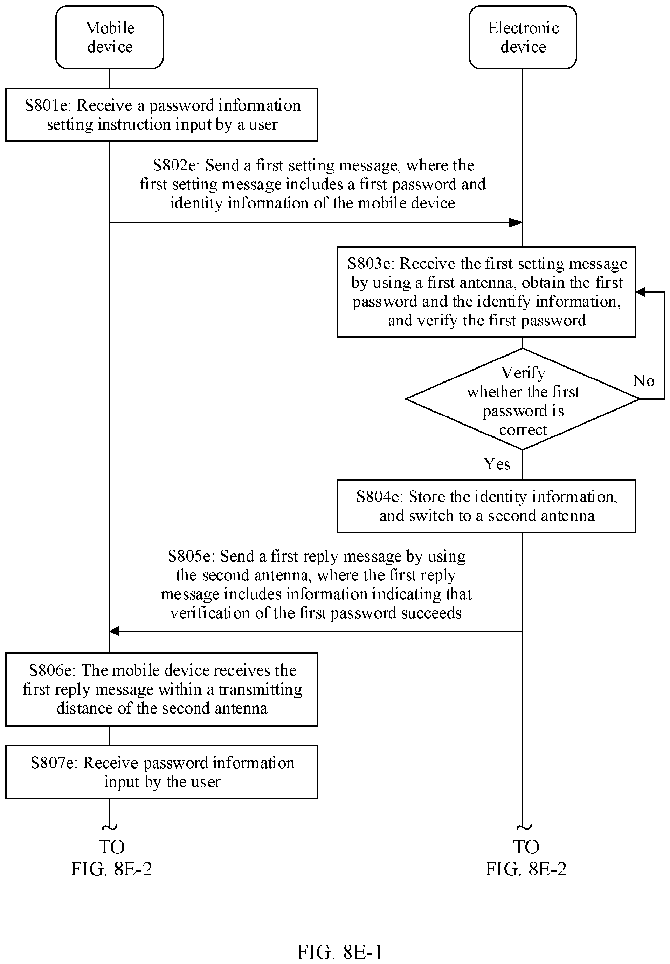

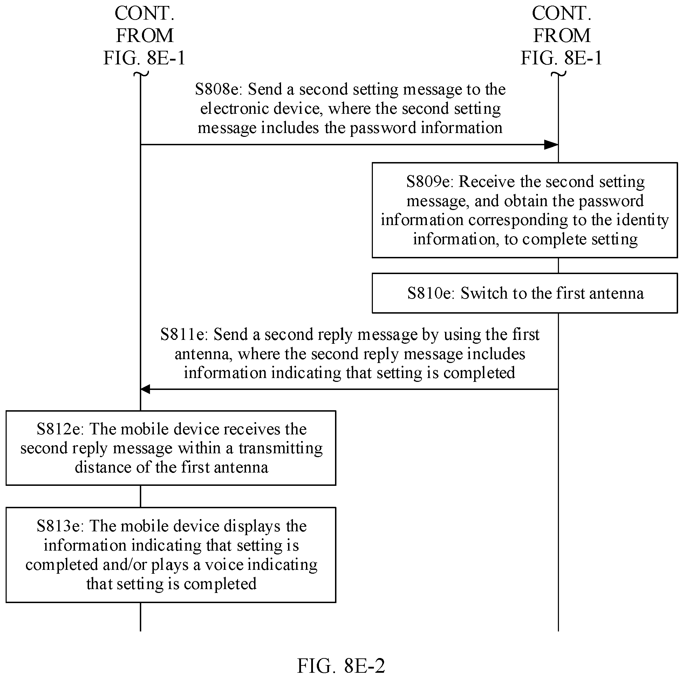

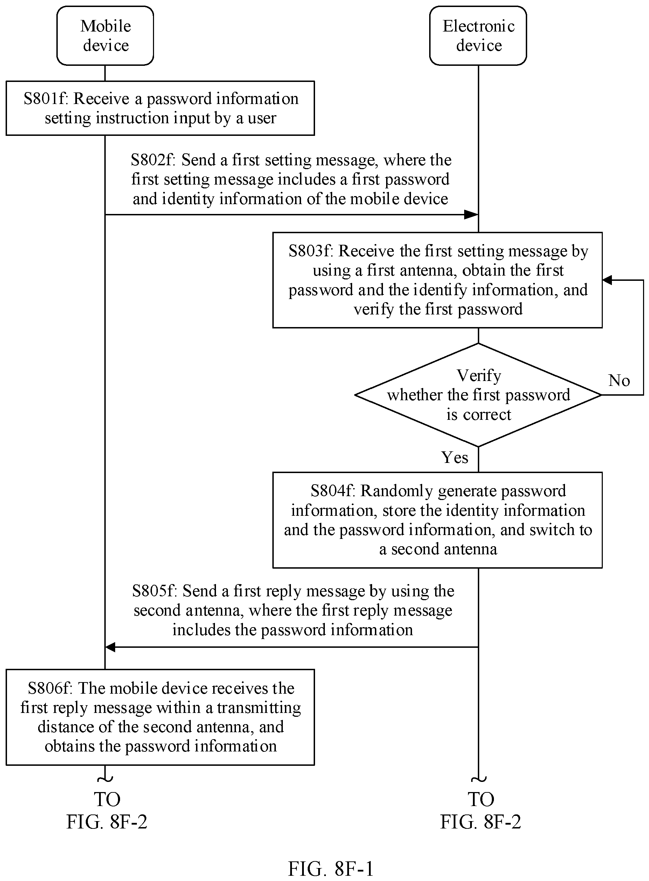

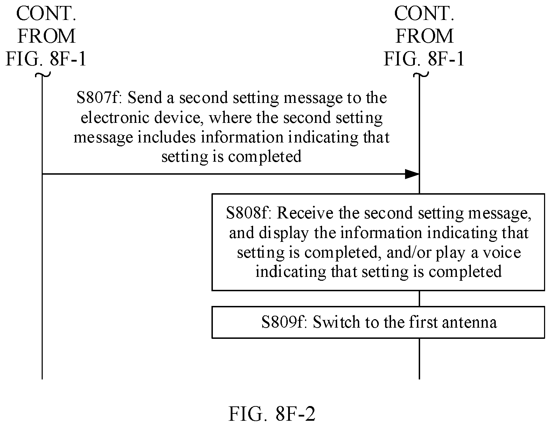

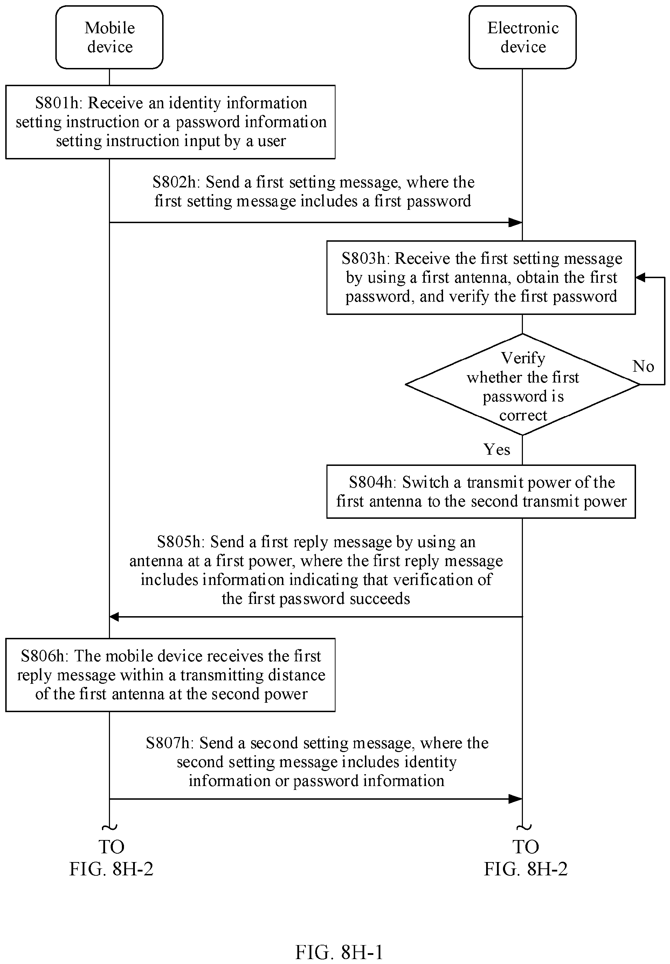

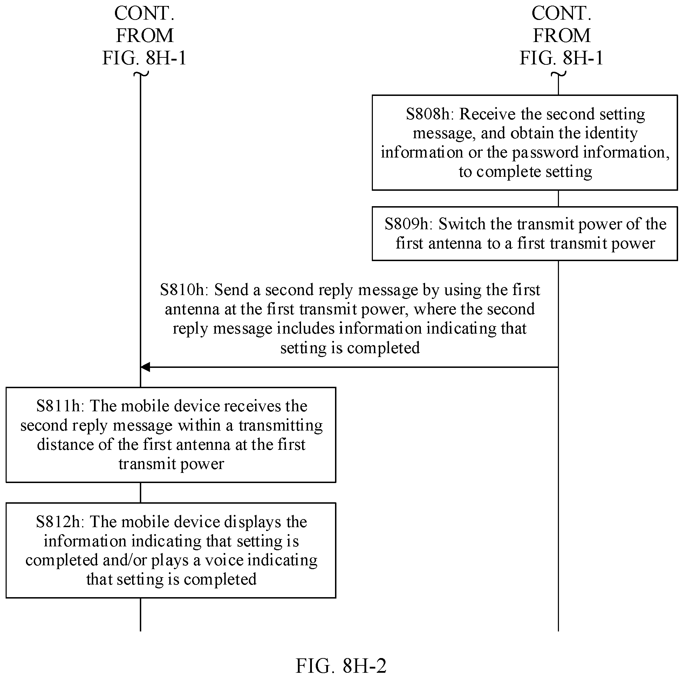

This embodiment of this application further provides a method for accessing the wireless routing device, and the method relates to the mobile device and the wireless routing device. The mobile device does not access the wireless routing device through a Wi-Fi AP; and the mobile device is moved close to the wireless routing device from far to near. The foregoing from far to near is general, and does not strictly required that the mobile device be closer to the wireless routing device after each movement, but on the whole, the mobile device may be moved from a location away from the wireless routing device to a location close to the wireless routing device. On the foregoing premise, Wi-Fi aware is used as an example to describe procedure steps of the method for accessing the wireless routing device shown in FIG. 8. As shown in FIG. 27E-1 and FIG. 27E-2, the method may include the following steps.

S2700e: After receiving a user input, the mobile device enables Wi-Fi aware.

Specifically, a touch input of the user for a Wi-Fi aware enable button may be received on a Wi-Fi setting interface, and the mobile device enables Wi-Fi aware in response to the touch input.

In an implementation, a voice input of the user for the mobile device may be received on any interface of the mobile device (including a screen-off interface), and the mobile device enables Wi-Fi aware in response to the voice input. S2701e: After receiving a user input, the wireless routing device enables Wi-Fi aware; and the wireless routing device switches to the first antenna, and generates a first notification message, and the first notification message includes a Wi-Fi aware access service and an identifier of the wireless routing device.

In an implementation, the wireless routing device receives an input of a pressed button of the wireless routing device, and in response to the input of the pressed button, the wireless routing device enables Wi-Fi aware. For a Huawei wireless routing device, the button may be an intelligent connection button, or may be another button. In another implementation, the wireless routing device receives the voice input of the user for the wireless routing device, and in response to the voice input, the wireless routing device enables Wi-Fi aware.

The wireless routing device switches to the first antenna, and generates the first notification message, and the first notification message includes the Wi-Fi aware access service and the identifier of the wireless routing device. In an implementation, the Wi-Fi aware access service further includes a MAC address of the wireless routing device. The first notification message may further include other information such as a BS SID. This is not limited in this application. In an implementation, the first notification message is broadcast in a plaintext form.

S2702e: The wireless routing device broadcasts the first notification message based on a first periodicity by using the first antenna.

In an example, the wireless routing device periodically broadcasts the first notification message based on the first periodicity (for example, 2s or 5s, and this may be specifically set by the user) by using the strong antenna. The transmitting distance of the strong antenna is a first distance (for example, 5 meters or 10 meters, and this may be specifically set by the user). If the mobile device is moved to a location within the first distance from the wireless routing device, the mobile device may receive a first response message.

It should be noted that a sequence of S2700e and S2701e may be interchanged, and there is no strict sequence limitation on the two. Even, S2700e may be performed after S2702e.

S2703e: The mobile device receives the first notification message within the transmitting distance of the first antenna, and obtains the identifier.

The mobile device cannot receive the first notification message when the mobile device is located outside the transmitting distance of the strong antenna. In an example, the mobile device is moved close to the wireless routing device from far to near. When the mobile device is moved to a location within the transmitting distance of the strong antenna, the mobile device receives the first notification message, and obtains the identifier based on the first notification message. Further, the mobile device may further obtain a MAC address of the wireless routing device or even other information based on the first notification message.

In a scenario, a guest visits the host's home, and the guest enters the host's home from far to near. A guest's mobile device is initially located near a door of the host's home, and is located within a first distance of the wireless routing device in the host's home. In this case, the guest's mobile device receives the first notification message, obtains an identifier of the wireless routing device in the host's home based on the first notification message, and further, may obtain the MAC address of the wireless routing device and even other information.

S2704e and S2705e are respectively the same as S2703a and S2704a. For S2704e and S2705e, refer to descriptions of S2703a and S2704a.

S2706e: The mobile device sorts signals in descending order of signal strength, selects a first identifier with strongest signal strength, and subscribes to a Wi-Fi aware access service published by the first identifier.

In an example, the identifier includes an SSID, and the first identifier includes a first SSID.

In an implementation, the mobile device may obtain a plurality of signals. The mobile device sorts the signals in descending order of signal strength, automatically selects an identifier with strongest signal strength as the first identifier, and automatically subscribes to the Wi-Fi aware access service published by the first identifier. If the mobile device obtains only one signal, the mobile device automatically selects an identifier of the signal as the first identifier, and automatically subscribes to the Wi-Fi aware access service published by the first identifier.

In an implementation, after sorting the signals in descending order of signal strength, the mobile device selects, by default, the first identifier with the strongest signal strength, and reminds the user whether to subscribe to the Wi-Fi aware access service published by the first identifier. The mobile device subscribes to the Wi-Fi aware access service published by the first identifier only after the user touches subscription, or inputs a voice input of the subscription or a similar word.

S2707e: Send the first response message to a wireless routing device corresponding to the first identifier, where the first response message indicates that the mobile device subscribes to the Wi-Fi aware access service.

After the mobile device subscribes to the Wi-Fi aware access service published by the first identifier, the mobile device automatically sends the first response message to the wireless routing device corresponding to the first identifier, and the first response message indicates the mobile device to subscribe to the Wi-Fi aware access service.

In an implementation, if the wireless routing device does not receive the first response message within preset duration, the wireless routing device exits the procedure. The preset duration may be preset by the user.

In an implementation, if the wireless routing device does not receive the first response message within the preset duration, the wireless routing device records a quantity of verification times as 1; and if the wireless routing device still does not receive the first response message within the preset duration, the quantity of verification times increases by 1. This cycle is repeated. If the wireless routing device still does not receive the first response message after the quantity of verification times reaches a preset quantity of verification times, the wireless routing device exits the procedure. The preset duration may be preset by the user.

In an example, the first response message includes a mobile device identifier. In an implementation, the mobile device identifier may be a unique identifier of the mobile device, such as an international mobile equipment identity (international mobile equipment identity, IMEI), a MAC address, or a serial number SN.

S2708e: Switch to the second antenna after the first response message is received.

After receiving the first response message, the wireless routing device corresponding to the first identifier switches to the second antenna.

In an implementation, the wireless routing device switches to the weak antenna. The transmitting distance of the weak antenna is less than the transmitting distance of the strong antenna. For example, the transmitting distance of the strong antenna is 10 m, and the transmitting distance of the weak antenna is 0.3 m.

S2709e: Generate a second notification message, where the second notification message includes authentication information corresponding to the first identifier.

The wireless routing device corresponding to the first identifier generates the second notification message, and the second notification message includes the authentication information corresponding to the first identifier. For example, the wireless routing device corresponding to the first identifier is the wireless routing device 200. The wireless routing device 200 generates the second notification message, and the second notification message generated by the wireless routing device 200 includes the authentication information corresponding to the first identifier.

In an implementation, the authentication information includes a password and a security mode.

In an example, the second notification message further includes a mobile device identifier.

S2710e: Broadcast the second notification message based on a second periodicity by using the second antenna.

In an example, the wireless routing device corresponding to the first identifier periodically broadcasts the second notification message based on the second periodicity (for example, 1s or 500 ms, and this may be specifically set by the user) by using the weak antenna. The transmitting distance of the weak antenna is a second distance (for example, 0.3 meter or 0.2 meter, and this may be specifically set by the user). If the mobile device is moved to a location within the second distance from the wireless routing device corresponding to the first identifier, the mobile device may receive the second notification message.

Optionally, the second periodicity and the first periodicity may be the same or different (for example, the second periodicity may be greater than or less than the first periodicity).

Alternatively, S2710e may be replaced with S2710c.

S2711e: The mobile device receives the second notification message within the transmitting distance of the second antenna, and obtains the authentication information.

The mobile device cannot receive the second notification message when the mobile device is located outside the transmitting distance of the weak antenna.

In an example, the mobile device is moved close to the wireless routing device corresponding to the first identifier from far to near. When the mobile device is moved to a location within the transmitting distance of the weak antenna, the mobile device receives the second notification message, and obtains a password and a security mode based on the second notification message.

S2712e: Send a first response message to the wireless routing device corresponding to the first identifier, where the first response message is used to indicate that the mobile device receives the authentication information.

S2713e: Determine whether the wireless routing device receives the first response message within the preset duration. In an implementation, since the wireless routing device broadcasts the second notification message for the first time, S2701e is performed if the first response message is not received within the preset duration, or S2714e is performed if the first response message is received within the preset duration.

Optionally, since the wireless routing device broadcasts the second notification message for the first time, if the first response message is not received within another preset duration, the wireless routing device may send first prompt information, and the first prompt information is used to prompt the user to move the mobile device close to the wireless routing device. For example, the wireless routing device displays, by using a display, prompt information "Please move the mobile device close to the wireless routing device". For another example, the wireless routing device sends, by using a speaker or a loudspeaker, voice prompt information "Please move the mobile device close to the wireless routing device". The another preset duration is less than the preset duration.

Optionally, S2713e is not mandatory. In some implementations, S2713e may not be included.

S2714e: Switch to the first antenna after the first response message is received.

After the wireless routing device corresponding to the first identifier receives the first response message, it may be determined that the mobile device is located at a location within transmitting distance of the weak antenna of the wireless routing device, that is, it is determined that a distance between the mobile device and the wireless routing device meets a set condition. For example, if the transmitting distance of the weak antenna is 0.3 m, and the wireless routing device receives the first response message, it may be determined that the distance between the mobile device and the wireless routing device is less than or equal to 0.3 m.

In this way, the mobile device obtains the authentication information of the first identifier, and the wireless routing device corresponding to the first identifier also learns that the mobile device obtains information such as the authentication information of the first identifier. Therefore, the mobile device and the wireless routing device corresponding to the first identifier already have a condition for accessing through the Wi-Fi AP. However, another wireless routing device (not the wireless routing device corresponding to the first identifier) cannot receive the first response message after S2707e, and therefore cannot receive the first response message.

The method shown in FIG. 27E-1 and FIG. 27E-2 may be applied to a cenario in which a guest visits a host's home for the first time and a guest's mobile device scans a plurality of SSIDs with similar names in the host's home.

In the procedure shown in FIG. 27E-1 and FIG. 27E-2, broadcasting, communication, and the like between the mobile device and the wireless routing device may be implemented by using wireless communications technologies such as Wi-Fi aware, Bluetooth, and ZigBee.

All parts not described in the embodiment shown in FIG. 27E-1 and FIG. 27E-2 are the same as related content in the embodiment shown in FIG. 27A-1 and FIG. 27A-2, the embodiment shown in FIG. 27B-1 and FIG. 27B-2, or the embodiment shown in FIG. 27D-1 to FIG. 27D-3. Details are not described herein again.

Next, the mobile device and the wireless routing device corresponding to the first identifier may access the wireless routing device through the Wi-Fi AP according to the procedure shown in FIG. 28. The procedure shown in FIG. 28 is described in detail above, and details are not described herein again.

The procedure of the steps of executing the part of the specific function of the electronic device shown in FIG. 27F-1 and FIG. 27F-2 is basically the same as the procedure of the steps of executing the part of the specific function of the electronic device shown in FIG. 27A-1 and FIG. 27A-2. A difference lies only in that FIG. 27A-1 and FIG. 27A-2 show switching between the first antenna and the second antenna, and FIG. 27F-1 and FIG. 27F-2 show switching between a first transmit power of the first antenna and a second transmit power of the first antenna. For detailed content in FIG. 27F-1 and FIG. 27F-2, refer to detailed content in FIG. 27A-1 and FIG. 27A-2 and the foregoing related content in this application. Details are not described herein again.

Similarly, a switching mechanism between the first antenna and the second antenna in embodiments related to FIG. 27B-1 and FIG. 27B-2 to FIG. 27E-1 and FIG. 27E-2 may also be similar to a switching mechanism in FIG. 27F-1 and FIG. 27F-2, and may be correspondingly modified to a switching mechanism between the first antenna at the first transmit power and the second antenna at the second transmit power. In addition, this also falls within protection scope of this application. Details are not described herein again.

After the procedure in FIG. 27F-1 and FIG. 27F-2 is performed, the procedure in FIG. 28 may be performed, so as to automatically access the wireless routing device.

It should be noted that all or some of the steps in embodiments of this application may be freely combined. A technical solution obtained through freely combining also falls within the scope of this application.

Take a specific example to illustrate, a guest first visits a host's home. If a guest's mobile device (such as a smartphone, a smart band, a smartwatch, a tablet, or a laptop) wants to connect to a Wi-Fi network of a host's wireless router, the guest only needs to place the mobile device within a safety distance of the host's wireless router (for example, within 30 cm or within 20 cm, and this may be specifically preset by the host), and the guest's mobile device automatically connects to the Wi-Fi network of the host's wireless router.

It can be understood that, to implement the foregoing functions, the foregoing wireless routing device includes corresponding hardware structures and/or software modules for performing the functions. A person skilled in the art should be easily aware that, in combination with the examples described in embodiments disclosed in this specification, units, algorithms, and steps may be implemented by hardware or a combination of hardware and computer software in embodiments of this application. Whether a function is executed by hardware or hardware driven by computer software depends on particular applications and design constraints of the technical solutions. A person skilled in the art may use different methods to implement the described functions for each particular application, but it should not be considered that the implementation goes beyond the scope of embodiments of this application.

It should be noted that any part of different embodiments of all scenarios in this application may be freely combined. A technical solution obtained through freely combining also falls within the scope of this application.

It should be noted that the foregoing Scenario 1 to Scenario 4 or the foregoing embodiments are merely examples used in this application to describe an inventive concept of this application more vividly and specifically, but are not intended to limit the scope of this application. Another scenario or another embodiment shall fall within the protection scope of this application provided that the inventive concept of this application is reflected. The inventive concept of this application may also be applied to another scenario or another embodiment. There are many other similar scenarios. For example, a mobile device can transfer a file to a PC/personal computer when the mobile device is moved close to the personal computer; a mobile device can automatically back up when the mobile device is moved close to a network-attached storage (network-attached storage, NAS); a mobile device can automatically clock in or out when the mobile device is moved close to an attendance machine; a mobile device can automatically open a gate when the mobile device is moved close to the gate; a mobile device can automatically purchase a ticket when the mobile device is moved close to a ticket machine; a mobile devices can automatically transmit a voice when the mobile device is moved close to a sound box; a tour guide device can automatically play tour guide audio or video when the mobile device is moved close to a tour guide device in a scenic spot; a shopping guide device automatically plays a merchant and product introduction when a mobile device is moved close to the shopping guide device in a shopping mall or store; and a laptop is automatically unlocked when a mobile device is moved close to the laptop.

The automatic control method provided in embodiments of this application may be applied to the following mobile device and electronic device.

FIG. 30 is a schematic diagram of a structure of a mobile device 3000 according to this application. For example, the mobile device 3000 includes at least one processor 3010, a memory 3020, and a display 3030. The processor 3010 is coupled to the memory 3020 and the display 3030. Coupling in this embodiment of this application may be a communication connection, may be electrical, or may be in another form. Specifically, the memory 3020 is configured to store program instructions. The display 3030 is configured to display a user interface. The processor 3010 is configured to invoke the program instructions stored in the memory 3020, and the mobile device 3000 is enabled to perform the methods or steps performed by the mobile device in the automatic control method provided in embodiments of this application. For related features, refer to the foregoing description. Details are not described herein again.

In some embodiments, when the display has a touch function, the display is also referred to as a touch display screen. An operation on the touch display screen may be implemented by using a virtual key. When the display has no touch function, the display is also referred to as a non-touch display screen. An operation on the non-touch display may be implemented by using a physical button.

This application provides a computer program product including a computer program. When the computer program product is run on a mobile device, the mobile device is enabled to perform the steps performed by the mobile device in the automatic control method provided in embodiments of this application.

This application provides a computer-readable storage medium including a computer program. When the computer program is run on a mobile device, the mobile device is enabled to perform the steps performed by the mobile device in the automatic control method provided in embodiments of this application.

A person skilled in the art may clearly understand that embodiments of this application may be implemented by hardware, or by hardware and software. When embodiments of this application are implemented by hardware and software, the foregoing functions may be stored in a computer-readable medium. Based on such an understanding, the technical solutions of embodiments of this application essentially, or the part contributing to the conventional technology, or all or some of the technical solutions may be implemented in the form of a software product. The computer software product is stored in a storage medium and includes several instructions for instructing a computer device (which may be a personal computer, a server, or a network device) or a processor to execute all or some of the steps of the methods described in embodiments of this application. The foregoing storage medium includes any medium that can store program code, such as a flash memory, a removable hard disk, a read-only memory, a random access memory, a magnetic disk, or an optical disc.

FIG. 31 is a schematic diagram of a structure of an electronic device 3100 according to this application. For example, the electronic device 3100 includes at least one processor 3110, a memory 3120, and a display 3130. The processor 3110 is coupled to the memory 3120 and the display 3130. Coupling in this embodiment of this application may be a communication connection, may be electrical, or may be in another form. Specifically, the memory 3120 is configured to store program instructions. The display 3130 is configured to display a user interface. The processor 3110 is configured to invoke the program instructions stored in the memory 3120, and the electronic device 3100 is enabled to perform the steps performed by the electronic device in the automatic control method provided in embodiments of this application. For related features, refer to the foregoing description. Details are not described herein again. Optionally, the electronic device 3100 may not include the display 3130, but include a speaker (not shown in the figure). Optionally, the electronic device 3100 may include both the display 3130 and a speaker (not shown in the figure).

In some embodiments, when the display has a touch function, the display is also referred to as a touch display screen. An operation on the touch display screen may be implemented by using a virtual key. When the display has no touch function, the display is also referred to as a non-touch display screen. An operation on the non-touch display may be implemented by using a physical button.

This application provides a computer program product including a computer program. When the computer program product is run on an electronic device, the electronic device is enabled to perform the steps performed by the electronic device in the automatic projection method provided in embodiments of this application.

This application provides a computer-readable storage medium including a computer program. When the computer program is run on an electronic device, the electronic device is enabled to perform the steps performed by the electronic device in the automatic control method provided in embodiments of this application.

A person skilled in the art may clearly understand that embodiments of this application may be implemented by hardware, or by hardware and software. When embodiments of this application are implemented by hardware and software, the foregoing functions may be stored in a computer-readable medium. Based on such an understanding, the technical solutions of embodiments of this application essentially, or the part contributing to the conventional technology, or all or some of the technical solutions may be implemented in the form of a software product. The computer software product is stored in a storage medium and includes several instructions for instructing a computer device (which may be a personal computer, a server, or a network device) or a processor to execute all or some of the steps of the methods described in embodiments of this application. The foregoing storage medium includes any medium that can store program code, such as a flash memory, a removable hard disk, a read-only memory, a random access memory, a magnetic disk, or an optical disc.

The foregoing descriptions are merely specific implementations of embodiments of this application, but are not intended to limit the protection scope of embodiments of this application. Any variation or replacement within the technical scope disclosed in embodiments of this application shall fall within the protection scope of embodiments of this application.

## Claims

1. An electronic device, wherein the electronic device wirelessly communicates with a mobile device, and the electronic device comprises:
a processor;
a memory;
a first antenna, wherein a transmitting distance of the first antenna is a first distance, and the first distance is greater than a preset safety distance;
a second antenna, wherein a transmitting distance of the second antenna is a second distance, and the second distance is less than or equal to the preset safety distance; and
a computer program, wherein the computer program is stored in the memory, and when the computer program is executed by the processor, the electronic device is enabled to perform the following steps:
sending a first message based on a first periodicity by using the first antenna;
receiving a first response message of the mobile device;
sending, in response to the first response message, a second message based on a second periodicity by using the second antenna;
receiving a second response message of the mobile device; and
executing all or a part of a specific function in response to the second response message.

2. The electronic device according to claim 1, wherein the electronic device further performs the following step:
after executing the part of the specific function, sending a third message based on a third periodicity by using the first antenna or the second antenna, wherein the third message comprises information indicating that the part of the specific function is executed.

3. The electronic device according to claim 1, wherein the electronic device further performs the following steps:
receiving a transmission message of the mobile device after the part of the specific function is executed; and
executing a remaining part of the specific function in response to the transmission message.

4. The electronic device according to claim 2, wherein the electronic device further performs the following steps:
receiving a transmission message of the mobile device after sending the third message based on the third periodicity by using the first antenna or the second antenna; and
executing a remaining part of the specific function in response to the transmission message.

5. The electronic device according to claim 2, wherein the information indicating that the part of the specific function is executed comprises information indicating that the electronic device is ready to execute the specific function.

6. The electronic device according to claim 3 or 4, wherein the transmission message comprises data related to executing the remaining part of the specific function by the electronic device.

7. The electronic device according to claim 1, wherein the electronic device further performs the following steps:
after executing all the specific function, sending a third message based on a third periodicity by using the first antenna or the second antenna, wherein
the third message comprises information indicating that all the specific function is executed.

8. The electronic device according to any one of claims 1 to 7, wherein the electronic device further performs the following steps:
receiving a first setting message before sending the first message based on the first periodicity by using the first antenna, wherein the first setting message comprises at least one of identity information and password information of the mobile device; and
in response to the first setting message, storing the identity information and/or the password information in the electronic device, or storing the identity information and/or the password information in a third-party device associated with the electronic device.

9. The electronic device according to claim 8, wherein the first response message comprises identity information or password information of the mobile device; and the electronic device further performs the following step:
after receiving the first response message of the mobile device, and before sending, in response to the first response message, the second message based on the second periodicity by using the second antenna, verifying, by the electronic device, that the identity information or the password information comprised in the first response message matches the identity information or the password information stored in the electronic device or the third-party device.

10. The electronic device according to claim 9, wherein the second response message comprises identity information or password information of the mobile device; and after receiving the second response message of the mobile device, and before executing all or the part of the specific function in response to the second response message, the electronic device further performs the following step:
verifying, by the electronic device, that the identity information or the password information comprised in the second response message matches the identity information or the password information stored in the electronic device or the third-party device.

11. The electronic device according to claim 9, wherein after receiving the second response message of the mobile device, and before executing all or the part of the specific function in response to the second response message, the electronic device further performs the following step:
receiving, by the electronic device, the second response message within preset duration.

12. The electronic device according to any one of claims 1 to 11, wherein
the specific function comprises at least one of a printing function, a projection function, a door opening function, an unlocking function, and a wireless routing device access function; at least two of the first periodicity, the second periodicity, and the third periodicity are the same or different; the first antenna and the second antenna are different antennas; and the preset safety distance may be set by a user as required.

13. An electronic device, wherein the electronic device wirelessly communicates with a mobile device, and the electronic device comprises:
a processor;
a memory;
an antenna, wherein a transmitting distance of the antenna at a first transmit power is a first distance, and the first distance is greater than a preset safety distance; a transmitting distance of the antenna at a second transmit power is a second distance, and the second distance is less than or equal to the preset safety distance; and the first transmit power is greater than the second transmit power; and
a computer program, wherein the computer program is stored in the memory, and when the computer program is executed by the processor, the electronic device is enabled to perform the following steps:
sending a first message based on a first periodicity by using the antenna at the first transmit power;
receiving a first response message of the mobile device;
sending, in response to the first response message, a second message based on a second periodicity by using the antenna at the second transmit power;
receiving a second response message of the mobile device; and
executing all or a part of a specific function in response to the second response message.

14. The electronic device according to claim 13, wherein the electronic device further performs the following step:
after executing the part of the specific function, sending a third message based on a third periodicity by using the antenna at the first transmit power or the antenna at the second transmit power, wherein the third message comprises information indicating that the part of the specific function is executed.

15. The electronic device according to claim 14, wherein the electronic device further performs the following steps:
receiving a transmission message of the mobile device after sending the third message based on the third periodicity by using the antenna at the first transmit power or the antenna at the second transmit power; and
executing a remaining part of the specific function in response to the transmission message.

16. The electronic device according to claim 13, wherein the electronic device further performs the following steps:
after executing all the specific function, sending a third message based on a third periodicity by using the antenna at the first transmit power or the antenna at the second transmit power, wherein
the third message comprises information indicating that all the specific function is executed.

17. The electronic device according to any one of claims 13 to 16, wherein the electronic device further performs the following steps:
receiving a first setting message before sending the first message based on the first periodicity by using the antenna at the first transmit power, wherein the first setting message comprises at least one of identity information and password information of the mobile device; and
in response to the first setting message, storing the identity information and/or the password information in the electronic device, or storing the identity information and/or the password information in a third-party device associated with the electronic device.

18. The electronic device according to claim 17, wherein the first response message comprises identity information or password information of the mobile device; and the electronic device further performs the following step:
after receiving the first response message of the mobile device, and before sending, in response to the first response message, the second message based on the second periodicity by using the antenna at the second transmit power, verifying, by the electronic device, that the identity information or the password information comprised in the first response message matches the identity information or the password information stored in the electronic device or the third-party device.

19. The electronic device according to any one of claims 13 to 18, wherein the executing the part of the specific function comprises: displaying a specific interface.

20. A mobile device, wherein the mobile device wirelessly communicates with the electronic device according to any one of claims 1 to 19, and the mobile device comprises:
a processor;
a memory; and
a computer program, wherein the computer program is stored in the memory, and when the computer program is executed by the processor, the mobile device is enabled to perform the following steps:
receiving a first message of the electronic device within a first distance of the electronic device;
sending a first response message in response to the first message;
receiving a second message of the electronic device within a second distance of the electronic device; and
sending a second response message in response to the second message, wherein
the first distance is greater than a preset safety distance, and the second distance is less than or equal to the preset safety distance.

21. The mobile device according to claim 20, wherein after sending the second response message, the mobile device further performs:
receiving a third message of the electronic device within the first distance of the electronic device; and
in response to the third message, displaying or playing information associated with the third message.

22. The mobile device according to claim 21, wherein after receiving the third message of the electronic device, the mobile device further performs: sending a transmission message, wherein the first response message comprises at least one of identity information and password information of the mobile device.

23. The mobile device according to any one of claims 20 to 22, wherein the second response message comprises at least one of the identity information and the password information of the mobile device.

24. The mobile device according to any one of claims 20 to 23, wherein the preset safety distance is a distance at which a holder of the mobile device can quickly control the electronic device; or the preset safety distance is a distance at which a user of the mobile device exchanges secret information with the electronic device by using the mobile device.

25. An automatic control method, wherein the method is applied to an electronic device, and the electronic device wirelessly communicates with a mobile device; the electronic device comprises: a processor, a memory, a first antenna, wherein a transmitting distance of the first antenna is a first distance, and the first distance is greater than a preset safety distance; and a second antenna, wherein a transmitting distance of the second antenna is a second distance, and the second distance is less than or equal to the preset safety distance; and the method comprises:
sending, by the electronic device, a first message based on a first periodicity by using the first antenna;
receiving, by the electronic device, a first response message of the mobile device;
sending, by the electronic device in response to the first response message, a second message based on a second periodicity by using the second antenna;
receiving a second response message of the mobile device; and
executing, by the electronic device, all or a part of a specific function in response to the second response message.

26. The method according to claim 25, wherein the method further comprises:
after the electronic device executes the part of the specific function, sending, by the electronic device, a third message based on a third periodicity by using the first antenna or the second antenna, wherein the third message comprises information indicating that the part of the specific function is executed.

27. The method according to claim 25, wherein the method further comprises:
receiving, by the electronic device, a transmission message of the mobile device after the electronic device executes the part of the specific function; and
executing, by the electronic device, a remaining part of the specific function in response to the transmission message.

28. The method according to claim 26, wherein the method further comprises:
receiving, by the electronic device, a transmission message of the mobile device after the electronic device sends the third message based on the third periodicity by using the first antenna or the second antenna; and
executing, by the electronic device, a remaining part of the specific function in response to the transmission message.

29. The method according to claim 26, wherein the information indicating that the part of the specific function is executed comprises information indicating that the electronic device is ready to execute the specific function.

30. The method according to claim 26, wherein the method further comprises:
after the electronic device executes all the specific function, sending, by the electronic device, a third message based on a third periodicity by using the first antenna or the second antenna, wherein the third message comprises information indicating that all the specific function is executed.

31. The method according to any one of claims 25 to 30, wherein the method further comprises:
before the electronic device sends the first message based on the first periodicity by using the first antenna, receiving, by the electronic device, a first setting message, wherein the first setting message comprises at least one of identity information and password information of the mobile device; and
in response to the first setting message, storing, by the electronic device, the identity information and/or the password information in the electronic device, or storing the identity information and/or the password information in a third-party device associated with the electronic device.

32. The method according to claim 31, wherein the first response message comprises identity information or password information of the mobile device; and the method further comprises:
after the electronic device receives the first response message of the mobile device, and before sending, in response to the first response message, the second message based on the second periodicity by using the second antenna, verifying, by the electronic device, that the identity information or the password information comprised in the first response message matches the identity information or the password information stored in the electronic device or the third-party device.

33. The method according to claim 31 or 32, wherein the second response message comprises identity information or password information of the mobile device; and after receiving the second response message of the mobile device, and before the electronic device executes all or the part of the specific function in response to the second response message, the method further comprises:
verifying, by the electronic device, that the identity information or the password information comprised in the second response message matches the identity information or the password information stored in the electronic device or the third-party device.

34. The method according to claim 31 or 32, wherein after receiving the second response message of the mobile device, and before the electronic device executes all or the part of the specific function in response to the second response message, the method further comprises:
receiving, by the electronic device, the second response message within preset duration.

35. An automatic control method, wherein the method is applied to an electronic device, the electronic device wirelessly communicates with a mobile device; the electronic device comprises: a processor, a memory, and an antenna, wherein a transmitting distance of the antenna at a first transmit power is a first distance, and the first distance is greater than a preset safety distance; a transmitting distance of the antenna at a second transmit power is a second distance, and the second distance is less than or equal to the preset safety distance; and the first transmit power is greater than the second transmit power; and the method comprises:
sending, by the electronic device, a first message based on a first periodicity by using the antenna at the first transmit power;
receiving, by the electronic device, a first response message of the mobile device;
sending, by the electronic device in response to the first response message, a second message based on a second periodicity by using the antenna at the second transmit power;
receiving, by the electronic device, a second response message of the mobile device; and
executing, by the electronic device, all or a part of a specific function in response to the second response message.

36. The method according to claim 35, wherein the method further comprises:
after the electronic device executes the part of the specific function, sending, by the electronic device, a third message based on a third periodicity by using the antenna at the first transmit power or the antenna at the second transmit power, wherein the third message comprises information indicating that the part of the specific function is executed.

37. The method according to claim 36, wherein the method further comprises:
receiving, by the electronic device, a transmission message of the mobile device after the electronic device sends the third message based on the third periodicity by using the antenna at the first transmit power or the antenna at the second transmit power; and
executing, by the electronic device, a remaining part of the specific function in response to the transmission message.

38. The method according to claim 35, wherein the method further comprises:
after executing all the specific function, sending, by the electronic device, a third message based on a third periodicity by using the antenna at the first transmit power or the antenna at the second transmit power, wherein the third message comprises information indicating that all the specific function is executed.

39. The method according to any one of claims 35 to 38, wherein the method further comprises:
receiving a first setting message before sending the first message based on the first periodicity by using the antenna at the first transmit power, wherein the first setting message comprises at least one of identity information and password information of the mobile device; and
in response to the first setting message, storing the identity information and/or the password information in the electronic device, or storing the identity information and/or the password information in a third-party device associated with the electronic device.

40. The method according to claim 39, wherein the first response message comprises identity information or password information of the mobile device; and the method further comprises: after receiving the first response message of the mobile device, and before sending, in response to the first response message, the second message based on the second periodicity by using the antenna at the second transmit power, verifying, by the electronic device, that the identity information or the password information comprised in the first response message matches the identity information or the password information stored in the electronic device or the third-party device.

41. An automatic control method, wherein the method is applied to a mobile device, and the mobile device wirelessly communicates with an electronic device; the mobile device comprises a processor and a memory; and the method comprises:
receiving, by the mobile device, a first message of the electronic device within a first distance of the electronic device;
sending, by the mobile device, a first response message in response to the first message;
receiving, by the mobile device, a second message of the electronic device within a second distance of the electronic device; and
sending, by the mobile device, a second response message in response to the second message.

42. The method according to claim 41, wherein after sending the second response message, the method further comprises:
receiving, by the mobile device, a third message of the electronic device within the first distance of the electronic device; and
displaying or playing, by the mobile device in response to the third message, information associated with the third message.

43. The method according to claim 42, wherein after receiving the third message of the electronic device, the method further comprises: sending, by the mobile device, a transmission message, wherein the first response message comprises at least one of identity information and password information of the mobile device.

44. The method according to any one of claims 41 to 43, wherein the second response message comprises at least one of the identity information and the password information of the mobile device.

45. A computer-readable storage medium, wherein the computer-readable storage medium comprises a computer program, and when the computer program is run on an electronic device, the electronic device is enabled to perform the method according to any one of claims 25 to 40.

46. A computer-readable storage medium, wherein the computer-readable storage medium comprises a computer program, and when the computer program is run on a mobile device, the mobile device is enabled to perform the method according to any one of claims 41 to 44.

47. A computer program product, wherein when the computer program product is run on a computer, the computer is enabled to perform the method according to any one of claims 25 to 40.

48. A computer program product, wherein when the computer program product is run on a computer, the computer is enabled to perform the method according to any one of claims 41 to 44.

49. An electronic device, wherein the electronic device is located in a door or in a lock of a door, and the electronic device comprises:
a processor;
a memory;
a first antenna, wherein a transmitting distance of the first antenna is a first distance, and the first distance is greater than a preset safety distance;
a second antenna, wherein a transmitting distance of the second antenna is a second distance, and the second distance is less than or equal to the preset safety distance; and
a computer program, wherein the computer program is stored in the memory, and when the computer program is executed by the processor, the electronic device is enabled to perform the following steps:
sending a first message based on a first periodicity by using the first antenna;
receiving a first response message of a mobile device;
sending, in response to the first response message, a second message based on a second periodicity by using the second antenna;
receiving a second response message of the mobile device; and
controlling, by the electronic device in response to the second response message, the door or the lock to execute a specific function.

50. The electronic device according to claim 49, wherein
the sending, in response to the first response message, a second message based on a second periodicity by using the second antenna comprises:
performing first identity verification on the first response message in response to the first response message; and
after the first identity verification succeeds, broadcasting the second message based on the second periodicity by using the second antenna; and
before the sending a first message based on a first periodicity by using the first antenna, the electronic device further performs: generating a first random number, and generating the first message based on the first random number and an ID of the electronic device.

51. The electronic device according to claim 49 or 50, wherein
the controlling, by the electronic device in response to the second response message, the door or the lock to execute a specific function comprises:
performing second identity verification on the second response message in response to the second response message; and
after the second identity verification succeeds, controlling, by the electronic device, the door or the lock to execute the specific function; and
before the sending a second message based on a second periodicity by using the second antenna, the electronic device further performs: generating a second random number, and generating the second message based on the second random number and the ID of the electronic device.

52. The electronic device according to any one of claims 49 to 51, wherein
the first response message comprises at least one of identity information and password information of the mobile device; and
after the electronic device controls the door or the lock to execute the specific function, the electronic device further sends, to the mobile device, a message indicating that the specific function is executed.

53. The electronic device according to any one of claims 49 to 52, wherein the second response message comprises at least one of the identity information and the password information of the mobile device; and the second periodicity and the first periodicity are different or the same.

54. The electronic device according to any one of claims 51 to 53, wherein the electronic device further performs:
after the first identity verification fails, sending the first message based on the first periodicity by using the first antenna; or
after the second identity verification fails, sending the second message based on the second periodicity by using the second antenna; or
after the second identity verification fails, sending the first message based on the first periodicity by using the first antenna.

55. The electronic device according to claim 54, wherein
at least one of the identity information and the password information of the mobile device is preset, the specific function is associated with at least one of the identity information and the password information of the mobile device, and the specific function comprises but is not limited to: opening a door or unlocking a door.

56. An electronic device, wherein the electronic device is located in a door or in a lock of a door, and the electronic device comprises:
a processor;
a memory;
an antenna, wherein a transmitting distance of the antenna at a first transmit power is a first distance, and the first distance is greater than a preset safety distance; a transmitting distance of the antenna at a second transmit power is a second distance, and the second distance is less than or equal to the preset safety distance; and the first transmit power is greater than the second transmit power; and
a computer program, wherein the computer program is stored in the memory, and when the computer program is executed by the processor, the electronic device is enabled to perform the following steps:
sending a first message based on a first periodicity by using the antenna at the first transmit power;
receiving a first response message of a mobile device;
sending, in response to the first response message, a second message based on a second periodicity by using the antenna at the second transmit power;
receiving a second response message of the mobile device; and
controlling, by the electronic device in response to the second response message, the door or the lock to execute a specific function.

57. The electronic device according to claim 56, wherein
the sending, in response to the first response message, a second message based on a second periodicity by using the antenna at the second transmit power comprises:
performing first identity verification on the first response message in response to the first response message; and
after the first identity verification succeeds, broadcasting the second message based on the second periodicity by using the antenna at the second transmit power; and
before the sending a first message based on a first periodicity by using the antenna at the first transmit power, the electronic device further performs: generating a first random number, and generating the first message based on the first random number and an ID of the electronic device.

58. The electronic device according to claim 56 or 57, wherein
the controlling, by the electronic device in response to the second response message, the door or the lock to execute a specific function comprises:
performing second identity verification on the second response message in response to the second response message; and
after the second identity verification succeeds, controlling, by the electronic device, the door or the lock to execute the specific function; and
before the sending a second message based on a second periodicity by using the antenna at the second transmit power, the electronic device further performs: generating a second random number, and generating the second message based on the second random number and the ID of the electronic device.

59. A print device, wherein the print device wirelessly communicates with a mobile device; and the print device comprises:
a processor;
a memory;
a first antenna, wherein a transmitting distance of the first antenna is a first distance, and the first distance is greater than a preset safety distance;
a second antenna, wherein a transmitting distance of the second antenna is a second distance, and the second distance is less than or equal to the preset safety distance; and
a computer program, wherein the computer program is stored in the memory, and when the computer program is executed by the processor, the print device is enabled to perform the following steps:
sending a first message based on a first periodicity by using the first antenna;
receiving a first response message of the mobile device;
sending, in response to the first response message, a second message based on a second periodicity by using the second antenna;
receiving a second response message of the mobile device, wherein the second response message comprises a to-be-printed file; and
printing the to-be-printed file in response to the second response message.

60. A print device, wherein the print device wirelessly communicates with a mobile device; the print device comprises a display; and the print device further comprises:
a processor;
a memory;
a first antenna, wherein a transmitting distance of the first antenna is a first distance, and the first distance is greater than a preset safety distance;
a second antenna, wherein a transmitting distance of the second antenna is a second distance, and the second distance is less than or equal to the preset safety distance; and
a computer program, wherein the computer program is stored in the memory, and when the computer program is executed by the processor, the print device is enabled to perform the following steps:
sending a first message based on a first periodicity by using the first antenna;
receiving a first response message of the mobile device;
sending, in response to the first response message, a second message based on a second periodicity by using the second antenna;
receiving a second response message of the mobile device;
displaying a print interface in response to the second response message;
receiving a message of the mobile device that comprises a to-be-printed file; and
printing the to-be-printed file in response to the message.

61. The print device according to claim 60, wherein before sending the first message based on the first periodicity by using the first antenna, the print device further performs the following steps:
receiving a first setting message, wherein the first setting message comprises identity information or password information of the mobile device; and
in response to the first setting message, storing the identity information or the password information in the print device, or storing the identity information or the password information in a third-party device associated with the print device.

62. The print device according to claim 60, wherein before sending the first message based on the first periodicity by using the first antenna, the print device further performs the following steps:
receiving a first setting message, wherein the first setting message comprises a first password and identity information or password information of the mobile device; and
after the password is verified to be correct, storing the identity information or the password information in the print device, or storing the identity information or the password information in a third-party device associated with the print device.

63. The print device according to claim 61, wherein before sending the first message based on the first periodicity by using the first antenna, the print device further performs the following steps:
receiving the first setting message, wherein the first setting message comprises a first password;
after the password is verified to be correct, sending a first reply message by using the first antenna or the second antenna;
receiving a second setting message, wherein the second setting message comprises the identity information or the password information of the mobile device; and
in response to the second setting message, storing the identity information or the password information in the print device, or storing the identity information or the password information in the third-party device associated with the print device.

64. A print device, wherein the print device wirelessly communicates with a mobile device; and the print device comprises:
a processor;
a memory;
an antenna, wherein a transmitting distance of the antenna at a first transmit power is a first distance, and the first distance is greater than a preset safety distance; a transmitting distance of the antenna at a second transmit power is a second distance, and the second distance is less than or equal to the preset safety distance; and the first transmit power is greater than the second transmit power; and
a computer program, wherein the computer program is stored in the memory, and when the computer program is executed by the processor, the print device is enabled to perform the following steps:
sending a first message based on a first periodicity by using the antenna at the first transmit power;
receiving a first response message of the mobile device;
sending, in response to the first response message, a second message based on a second periodicity by using the antenna at the second transmit power;
receiving a second response message of the mobile device, wherein the second response message comprises a to-be-printed file; and
printing the to-be-printed file in response to the second response message.

65. A print device, wherein the print device wirelessly communicates with a mobile device; the print device comprises a display; and the print device further comprises:
a processor;
a memory;
an antenna, wherein a transmitting distance of the antenna at a first transmit power is a first distance, and the first distance is greater than a preset safety distance; a transmitting distance of the antenna at a second transmit power is a second distance, and the second distance is less than or equal to the preset safety distance; and the first transmit power is greater than the second transmit power; and
a computer program, wherein the computer program is stored in the memory, and when the computer program is executed by the processor, the print device is enabled to perform the following steps:
sending a first message based on a first periodicity by using the antenna at the first transmit power;
receiving a first response message of the mobile device;
sending, in response to the first response message, a second message based on a second periodicity by using the antenna at the second transmit power;
receiving a second response message of the mobile device;
displaying a print interface in response to the second response message;
receiving a message of the mobile device that comprises a to-be-printed file; and
printing the to-be-printed file in response to the message.

66. An electronic device, wherein the electronic device wirelessly communicates with a mobile device; the electronic device comprises a display or a speaker; and the electronic device further comprises:
a processor;
a memory;
a first antenna, wherein a transmitting distance of the first antenna is a first distance, and the first distance is greater than a preset safety distance;
a second antenna, wherein a transmitting distance of the second antenna is a second distance, and the second distance is less than or equal to the preset safety distance; and
a computer program, wherein the computer program is stored in the memory, and when the computer program is executed by the processor, the electronic device is enabled to perform the following steps:
sending a first message based on a first periodicity by using the first antenna;
receiving a first response message of the mobile device;
sending, in response to the first response message, a second message based on a second periodicity by using the second antenna;
receiving a second response message of the mobile device;
configuring, in response to the second response message, a projection receiving mode of the electronic device based on preset projection mode information corresponding to the mobile device;
receiving projection data of the mobile device; and
displaying, playing, or displaying and playing the projection data in response to the projection data.

67. The electronic device according to claim 66, wherein
the electronic device receives the projection data of the mobile device by using a wireless local area network;
the electronic device displays, plays, or displays and plays the projection data in response to the projection data; and
the electronic device performs, by using Wi-Fi aware, Bluetooth, or ZigBee, the following steps:
sending the first message based on the first periodicity by using the first antenna;
receiving the first response message of the mobile device;
sending, in response to the first response message, the second message based on the second periodicity by using the second antenna;
receiving the second response message of the mobile device; and
configuring, in response to the second response message, the projection receiving mode of the electronic device based on the preset projection mode information corresponding to the mobile device.

68. The electronic device according to claim 66, wherein
after configuring the projection receiving mode of the electronic device, and before receiving the projection data of the mobile device, the electronic device further performs the following steps:
receiving a Wi-Fi P2P access request of the mobile device; and
establishing a Wi-Fi P2P connection to the mobile device in response to the Wi-Fi P2P access request.

69. The electronic device according to claim 68, wherein
the establishing a Wi-Fi P2P connection to the mobile device in response to the Wi-Fi P2P access request comprises:
establishing, by the electronic device, the Wi-Fi P2P connection to the mobile device by using the first antenna in response to the Wi-Fi P2P access request; and
before sending the first message based on the first periodicity by using the first antenna, the electronic device further performs the following step:
randomly generating the first message based on an identifier of the electronic device.

70. The electronic device according to claim 67 or 68, wherein
the first response message comprises identity information or password information of the mobile device; and after receiving the first response message of the mobile device, and before sending, in response to the first response message, the second message based on the second periodicity by using the second antenna, the electronic device further performs the following steps:
switching to the second antenna; and
randomly generating the second message based on an identifier of the electronic device.

71. The electronic device according to claim 70, wherein
after receiving the first response message of the mobile device, and before switching to the second antenna, the electronic device further performs the following step:
verifying the identity information or the password information, and verifying the identity information or the password information successfully.

72. The electronic device according to any one of claims 69 to 71, wherein
the second response message comprises the identity information or the password information of the mobile device; and
the receiving a second response message of the mobile device, and configuring, in response to the second response message, a projection receiving mode of the electronic device based on preset projection mode information corresponding to the mobile device comprises:
after the second response message is received within preset duration, verifying the identity information or the password information; and
after verification succeeds, configuring the projection receiving mode of the electronic device based on the preset projection mode information corresponding to the mobile device.

73. The electronic device according to claim 72, wherein after configuring the projection receiving mode of the electronic device, the electronic device further performs the following steps:
switching to the first antenna; and
sending a third message by using the first antenna, wherein the third message comprises information indicating that the electronic device is ready.

74. The electronic device according to any one of claims 66 to 73, wherein the projection data comprises at least one of screen recording data, audio data, and a projection address; and
the displaying, playing, or displaying and playing the projection data in response to the projection data comprises:
displaying the screen recording data in response to the screen recording data; or
playing the audio data in response to the audio data; or
in response to the screen recording data and the audio data, displaying the screen recording data, and playing the audio data; or
in response to the projection address, obtaining data from the projection address, and displaying, playing, or displaying and playing the data.

75. The electronic device according to any one of claims 66 to 74, wherein
the electronic device pre-stores a password, or the electronic device pre-obtains a password; and
before sending the first message based on the first periodicity by using the first antenna, the electronic device further performs the following steps:
receiving a first setting message, wherein the first setting message comprises a first password;
sending a first reply message after the password is verified successfully, wherein the first reply message comprises projection mode information supported by the electronic device;
receiving a second setting message of the mobile device, wherein the second setting message comprises the identity information or the password information of the mobile device, and projection mode information selected or set by the mobile device; and
storing, based on a correspondence between the identity information or the password information of the mobile device and the projection mode information selected or set by the mobile device, the identity information or the password information of the mobile device, the projection mode information selected or set by the mobile device, and the correspondence in the electronic device.

76. The electronic device according to claim 75, wherein the sending a first reply message after the password is verified successfully, wherein the first reply message comprises projection mode information supported by the electronic device comprises:
verifying the password, and storing the identity information after verification succeeds;
switching to the second antenna; and
sending the first reply message based on a fourth periodicity by using the second antenna, wherein the first reply message comprises the projection mode information supported by the electronic device.

77. The electronic device according to claim 75, wherein the sending a first reply message after the password is verified successfully, wherein the first reply message comprises projection mode information supported by the electronic device comprises:
after the password is verified successfully, sending the first reply message based on a fourth periodicity by using the first antenna, wherein the first reply message comprises the projection mode information supported by the electronic device.

78. The electronic device according to claim 75, wherein the sending a first reply message after the password is verified successfully, wherein the first reply message comprises projection mode information supported by the electronic device comprises:
verifying the password, and switching to the second antenna after verification succeeds; and
sending the first reply message based on a fourth periodicity by using the second antenna, wherein the first reply message comprises the projection mode information supported by the electronic device.

79. The electronic device according to any one of claims 75 to 78, wherein after storing in the electronic device, the electronic device further performs the following steps:
sending a second reply message by using the first antenna, wherein the second reply message comprises information indicating that the electronic device is set; or
switching to the first antenna; and sending a second reply message by using the first antenna, wherein the second reply message comprises information indicating that the electronic device is set.

80. The electronic device according to any one of claim 65 and claims 66 to 79, wherein the electronic device wirelessly communicates with the mobile device by using Wi-Fi aware, Bluetooth, or ZigBee.

81. An electronic device, wherein the electronic device wirelessly communicates with a mobile device; the electronic device comprises a display or a speaker; and the electronic device further comprises:
a processor;
a memory;
an antenna, wherein a transmitting distance of the antenna at a first transmit power is a first distance, and the first distance is greater than a preset safety distance; a transmitting distance of the antenna at a second transmit power is a second distance, and the second distance is less than or equal to the preset safety distance; and the first transmit power is greater than the second transmit power; and
a computer program, wherein the computer program is stored in the memory, and when the computer program is executed by the processor, the electronic device is enabled to perform the following steps:
sending a first message based on a first periodicity by using the antenna at the first transmit power;
receiving a first response message of a mobile device;
sending, in response to the first response message, a second message based on a second periodicity by using the antenna at the second transmit power;
receiving a second response message of the mobile device;
configuring, in response to the second response message, a projection receiving mode of the electronic device based on preset projection mode information corresponding to the mobile device;
receiving projection data of the mobile device; and
displaying, playing, or displaying and playing the projection data in response to the projection data.

82. A wireless routing device, wherein the wireless routing device comprises:
a processor;
a memory;
a first antenna, wherein a transmitting distance of the first antenna is a first distance, and the first distance is greater than a preset safety distance;
a second antenna, wherein a transmitting distance of the second antenna is a second distance, and the second distance is less than or equal to the preset safety distance; and
a computer program, wherein the computer program is stored in the memory, and when the computer program is executed by the processor, the wireless routing device is enabled to perform the following steps:
broadcasting a first message based on a first periodicity by using the first antenna;
receiving a first response message of a mobile device;
broadcasting, in response to the first response message, a second message based on a second periodicity by using the second antenna;
receiving a Wi-Fi access request of the mobile device; and
in response to the Wi-Fi access request, completing, by the wireless routing device, Wi-Fi AP access with the mobile device, wherein
the first message comprises an identifier of the wireless routing device, and the second message comprises authentication information corresponding to the identifier of the wireless routing device.

83. The wireless routing device according to claim 82, wherein
the first response message comprises the identifier of the wireless routing device; and
after broadcasting the second message based on the second periodicity by using the second antenna, and before receiving the Wi-Fi access request of the mobile device, the wireless routing device further performs the following steps:
receiving a second response message of the mobile device; and
switching to the first antenna in response to the second response message, wherein
the second response message is used to indicate that the mobile device has received the authentication information; and
after the wireless routing device completes the Wi-Fi AP access with the mobile device, the wireless routing device further performs:
sending an acknowledgment message to the mobile device, wherein the acknowledgment message is used to indicate that the wireless routing device completes the Wi-Fi AP access with the mobile device.

84. The wireless routing device according to claim 82 or 83, wherein
the wireless routing device performs, by using Wi-Fi aware, Bluetooth, or ZigBee, the following steps:
broadcasting the first message based on the first periodicity by using the first antenna;
receiving the first response message of the mobile device; and
broadcasting, in response to the first response message, the second message based on the second periodicity by using the second antenna; and
the wireless routing device performs, by using the Wi-Fi AP, the following steps:
receiving the Wi-Fi access request of the mobile device; and
in response to the Wi-Fi access request, completing, by the wireless routing device, the Wi-Fi AP access with the mobile device.

85. The wireless routing device according to claim 84, wherein
the wireless routing device further performs, by using Wi-Fi aware, Bluetooth, or ZigBee, the following steps:
receiving the second response message of the mobile device; and
switching to the first antenna in response to the second response message; and
the wireless routing device further performs, by using Wi-Fi aware, Bluetooth, or ZigBee, the following step:
sending the acknowledgment message to the mobile device, wherein the acknowledgment message is used to indicate that the wireless routing device completes the Wi-Fi AP access with the mobile device.

86. The wireless routing device according to any one of claims 82 to 85, wherein
after the wireless routing device enables Wi-Fi aware, Bluetooth, or ZigBee, and before broadcasting the first message based on the first periodicity by using the first antenna, the wireless routing device further performs the following steps:
broadcasting a Wi-Fi aware access service, a Bluetooth access service, or a ZigBee access service based on a specific periodicity;
receiving a subscription message of the mobile device; and
in response to the subscription message, completing, by the wireless routing device, Wi-Fi aware, Bluetooth or ZigBee access with the mobile device.

87. The wireless routing device according to any one of claims 82 to 86, wherein
Wi-Fi aware, Bluetooth, or ZigBee of the wireless routing device is enabled after a user input is received;
the identifier of the wireless routing device comprises an SSID of the wireless routing device;
the first response message comprises one SSID in first N SSIDs with strongest signal strength in Wi-Fi network signals detected by the mobile device;
the second message comprises authentication information and a unique identifier that are corresponding to the SSID of the wireless routing device, and the N SSIDs comprise the SSID of the wireless routing device;
the second response message is used to indicate that the mobile device has received the authentication information and the unique identifier;
the first periodicity is the same as or different from the second periodicity; and
N is a positive integer greater than or equal to 1.

88. The wireless routing device according to any one of claims 82 to 85, wherein
Wi-Fi aware, Bluetooth, or ZigBee of the wireless routing device is enabled after a user input is received;
the identifier of the wireless routing device comprises an SSID of the wireless routing device;
the first message further comprises a Wi-Fi aware access service, a Bluetooth access service, or a ZigBee access service;
the first response message comprises one SSID with strongest signal strength in Wi-Fi network signals detected by the mobile device;
the first response message is further used to indicate the mobile device to subscribe to the Wi-Fi aware access service, the Bluetooth access service, or the ZigBee access service;
the first periodicity is the same as or different from the second periodicity; and
the second response message is used to indicate that the mobile device has received the authentication information.

89. A wireless routing device, wherein the wireless routing device comprises:
a processor;
a memory;
an antenna, wherein a transmitting distance of the antenna at a first transmit power is a first distance, and the first distance is greater than a preset safety distance; a transmitting distance of the antenna at a second transmit power is a second distance, and the second distance is less than or equal to the preset safety distance; and the first transmit power is greater than the second transmit power; and
a computer program, wherein the computer program is stored in the memory, and when the computer program is executed by the processor, the wireless routing device is enabled to perform the following steps:
broadcasting a first message based on a first periodicity by using the antenna at the first transmit power;
receiving a first response message of a mobile device;
broadcasting, in response to the first response message, a second message based on a second periodicity by using the antenna at the second transmit power;
receiving a Wi-Fi access request of the mobile device; and
in response to the Wi-Fi access request, completing, by the wireless routing device, Wi-Fi access with the mobile device, wherein
the first message comprises an identifier of the wireless routing device; and the second message comprises authentication information corresponding to the identifier of the wireless routing device.

90. The wireless routing device according to claim 89, wherein
the first response message comprises the identifier of the wireless routing device; and
after broadcasting the second message based on the second periodicity by using the antenna at the second transmit power, and before receiving the Wi-Fi access request of the mobile device, the wireless routing device further performs the following steps:
receiving a second response message of the mobile device; and
switching a transmit power of the antenna to the first transmit power in response to the second response message, wherein
the second response message is used to indicate that the mobile device has received the authentication information.

91. A mobile device, wherein the mobile device comprises:
a processor;
a memory; and
a computer program, wherein the computer program is stored in the memory, and when the computer program is executed by the processor, the mobile device is enabled to perform the following steps:
receiving a first message of a wireless routing device within a first distance from the wireless routing device;
sending, in response to the first message, a first response message to M wireless routing devices corresponding to first N identifiers with strongest signal strength in Wi-Fi network signals detected by the mobile device;
receiving a second message of the wireless routing device within a second distance from the wireless routing device;
sending a Wi-Fi access request to the wireless routing device in response to the second message; and
receiving an acknowledgment message of the wireless routing device, wherein
the first message comprises an identifier of the wireless routing device; the second message comprises the identifier of the wireless routing device and authentication information corresponding to the identifier; the acknowledgment message is used to indicate the mobile device to complete Wi-Fi AP access with the wireless routing device; the M wireless routing devices comprise the wireless routing device; M and N are positive integers greater than or equal to 1, and M is less than or equal to N; and the second distance is less than the first distance, and the second distance is less than or equal to a preset safety distance.

92. The mobile device according to claim 91, wherein
the mobile device performs, by using Wi-Fi aware, Bluetooth, or ZigBee, the following steps:
receiving the first message of the wireless routing device within the first distance from the wireless routing device;
sending, in response to the first message, the first response message to the M wireless routing devices corresponding to first N identifiers with the strongest signal strength in the Wi-Fi network signals detected by the mobile device; and
receiving the second message of the wireless routing device within the second distance from the wireless routing device; and
the mobile device performs, in a Wi-Fi AP communication mode, the following steps:
sending the Wi-Fi access request to the wireless routing device in response to the second message; and
receiving the acknowledgment message of the wireless routing device.

93. The mobile device according to claim 91 or 92, wherein
Wi-Fi aware, Bluetooth, or ZigBee of the mobile device is enabled after a user input is received;
the first message comprises an SSID of the wireless routing device;
the first response message comprises one SSID in first N SSIDs with strongest signal strength in the Wi-Fi network signals detected by the mobile device;
the second message comprises authentication information corresponding to the SSID of the wireless routing device, and the first N SSIDs comprise the SSID of the wireless routing device; and
the second response message is used to indicate that the mobile device has received the authentication information.

94. The mobile device according to claim 91 or 92, wherein
Wi-Fi aware, Bluetooth, or ZigBee of the mobile device is enabled after a user input is received;
the first message comprises an SSID of the wireless routing device and a Wi-Fi aware access service, a Bluetooth access service, or a ZigBee access service;
the first response message comprises a first SSID with strongest signal strength in the Wi-Fi network signals detected by the mobile device;
the first response message is further used to indicate the mobile device to subscribe to the Wi-Fi aware access service, the Bluetooth access service, or the ZigBee access service;
the second message comprises authentication information corresponding to the first SSID; and
the second response message is used to indicate that the mobile device has received the authentication information, wherein
both N and M are equal to 1.
